# EUROPEAN PATENT APPLICATION

(11) **EP 4 303 071 A1**
(43) Date of publication of application: **10.01.2024**
(21) Application number: 22183886.5
(22) Date of filing: 08.07.2022
(51) Int. Cl.: B60N 2/28, B60N 2/42

(54) **CHILD RESTRAINT SYSTEM**

(71) Applicant: Thule Sweden AB, 335 04 Hillerstorp (SE)
(72) Inventor: MEDIN, Mårten, 335 72 Hestra (SE); HALL, Tim, 553 37 Jönköping (SE); ÅHMAN, Daniel, 227 38 Lund (SE); RÖSTEDAL, David, 554 49 Jönköping (SE); LILJA, Dan, 512 94 Svenljunga (SE); KOOPMAN, Ruben, 568 92 Skillingaryd (SE); WILHELMSSON, Henrik, 332 31 Gislaved (SE); ANDERSSON, Lukas, 55330 Jönköping (SE); JALLOUL, Saif, 331 37 Värnamo (SE); RYDHOLM, Tobias, 560 30 Tenhult (SE); TEN HORN, Vincent, 2015 HD Haarlem (NL); HEREDIA, Homero, 5063 Bergen (NO); KELEKIDIS, Andreas, 384 71 Timmernabben (SE); NIJHUIS, Jort, 3552 VM Utrecht (NL); DE HAAS, Fortunatus Johannes, 4151 CP Acquoy (NL); SÖDERBERG, Rickard, 553 33 Jönköping (SE); VAN BREUGEL, Gert-Jan, 4176BX Tuil (NL); DE JONG, Reinoud, 4206ZR Gorinchem (NL); SKUTNABBA, Ulf, 554 38 Jönköping (SE); KLAASSEN, Nine, 4814TL, Breda (NL); SMALS, Cyril, 5662 HK, Geldrop (NL); NIJSTEN, Frank, 6074BD, Melick (NL)
(74) Representative: Wallentin, Lars

(57) **Abstract**

The present disclosure relates to child restraint systems and components of child restraint systems, for example child seats (3) like a toddler seat and an infant seat, support bases (2) of child seats, in particular support bases that are fixable on a vehicle seat and which bases may be an integral part of a child seat or which may be configured such that a child seat is releasably couplable to them.

## Description

### FIELD

The present disclosure relates to child restraint systems and components of child restraint systems, for example child seats like a toddler seat and an infant seat, support bases of child seats, in particular support bases that are fixable on a vehicle seat and which bases may be an integral part of a child seat or which may be configured such that a child seat is releasably couplable to them. Furthermore, the present disclosure relates to improvements of child seats.

### BACKGROUND

Child restraint systems comprising child seats and/or support structures like bases that are mounted on a vehicle seat and serve as an interface between child seats and a vehicle seat are known in the art.

Such systems need to fulfill highest safety standards while being easy to use for a user.

Known systems have the drawback that they are often cumbersome to use. Furthermore, there is still a need for improved safety features.

### SUMMARY

The present disclosure relates to improvements of child restraint systems of the above type. In particular, the present disclosure relates to improvements of a base for releasably supporting a child seat, and to improvements of child seats releasably mountable on the base. Furthermore, the present disclosure relates to improvements of child seats, for example infant seats and toddler seats.

It is an object to provide an enhanced child restraint system and/or components of a child restraint system, for example a base and/or a child seat such as a toddler seat or an infant seat.

The object is solved by the configurations as presented in the claims, aspects and example configurations as described herein. Advantageous further formations may be gleaned from the dependent claims and from the below description.

In some embodiments, a base for a child restraint system is provided. In some embodiments, the base may be configured for detachably coupling a child seat to a vehicle seat. In some embodiments, the base may be configured as an integral part of a child seat, for example a rotatable child seat for a vehicle. In some embodiments, the base may be an integral part of a carrying structure, for example of a vehicle or a stroller.

In some embodiments, a base may comprise a primary support portion. The primary support portion may protrude from an upper surface portion of the base in a first direction. The primary support portion may be configured to be releasably engaged by an engaging portion of an inserted child seat in a positive locking manner for blocking a movement of the child seat in the first direction. The primary support portion may be configured to support the child seat rotatable about a rotation axis extending parallel to the first direction. The primary support portion may comprise a cone like appearance. The primary support portion may comprise a free upper end portion of narrower dimension compared to a lower end portion.

In some embodiments, a lateral outer surface of the primary support portion is configured for receiving the engaging portion of the child seat for establishing the positive locking. In some embodiments, the primary support portion comprises a circumferential recess configured for receiving the engaging portion of the child seat thereby allowing to couple, for example clicking in, the child seat to the primary support portion in multiple arbitrary angular position orientations about the rotation axis. The primary support portion may be configured to allow a coupling of a child seat in an arbitrary angular orientation. In some embodiments, the primary support portion may be configured to at least provide an angular dropping zone for a child seat in a range greater than 90° on each lateral side of the primary support portion. The range may be greater than 100°, for example substantially 110°, for example 112°. The before angular ranges may be provided around a rotation axis provided by the primary support portion and may be symmetrical to a lateral direction perpendicular to the rotation axis such that half of the size of the angular range is provided on opposite sides of the lateral direction, respectively.

In some embodiments, the primary support portion is configured to bear the main weight of a mounted child seat. In addition or alternatively, the primary support portion may in some embodiments be configured to support the child seat at a predetermined distance from the upper surface portion of the base. In addition or alternatively, the primary support portion may in some embodiments be configured as a stationary support portion.

In some embodiments, the primary support portion may comprise an upper portion supported by a pillar portion in an overhanging manner so that an overhang portion of the upper portion is available for establishing the positive locking. In some embodiments, the circumferential recess is limited by a lower surface of the upper portion and an outer surface of the pillar portion. In some embodiments, the pillar portion may be at least partially tapered towards the upper portion.

In some embodiments, the upper portion comprises a layer construction with an upper layer and a lower layer supporting the upper layer. In some embodiments, the upper layer may be configured to get in sliding contact with a lower support surface of the child seat to be supported. In some embodiments, the lower layer comprises a higher rigidity than the upper layer. In addition or alternatively, the upper layer may in some embodiments comprise a low friction material configured to get in sliding contact with the child seat. Such low friction material may include for example a synthetic material, for example polyoxymethylene (POM). In addition or alternatively, the lower layer may in some embodiments comprise a metal material. In addition or alternatively, the upper layer may in some embodiments at least partially surround an outer edge region of the lower layer. An underside of the lower layer may be exposed or uncovered such that the engaging member of a mounted child seat may directly get in contact with the lower layer. In some embodiments, the upper layer comprises a sliding surface extending around a recess. In some embodiments, the sliding surface may comprise an annular shape.

In some embodiments, the primary support portion may be configured as a hollow body. Such hollow body may be closed at the top and may define an accommodating space in its interior. In some embodiments, the accommodating space is configured to receive a portion of a tensioning mechanism and/or a sensor of a sensor arrangement.

In some embodiments, the base comprises at least one secondary support portion. In some embodiments, the secondary support portion is radially spaced from the primary support portion. In some embodiments, the secondary support portion may be configured to receive a restraining portion of the child seat, wherein the restraining portion may be defined in or form part of a coupling interface of the child seat.

In some embodiments, the secondary support portion may be configured to receive the restraining portion of the child seat by rotating the child seat about the rotation axis after the child seat was inserted on the primary support portion. The secondary support portion may be configured to get in engagement with the restraining portion. For example, the secondary support portion may be configured such that a restraining portion of the child seat may get in locking engagement with the secondary support portion by being inserted under the secondary support portion. This may prevent a movement of the restraining portion relative to the base in case of a crash scenario. Furthermore, the secondary support portion may be configured such that an inserted child seat may not be removed without rotating the same out of engagement with the secondary support portion.

In some embodiments, the secondary support portion may be reinforced to withstand high forces. For example, the secondary support portion may be steel reinforced. The secondary support portion may be made from or may comprise sheet metal components.

In some embodiments, the at least one secondary support portion is configured to limit a tilting movement of the child seat about a second rotation axis extending perpendicular to the rotation axis.

In some embodiments, the secondary support portion may be configured to reduce play between an inserted restraining portion of a child seat and the secondary support portion. By removing play, the seat may be held in a more rigid manner. Furthermore, noises occurring due to vibrations can be reduced.

In some embodiments, at least one secondary support portion comprises an urging member. The urging member may be a leaf spring. The urging member may be provided to exert on the restraining portion an urging force in a second direction opposite to the first direction when the restraining portion is received in the secondary support portion.

In some embodiments, an insertion geometry of at least one secondary support portion is mechanically coded to block the child seat from being positioned in a predetermined orientation. Such predetermined orientation may be a forward-facing orientation of the child seat. In some embodiments, the secondary support portion may comprise an abutment portion configured to limit a rotation of the child seat about the rotation axis towards a forward-facing orientation. In the context of the present disclosure, forward-facing orientation or oriented in forward-facing direction shall mean that the child seat is oriented such that the viewing direction of a seated child is in travel direction, for example in travel direction of the vehicle. In some embodiments, the abutment portion may be configured to contact a stop portion provided on the child seat.

In some embodiments, the abutment portion comprises abutment surfaces configured to contact stop portion surfaces. In some embodiments, the abutment surfaces are formed such that the stop portion is urged in a second direction opposite to the first direction when the stop portion is pushed against the abutment portion upon rotating the child seat. The abutment surfaces may be inclined.

The abutment portion may limit the before mentioned dropping zone. The abutment surfaces of an abutment portion may define an end of the angular range or dropping zone.

In some embodiments, the at least one secondary support portion is configured such that a rotation of the child seat about the rotation axis is automatically blocked when reaching a rearward-facing orientation upon rotating the same about the primary support portion. In the context of the present disclosure, rearward-facing orientation or oriented in rearward-facing direction shall mean that the child seat is oriented such that the viewing direction of a seated child is opposite to a travel direction, for example a travel direction corresponding to a travel direction of the vehicle. In addition or alternatively, at least one secondary support portion may in some embodiments be configured such that the child seat is normally blocked from reaching the forward-facing orientation and only rotatable to the forward-facing orientation upon actuation of an actuating member by a user. In some embodiments, the actuating member is a release member of a locking mechanism for locking a rotation of the child seat about the rotation axis. In some embodiments, the locking mechanism is provided in the secondary support portion. The locking mechanism may be configured to engage with the restraining portion of the child seat.

In some embodiments, the locking mechanism is configured operable by an operating force exerted thereon by the child seat. In some embodiments, the operating force may be generated by transferring a rotational force exerted on the child seat into the operating force.

In some embodiments, the locking mechanism may comprise a locking member. The locking member may be movable between a locking position in which it can engage with the restraining portion of the child seat and a release position in which a rotation of the child seat about the rotation axis is not blocked. In the release position, the locking member is disengaged from the restraining portion. In some embodiments, the locking member may be biased by an urging member such that a movement of the locking member towards the release position is possible against an urging force exerted by the urging member. In some embodiments, the locking member may comprise a force receiving surface extending such that the operating force can be generated through sliding contact of a force application surface on the child seat and the force receiving surface when the child seat is rotated about the rotation axis.

In some embodiments, the secondary support portion comprises a holding structure for blocking a lifting of the inserted restraining portion from the base for preventing a rotational movement of the child seat in case of a crash. In some embodiments, the holding structure comprises a holder. The holder may comprise a catching portion configured to receive the restraining portion of the child seat. The catching portion may comprise a hook shape. The catching portion may be made from metal or comprise metal components.

In some embodiments, the holder is force transmittingly coupled to a coupling portion which is configured to be engaged with a fixing structure in the vehicle seat. In some embodiments, the coupling portion may be provided on a coupling arrangement. The coupling arrangement may comprise a connector, for example a coupling arm such as an Isofix arm.

In addition or alternatively, the coupling portion may in some embodiments be held on the base adjustably on the coupling portion to allow a tensioning of the base on the vehicle seat.

In some embodiments, the holder may be force transmittingly coupled to the coupling portion by means of a force transfer path comprising rigid force transfer links. The force transfer links may be metal force transfer links. In some embodiments, the force transfer path only comprises metal force transfer links and all of the rigid force transfer links are metal force transfer links.

In some embodiments, the force transfer links may comprise a coupling portion support frame. The coupling portion support frame may comprise a connector support frame. The coupling portion support frame may comprise a U-shaped housing. The coupling portion may be supported on the coupling portion support frame.

The force transfer links may comprise a coupling member, for example a rod, for coupling the holder to the coupling portion support frame. In some embodiments, the holder is coupled to the coupling portion support frame only by a single coupling member. The holder may comprise a coupling portion. The coupling portion may comprise opening for receiving the coupling member, for example the rod.

In some embodiments, the holding structure may comprise two holders and two coupling portion support frames. Each coupling portion support frame may support a coupling portion, for example the connector. The two coupling portion support frames may be coupled to each other by a single coupling portion, such as the coupling portion described before, for example by a rod. The two holders may be coupled to the single coupling portion. The two coupling portion support frames may be arranged laterally spaced from each other on a base.

In some embodiments, a child seat couplable to a base is provided. The base may be a base as described before or as described further below.

In some embodiments, the child seat comprises an interface portion releasably engageable with the primary support portion. In some embodiments, the interface portion comprises a recess which is configured to receive the primary support portion. In particular, the recess may be configured to receive the primary support portion in the first direction. An insertion direction of the child seat may be a direction opposite to the first direction. Accordingly, when the child seat is inserted on the base, the primary support portion may be received in the child seat. In some embodiments, the interface portion may comprise a support surface which is configured to get in contact with a longitudinal end portion of the primary support portion.

In some embodiments, the child seat may comprise a locking mechanism for releasably locking the child seat on the primary locking portion. The locking mechanism may comprise an engaging portion arranged radially movable into and out of the recess, to be able to engage with the primary support portion, for example with a circumferential recess of the primary support portion. In some embodiments, the locking mechanism may comprise an operating member for retracting the engaging portion.

In some embodiments, an opening end portion of the recess may be defined by an inclined circumferential wall portion in which an outer diameter of the recess is reduced from an opening towards the support surface. In other words, the recess may comprise a chamfer portion providing a centering function when inserting the child seat on the base and facilitating the insertion of the child seat on the primary support portion.

In some embodiments, the operating member may be positioned on the child seat such that it is only accessible when the child seat is rotated to an unlocking orientation which is different from a forward-facing or rearward-facing orientation of the child seat on the base. In some embodiments, the operating member is provided on a bottom surface of the child seat. In some embodiments, the operating member is provided at a position of the child seat such that it is covered by the base when the child seat is in a forward-facing or rearward-facing orientation and is exposed only in the unlocking orientation. The operating member may be provided at a foot end of the child seat.

In some embodiments, a child restraint system comprising a base and a child seat is disclosed. The base may be configured as described before or may be configured as described below with respect to further embodiments and modifications. The child seat may comprise one or more of the features as described before and may in addition or alternatively comprise one or more of the features that will be described further below with respect to further embodiments and modifications.

In some embodiments, a base may comprise a tensioning mechanism configured to generate an urging force for urging the base onto the vehicle seat once the base is operatively coupled to a fixing structure of the vehicle.

In some embodiments, the tensioning mechanism is configured such that a user can generate the urging force by repetitively moving an operating member of the tensioning mechanism back and forth.

In some embodiments, the base for a child restraint system may comprise a coupling portion for fixedly coupling the base to a fixing structure of the vehicle.

In some embodiments, the base may comprise an anti-rebound portion configured to be contacted with a backrest of the vehicle seat for at least limiting a rotating movement of the base towards the backrest in a crash situation.

In some embodiments, the base may comprise a tensioning mechanism configured to apply a pulling force on the coupling portion. The base may comprise connectors each comprising a coupling portion. The connectors and/or coupling portions may be connected to each other by means of a connecting portion, for example a belt or rigid connector. The tensioning mechanism may be configured to apply a force on the connecting portion and/or on the connectors, for example a pulling force.

In some embodiments, the base may comprise a tensioning mechanism for reducing a distance between the anti-rebound portion and the coupling portion. In some embodiments, the tensioning mechanism is configured such that a user can reduce the distance by repetitively moving an operating member back and forth.

The tensioning mechanism may comprise an operating member operable by a user. The operating member may be force transmittingly coupled to one or more coupling portions and/or connectors for coupling a base to a fixing structure on a vehicle seat via a tightening force transfer path.

In some embodiments, the tensioning mechanism may comprise an operating member and an indicating device configured to indicate to a user when the operating member is ready to be used for tensioning. In some embodiments, the indicating device is configured to provide a visual and/or acoustic indication to a user. In some embodiments, the indicating device is configured to move the operating member to a predetermined indicating position.

In some embodiments, for actuating the tensioning mechanism, the operating member may be movable between a stowage position and a deployed position. The stowage position may be a position in which the operating member is accommodated in or on the base, for example such that it does not protrude beyond an upper surface portion of the base. The deployed position may be a position in which the operating member protrudes beyond an upper surface portion of the base. For example, the deployed position may be a position in which the operating member is positioned to extend at an angle from the base. In the stowage position, the operating member may extend substantially in horizontal direction. In the deployed position, the operating member may extend at an angle with respect to the horizontal direction. The predetermined indicating position may be an intermediate position between the stowage position and the deployed position.

In some embodiments, the base comprises a recess in the upper surface portion allowing to grasp the operating member for example when the same is provided in the stowage position.

In some embodiments, the indicating device is configured to automatically move the operating member to the predetermined indicating position when a predetermined condition is met. The predetermined condition may include a condition in which the coupling portion is engaged with the fixing structure. The predetermined condition may include a condition in which a distance between the coupling portion and the anti-rebound portion is reduced to a predetermined intermediate distance, for example by pushing the base towards a backrest of the vehicle seat in a pushing direction and with a coupling portion engaged with a fixing structure of the vehicle seat.

In some embodiments, the indicating device may comprise two cooperating portions, for example a toothed portion and a recessed portion. At least one of the two cooperating portions may be movable relative to the other one and the cooperating portions may be configured to get in releasable engagement when the predetermined indicating position is reached. In some embodiments, the two cooperating portions may be configured to at least restrain a movement of the operating member out of and/or into the predetermined indicating position. In some embodiments, one cooperating portion of the two cooperating portions is provided on the operating member and the other cooperating portion of the two cooperating portions is provided on a main body of the base.

In some embodiments, the operating member is force transmittingly coupled to the coupling portion by means of a ratchet mechanism. The ratchet mechanism may be configured to allow a transfer of a torque applied on the operating member only in a tensioning direction. In some embodiments, the ratchet mechanism comprises a locking member configured to releasably lock the operating member to an output member of the ratchet mechanism. The locking member may be a spring-loaded locking member. The output member may be an output shaft. When the operating member is locked to the output member, the operating member is integrally movable with the output member at least in tensioning direction. In some embodiments, the output member comprises a gear fixed on the output member so as to be integrally rotatable with the output member.

In some embodiments, the operating member is a lever rotatable about a pivot axis. The lever may be a curved lever. The lever may be pivotably supported at both of its ends. The lever may comprise a U-shape. In some embodiments, the lever may extend about a primary support portion. In some embodiments, the lever is supported on opposite sides of the primary support portion. In some embodiments, the pivot axis of the lever extends in cross direction of the base.

In some embodiments, the tensioning mechanism is configured to move the coupling portion relative to the anti-rebound portion. In some embodiments, the tensioning mechanism is configured to translatory move the coupling portion relative to the anti-rebound portion. In some embodiments, the tensioning mechanism is configured to translatory move the coupling portion in a longitudinal movement direction.

In some embodiments, the tensioning mechanism is configured to move the anti-rebound portion relative to the coupling portion. In some embodiments, the tensioning mechanism may be configured to translatory and/or rotationally move the anti-rebound portion relative to the coupling portion.

In some embodiments, the coupling portion is part of a coupling arrangement. In some embodiments, the coupling arrangement comprises two connectors, for example coupling arms, optionally supported by a holding structure and movable between a deployed position and a retracted position. In some embodiments, the connectors, for example coupling arms, are coupled to each other by means of a connecting device. In some embodiments, the connecting device is a rigid connecting member. In some embodiments, the two connectors are coupled to each other such that they are integrally or at least commonly movable, for example by applying a force on the connecting device.

In some embodiments, the coupling arrangement is centrally driven and/or may comprise a driven portion force transmittingly coupled to the connecting device. In some embodiments, the driven portion may be force transmittingly coupled to a force output member of the tensioning mechanism. In some embodiments, the driven portion may comprise a toothed portion. In some embodiments, the driven portion may comprise a gear rack. In some embodiments, the force output member may comprise a gear wheel engaged with the driven portion.

In some embodiments, the tensioning mechanism and/or the ratchet mechanism may comprise a torque limiting mechanism. The torque limiting mechanism may be provided in the before mentioned tightening force transfer path. The torque limiting mechanism may be configured to limit a transferable torque to a predetermined maximum torque. In some embodiments, the operating member is force transmittingly coupled to the coupling portion by means of the torque limiting mechanism.

The torque limiting mechanism may comprise a first portion force transmittingly coupled to the operating member. The torque limiting mechanism may comprise a second portion force transmittingly coupled to the coupling portion and/or a connector. The first portion may be engageable with the second portion in a torque transmitting manner, for example by a teeth engagement. The first portion and/or the second portion may be movable into and out of engagement with the other portion. An urging member may bias at least one of the first portion and the second portion in engagement with the other portion of the two portions. The first portion and the second portion may be configured such that a torque transferred between them creates an urging force on at least one of the first portion and the second portion in disengaging direction. If such force exceeds a predetermined force applied by the urging member, the first portion and the second portion are disengaged and a torque transfer is interrupted.

In some embodiments, the base comprises a release mechanism. The release mechanism can be configured to release the coupling portion from the fixing structure and/or can be configured to release a tensioning mechanism and/or can be configured to release a movement of the coupling portion relative to the anti-rebound portion. The tensioning mechanism may be a ratchet tensioning mechanism. The tensioning mechanism may be a tensioning mechanism as described before or as will be described further below. The tensioning mechanism may be configured to reduce a distance between an anti-rebound portion and the coupling portion.

In some embodiments, the release mechanism comprises at least one operating portion. The operating portion may be provided on the base such that it is only accessible with a child seat removed from the base.

In some embodiments, the operating portion is provided on an upper surface portion of the base at a position which is covered by an inserted child seat. In addition or alternatively, the base may in some embodiments comprise a cover member movable between a covering position in which the cover member covers the operating portion and a revealing position in which the operating portion is accessible for operation. In some embodiments, the cover member is configured to be moved to the covering position when a child seat is inserted on the base.

In some embodiments, the release mechanism comprises two operating portions. In some embodiments, the release mechanism is configured such that releasing the base from the fixing structure is only possible by actuating both operating portions, in particular by actuating both operating portions simultaneously or subsequently.

In some embodiments, the release mechanism is configured to simultaneously release the coupling portion and the tensioning mechanism. In some embodiments, the two operating portions can be provided on opposite sides of a primary support portion. In some embodiments, each operating portion may comprise a lever.

In some embodiments, the operating member may comprise a coupling portion for force transmittingly coupling the operating member to the coupling portion. In some embodiments, the coupling portion may be coupled to an end portion of a force transmitting member. The force transmitting member may be a Bowden cable. The force transmitting member may be adjustable to allow an adjustment of a force transfer from the operating member to the coupling portion.

In some embodiments, the release mechanism is configured such that, upon operation of the release mechanism, the tensioning mechanism is deactivated by transferring the tensioning mechanism into a freewheeling state.

In some embodiments, the tensioning mechanism comprises an operating member force transmittingly coupled to the coupling portion by means of a ratchet mechanism allowing to transfer a torque applied on the operating member only in a tensioning direction. In some embodiments, the release mechanism is configured to deactivate the ratchet mechanism by transferring the ratchet mechanism into a freewheeling state.

In some embodiments, the ratchet mechanism comprises a locking member configured to releasably lock the operating member to an output member of the ratchet mechanism such that the output member is integrally movable with the operating member. The locking member may be a spring-loaded locking member. The output member may be an output shaft. In some embodiments, the output member comprises a gear fixed on the output member so as to be integrally rotatable with the output member.

In some embodiments, the release mechanism may comprise a force transfer mechanism configured to transfer a movement of the operating portion into a movement of the locking member in a release direction thereby disengaging a locking between the operating member and the output member. The movement of the operating portion may be a rotating movement of the operating portion in a third rotation direction.

In some embodiments, the force transfer mechanism comprises a force transfer member. The force transfer member may be configured to receive an actuating force from a force application portion of the operating member. The force transfer member may be configured to move towards the locking member upon receiving the actuating force. In some embodiments, the force transfer member comprises a force application surface for contacting a force receiving portion of the locking member. In some embodiments, the force application surface may be formed in the shape of an outer surface of a truncated cone to allow an interaction of the force receiving portion with the operating member positioned at different angular orientations.

In some embodiments, the force transfer member may be a sleeve extending about a pivot axis of the operating member. In some embodiments, the force transfer member is slidably provided on the output member.

In some embodiments, the force transfer member comprises a force receiving surface and the force application portion comprises a force application surface contacting the force receiving surface. In some embodiments, the operating portion is configured rotatable about the pivot axis in a third rotation direction. In some embodiments, the force receiving surface and the force application surface are configured such that the force transfer member is displaceable in a shifting direction along the pivot axis by a wedge action created by a sliding contact between the force application surface and the force receiving surface.

In some embodiments, each operating portion comprises a lever. In some embodiments, the coupling portion and the force application portion of each operating portion are integrally formed on the lever.

In some embodiments, the coupling portion is configured to automatically move to an extended position when a movement of the coupling portion relative to the anti-rebound portion is released by the release mechanism.

In some embodiments, the coupling portion is biased in a direction away from the anti-rebound portion by means of an urging member. The urging member may be a coil spring.

In some embodiments, the coupling portion may be part of a coupling arrangement. In some embodiments, the coupling arrangement may comprise at least one connector, for example a coupling arm, supported on a holding structure and movable between a deployed position and a retracted position. In some embodiments, at least one connector and the holding structure are configured releasably interlockable for locking the coupling portion at multiple different locking positions on the holding structure. In some embodiments, at least one connector comprises a locking portion and the holding structure comprises receiving portions. The receiving portions may be recesses. In some embodiments, the locking portion may be configured releasably engageable with the receiving portions. In some embodiments, the release mechanism is configured to release an interlocking between the connector and the holding structure to allow a movement of the coupling portion relative to the anti-rebound portion.

In some embodiments, the coupling arrangement comprises two connectors supported by the holding structure and each having a coupling portion. In some embodiments, the two connectors are coupled to each other by means of a connecting device. The connecting device may be a rigid connecting member. In some embodiments, the two connectors are coupled to each other such that they are integrally movable. In some embodiments, the urging member is configured and arranged to apply an urging force on the connecting device.

In some embodiments, a connector for coupling a child restraint system to a vehicle seat is provided. The connector may be a connector of the coupling arrangement as described in other parts of this specification. The connector may be a coupling arm. The connector may be a coupling arm configured for an isofix system.

In some embodiments, the connector comprises a coupling portion provided on the first end portion and configured to be releasably locked with a fixing structure of a vehicle seat. The coupling portion may comprise one or more of the features as described herein in other parts of this specification. In some embodiments, the connector comprises a locking portion spaced from the coupling portion in longitudinal direction of the connector.

In some embodiments, the locking portion is arranged movable between a locking position in which the locking portion protrudes from an outer side of the connector and a release position in which the locking portion does not protrude from the lateral outer side. For example, the locking portion may be configured to engage with receiving portions of the holding structure as already described before.

In some embodiments, the locking portion is arranged translatory movable. In some embodiments, the locking portion is movable in a direction cross to the longitudinal direction.

In some embodiments, the locking portion is linearly movable between the release position and the locking position.

In some embodiments, the locking portion is linearly movable in a direction which is perpendicular to the longitudinal direction of the connector.

In some embodiments, the connector comprises two locking portions, a first locking portion and a second locking portion. In some embodiments, the first locking portion comprises a stop surface. In some embodiments, the stop surface of the first locking portion is oriented in forward direction of the connector towards the coupling portion. In some embodiments, the second locking portion comprises a stop surface. The stop surface of the second locking portion may be oriented in real board direction of the connector away from the coupling portion.

In some embodiments, the second locking portion is operatively coupled to the coupling portion such that the second locking portion is moved to the release position when the coupling portion is engaged with the fixing structure.

In some embodiments, the connector comprises a release portion for manually moving the second locking portion into the release position independent from a coupling status of the coupling portion.

In some embodiments, the release portion may be an operating portion of the force transmitting member. In some embodiments, the force transmitting member may be linearly movable along the longitudinal direction of the connector between a release position and an operating position. In some embodiments, the force transmitting member may comprise a force application portion configured to cooperate with the second locking portion such that the second locking portion is moved towards the release position when the force transmitting member is moved towards the operating position.

In some embodiments, the force transmitting member is arranged between the coupling portion and the second locking portion.

In some embodiments, each locking portion is biased towards the locking position by means of an urging member. The urging member may be a spring.

In some embodiments, two connectors may form a coupling arrangement. In some embodiments, a coupling arrangement with two connectors for a child restraint system is provided. The coupling arrangement and/or the connectors may comprise features as described in other parts of this specification. The coupling arrangement may comprise two connectors. The coupling arrangement may further comprise a connecting device. The connecting device may rigidly couple the two connectors to each other such that the two connectors are integrally movable.

In some embodiments, a base for a child restraint system is provided. The base may comprise features as described in other parts of this specification. In some embodiments, the base comprises a holding structure and a coupling arrangement. The holding structure may be configured as described in other parts of this specification. The coupling arrangement may be supported on the holding structure to be movable between an extended position and a retracted position. Furthermore, the coupling arrangement may be releasably lockable in at least one of the extended position and a retracted position by releasably interlocking the holding structure and the coupling arrangement in a positive locking manner by means of the locking portion.

In some embodiments, the first locking portion and the second locking portion are provided on or may form part of a first engaging member and a second engaging member, respectively. The first engaging member and the second engaging member may be formed identically. Accordingly, it is not necessary to manufacture two different parts.

In some embodiments, the first locking portion and the second locking portion are configured to translate between the locking position and the release position. The first locking portion and the second locking portion may be mounted in the connectors to be translatory movable along a straight path.

Each connector may comprise a housing. In some embodiments, the housing is formed by a first housing portion and a second housing portion. Together, the first housing portion and the second housing portion may form a hollow profile defining an interior space for accommodating parts of a mechanism for operating the coupling portion and for moving the first locking portion and the second locking portion. In some embodiments, the hollow profile formed by the first housing portion and the second housing portion may be closed on the rear side by a rear cap. The rear cap and the coupling portion may be provided on opposite sides of the connectors. The rear cap and the coupling portion may be provided on opposite longitudinal sides of the first housing portion and the second housing portion. The rear cap may comprise a cable guide allowing to pass the cable through the same for a connection with the interior mechanism of the coupling arrangement.

In some embodiments, the release portion for manually moving the second locking portion into the release position may be provided adjacent the coupling portion on an upper side of the connectors. The release portion may be slidably held on the connectors. The release portion may be operatively coupled with the second locking portion. The release portion may be configured and arranged such that by sliding the release portion away from the coupling portion, the second locking portion is brought into the release position.

In some embodiments, the second locking portion may be configured to block a movement of the coupling portion in retraction direction as long as the coupling portion is not blocked with the fixing structure. The release portion is configured to allow a manual override of this function and may be used to manually move the second locking portion to the release position.

In some embodiments, the first locking portion and/or the second locking portion is/are biased towards the locking position by means of an urging member. The urging member may be a spring.

In some embodiments, the first engaging member and the second engaging member may each comprise a force receiving portion. The force receiving portion may comprise a cylindrical portion protruding from a lateral side of the engaging members.

The connector may comprise a first support portion configured to linearly guide the first engaging member. The first support portion may comprise a guiding track which is formed as a straight slot extending in vertical direction. The force receiving portion of the first engaging member may be configured to extend through the guiding track and into a force application portion provided in an actuating member. In some embodiments, the force application portion comprises an opening limited on the upper side by an inclined force application surface. In some embodiments, the force application surface is inclined such that it crosses a horizontal middle plane of the connector at a position forward of the first engaging member, for example at a position between the first engaging member and the coupling portion. In this way, a movement of the actuating member in longitudinal direction of the connector may be transferred into a movement of the first engaging member in a direction perpendicular to the longitudinal direction of the connector along the guiding track.

In some embodiments, the actuating member is arranged linearly movable along the longitudinal direction of the connector. In some embodiments, the actuating member is configured to transfer an operating force to the first engaging member. In some embodiments, the actuating member is operatively coupled to the release mechanism as described in other parts of the present specification. In some embodiments, the actuating member is operatively coupled to the coupling portion. In some embodiments, operating the operating member leads to a retraction of the first locking member into the release position and to an unlocking of the coupling portion. The actuating member may be operatively coupled to the release mechanism by means of the force transmitting member. The force transmitting member may be a Bowden cable. In some embodiments, the actuating member may be operatively coupled to the coupling portion of the operating member of the release mechanism as described in other parts of this specification.

In some embodiments, the child restraint system may comprise a display portion. In some embodiments, the display portion may be configured to provide centralized information on the status of the child restraint system. For example, centralized information may be provided on the mounting status of the child restraint system. In some embodiments, the display portion is configured to present the information in a spatial manner allowing a user to directly spatially determine locations of portions on the child restraint system to which the displayed information relates to. In this way, spatial information and spatial relationships are made easy to understand for a user.

In some embodiments, the display portion is configured to present the information on a map showing the child restraint system. For example, the display portion may present the information on a map showing a base of the child restraint system, for example showing the entire base in plan view or in an outline view. In some embodiments, the information comprises spatially related objects, facts or processes and the display portion is configured to graphically represent the related objects, facts or processes in their spatial relationships.

In some embodiments, the display portion comprises the map. For example, the display portion may comprise the map in the form of an illustration provided on the display portion. In some embodiments, the display portion comprises at least one indicator provided at a predetermined position on the map. The predetermined position of the map may directly correspond to a location on the base.

In some embodiments, the display portion comprises two indicators each indicating a coupling status of a connector, for example of a coupling arm, of the base.

In some embodiments, one indicator is configured to indicate a status of a load leg of the base. For example, at least one indicator may be configured to indicate whether a load leg is in a parking or stowage position, or in a deployed/use position.

In some embodiments, the display portion may comprise at least one indicator indicating an insertion status of the child seat on the base.

In some embodiments, a child restraint system may comprise two connectors, a first connector and a second connector, each configured to be releasably lockable with a fixing structure of a vehicle, and a display portion configured to provide information on the mounting status of the connectors. The display portion may be configured to present at least four different locking states of the two connectors.

In some embodiments, the child restraint system may comprise a first sensor provided in the first connector and a second sensor provided in the second connector. In some embodiments, each of such a first sensor in the first connector and such a second sensor in the second connector is configured and arranged to monitor for a locking status of the connectors with a fixing structure on a vehicle seat. In some embodiments, the display portion is configured to present the before mentioned at least four different locking states of the two connectors.

In some embodiments, the child restraint system may comprise a display portion configured to provide centralized information on the status of the child restraint system, and the display portion may comprise at least two lighting portions indicating a predetermined status of the child restraint system. At least two of the lighting portions may be configured to be simultaneously lightable by a single light source. The centralized information may comprise information on the mounting status of the child restraint system, for instance. Furthermore, the display portion may comprise features as described herein in connection with other different possible configurations of display portions.

In some embodiments, the display device comprises a beam splitter for splitting and guiding emitted light from the light source to the lighting portions.

In some embodiments, a seat detection sensor for detecting the presence of an inserted child seat is provided in a base for or of a child restraint system. The base may be configured as described herein with respect to other configurations of the base. In some embodiments, the seat detection sensor may be provided on a primary support portion, for example a primary support portion is already described before or as described hereinafter in a specific configurations and aspects.

In some embodiments, the seat detection sensor may be provided in the primary support portion, for example in an accommodating space inside the primary support portion or in an upper portion of the primary support portion.

In some embodiments, the sensor is a magnetic sensor, for example a hall sensor. The magnetic sensor may detect the presence of a magnet in a child seat correctly positioned on the base.

In some embodiments, a child seat mountable on a base is provided. The child seat may comprise at least one sensor detectable feature. The sensor detectable feature may be a magnet or may comprise a magnet. In some embodiments, the sensor detectable feature may be provided on a lower portion of the child seat. The lower portion may for example be a support portion defining a support surface of the child seat. The sensor detectable feature may be configured to trigger a seat detection sensor for detecting the presence of the child seat on the base when the child seat is correctly mounted and/or oriented on the base. As described before, such a seat detection sensor may be provided in a primary support portion of the base.

In some embodiments, the child seat comprises two sensor detectable features provided on the lower portion of the child seat. In some embodiments, each of the two sensor detectable features comprises a magnet. In some embodiments, the two sensor detectable features are provided on opposite sides of a rotation center of the child seat. Furthermore, the two sensor detectable features may be arranged at equal distance from the rotation center of the child seat. In this way, it is possible to detect a correct insertion of the child seat even if the child seat may be correctly mounted on the base in two different orientations. In each of such a two different orientations a, a single sensor provided on the base may be configured and arranged on the base such that it is possible to detect the two sensor detectable features on the child seat in each of the two orientations of the child seat.

In some embodiments, a base for a child restraint system is provided. The base may comprise features as described in connection with other configurations and aspects of bases described herein. In some embodiments, the base comprises a locking mechanism for blocking a rotation of an inserted child seat about a rotation axis. In some embodiments, the locking mechanism comprises a locking member.

The locking member may be movable between a locking position and a release position. In the locking position, the locking member is positioned to engage with the restraining portion of a child seat. In the release position, the locking member is at a position at which it cannot engage with a restraining portion of the child seat, so that a rotation about the rotation axis cannot be blocked by the locking member. In some embodiments, a sensor arrangement is provided which is configured to at least detect the presence of the locking member at the release position.

In some embodiments, the sensor arrangement may be configured to additionally detect the presence of the locking member at the locking position.

In some embodiments, the base comprises a sensor detectable feature operatively coupled to the locking member so as to be movable depending on a movement of the locking member. The sensor detectable feature may be movable between a first position corresponding to a locking position of the locking member, and a second position corresponding to a release position of the locking member. In some embodiments, the sensor detectable feature is arranged on the locking member so as to be integrally movable with the locking member. In some embodiments, the locking member may comprise a holder for holding the sensor detectable feature.

In some embodiments, the sensor arrangement comprises two sensors configured to detect the sensor detectable feature movably coupled to or provided on the locking member. In some embodiments, the sensor arrangement comprises two sensors which are configured to detect a single sensor detectable feature. In some embodiments, the sensor arrangement is configured to detect a trigger sequence of the sensors by the detectable feature. In some embodiments, a positive locking signal is output if a predetermined trigger sequence of the sensors is detected.

In some embodiments, the predetermined trigger sequence at least includes the detection of the sensor detectable feature by a second sensor while the sensor detectable feature is still sensed by the first sensor and/or vice versa.

In some embodiments, the sensor detectable feature may comprise a magnet and the sensors may be magnetic sensors, in particular hall sensors.

In some embodiments, the sensors are arranged to allow a make before you break detection of the magnet.

In some embodiments, the locking member is movable to a standby position at which the locking member is positioned at a fully extended position. In some embodiments, the sensors are positioned such that only one sensor detects the sensor detectable feature in the standby position. In some embodiments, the locking position is a position between the fully extended position and a retracted position. In some embodiments, the fully extended position and the retracted position are fixed end positions limiting a movement range of the locking member.

In some embodiments, the base may comprise a sensor arrangement configured to detect a correct support of the child seat on the base. Furthermore, the sensor arrangement may be configured to detect a correct orientation of the child seat on the base. If the correct support of the child seat and/or the correct orientation of the child seat are detected, a confirmation signal may be output.

In some embodiments, the confirmation signal includes lighting of a light source without changing colors of the light source.

In some embodiments, the base may comprise a primary support portion, for example a primary support portion as already described above. The primary support portion may be configured to rotatably support the child seat about a rotation axis. Furthermore, the base may comprise a locking mechanism for locking a rotation of the child seat about the rotation axis. The locking mechanism may comprise features as already described before or as described later in connection with other configurations and aspects. In some embodiments, the base comprises a seat detection sensor configured to at least detect the presence of the child seat. In some embodiments, the seat detection sensor is configured to detect the presence and a predetermined admissible orientation of the child seat on the primary support portion.

In some embodiments, the base comprises a rotation lock sensor configured to detect whether a rotatability of the child seat is blocked.

In some embodiments, the base may comprise a processing unit configured to receive signals from the seat detection sensor and from the rotation lock sensor and to output a signal indicating correct or incorrect mounting of the child seat on the base based on the signals received from the seat detection sensor and the rotation lock sensor.

In some embodiments, the child restraint system may comprise a base mountable on the seat of a vehicle. The base may comprise a bottom portion configured to contact a seat bottom of the seat.

In some embodiments, the base may comprise a load leg for supporting the base on a vehicle floor portion. In some embodiments, the load leg is pivotably mounted on the base and movable between a stowage position and a deployed position. In the stowage position, the load leg is folded against the bottom portion. The stowage position may also be referred to as parking position or non-use position of the load leg. The deployed position may also be referred to as used position. In the deployed position, the load leg may be oriented to extend in upward direction.

In some embodiments, the stowage position of the load leg is detectable by a magnet sensor provided on the base. In some embodiments, the deployed position of the load leg is detectable by a magnet sensor provided on the base. In some embodiments, the stowage position of the load leg and the deployed position of the load leg are both detectable by magnetic sensors provided on the base.

In some embodiments, the magnet sensor may be a proximity detection type sensor. In some embodiments, the magnet sensor may be a Hall sensor. In some embodiments, the magnet sensor is provided on the bottom portion.

In some embodiments, the load leg comprises a free end portion configured to be contacted with the vehicle floor portion. The free end portion may also be referred to as foot portion. The free end portion may comprise a magnet. The magnet may be provided in the free end portion on a side of the load leg which is oriented towards the bottom portion when the load leg is in the stowage position.

In some embodiments, the magnet sensor is covered by a magnetically attractable portion. For example, the magnet sensor may be covered by a metal plate. In some embodiments, a magnetic attraction force between the magnet and the magnetically attractable portion is strong enough to hold the load leg in the stowage position.

In some embodiments, the base comprises a bottom portion configured to contact a seat bottom of the vehicle seat. In some embodiments, the base comprises a load leg for supporting the base on a vehicle floor portion. In some embodiments, the load leg is pivotably mounted on the base and movable between a stowage position in which the load leg is folded towards the bottom portion, and a deployed position in which the load leg is able to support the base against the vehicle floor portion.

In some embodiments, the child restraint system is configured such that the load leg is releasably lockable in the stowage position by magnetic attraction. For example, the base of a or for a child restraint system may be configured such that the load leg is releasably lockable in the stowage position by magnetic attraction.

In some embodiments, the load leg comprises a magnet. In some embodiments, the magnet is provided in a free end portion of the load leg. In some embodiments, the base comprises a magnetically attractable member, for example a steel plate.

In some embodiments, a proximity magnetic sensor may be provided such that it is covered by the steel plate. In this way, the magnet comprises a double function of creating an attraction force in cooperation with the steel plate and of being detectable by the magnetic sensor.

In some embodiments, a child restraint system comprising a base mountable on the seat of a vehicle may be provided. In some embodiments, the base may comprise a load leg. The load leg may be configured to support the base on a vehicle floor portion. The load leg may be pivotably mounted on the base at a coupling portion. The coupling portion may be provided at an upper end portion of the load leg. The load leg may be movable between a stowage position and a deployed position in which the load leg is able to support the base against the vehicle floor portion. The child restraint system may be configured to detect the deployed position of the load leg by means of a contactless sensing arrangement.

The contactless sensing arrangement may comprise a magnet sensor. The magnet sensor may a hall sensor.

In some embodiments, the load leg may comprise a magnet supported in the coupling portion to be integrally rotatable with the load leg. In some embodiments, the magnet sensor and the magnet are arranged such that the magnet passes the magnet sensor upon rotating the load leg to the deployed position.

The load leg may be coupled to the main body of the base by means of a pivot pin. The load leg may be pivotable about the pivot pin between the stowage position and the deployed position. The load leg may comprise a coupling portion. The coupling portion may be coupled to the main body of the base by means of the pivot pin. The load leg may comprise a magnet supported in the coupling portion to be integrally rotatable with the load leg.

The magnet sensor and the magnet may be arranged such that the magnet passes the magnet sensor upon rotating the load leg to the deployed position. The distance between the pivot pin and the magnet sensor may be larger than the distance between the pivot pin and the magnet. In some embodiments, the magnet is moved into a region between the pivot pin and the magnet sensor when the load leg is rotated to the deployed position. The magnet may be held by a magnet holder on the load leg. The magnet may be held in a middle portion of the coupling portion of the load leg.

In some embodiments, a child seat may comprise a support structure and a seat structure being supported on the support structure. The seat structure may comprise a seat bottom and a seat back. The seat structure may be configured transferable between a seating configuration and a lying configuration.

In some embodiments, the seatback is configured to be pivotable about a stationary pivot axis relative to the support structure. For example, the seatback may be pivotably coupled to the support structure by means of a first pivot connector wherein the first pivot connector defines the stationary pivot axis. The pivot connector may be a pivot pin.

In some embodiments, the seat bottom may be configured pivotable about a movable pivot axis. For example, the seat bottom may be configured pivotable about a second pivot connector which is guided along a predetermined path. Upon transferring the seat structure between the seating configuration and the lying configuration, the movable pivot axis may be moved relative to the support structure along the predetermined path.

In some embodiments, the predetermined path is configured such that upon transferring the seat structure between the seating configuration and the lying configuration, the movable pivot axis is at least temporarily moved in an upward direction relative to the support structure.

In some embodiments, the predetermined path is a curved path. In some embodiments, the predetermined path is a circular path.

In some embodiments, the second pivot connector is supported on the support structure by means of a lever. The lever may be coupled to the support structure by means of a third pivot connector. In some embodiments, the third pivot connector couples the lever to the support structure at a position below the second pivot connector. In some embodiments, the lever is fixed to the support structure in a pendulum-like manner. In some embodiments, the lever is fixed to the support structure such that an end portion of the lever is fixed to the support structure at a position above the second pivot connector.

In some embodiments, the pivot axes extend in parallel with each other.

In some embodiments, the seat bottom is hingedly coupled to the seatback by means of a fourth pivot connector. The fourth pivot connector may couple the seat bottom and the seatback at a distance from a lower seating surface on the seat bottom and at a distance from a back resting surface of the seatback. In some embodiments, the distance is configured such that the fourth pivot connector is provided substantially at a natural hip joint level of a seated child.

In some embodiments, the second pivot connector may be coupled to the seat bottom at a middle portion of the seat bottom, for example substantially half way between a forward end of the seat bottom and a rear end of the seat bottom. In some embodiments, the seat bottom may be hingedly coupled to the seatback at a rear end portion thereof.

In some embodiments, an operating portion configured to receive a pulling force exerted thereon by a user is provided on a lower portion of the seat bottom. In some embodiments, the operating portion may be configured and arranged such that, when the seat structure is in the seating configuration, a pulling force exerted thereon acts in a pulling direction extending substantially perpendicular to the movable pivot axis and substantially tangential to the predetermined path.

In some embodiments, a child seat may comprise an interface portion for locking the child seat on a base fixedly mountable on a vehicle seat, for example an interface portion and a base as described in other parts of this specification. The interface portion may be provided on the support structure of the child seat. Furthermore, a seat structure may be supported on the support structure and may be configured transferable between a seating configuration and a lying configuration. The seat structure may be configured as described in other parts of this specification, for instance.

In some embodiments, the child seat is configured such that the transferability between the seating configuration and the lying configuration is suspended when the interface portion is supported on the base and the child seat is oriented in a predetermined direction, for example in forward-facing direction or rearward-facing direction. The predetermined direction may generally be a direction in which a secure transport of a seated child is possible. In other words, the predetermined direction may be a direction in which the child seat needs to be oriented during travel of the vehicle in which the child seat is mounted.

In some embodiments, the child seat may comprise a locking mechanism for locking the seat structure in the seating configuration and the lying configuration. In some embodiments, the locking mechanism comprises an operating member for temporarily unlocking the locking mechanism. In some embodiments, the child seat is configured such that unlocking of the locking mechanism is blocked when the interface portion is supported on the base and the child seat is oriented in the predetermined direction, for example a predefined travel direction including the forward-facing direction and/or the rearward-facing direction.

In some embodiments, the operating member is provided on the child seat such that it is not accessible to a user when the interface portion is supported on the base and/or the child seat is oriented in the predetermined direction, for example in forward-facing direction or rearward-facing direction.

In some embodiments, the interface portion comprises a restraining portion to be received in a secondary support portion of the base when the child seat is supported on the base and/or oriented in the predetermined direction. The secondary support portion may be configured as described in other parts of this specification. The interface portion may also be configured as described in other parts of the specification.

In some embodiments, the operating member is provided on the child seat adjacent the restraining section. In some embodiments, the operating member is provided on the child seat adjacent the front restraining section. In some embodiments, the operating member is provided at a predetermined position above the restraining section. In some embodiments, the operating member is provided such that it is at least partially covered by a portion of the base when the child seat is supported on the base and oriented in the predetermined direction. For example, the operating member may be covered by a portion of the secondary support portion as described herein in other parts of this specification.

In some embodiments, the child seat comprises a seat bottom and a seatback. In some embodiments, the operating member is provided on a lower forward end portion of the seat bottom. In this way, the operating member is accessible for a user from a forward end of the child seat.

In some embodiments, a child restraint system is provided. The child restraint system may comprise a child seat as described before, and a base mountable on the seat of a vehicle and configured to support the child seat. The child seat may comprise an interface portion releasably couplable to the base. The interface portion may be configured as described herein in other parts of this specification.

In some embodiments, the child seat comprises a locking mechanism for locking the seat structure in the seating configuration and the lying configuration. In some embodiments, the locking mechanism comprises an operating member for temporarily unlocking the locking mechanism. In some embodiments, the child seat and the base are configured such that unlocking of the locking mechanism is blocked when the interface portion is supported on the base and the child seat is oriented in a predetermined direction, for example for example in forward-facing direction or rearward-facing direction.

In some embodiments, the child seat comprises at least one restraining portion. The base may comprise at least one secondary support portion configured to receive the restraining portion of the child seat, for example by rotating the child seat about a rotation axis. In some embodiments, the secondary support portion is configured such that the operating member on the child seat is covered by a portion of the secondary support portion. Such portion of the secondary support portion may be a portion of the secondary support portion protruding in a space limited by an upper portion of the restraining portion and a lower forward end portion of the seat bottom.

In some embodiments, a child seat with a support structure, a seat structure configured transferable between a seating configuration and a lying configuration and a locking mechanism for locking the seat structure in the seating configuration and the lying configuration is provided. The locking mechanism comprises an operating member for temporarily unlocking the locking mechanism. Furthermore, the operating member is provided at a lower forward end portion of the seat bottom. The support structure, the seat structure and the locking mechanism may be configured as described herein in other parts of this specification.

In in some embodiments, a locking mechanism for locking the seat structure in the seating configuration and/or the lying configuration is provided. Such a locking mechanism may comprise features or may be arranged as described herein in other parts of this specification. The locking mechanism may be configured to be used in connection with a seat structure which is supported on a support structure, in particular such that a seatback of the seat structure is configured pivotable about a stationary pivot axis defined by a first pivot connector. The locking mechanism may be configured to establish an engagement between the seat structure and the support structure in a direction cross to the stationary pivot axis.

In some embodiments, the locking mechanism is configured to establish an engagement in radial direction with respect to the stationary pivot axis.

In some embodiments, the locking mechanism comprises an engaging portion configured to move between a locking position and an unlocking position. In some embodiments, the engaging portion may be provided on the seatback. In some embodiments, the engaging portion may be arranged linearly movable, for example linearly movable in radial direction with respect to the stationary pivot axis or in parallel to the radial direction, for example perpendicular to the stationary pivot axis and optionally offset from the stationary pivot axis. In some embodiments, the engaging portion may be arranged movable substantially perpendicular to a resting surface portion of the seatback. In some embodiments, the engaging portion is configured to move in a direction having a backward directional component and a downward direction or component.

In some embodiments, the support structure comprises at least two recesses for receiving the engaging portion. In some embodiments, the locking mechanism comprises an operating member operatively coupled to the engaging portion. The operating member may be provided on the seat bottom. The operating member may be an operating member as described in other parts of this specification.

In some embodiments, a child seat comprising a belt receiving portion may be provided. The belt receiving portion may be configured to receive a seat belt portion of a vehicle seat for mounting the child seat to the vehicle seat. In some embodiments, the child seat comprises a blocking portion configured to be moved between a blocking position and a release position. In the blocking position, an insertion of the belt portion into the belt receiving portion is blocked. In the release position, an insertion of the belt portion into the belt receiving portion is allowed. In some embodiments, the blocking portion is configured to at least partially surround a wall portion of the belt receiving portion when the blocking portion is positioned in the blocking position.

In some embodiments, the blocking portion comprises an accommodating recess for receiving the wall portion.

In some embodiments, the recess is provided in a free end portion of the blocking member.

In some embodiments, the free end portion comprises a stepped configuration. In some embodiments, the free end portion may comprise an L-shape.

In some embodiments, the belt receiving portion comprises an insertion section and an accommodating section. In some embodiments, the accommodating section may be configured to support an inserted belt portion over its entire width. In some embodiments, a dimension of the insertion section is smaller than the dimension of the accommodating section. In some embodiments, the blocking portion is configured and arranged such that when it is positioned in the blocking position, it partially extends through the accommodating section into the insertion section.

In some embodiments, the blocking portion is configured to at least partially protrude into the belt receiving portion from below when positioned in the blocking position.

In some embodiments, a child seat comprises a seat structure with a seat bottom and a seat back. The seat structure may be configured transferable between a seating configuration and a lying configuration. The blocking portion may be operatively coupled to the seat structure. In particular, the blocking portion may be operatively coupled to the seat structure such that the blocking portion is moved to the blocking position when the seat structure is transferred to the lying configuration, and is moved to the release position when the seat structure is transferred to the seating configuration.

In some embodiments, the seatback comprises a force application portion and the blocking portion comprises a force receiving portion. The force receiving portion may be coupled to the force application portion. For example, the force receiving portion may be slidably held on the force application portion. The blocking portion may be guided along a predetermined path. For example, the blocking portion may be guided along a straight path or a curved path. In some embodiments, the predetermined path may extend in upward direction, for example in vertically upward direction. In some embodiments, the predetermined path may be defined in a support structure of the child seat. For example, a slot may be provided in the support structure for defining the predetermined path. In some embodiments, the support structure comprises the belt receiving portion.

In some embodiments, the support structure is configured to rotatably support at least the seatback. In some embodiments, the force application portion comprises a slot and the force receiving portion is slidably received in the slot.

In some embodiments, a child seat may comprise a carrying handle. The child seat may be a child seat as described herein in other parts of the specification. In particular, the child seat may be a child seat for an infant. The carrying handle is configured to carry the child seat.

In some embodiments, the carrying handle comprises a primary gripping portion configured for carrying the child seat with a single hand. The primary gripping portion may extend in a first direction, for example in a horizontal direction of the child seat.

In some embodiments, the carrying handle comprises two dedicated secondary gripping portions configured for carrying the child seat with both hands. The two dedicated secondary gripping portions may extend in a second direction, for example cross to the first direction in which the primary gripping portion as described before may extend.

In some embodiments, the secondary gripping portions are provided on the carrying handle such that they are located on the same level. In some embodiments, the carrying handle comprises a U-shape with a base portion and two leg portions extending from the base portion. In some embodiments, free end portions of the leg portions are coupled to a support structure. Each leg portion may comprise one of the secondary gripping portions.

In some embodiments, the secondary gripping portions comprise a shape deviation portion in a surface of the carrying handle. The shape deviation portion may comprise a local shape deviation preventing slipping of the carrying handle through a user's hand when the user carries the child seat using the secondary gripping portions. The shape deviation portion may comprise a protrusion limiting an upper portion of a gripping area. The shape deviation portion may comprise an uneven surface, for example created by corrugations, grooves and/or scores.

In some embodiments, the secondary gripping portions comprise a material deviation portion in a surface of the carrying handle. The material deviation portion may be configured to increase friction between a user's hand and the carrying handle and may comprise a rubber material.

In some embodiments, the child seat may comprise a locking mechanism for releasably locking the child seat with a coupling interface of a support unit, for example a base for supporting the child seat on a vehicle seat or a chassis of a carrier, for example a stroller. The locking mechanism may comprise an operating member for temporarily unlocking the locking mechanism. The secondary gripping portions of the carrying handle are positioned on the carrying handle such that a user may operate the operating member with a hand currently gripping the secondary gripping portion. In some embodiments, the operating member and the carrying handle are configured such that the operating member is operable by a user by hand while the user is gripping the carrying handle with both hands.

In some embodiments, the carrying handle is arranged rotatable between a carrying position and a non-carrying position. The secondary gripping portions may be arranged on the carrying handle such that a user may operate the operating member's with the thumb of a hand while gripping the secondary gripping portion with the fingers of the hand when the carrying handle is in the carrying position. In some embodiments, the secondary gripping portions are arranged on the carrying handle such that adjacent operating members or operating portions of the operating members are positioned on the same level as the secondary gripping portions when the carrying handle is in the carrying position.

In some embodiments, the child seat may comprise a seating structure. In some embodiments, the seating structure may comprise a bottom portion and backrest portion. In some embodiments, the child seat may be configured as a toddler seat.

In some embodiments, the child seat may comprise a harness assembly. The harness assembly is configured to restrain a seat chided in the child seat. The harness assembly may comprise a shoulder belt for restraining a seated child. The harness assembly may comprise a buckle member coupled to the shoulder belt such that it is movable along the shoulder belt. The buckle member may be configured to engage with a receiver coupled to the bottom portion in a region allowing to place the receiver between the legs of a seated child.

In some embodiments, the child seat may comprise a headrest assembly for supporting the head of a seated child. The headrest may be height adjustable. The headrest assembly may comprise a support structure. The headrest assembly may comprise a headrest portion. The support structure may be configured to support the headrest portion. The headrest portion is configured to support the head of a child and is arranged between the support structure and the head of a seated child. The headrest portion may be made of a material having a lower rigidity compared to the material of the support structure. For example, the headrest portion may comprise or may be made from a polyphenylene ether (PPE) or an expanded polypropylene material (EPP). Accordingly, the headrest assembly may comprise at least two members including the support structure and the headrest portion.

The support structure may be made from a hard plastic material. The support structure may provide a reinforcement for the headrest portion material supported thereon. The headrest portion may be integrally formed from a single material. The support structure may comprise or may be made of polypropylene (PP) material. The support structure may comprise a reinforcing structure. The reinforcing structure may comprise ribs. The support structure may comprise a coupling portion. The coupling portion may be configured to be coupled to the backrest of a child seat. The coupling portion may comprise a strap opening for passing a shoulder strap of a harness assembly therethrough. The coupling portion may be configured and arranged to support the support structure together with the headrest portion at a predetermined distance from the backrest portion.

The backrest portion may comprise a right shoulder support portion and the left shoulder support portion. On an upper portion of each of the right shoulder support portion and the left shoulder support portion, a headrest may be provided. The coupling portion and the support structure are configured such that a rear side and/or outer side of the support structure is held at a predetermined distance from the headrest contact surface. The headrest contact surface provides a support surface on the backrest portion of the child seat. More precisely, in case of a crash, forces acting on the child seat may force the headrest to move towards and contact the backrest portion at the headrest contact surface.

On an outer side of the support structure, an outer support surface may be provided which is configured to get in contact with the headrest contact surface. The outer support surface may extend from a lateral head support portion of the headrest assembly to a rear portion of the headrest assembly. The outer support surface and the headrest contact surface may be configured such that they extend substantially parallel with respect to each other. Accordingly, in some configurations, a distance between the outer support surface and the headrest contact surface may be substantially constant along the extension directions of the respective surfaces, at least over a predetermined section. In this way, a proper support of the support surface on the backrest of the child seat in case of a crash is provided. Compared to adjacent regions on the shoulder support portions of the child seat, the headrest contact surface may be provided as a protrusion. In other words, the headrest contact surface may be provided on a portion of the backrest which is extending more into the seat interior, to support a movement of the headrest resulting from a side impact.

In some embodiments, the child seat is configured such that shoulder belt portion of the harness assembly is temporarily attachable on the headrest assembly.

In some embodiments, the child seat is configured such that the shoulder belt portion is attachable on the headrest assembly by means of magnetic attraction.

In some embodiments, the headrest assembly comprises a support structure, for example a support structure as already described before, and a cover member, for example a cover member made of fabrics. In some embodiments, the support structure may comprise a magnet. In some embodiments, the cover member may comprise a magnet. In some embodiments, the headrest portion may comprise a magnet. In some embodiments, the magnet is provided on a front portion of the headrest assembly. In some embodiments, the magnet is provided on a lateral head support portion of the headrest assembly. For example, the magnet may be provided on an inner side of the headrest assembly, for example on or in inner support surfaces. The magnet may be provided on an outer side of the front portion of the headrest assembly, for example in an outer side portion at a forward end portion of the lateral head support portion. In some embodiments, the magnet is provided on the underside of the front portion of the headrest assembly. In some embodiments, each lateral head support portion may comprise a magnet on an outer side. In some embodiments, the magnet is arranged in a support structure of the headrest assembly, for example at a forward end portion of the support structure provided in the lateral head support portions. In some embodiments, the support structure may comprise a holding portion for accommodating the magnet. In some embodiments, the holding portion comprises a recess for receiving the magnet. In some embodiments, the holding portion is integrally formed in the support structure of the headrest assembly.

In some embodiments, the shoulder belt portion comprises a magnetically attractable portion. Such magnetically attractable portion may be provided in the shoulder belt portion, for example sewn into the shoulder belt portion. The magnetically attractable portion may be a steel insert. The magnetically attractable portion may alternatively be provided on a separate part mounted on the shoulder belt.

In some embodiments, the shoulder belt portion comprises a buckle member. In other words, a buckle member may be provided on the shoulder belt. Such buckle member may be provided movable on the shoulder belt and may be movable to the shoulder belt portion which is to be temporarily attached to the headrest assembly. The buckle member may comprise a buckle tongue. The buckle tongue may also be referred to as latch since the buckle tongue serves the purpose of fixedly coupling the buckle member to a receiver provided on the bottom portion of the child seat in a region between the legs of a seated child. In some embodiments, the buckle tongue forms the magnetically attractable portion. Accordingly, the buckle member may be held on the headrest assembly by placing the buckle tongue in a range of action of the magnet provided in the headrest assembly. The buckle tongue may be made from steel.

In some embodiments, a child seat may comprise a first interface portion and a second interface portion. The child seat may comprise features as described herein in other parts of this specification. The first interface portion may be configured to be releasably engageable with a first type of coupling interface. The first type of coupling interface may be a coupling interface provided on a child carrier such as a stroller, for instance. For example, the coupling interface may be provided on a stroller chassis. The second interface portion may be releasably engageable with a second type of coupling interface. The second type of coupling interface may include a coupling interface of a base configured to be fixed on a vehicle seat. The second interface portion may be an interface portion configured to be coupled to the primary support portion as described herein in other parts of the specification. The second type of coupling interface may comprise the primary support portion as described herein in other parts of this specification.

In some embodiments, the child seat comprises an operating mechanism configured to simultaneously operate the first interface portion and the second interface portion. The operating mechanism may be configured to simultaneously operate the first interface portion and the second interface portion for transferring the interface portions into a release state. The release state may be a state in which the interface portions are in an unlocking state.

In some embodiments, the first interface portion comprises a rotating locking mechanism. In the present disclosure, the rotating locking mechanism is to be understood as a locking mechanism in which locking and unlocking is established by a rotating movement. In some embodiments, the second interface portion comprises a translating locking mechanism. In the present disclosure, the translating locking mechanism is to be understood as a locking mechanism in which locking and unlocking is established by a translating movement.

In some embodiments, the operating mechanism is configured to transfer a rotational input force into a rotatably movement in the rotating locking mechanism and into a translatory movement in the translating locking mechanism.

In some embodiments, the rotating locking mechanism comprises a rotatably movable locking member. In some embodiments, the rotatably movable locking member may comprise an engaging portion. In some embodiments, the engaging portion may comprise a hook. In some embodiments, the rotatably movable locking member comprises a force receiving portion for receiving an actuating force. In some embodiments, the rotatably movable locking member may be configured as a lever. In some embodiments, the lever may be pivotably mounted on the child seat by means of a pivot connector. In some embodiments, the pivot connector may define a lever pivot axis. In some embodiments, the engaging portion and the force receiving portion may be arranged on opposite sides of the pivot connector. In some embodiments, the force receiving portion may be configured for a sliding contact with a force application portion. In some embodiments, the force receiving portion may be configured to receive a return force from a return spring. In some embodiments, the force receiving portion may be configured for a sliding contact with a force application portion on one side and/or may be configured to receive a return force from a return spring on an opposite side.

In some embodiments, the translating locking mechanism comprises a translatory movable engaging portion. In some embodiments, the translatory movable engaging portion may be or may comprise a locking member. In some embodiments, the engaging portion may be arranged radially movable into and out of a recess of the second interface portion. In some embodiments, the recess may be provided in a bottom portion of the second interface portion. In some embodiments, the recess may extend in a first direction extending in opposite direction to an insertion direction of the child seat on the second type of coupling interface. In some embodiments, the recess may be configured to receive the primary support portion protruding from a base in the first direction. The primary support portion and/or the base and/or the engaging portion may be configured as described in other parts of this specification.

In some embodiments, the operating mechanism comprises an operating member. The operating member may be force transmittingly coupled to the first interface portion. The operating member may be force transmittingly coupled to the rotatably movable locking member. In some embodiments, the operating member may be force transmittingly coupled to the second interface portion. In some embodiments, the operating member may be force transmittingly coupled to an engaging portion of the second interface portion. The engaging portion of the second interface portion may be or may comprise a locking member. In some embodiments, the operating member is force transmittingly coupled to the first interface portion and the second interface portion. In some embodiments, the operating member is force transmittingly coupled to the rotatably movable locking member and to the translatory movable coupling member.

In some embodiments, the operating member is force transmittingly coupled to the second interface portion by means of the force transmitting member. Accordingly, the operating mechanism may comprise the force transmitting member. In some embodiments, the force transmitting member may be configured to transmit a pulling force to the second interface portion. In some embodiments, the force transmitting member may be a flat member. In some embodiments, the flat member may comprise a strap-like configuration. In some embodiments, the flat member may comprise a substantially rectangular cross-section. In some embodiments, the flat member may be configured to only transfer a pulling force to the second interface portion. In some embodiments, the flap member cannot transfer a pushing force to the second interface portion.

In some embodiments, the force transmitting member is coupled to the engaging portion at at least two positions. In some embodiments, the force transmitting member is coupled to the engaging portion on laterally opposite sides of the engaging portion such that a total force applied on to the force transmitting member is distributed to at least two of the at least two positions.

In some embodiments, the force transmitting member may comprise a branching end portion. In some embodiments, each force transmitting member comprises a branching end portion. In some embodiments, the branching end portion comprises a first branch portion and a second branch portion. The first branch portion may be coupled to the engaging portion at a first position and the second branch portion may be coupled to the same engaging portion at a second position. In some embodiments, the first position and the second position may be offset from each other in a direction perpendicular to a movement direction of the engaging portion. In some embodiments, the first position and the second position may be laterally offset from each other in a direction perpendicular to a movement direction of the engaging portion. In some embodiments, the branching end portion may be formed as an integral part, for example from plastics or metal. In some embodiments, the branching end portion may be coupled to a single engaging portion. In some embodiments, the branching end portion forms a Y-shaped branching. The Y-shaped branching may be configured such that the first branch portion and the second branch portion substantially symmetrically extend from an end portion of a central portion.

In some embodiments, the force transmitting member is supported on a support structure of the child seat. In some embodiments, the force transmitting member is supported on one side only. In some embodiments, the force transmitting member is slidably supported on the support structure. In some embodiments, the force transmitting member is slidably supported on the support structure by a surface contact with one or more support portions provided on the support structure. In some embodiments, one or more of the support portions may be curved. In some embodiments, the one or more support protrusions are integrally formed in the support structure. In some embodiments, the first branch portion and the second branch portion may be slidably supported on distinct support portions. In some embodiments, the force transmitting member may be configured such that it is only supported on the support structure by means of the branch portions. In some embodiments, the support structure comprises two support portions. Each support portion may be assigned to a single branch portion. Each support portion may be configured to support a single branch portion.

In some embodiments, the operating mechanism comprises an operating member. The operating member may be configured to rotate upon receiving a pushing force applied by a user. In some embodiments, the operating member may be configured for thumb operation by a user. In some embodiments, the operating member is hingedly coupled to the support structure of the child seat, for example by means of a pivot connector. In some embodiments, the operating member comprises a lever. In some embodiments, the lever may be hingedly coupled to the support structure of the child seat at a first end portion. In some embodiments, the lever may comprise an operating portion at a second end portion. In some embodiments, the operating portion protrudes from the support structure through an opening. In some embodiments, the pivot connector defines a pivot axis. In some embodiments, the pivot connector may be configured such that the defined pivot axis extends substantially parallel to a linear movement direction of the engaging portion. In some embodiments, the pivot axis may be configured to extend skew to a linear movement direction of an engaging portion.

In some embodiments, the operating member comprises an operating surface for receiving an operating force from a user. In some embodiments, the operating surface may extend perpendicular to an upper edge of the support structure. In some embodiments, the operating surface may be configured for receiving an operating force in a direction tangential with respect to the upper edge of the support structure.

In some embodiments, the operating member is movable between a locking position and a release position. The locking position may be a position in which an operating portion of the operating member extends in substantially vertical direction on the child seat. The release position may be a position in which the operating member is rotated about a predetermined angle from the locking position. In some embodiments, the locking position may be a forward position of the operating member on the child seat and the release position may be a rearward position of the operating member of the child seat.

In some embodiments, the operating member may comprise a force application portion. In some embodiments, the force application portion is configured to contact an intermediate force transfer member. In some embodiments, the force application portion is provided between the first end portion and the second end portion of the operating member. In some embodiments, the force application portion comprises a protruding portion. In some embodiments, the protruding portion extends in a direction cross to an imaginary line extending through the first end portion and the second end portion of the operating member. In some embodiments, the protruding portion extends in rearward direction of the child seat. In some embodiments, the protruding portion is defined by a curved portion provided in the operating member. The curved portion may be formed such that it extends about a rotation center of a backrest portion of the child seat when the operating member is in the locking position. In some embodiments, the force application portion comprises a rearward-facing contact surface configured to be or get in sliding contact with the force transfer member.

In some embodiments, the operating mechanism may comprise an intermediate force transfer member. The intermediate force transfer member may be configured to receive a force from the operating member and to distribute the received force to the force transmitting member and the rotatably movable locking member. In some embodiments, the intermediate force transfer member may be configured as a lever. In some embodiments, the lever comprises a first arm portion and a second on portion. The first arm portion and the second arm portion may extend at an angle with respect to each other. The first arm portion and the second arm portion may extend from different sides of a pivot portion of the intermediate force transfer member. The pivot portion may be rotatably coupled to the support structure of the child seat by means of the pivot connector. In some embodiments, the intermediate force transfer member may comprise a force receiving portion for receiving a force from the operating member. In some embodiments, the force receiving portion may form an upper portion of the intermediate force transfer member. In some embodiments, the force receiving portion may extend upwards from the pivot connector. In some embodiments, the force receiving portion may comprise a first contact surface. In some embodiments, the force receiving portion may comprise a second contact surface. In some embodiments, the first contact surface and the second contact surface may be provided on opposite sides of the intermediate force transfer member. In some embodiments, the first contact surface is configured for a sliding contact with a force application portion of the operating member. In some embodiments, the second contact surface is configured for a sliding contact with a force receiving portion of the rotatably movable locking member. In some embodiments, the intermediate force transfer member is pivotably coupled to the force transmitting member. For example, the intermediate force transfer member may be pivotably coupled to the force transmitting member at the second arm portion. The force receiving portion may be provided on the first arm portion of the lever.

In some embodiments, the operating member, the intermediate force transfer member and the rotatably movable locking member a pivotable about respective pivot axes. In some embodiments, the pivot axes may extend in parallel with each other. In some embodiments, a connection point at which the second arm portion is connected to the force transmitting member is positioned within an imaginary triangle formed by connecting the pivot axes in a plane perpendicular to the pivot axes when the operating member is in the locking position.

In some embodiments, a cover for a child seat is provided. The child seat may be a toddler seat. In some embodiments, the cover comprises a flexible cover portion and a fastening portion. The flexible cover portion may be configured to at least cover an exterior portion of a seat structure. The flexible cover portion may comprise a cover edge portion. In some embodiments, the fastening portion is configured to couple the cover edge portion to the seat structure. In some embodiments, the fastening portion is coupled to the cover edge portion and is configured to get in surface contact with the flexible cover portion at a position inward of the cover edge portion when the fastening portion is coupled to the child seat.

In some embodiments, the fastening portion comprises a base portion. In some embodiments, the base portion comprises a cover portion support surface. In some embodiments, the cover portion support surface may extend between a front portion and a rear portion of the base portion. In some embodiments, the cover edge portion may be fixedly coupled to the front portion at a fixation section of the cover edge portion. For example, the cover edge portion may be fixedly coupled to the front portion such that the flexible cover portion extends along the cover portion support surface. In some embodiments, the cover portion support surface may form an outer surface of the base portion.

In some embodiments, the fastening portion comprises a support arrangement. The support arrangement may be configured to support the base portion on the seat structure in a predetermined orientation.

In some embodiments, the support arrangement is configured to support the base portion on the seat structure such that the cover portion support surface at least partially enlarges an exterior surface area of the exterior portion. In some embodiments, the exterior surface area faces laterally away from the seat structure.

In some embodiments, the support arrangement is configured to support the base portion on the seat structure such that the cover portion support surface at least partially extends beyond an edge portion limiting the exterior surface area of the exterior portion.

In some embodiments, the support arrangement is configured to support the base portion on the seat structure such that the front portion including the fixation section of the cover edge portion is at least partially spaced from the edge portion limiting the exterior surface area of the exterior portion.

In some embodiments, the support arrangement comprises a support protrusion protruding from the base portion. In some embodiments, the support protrusion may protrude from an inner surface of the base portion. In some embodiments, the inner surface and the cover portion support surface may be arranged on opposite sides of the fastening portion. In some embodiments, the support protrusion may be formed as a continuous rib. In some embodiments, the support protrusion may comprise a support surface adapted to contact support protrusions on the seat structure. In some embodiments, the support surface and the support protrusions may be configured to get in surface contact with each other. In some embodiments, the support surface may comprise a plan contact surface configured to contact a support surface on the support protrusions.

In some embodiments, the front portion comprises an outer surface and an opposite inner surface. In some embodiments, the cover edge portion may be arranged on the outer surface. In some embodiments, the cover edge portion may be wrapped around the front portion to enclose the front portion. The edge of the cover portion may be arranged on an inner side of the fastening portion.

In some embodiments, the fastening portion is configured to hold the cover portion on the seat structure such that a substantially seamless transition from the cover portion to a back cover of the child seat is provided. The back cover of the child seat may be formed in a shell-like manner. The back cover may form a hardshell portion.

In some embodiments, the front portion may be adapted to the shape of the back cover, for example to the shape of a back cover edge portion of the back cover, so that upon mounting the fastening portion on the seat structure, the front portion may be brought into a position inside the back cover, in which the front portion overlaps with the back cover such that the cover portion extends into the back cover past the back cover edge portion.

In some embodiments, the front portion is provided on the base portion offset with respect to the cover portion support surface. In some embodiments, a transition portion, such as a step, may be provided between the front portion and the cover portion support surface. In some embodiments, the transition portion may limit the cover portion support surface and may be adapted to follow a contour of a back cover edge portion. In some embodiments, the fastening portion is configured such that the cover portion is supported on the cover portion support surface with an outer surface of the cover portion arranged flush with an outer surface of the back cover edge portion and/or such that the cover portion is supported on the front portion with an outer surface of the cover portion held between the front portion and the back cover edge portion, for example clamped between the front portion and the back cover edge portion.

In some embodiments, the fastening portion is configured to only partially close a gap formed on the child seat between the exterior portion and the back cover while holding the cover portion such that an opening defined between the back cover, the exterior portion and a fastening portion, in particular an upper portion of the fastening portion mounted on the seat, is covered by the cover portion. In some embodiments, the opening comprises a dimension allowing a user to pass a finger through the opening while deforming the cover portion covering the opening.

In some embodiments, the fastening portion is configured to be coupled to the child seat with an insertion motion including a twist-push motion, and/or may be configured to be decoupled from the child seat by a decoupling motion including a twist-pull motion.

In some embodiments, the fastening portion is non-destructively detachably mountable on the child seat.

In some embodiments, the fastening portion comprises a higher rigidity than the flexible cover portion.

In some embodiments, the cover edge portion is sewn to and/or bonded to and/or clamped to the fastening portion.

In some embodiments, a child seat may comprise a seat shell providing an accommodating space for a child. In some embodiments, the child seat may comprise an interior impact absorber. The interior impact absorber may comprise a first impact protection portion configured to reduce an impact on the shoulder of a seated child in case of a side crash. In some embodiments, the first impact protection portion comprises regions of differing dampening properties. In some embodiments, the regions of differing dampening properties are provided by regions of different material stiffness in the interior impact absorber. In some embodiments, the first impact protection portion comprises an upper end portion and a lower end portion. In some embodiments, the lower end portion is arranged on the seat shell closer to the hip region of a seated child compared to the upper end portion. In some embodiments, the upper end portion is configured stiffer than the lower end portion.

In some embodiments, the lower end portion is configured to catch the shoulder of a child having a first size, for example a child having a minimum allowable size for the child seat. In some embodiments, the upper end portion is configured to catch the shoulder of a child having a second size larger than the first size, for example a maximum allowable size for the child seat. In some embodiments, the differing dampening properties are provided by mechanical weakening sections in a material.

Such mechanical weakening sections may be provided by recesses, grooves, holes etc. In some embodiments, the first impact protection portion may be integrally formed. In some embodiments, the interior impact absorber may comprise a foam material, for example a closed-cell foam material. In some embodiments, the foam material comprises expanded polypropylene. In some embodiments, the foam material may have a density of substantially 30 g/L.

In some embodiments, the child seat may comprise a seat structure defining an interior accommodating space for a child. In some embodiments, the child seat may comprise a side impact protection arrangement configured to initiate a seat movement and/or a head movement of a seated child about the vertical axis in case of a side crash. In some embodiments, the side impact protection arrangement comprises an outer rear side bumper. The outer rear side bumper may be supported on an outer side of the seat structure. The outer rear side bumper may be supported on the outer side of the seat structure at a region behind the interior accommodating space. In some embodiments, the seat structure comprises a seat shell defining the accommodating space.

In some embodiments, the seat structure comprises a bearing portion supporting the seat shell. In some embodiments, the seat structure may comprise a beam-like bearing portion as described herein. In some embodiments, the bearing portion defines a supporting surface facing towards a center longitudinal plane of the seat structure. In some embodiments, the rear side bumper is accommodated in the bearing portion. In some embodiments, the rear side bumper is accommodated in a reinforcing structure of the bearing portion. In some embodiments, the rear side bumper is accommodated in the bearing portion such that it laterally protrudes from the bearing portion.

In some embodiments, the side impact protection arrangement further comprises an outer front side bumper supported on the seat structure at a level of a thorax of a seated child and/or of an interior impact absorber. In some embodiments, the interior impact absorber may be provided on and extend along the seat shell of the child seat down from a head region of the seat towards the hip region and/or at least up to a lower end of the thorax of a seated child. In some embodiments, the interior impact absorber may be integrally formed from a single material. In some embodiments, the interior impact absorber may comprise a plastics material. In some embodiments, the interior impact absorber may comprise a foam material, for example a closed-cell foam material. In in some embodiments, the interior impact absorber may be made from expanded polypropylene. In some embodiments, the interior impact absorber may be made from a material having a density of substantially 30 g/L. In some embodiments, recesses and/or openings may be provided in a lower end portion of the impact absorber. In some embodiments, the recesses and/or openings may have different shapes and sizes and are provided to lower the stiffness of the impact absorber in the lower end portion to or more suitable stiffness form smaller children.

In some embodiments, the rear side bumper and the front side bumper are spaced from each other and/or are formed as separate parts. In some embodiments, the rear side bumper and the front side bumper protrude from the seat structure in parallel with each other. In some embodiments, the rear side bumper may comprise a free end portion and a fixed end portion. In some embodiments, the front side bumper comprises a free end portion and a fixed end portion. In some embodiments, each free end portion may define a force receiving surface. In some embodiments, force receiving surfaces of the rear side bumper and the front side bumper may be positioned at substantially the same level, for example at the same lateral level and/or at the same vertical level. In some embodiments, force receiving surfaces of the rear side bumper and the front side bumper may be positioned such that the force receiving surface of the rear side bumper is arranged more laterally outward than the force receiving surface of the front side bumper.

In some embodiments, the side impact protection arrangement is configured such that forces resulting from a side impact and acting on the child seat in the lateral direction are received by the rear side bumper first and/or transferred to the seat structure to a greater extent by the rear side bumper with less impact absorption compared to the front side bumper.

In some embodiments, the rear side bumper is stiffer than the front side bumper. In some embodiments, the rear side bumper may comprise a density of 50 g/L. In some embodiments, the front side bumper may comprise a density of 27 g/L. In some embodiments, the rear side bumper may protrude further in lateral direction than the front side bumper. In some embodiments, the front side bumper and/or the rear side bumper may comprise or may be made from EPS material.

In some embodiments, the child seat may comprise an exterior side impact protection arrangement provided on an outer side of the seat shell and configured to dampen an impact on the seat shell in a region of the thorax of a seated child in case of a side crash. In some embodiments, the exterior side impact protection arrangement comprises a front side bumper configured as impact absorber and supported on the seat shell at the level of a thorax of a seated child. In some embodiments, the front side bumper is configured such that a lower end portion thereof provides less stiffness compared to an upper portion thereof.

In some embodiments, the front side bumper is configured and arranged such that its dimension is reduced towards a lower end portion thereof.

In some embodiments, the front side bumper comprises a wider upper end portion and a narrower lower end portion. In some embodiments, the shape of the front side bumper may be a triangular or drop-like.

In some embodiments, the exterior side impact protection arrangement may be combined with the interior impact absorber. In some embodiments, the front side bumper and the interior impact absorber are arranged in series in lateral direction so that forces resulting from a side impact are transferred through both the front side bumper and the interior impact absorber. In some embodiments, the interior impact absorber comprises a first impact protection portion configured to reduce an impact on the shoulder of the seated child in case of a side crash and having regions of differing dampening properties. In some embodiments, the first impact protection portion may comprise an upper end portion and a lower end portion. The lower end portion may be arranged on the seat shell closer to the hip region of a seated child compared to the upper end portion. In some embodiments, the upper end portion is configured stiffer than the lower end portion. In some embodiments, the front side bumper comprises or consists of a material having a lower density than the interior impact absorber.

In some embodiments, the headrest assembly of the child seat may be configured to reduce an acceleration of the head of the seated child in case of a side crash. In some embodiments, the headrest assembly comprises a head movement inducing structure.

In some embodiments, the head movement inducing structure is configured such that when the head of a seated child contacts the headrest assembly as a result of a side impact, a rolling motion of the head of the child is induced to at least partially reduce the acceleration of the head. In some embodiments, the head movement inducing structure may be configured to induce predetermined rolling motion sufficient for reducing the acceleration of the head while at the same time preventing an excess increase of forces acting on the neck of the seated child.

In some embodiments, the headrest assembly comprises a headrest portion comprising a rear inner support surface and inner lateral support surfaces. For example, the headrest assembly may comprise a left inner support surface and a right inner support surface. In some embodiments, the inner lateral support surfaces are formed in a convex shape in a cross-section taken along a vertical plane extending in lateral direction of the headrest assembly. In some embodiments, the inner lateral support surfaces are configured to bulge towards the interior accommodating space. The head rest may be height adjustable. In some embodiments, each of the inner lateral support surfaces comprises a lower surface portion and an upper surface portion connected to each other by a rounded apex portion. Each apex portion may be provided at a position of the inner lateral support surfaces which, when the headrest portion is correctly adjusted to the size of a seated child, is located between an upper end portion and a center of the head of the seated child.

In some embodiments, the child seat comprises a headrest impact protection arrangement configured to catch the headrest assembly in case of a crash. In some embodiments, the headrest impact protection arrangement is configured to provide a dampening effect on the headrest assembly in side impact direction and/or in rear impact direction.

In some embodiments, the headrest impact protection arrangement comprises a headrest impact protection portion shaped corresponding to a rear portion of the headrest assembly.

In some embodiments, the headrest impact protection portion comprises an inner surface facing towards the headrest assembly and the headrest assembly comprises an outer surface facing towards the inner surface. In some embodiments, the inner surface and the outer surface at least partially extend substantially parallel such that they may get in surface contact in case of a crash.

In some embodiments, the inner surface and the outer surface may be curved. In some embodiments, the outer surface may form a rear corner region of the headrest assembly and the inner surface may extend around the rear corner region from behind the headrest assembly to a lateral side of the headrest assembly.

In some embodiments, the headrest impact protection arrangement is integrally formed with the interior impact absorber. In some embodiments, the interior impact absorber defines the headrest impact protection portion as a second impact protection portion and comprises the first impact protection portion providing dampening for the shoulder portion and/or thorax of a seated child.

In some embodiments, the interior impact absorber is attached on a seat shell of the child seat and the headrest impact protection portion protrudes more into the interior of the seat shell than the first impact protection portion to reduce the space between the headrest impact protection portion and the headrest assembly.

In some embodiments, the headrest assembly comprises an exterior contour having a U-shape. In some embodiments, the headrest assembly may comprise an interior contour having a V-shape, for example when the headrest is viewed from vertically above, for example in plan view.

Other features of the present invention will be apparent from consideration of the information contained above as well as in or in combination with the following detailed description, drawings and claims and configurations given in itemized structure of aspects below. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective view of a base according to an exemplary configuration.
Fig. 2 shows a side view of the base illustrated in Fig. 1.
Fig. 3 shows a sectional view of a primary support portion of the base according to an exemplary configuration.
Fig. 4 shows a perspective view of an exemplary configuration of an engaging portion which is engageable with the primary support portion illustrated in Fig. 3.
Fig. 5 shows a bottom view of an exemplary configuration of an interface of the child seat.
Fig. 6 shows a schematic plan view of components of a locking mechanism which may be used in the exemplary configuration illustrated in Fig. 5.
Fig. 7 shows a perspective view from below of an exemplary configuration of a child restraint system.
Fig. 8 shows an enlarged perspective view of an exemplary configuration of a secondary support portion.
Fig. 9 shows interior details of the secondary support portion illustrated in Fig. 8.
Fig. 10 shows a perspective view of a holding structure according to an exemplary configuration.
Fig. 11 shows a perspective view of an exemplary configuration of a secondary support portion comprising a locking mechanism.
Fig. 12 shows a perspective view on interior components of the locking mechanism.
Fig. 13 shows a perspective view on a base for a child seat according to an exemplary configuration.
Fig. 14 shows a side view of the base illustrated in Fig. 13.
Fig. 15 shows a perspective view of a base for a child seat according to an exemplary configuration.
Fig. 16 shows a side view of the base illustrated in Fig. 15.
Fig. 17 shows a perspective view of a possible interior configuration of the base for a child seat.
Fig. 18 shows a perspective view of a possible interior configuration of the base for a child seat.
Fig. 19 shows a sectional view through a tensioning mechanism according to an exemplary configuration.
Fig. 20 shows a perspective view of components of the tensioning mechanism.
Fig. 21 shows a perspective view of components of a release mechanism according to an exemplary configuration.
Fig. 22 shows an enlarged perspective sectional view as of components of the tensioning mechanism according to an exemplary configuration.
Fig. 23 shows an enlarged sectional view showing an exemplary configuration of an indicating device with an operating member being positioned in a stowage position.
Fig. 24 shows the enlarged sectional view of Fig. 23 with the operating member positioned in an indicating position.
Fig. 25 shows the enlarged sectional view of Fig. 23 with the operating member being positioned in a deployed position.
Fig. 26 shows side views of possible configurations of a base.
Fig. 27 shows a perspective view of an exemplary configuration of the base and showing the operation of a release mechanism.
Fig. 28 shows a plan view of a base according to an exemplary configuration comprising a sensor arrangement with at least a seat detection sensor.
Fig. 29 shows a bottom view of the base according to an exemplary configuration comprising a sensor arrangement with sensors in a first connector and a second connector for fixing the base to a fixing structure.
Fig. 30 shows a perspective view of a locking member of an exemplary locking mechanism.
Fig. 31 illustrates components of a sensor arrangement for detecting a movement of the locking member shown in Fig. 30.
Fig. 32 shows a possible configuration of a primary support portion in which a seat detection sensor is provided.
Fig. 33 shows a configuration in which a magnet sensor for detecting the presence of a load leg is provided on a bottom portion of the base.
Figs. 34 to 36 illustrate different states of a load leg during mounting process of a base according to an exemplary configuration.
Figs. 37 and 38 shows a sectional views through coupling portion of the load leg and how it is pivotably mounted to a main body of a base.
Fig. 39 shows a perspective view of a load leg according to an exemplary configuration.
Fig. 40 shows an enlarged perspective view of a coupling portion of the load leg illustrated in Fig. 39.
Fig. 41 shows a sectional view showing a magnet in the load leg and its position with respect to a load leg detection sensor when the load leg is in a deployed position.
Fig. 42 shows a sectional view showing a magnet in the load leg and its position relative to a load leg detection sensor when the load leg is in the stowage position.
Fig. 43 shows a plan view of a display portion according to an exemplary configuration.
Fig. 44 shows an alternative configuration of a display portion.
Fig. 45 shows a further alternative configuration of a display portion.
Figs. 46 and 47 show a possible configuration of a coupling arrangement in perspective view.
Fig. 48 shows an exploded view of a connector of an exemplary coupling arrangement.
Fig. 49 shows a perspective view on interior components of the connector illustrated in Fig. 48.
Fig. 50 shows a plan view on components of a locking mechanism and showing a locking member in locking position.
Fig. 51 shows a plan view on the components of Fig .50 with a locking member in release position.
Fig. 52 shows a schematic illustration of a dropping zone in which a child seat may be coupled on the base.
Fig. 53 shows a perspective view of a child seat according to a possible configuration.
Fig. 54 shows an enlarged partial view of the child seat of Fig. 53.
Fig. 55 shows a side view of a child seat according to a possible configuration.
Fig. 56 shows an enlarged portion of the side view of Fig. 55.
Fig. 57 shows a partial side view of the child seat of Fig. 55 with a partially mounted cover.
Fig. 58 shows an arrangement of the cover on the child seat at the beginning of a mounting process.
Fig. 59 illustrates a child seat with a completely mounted cover.
Fig. 60 shows a perspective view on an outer side of a fastening portion according to a possible configuration.
Fig. 61 shows a perspective view on an inner side of a fastening portion according to a possible configuration.
Fig. 62 shows an enlarged partial view of a child seat, in particular showing a portion on which the fastener may be supported.
Fig. 63 shows an enlarged sectional view of a child seat showing a mounted fastener from inside of the child seat.
Fig. 64 shows a perspective rear view on a child seat configured as a toddler seat.
Fig .65 shows a perspective front view on the child seat shown in Fig. 64.
Fig. 66 shows a perspective view on a mounting bracket used for coupling a back cover of the child seat of Figs. 64 and 65 to a support structure of the child seat.
Fig. 67 shows a perspective front view on a headrest assembly of the child seat shown in Fig. 64.
Fig. 68 shows a top view of the headrest assembly shown in Fig. 67.
Fig. 69 shows a perspective rearview on the headrest assembly shown in Fig. 67.
Fig. 70 shows a perspective front view on a child seat embodied as an infant seat.
Figs. 71 and 72 shows a sectional view of the child seat of Fig. 70 taken along a middle longitudinal plane of the child seat, wherein Fig. 71 shows a seating configuration and Fig. 72 shows a lying configuration.
Fig. 73 shows a side view on the child seat of Fig. 70 with a side cover removed.
Fig. 74 shows details of an operating mechanism for operating to interface portions of the child seat shown in Fig. 70.
Fig. 75 shows details of the force transmitting member of the operating mechanism shown in Fig. 74.
Figs. 76 and 77 shows further details of the function of the operating mechanism of Fig. 74.
Fig. 78 shows an enlarged view of a secondary gripping portion of a carrying handle used for carrying the child seat of Fig. 70.
Fig. 79 shows a partial view of the child seat of Fig. 70 showing details of a belt fixation arrangement.
Fig. 80 shows an exemplary configuration of a belt fixation arrangement.
Fig. 81 shows a further exemplary configuration of a belt fixation arrangement.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free).

### Example base configuration

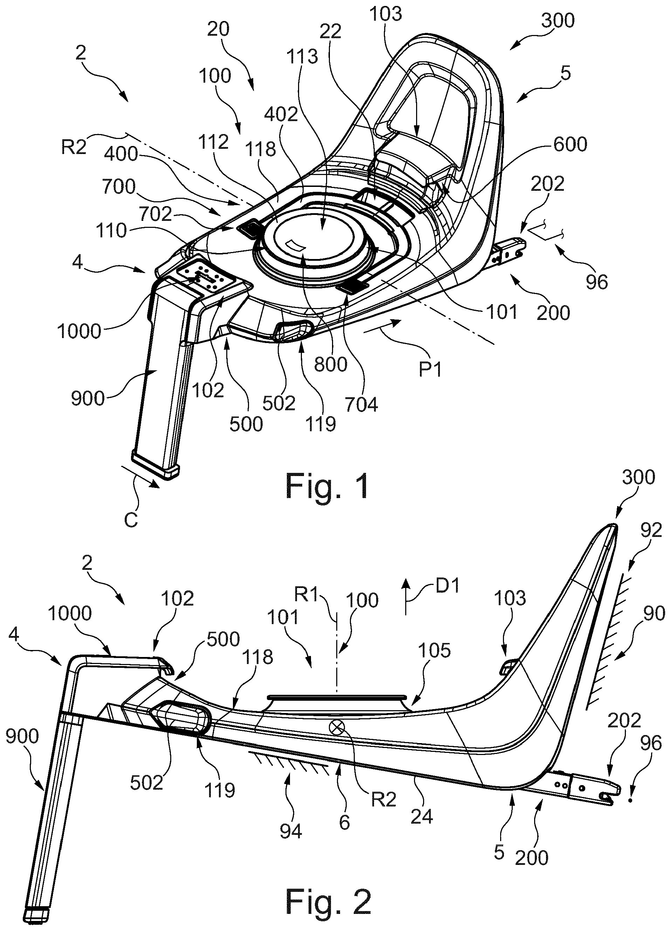

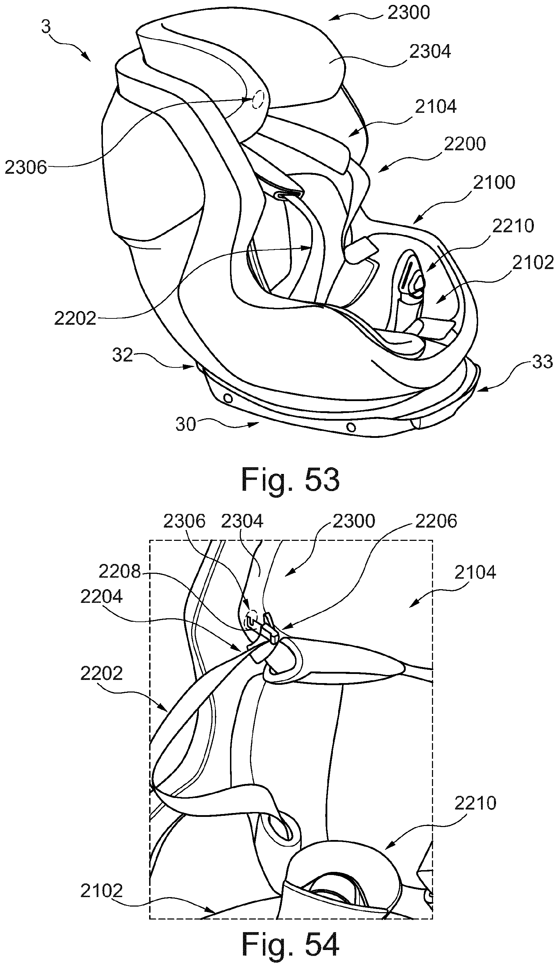

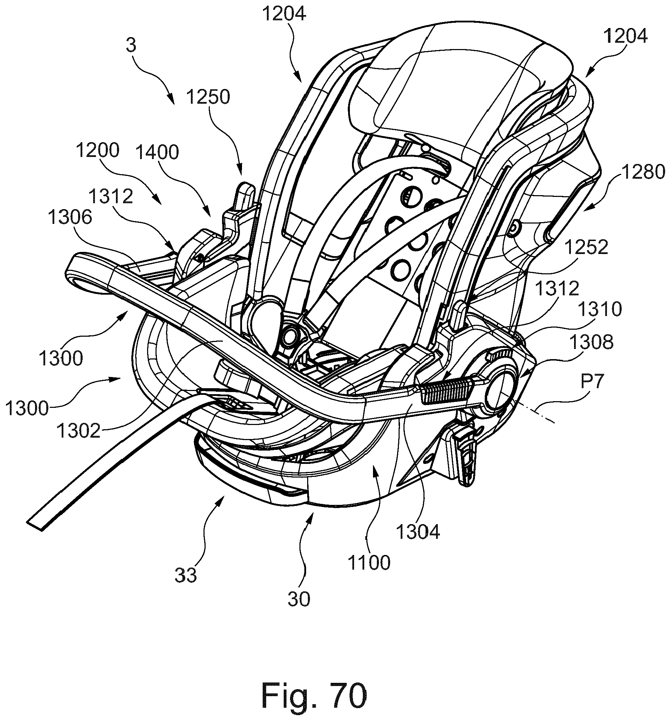

Example configurations of a base 2 can be gathered from Figs. 1 and 2. The base 2 is configured to be coupled to a vehicle seat 90 and configured to support a child seat 3 (for example as in Figs. 53 and 70) thereon. Therefore, the base 2 may comprise different arrangements and features relating to the coupling of the base 2 to the vehicle seat and/or features and configurations relating to the coupling of a child seat (not shown in Fig. 1 and Fig. 2) on the base 2.

The base 2 may comprise a main body 20 configured to be positioned on the vehicle seat 90. On a front portion 4 of the base 2, a load leg 900 may be pivotably coupled to the main body 20.

At a rear portion 5 of the base 2, an anti-rebound portion 300 may be provided. The anti-rebound portion 300 may be configured to get in surface contact with a backrest 92 of a vehicle seat 90.

The base 2 may further comprise a coupling interface 100. The coupling interface 100 may be a first type of coupling interface as mentioned in connection with other features and embodiments described in other parts of this specification. The coupling interface 100 is configured for a releasable locking with a child seat to be supported on the base 2. Different types of child seats may be supported on the base 2, including a toddler seat or an infant seat. Child seats 3 are described in other parts of this specification.

Furthermore, the base 2 may comprise a coupling arrangement 200 for coupling the base 2 to a fixing structure 96 in the vehicle seat 90. For that, the coupling arrangement 200 may comprise a coupling portion 202 which is releasably engageable with the fixing structure 96.

The base 2 may comprise a tensioning mechanism 400 configured to generate an urging force for urging the base 2 onto the vehicle seat 90 once the base 2 is operatively coupled to the fixing structure 96 of the vehicle seat 90, for example by means of the coupling portion 202.

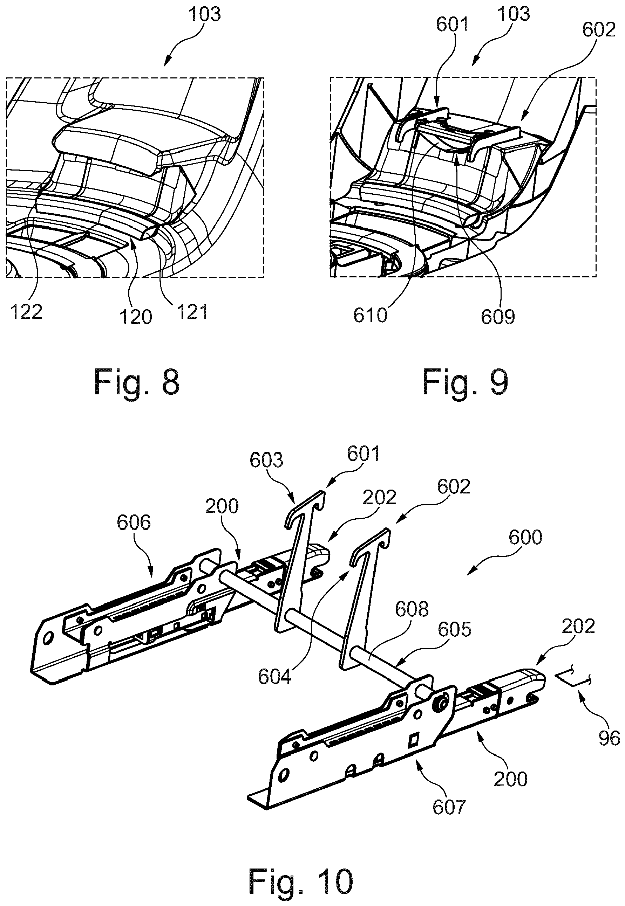

The base 2 may further comprise a holding structure 600 (shown in Fig. 10) configured to securely retain a child seat 3 on the base 2 in case of a crash.

The base 2 may further comprise a release mechanism 700 configured to release or unlock the coupling portion 202 from the fixing structure 96 and/or may be configured to release or disengage the tensioning mechanism 400 and/or may be configured to release or unlock a movement of the coupling portion 202 relative to the anti-rebound portion 300.

As is further illustrated in Fig. 1, the base 2 may comprise a sensor arrangement 800 comprising one or more sensors for detecting specific states or conditions of the base 2 and/or a child 3 seat supported on the base 2.

The base may further comprise a display portion 1000 configured to provide centralized information on the status of the child restraint system.

The base 2 may comprise a locking mechanism 500 for locking a rotation of a child seat 3 about a rotation axis.

While in Figs. 1 and 2 and also in multiple of the following described figures, a configuration of the base 2 is shown in which all of the latter specific mechanisms and arrangements are provided, it is noted that it is possible to individually implement the latter features, arrangements and mechanisms or to combine two or more of them in a suitable manner.

The coupling interface 100, the coupling arrangement 200, the anti-rebound portion 300, the tensioning mechanism 400, the locking mechanism 500, the holding structure 600, the release mechanism 700, the sensor arrangement 800, the load leg 900 and the display portion 1000 may be seen as individual functional blocks which may be implemented individually or in combination with one or more of the other functional blocks.

### Example coupling interface

A possible configuration of a coupling interface 100 of the base 2 will be described in the following. As already illustrated in Figs. 1 and 2, the coupling interface 100 may comprise a primary support portion 101. The primary support portion 101 may protrude from an upper surface portion 118 of the base 2 in a first direction D1. In the present configuration, the first direction corresponds to an upward direction in a mounted condition of the base 2 on the vehicle seat 90.

The primary support portion 101 is configured to be releasably engaged by an engaging portion of an inserted child seat 3 in a positive locking manner for blocking a movement of the child seat 3 in the first direction D1. The configuration of such a child seat 3 will be described later. The primary support portion 101 is furthermore configured to support the child seat 3 rotatable about a rotation axis R1 extending parallel to the first direction D1. In the present configuration, the primary support portion 101 may comprise a circumferential recess 105 configured for an engagement with the child seat 3, in particular for an engagement with a locking mechanism 50 as will be described later.

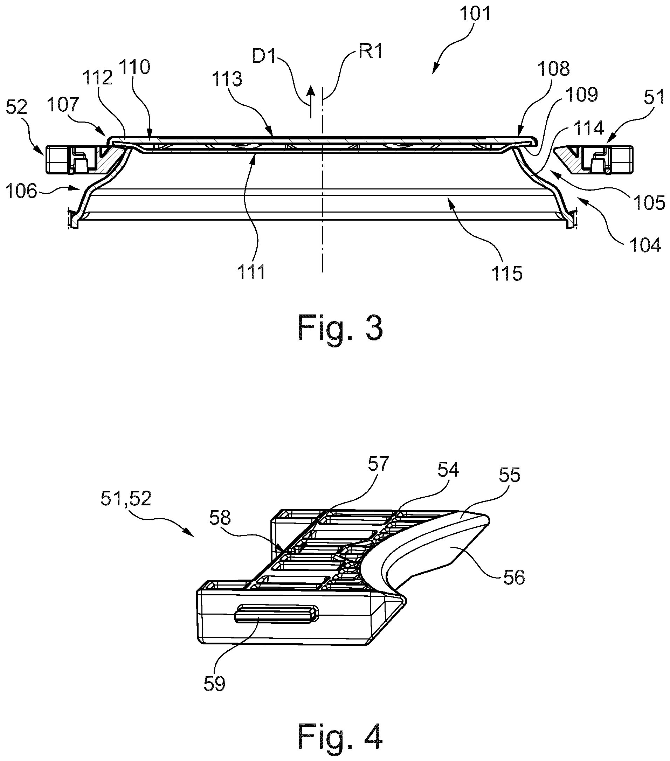

Fig. 3 shows an enlarged sectional view of the primary support portion 101. The primary support portion 101 may be formed as protrusion. The primary support portion 101 may comprise a lateral outer surface 104. The lateral outer surface 104 may fully extend about the primary support portion 101, more precisely about the rotation axis R1 defined by the primary support portion 101. Due to the shape of the lateral outer surface 104, the primary support portion 101 may be configured to allow a 360° rotation of an inserted child seat. In other words, if the coupling interface 100 only comprises the primary support portion 101 as described, an inserted child seat could be rotated 360° about the rotation axis R1 and could be inserted on the primary support portion at an arbitrary orientation. Furthermore, such an arrangement allows to insert a child seat 3 and interlock the same with the primary support portion 101 at an arbitrary angular orientation.

The primary support portion 101 may comprise a circumferential recess 105 provided in the lateral outer surface 104. The circumferential recess 105 is configured for receiving an engaging portion 51, 52 of a child seat 3 for establishing a positive locking between the child seat and the primary support portion 101. In Fig. 3, a first engaging portion 51 is shown in a disengaged state in which it is laterally spaced from the primary support portion 101. Furthermore, a second engaging portion 52 is shown in an engaged state in which a portion of the engaging portion is inserted into the circumferential recess 105. In this way, a movement of the engaging portion 52, and thus of the child seat 3, in the first direction D1 is blocked by a contact of the engaging portion with the primary support portion 101.

### Example shape of primary support portion - cone shape

As is also visible from Fig. 3, the primary support portion 101 according to the exemplary configuration may comprise an overall cone-like appearance. In particular, the primary support portion 101 as shown in Fig. 3 has the shape of a truncated cone with a free upper end of narrower dimension. Since the engaging portions 51 are configured to be engaged from laterally outside of the primary support portion 101, it is possible to couple the child seat to the primary support portion 101 in arbitrary angular orientations about the rotation axis R1. In other words, the primary support portion 101 does not make it necessary to exactly position the child seat in a predetermined angular orientation for allowing the coupling of the child seat to the primary support portion 101. Such a configuration provides an increased angular dropping zone in which a child seat may be inserted on the primary locking portion 101.

The primary support portion 100 may be configured to bear the main weight of a mounted child seat. Accordingly, in an exemplary configuration, the main weight of a mounted child seat may be borne by an upper portion 107 of the primary support portion 101. In some embodiments, the weight of the child seat may be fully supported by the primary support portion 101. In some embodiments, the primary support portion 100 may be configured to support the child seat at a predetermined distance from the upper surface portion 118 of the main body 20 of the base 2. The primary support portion 101 may be configured as a stationary support portion. Accordingly, if a child seat is inserted on and coupled to the primary support portion 101, the child seat may be rotated about the primary support portion 101. It is also possible to provide an arrangement in which the primary support portion 101 is configured rotatable together with an inserted child seat.

The primary support portion 101 may comprise an upper portion 107 supported by a pillar portion 106 in an overhanging manner. In this way, an overhang portion 108 is provided. As is shown in Fig. 3, the overhang portion 108 is available for establishing the positive locking between the child seat and the primary support portion 101. For example, the beforementioned circumferential recess 105 may be limited by a lower surface 109 of the upper portion 107 and an outer surface 114 of the pillar portion 106. However, in some configurations, there needs to be no recess and a coupling between child seat 3 and primary support portion 101 may be established by simply enclosing or receiving the overhang portion 108 in the seat. The pillar portion 106 may be at least partially tapered towards the upper portion 107. The primary support portion 101 may comprise a mushroom-like shape.

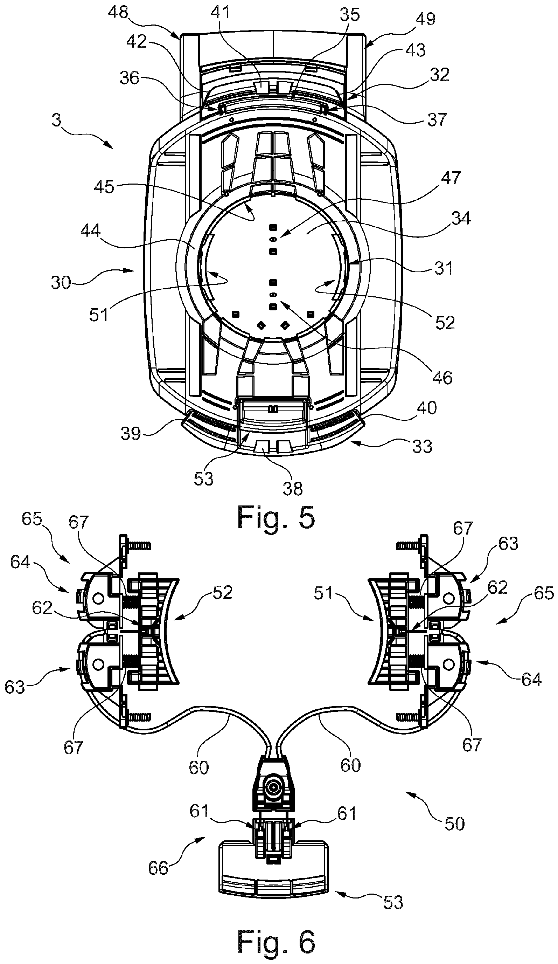

The upper portion 107 may comprise a layer construction. The upper portion 107 may comprise an upper layer 110 and a lower layer 111. The lower layer 111 may be configured to support the upper layer 110. The upper layer 110 may be configured to get in sliding contact with a lower support surface 34 of the child seat to be supported. Figs. 4 to 6 show details of a child seat 3 which may be supported on the primary support portion 101. The already mentioned support surface 34 is visible in Fig. 5 and possible features of the child seat 3 will be described later in greater detail.

The lower layer 111 may comprise a higher rigidity than the upper layer 110. The upper layer 110 may comprise a low friction material. The low friction material may be a synthetic material. For example, the low friction material used according to some embodiments may comprise polyoxymethylene (POM). The low friction material is configured to get in sliding contact with the child seat 3, more precisely with the before described lower support surface 34 of the child seat 3. Using a low friction material in the upper layer 110 reduces forces that are necessary for rotating an inserted child seat 3 on the primary support portion 101. The lower layer 111 may comprise a metal material. The upper layer 110 may at least partially surround an outer edge region of the lower layer 111. In this way, a contact between the lower support surface 34 of the child seat 3 with the lower layer 111 is prevented. As is also shown in Fig. 3, the underside of the lower layer 111 may be exposed or uncovered such that the engaging member 51 of a mounted child seat 3 may directly get in contact with the lower layer 111.

As is shown in Figs. 1 and 3, the upper layer 110 may comprise a sliding surface 112 extending around a recess 113. The upper layer 110 may comprise the shape of a circular plate with a central circumferential recess 113. The sliding surface 112 may comprise an annular shape as shown in Fig. 1. An annular sliding surface 112 provides for a controlled friction between an inserted child seat and the primary support portion 101 when the child seat 3 is rotated.

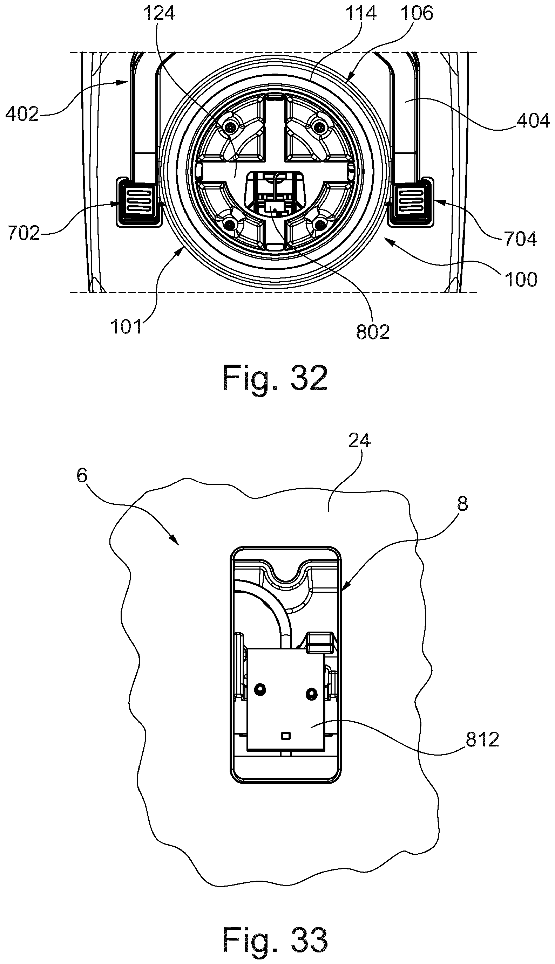

As illustrated in Fig. 3, the primary support portion 101 can be configured as a hollow body. The hollow body may be closed at the top and may define an accommodating space 115 in its interior. The accommodating space 115 can be configured to receive a portion of a tensioning mechanism 400 and/or a sensor of a sensor arrangement 800 (see for example sensor 802 in Fig. 32). In general, the accommodating space 115 is available for accommodating other portions of the base 2 rendering the overall size of the base 2 smaller.

### Example interface for child seat

A child seat 3 which may be coupled to the base 2 as described before, in particular to the primary support portion 101, will be described in the following. Figs. 4 to 7 illustrate possible configurations of the child seat 3.

Fig. 5 shows a bottom view of a child seat 3 according to an embodiment. The child seat 3 may comprise an interface portion 30 which is releasably engageable with the primary support portion 101. The interface portion 30 may comprise a recess 31 configured to receive the primary support portion 101 when inserting the child seat 3 on the base 2. When the child seat 3 is inserted on the base 2, an insertion direction of the child seat 3 is opposite to the before described first direction D1 in which the primary support portion 101 protrudes from the base 2. Accordingly, in a mounted condition of the child seat 3 on the base 2, the recess 31 extends in first direction D1 in order to be able to receive the primary support portion 101.

The interface portion 30 may comprise a support surface 34 configured to get in contact with a longitudinal end portion of the primary support portion 101. The longitudinal end portion of the primary support portion 101 may be a free end portion of the primary support portion 101. For example, the longitudinal end portion of the primary support portion 101 may correspond to the above-described upper portion 107 of the primary support portion 101. The support surface 34 may be a flat surface. The support surface 34 may be configured to get in sliding contact with the upper portion 107 of the primary support portion 101. Accordingly, when the child seat 3 is rested on the primary support portion 101, the support surface 34 is in contact with the upper portion 107.

As described before, the upper portion 107 may comprise a sliding surface 112 which may comprise an annular shape. Accordingly, in some embodiments, the support surface 34 may be configured to get in contact with an annular sliding surface 112. As described before, the upper portion 107 of the primary support portion 101 may comprise a layer construction with an upper layer 110. This upper layer 110 may comprise a low friction material for keeping a friction between the child seat 3 and the primary support portion 101 low when rotating the child seat 3 contacting the upper portion 107 about the rotation axis R1. The support surface 34 of the child seat 3 does in some configurations not comprise a low friction material. The support surface 34 may comprise any suitable material, for example polyethylene (PE) material or another material. In some embodiments, however, the seat surface may also comprise a low friction material and the upper portion 107 may not comprise a low friction material.

### Example locking mechanism in interface for child seat

The child seat 3 may further comprise a locking mechanism 50 for releasably locking the child seat 3 on the primary support portion 101. In some embodiments, the locking mechanism 50 may be configured to engage behind the overhang portion 108 if the primary support portion 101 may comprise such an overhang portion 108. The locking mechanism 50 may comprise an engaging portion 51, 52 arranged radially movable into and out of the recess 31 to be able to engage with the circumferential recess 105 of the primary support portion 101. The recess 31 may be defined by the support surface 34 and a wall surface of a wall portion 45 extending from the support surface 34. The engaging portions 51, 52 may be arranged in openings of the wall portion 45.

As is shown in the configuration according to Fig. 5, the engaging portions 51, 52 may in some embodiments be provided on opposite sides of the recess 31. The engaging portions 51, 52 may be arranged movable towards and away from each other. The engaging portions 51, 52 are arranged at a distance from the support surface 34 such that when the engaging portions 51, 52 are in a locking position in which they protrude into the recess 31, a space for accommodating a portion of the primary support portion 101 between the engaging portions 51, 52 and the support surface 34 is provided. For example, the latter space may be configured to at least partially accommodate the earlier described overhang portion 108 of the primary support portion 101.

### Example hidden operating member for operating locking mechanism

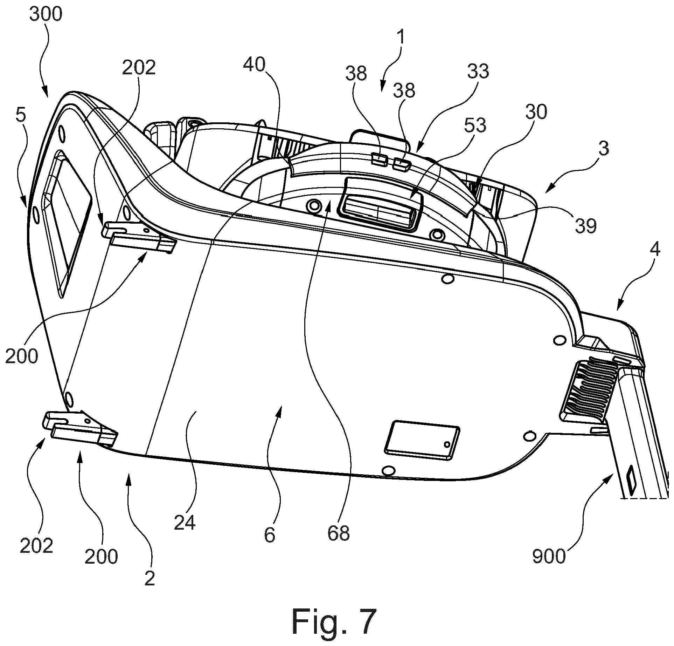

The locking mechanism 50 may further comprise an operating member 53 for retracting the engaging portions 51, 52. The operating member 53 may in some embodiments be positioned on the child seat 3 such that it is only accessible when the child seat 3 is rotated to an unlocking orientation different from a forward-facing or rearward-facing orientation of the child seat 3. Such an unlocking orientation of the child seat 3 is shown in Fig. 7. The operating member 53 may be provided on a bottom portion of the child seat 3, for example in a bottom surface 68 of the child seat 3. Furthermore, the operating member 53 may be provided at a position such that it is covered by the base when the child seat is in forward-facing or rearward-facing orientation and is exposed only in the unlocking orientation.

In Fig. 7, an unlocking orientation of the child seat 3 is shown. In the unlocking orientation, the main extension direction of the child seat 3 which corresponds to a viewing direction of a seated child, is inclined with respect to a main extension direction of the base 2, which main extension direction of the base 2 may correspond to a longitudinal direction of the base 2 or a direction of travel of vehicle in which the base 2 is mounted. In the configuration as shown in Fig. 7, the main extension direction of the child seat 3 extends about 90° with respect to the main extension direction of the base 2. Furthermore, the width of the bottom portion of the interface 30 of the child seat 3 and the width of the base 2 are narrower than the length of the bottom portion of the interface 30 of the child seat 3. Thus, when rotating the child seat 3 into the orientation as shown in Fig. 7, a forward end portion which may correspond to a foot end of the child seat 3 protrudes beyond a lateral edge portion of the base 2. As is shown in Fig. 7, the operating member 53 may be provided at such forward end portion of the child seat 3 in the bottom surface 68. Due to this configuration, the operating member 53 is accessible in the orientation shown in Fig. 7 and is revealed or hidden when the child seat 3 is rotated into a driving position in which the main extension direction of the seat and the main extension direction of the base are in parallel.

### Example locking mechanism in interface portion for child seat

Further details of the locking mechanism 50 will be described with reference to Figs. 4 and 6. Fig. 4 shows a possible configuration of an engaging portion 51, 52. Fig. 6 shows an interior configuration of a mechanism for operating the engaging portions 51, 52, in particular the mechanism for operatively coupling the operating member 53 with the engaging portions 51, 52. Accordingly, Fig. 6 shows details of the construction of a locking mechanism 50 according to some embodiments.

As already described before, the locking mechanism 50 may comprise an operating member 53. In the present configuration, the operating member 53 is configured to be pulled by a user. More precisely, the operating member 53 is configured to be pulled by a user in a main extension direction of the seat 3. The operating member 53 may be provided at an edge portion of the seat 3. Furthermore, the operating member 53 may be provided in, for example integrated in, the bottom surface 68 of the seat 3. The operating member 53 may be arranged at an edge portion of the seat interface 30. In particular, the operating member 53 may be provided at a foot end portion of the seat 3. The operating member 53 is configured to be grasped by a user. For that, the operating member 53 may comprise a recess for receiving the tip ends of fingers of a user. The operating member 53 is operatively coupled to the engaging portions 51, 52. For that, force transmitting members 60 coupling the operating member 53 with the engaging portions 51, 52 are provided. Each force transmitting member 60 may comprise a Bowden cable.

The force transmitting member 60 may be part of a force transmitting mechanism used for operatively coupling the operating member 53 to the engaging portions 51, 52. The locking mechanism 50 may be configured such that a movement direction of the engaging portions 51, 52 extends cross to a movement direction of the operating member 53. In the example shown in Fig. 6, the movement direction of the engaging portions 51, 52 is substantially perpendicular to the movement direction of the operating member 53. The locking mechanism 50 may be configured such that a pulling action effected on the operating member 53 leads to a movement of the engaging portions 51, 52 in retraction direction, for example to a movement of the engaging portions 51, 52 away from each other in opposite directions. The engaging portions 51, 52 may be biased in locking direction by means of an urging member 67. In the shown configuration, the urging member 67 may be configured to directly apply an urging force on the engaging portions 51, 52. However, it is also possible to implement configurations, in which the urging force of the urging member is indirectly applied on the engaging portions 51, 52 by means of a force transfer member, for example by means of the before described force transmitting member 60. In this case, however, the force transmitting member may be provided as a rigid member, for example a bar or rod, to be able to transmit a sufficiently high urging force on the engaging portions 51, 52.

In the configuration as shown in Fig. 6, it is shown that the engaging portions 51, 52 may be arranged movable with respect to a supporting portion 65. The supporting portions 65 may be configured to suitably hold and guide the force transmitting member 60 such that a proper connection to the engaging portions 51, 52 allowing a sufficient force transfer is possible. The supporting portions 65 each comprise guiding portions 63, 64. The guiding portions 63, 64 are configured to securely hold the force transmitting members 60. In the configuration as shown in Fig. 6, the force transmitting members 60 are Bowden cables and the guiding portions 63, 64 are configured to hold the Bowden cables with a predetermined curvature allowing an optimum function of the Bowden cables.

The supporting portions 65 may be configured symmetrically such that they can be used on opposite sides of the recess 31. For that, the supporting portions 65 may comprise two guiding portions 63, 64 although only one guiding portion is necessary for operating the engaging portions 51, 52. By using such a symmetrical construction, it is possible to reduce the manufacturing costs since the supporting portions 65 can be used at different positions. The urging members 67 may be supported on an inner surface of the supporting portions 65 at one end and may be supported on the engaging portions 51, 52 at an opposite end. Accordingly, the urging members 67 may be sandwiched between the supporting portions 65 and the engaging portions 51, 52.

As is shown in the configuration of Fig. 6, an end portion of the Bowden cable 60 can be coupled to a central portion of the engaging portions 51, 52. In this case, two urging members 67 may be provided on opposite sides of a connected Bowden cable. In this way, a proper force application on the engaging portions 51, 52 is possible without effecting any tilting movement of the engaging portions 51, 52. A first end portion 61 of the force transmitting member 60, in the present case a Bowden cable, is coupled to the operating member. A second end portion 62 of the force transmitting member 60 is coupled to an engaging portion 51, 52. Since the supporting portions 65, the engaging portions 51, 52 and the force transmitting members 60 are configured identical, an operation of the operating member 53 leads to a simultaneous operation of the engaging portions 51, 52 in the same extent.

A possible configuration of the engaging portions 51, 52 is shown in Fig. 4. The engaging portions 51, 52 may each comprise a locking member 54 which may be provided by a rigid main body. The locking member 54 may comprise guiding portions 59 protruding from lateral sides of the locking member 54. At a rear end portion, the locking member 54 may comprise a recess 57 for accommodating an end portion of the force transmitting member 60 and an opening 58 allowing to pass the force transmitting member into the recess 57. A forward end portion of the locking member 54 may form an engaging portion of the locking member 54. The engaging portion may comprise a locking surface 55 and optionally a guiding surface 56. The locking surface 55 is oriented in upward direction so as to be able to get in contact with the overlap portion 108 of the primary support portion 101, for instance.

The guiding surface 56 may be oriented in downward direction, for example away from the support surface 34 when the engaging portion 51 is mounted on the interface 30 of the seat 3. The guiding surface 56 is tapered and configured to get in contact with an outer edge portion of an upper portion 107 of the primary support portion 101. The guiding surface 56 may be configured such that when it is contacted with the upper portion 107 of the primary support portion 101 upon mounting the seat 3 on the primary support portion 101, an urging force pushing the engaging portions 51, 52 in retraction direction is generated when the child seat 3 is moved relative to primary support portion 101 in a direction opposite to the first direction D1. In this way, a movement of the engaging portions 51, 52 into a retracted position is automatically effected by pushing the guiding surface 56 on the upper portion 107. More precisely, the guiding surface 56 is configured to slide on an outer edge region of the upper portion 107 and due to the tapering of the guiding surface 56, the engaging portions 51, 52 are urged towards the retracted position. As soon as the engaging portions 51, 52 have passed the overhang portion 108, they are free to engage with the circumferential recess 105. Due to the presence of the urging members 67, the engaging portions 51, 52 are then automatically engaged with the circumferential recess 105. Accordingly, it is not necessary that a user operates the operating member 53 for inserting the child seat 3 on the primary support portion 101.

### Example child seat with chamfered insertion opening in interface portion

As is further illustrated in Fig. 5, the recess 31 of the child seat 3 may be configured with an inclined circumferential wall portion 44 at an opening end portion of the recess 31. In this inclined circumferential wall portion 44, an outer diameter of the recess 31 is reduced from an opening towards the support surface 34 at least over a predetermined distance. In other words, in the opening end portion of the recess 31, the outer diameter of the recess may be widened up to a diameter which is larger than the diameter of the upper portion 107 of the primary support portion 101. With such a construction, mounting of the seat 3 on the primary support portion 101 is facilitated since the opening for receiving the upper portion 107 is enlarged. Furthermore, such a construction provides a centering function since the seat 3 is automatically centered with respect to the primary support portion 101 through a sliding contact of the inclined circumferential wall portion 44 with the upper portion 107 of the primary support portion 101.

### Example configuration of secondary support portion

As is illustrated in Figs. 1 and 2, the base 2 may comprise a secondary support portion 102, 103. In this exemplary configuration, two secondary support portions 102, 103 may be provided. A first secondary support portion 102 may be provided in a forward end portion of the base 2. A second secondary support portion 103 may be provided in a rear portion of the base 2. The secondary support portions 102, 103 may be radially spaced from the primary support portion 101. Each of the secondary support portions 102, 103 may be configured to receive a restraining portion 32, 33 of a child seat 3. In this connection, reference is made to Figs. 5 and 7 in which possible configurations of restraining portions 32, 33 of the child seat 3 are shown. The function and configuration of the restraining portions 32, 33 will be described later in greater detail.

At least one secondary support portion 102, 103 may be configured to receive the restraining portion 32, 33 of the child seat 3 by rotating the child seat 3 about the rotation axis R1 after the child seat 3 was inserted on the primary support portion 101. Accordingly, the secondary support portion 102, 103 and the restraining portion 32, 33 may be configured such that the restraining portion 32, 33 may only be rotationally inserted into the secondary support portion 102, 103. Each secondary support portion 102, 103 may be configured to limit a tilting movement of the child seat 3 about a second rotation axis R2 extending perpendicular to the rotation axis R1.

### Example dropping zone

The secondary support portions 102, 103 and the restraining portions 32, 33 of the child seat 3 may be configured such that an insertion of the child seat 3 on the base 2 is possible within a predetermined dropping zone. The dropping zone may be seen as an angular range α in which the child seat 3 needs to be oriented for coupling the same to the base 2. The dropping zone may also be seen as an angular range α in which the restraining portions 32, 33 need to be positioned to allow an insertion of the child seat on the primary support portion 101. Within this angular range, the restraining portions 32, 33 are oriented such that they do not overlap with the secondary support portions 102, 103 when viewed from above and can laterally pass the secondary support portions 102, 103. Such a dropping zone is illustrated in Fig. 53. The angular range may be greater than 90° on each lateral side of the primary support portion 101. The range may be greater than 100°, for example 112°.

### Example base with play removal in secondary support portion

At least one secondary support portion 102, 103 may be configured to apply an urging force in downward direction on an inserted restraining portion 32, 33. At least one secondary support portion 102, 103 may comprise an urging member 609, for example a leaf spring 610, as is shown in Fig. 9 for instance. The urging member 609 is provided to exert on the restraining portion 32, 33 an urging force in a second direction D2 opposite to the first direction D1 when the restraining portion 32, 33 is received in the secondary support portion 102, 103.

### Example misuse prevention arrangement/rotation block

In some embodiments, an insertion geometry of at least one secondary support portion 103 may be mechanically coded to block the child seat 3 from being positioned in an undesired orientation. In particular, in some embodiments, the insertion geometry of at least one secondary support portion 103 can be mechanically coded to block the child seat from being positioned in a forward-facing orientation. For example, the insertion geometry may be such that only a restraining portion 32, 33 having a specific shape is allowed to be received in the secondary support portion 103.

In Fig. 8, a possible mechanical coding of the rear secondary support portion 103 is shown. In this example, the secondary support portion 103 may comprise an abutment portion 120. The abutment portion 120 is configured to limit a rotation of the child seat 3 about the rotation axis R1 towards a forward-facing orientation. The abutment portion 120 is configured to contact a stop portion 35 provided on the child seat 3. In the embodiment, the abutment portion 120 may comprise abutment surfaces 121, 122. Each abutment surface 121, 122 is configured to contact stop portion surfaces 36, 37 provided on the stop portion 35 of the child seat 3 as is exemplary illustrated in Fig. 5. The abutment surfaces 121, 122 may be formed such that the stop portion 35 is urged in a second direction D2 opposite to the first direction D1 when the stop portion 35 is pushed against the abutment portion 120 upon rotating the child seat 3. In the configuration as shown in Fig. 8, the abutment surfaces 121, 122 are inclined.

At least one secondary support portion 102 may be configured such that a rotation of the child seat 3 about the rotation axis R1 is automatically locked when the child seat 3 reaches a rearward-facing orientation upon rotating the same, for example rotating the same about the primary support portion 101.

### Example base allowing a forward-facing orientation by manual interaction

In some embodiments, at least one secondary support portion 102 may be configured such that the child seat 3 is normally blocked from reaching the forward-facing orientation and only rotatable to the forward-facing orientation upon actuation of an actuating member 119 by a user. The actuating member 119 may be provided as shown in Figs. 1 and 2, for instance.

A blocking portion may be provided which is movable between a blocking position and an unblocking position. The blocking portion may be biased towards the blocking position. In the blocking position, the blocking portion provides a stop for the child seat 3. In the blocking position, the blocking portion may protrude into a rotation path of portions of the child seat, for example a rotation path of the restraining portions. In the unblocking position, the blocking portion is moved out of the way so as to not block a rotation of the child seat 3. The blocking portion may be operatively coupled to the actuating member 119. Two actuating members may be provided on opposite lateral sides of the base main body 20 and configured to be pushed by a user inward in cross direction of the base 2.

### Example base with locking mechanism having blocking and locking function

The blocking function as described before may be implemented in a locking mechanism, for example in a locking mechanism 500 as disclosed herein. The locking mechanism may, thus, comprise a double function, namely the function of normally blocking the child seat from being rotated into a forward-facing orientation unless a user allows such rotation by operating the actuating member and the function of blocking the rotation of the child seat 3 when the forward-facing orientation and/or the rearward-facing orientation of the child seat 3 is established. The blocking portion may be a locking member 501 of a locking mechanism as will be described further below. In other words, the locking member 501 of such locking mechanism may also form the blocking portion. The actuating member 119 may be a release member 502 of a locking mechanism 500.

The locking mechanism 500 may be configured for locking a rotation of the child seat 3 about the rotation axis R1, for example by an engagement with a restraining portion of the child seat 3, when the seat is oriented in a desired orientation, for example a forward-facing orientation or a rearward-facing orientation. The locking mechanism 500 may be configured to allow a rotation of the child seat 3 about the rotation axis R1 to orient the child seat 3 in rearward-facing orientation.

The locking mechanism 500 may be configured for normally blocking a rotation of the child seat 3 about the rotation axis R1 into the forward-facing orientation. The actuating member 119 may be a push button.

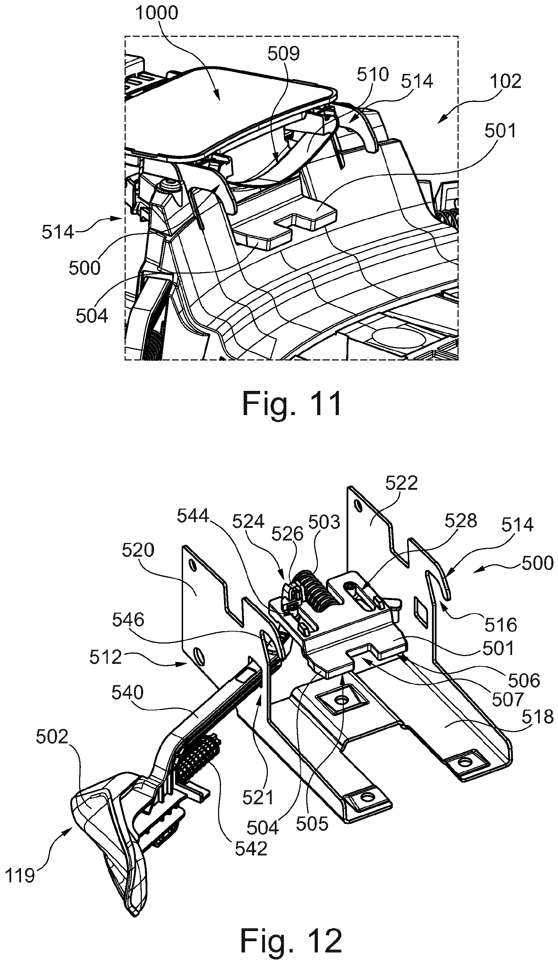

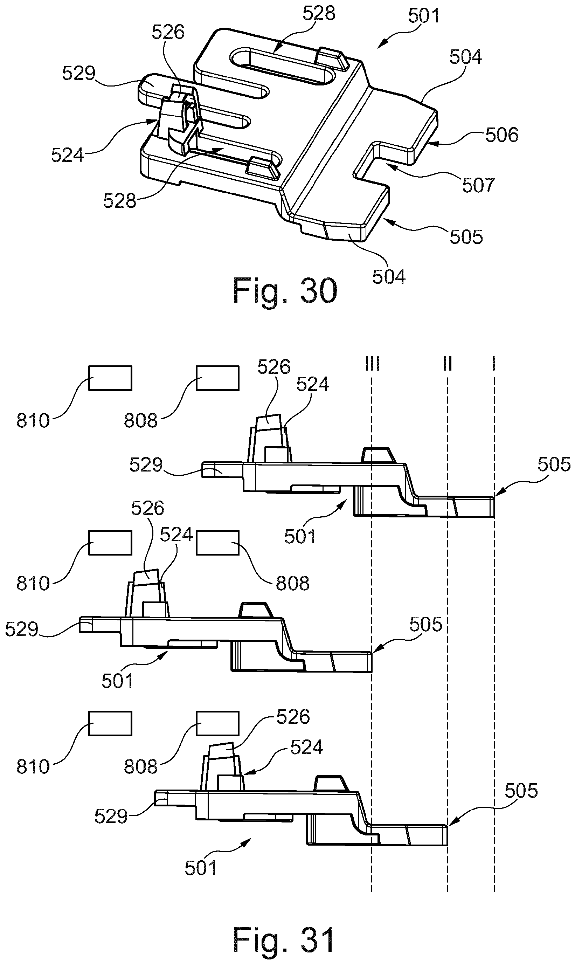

Some basic features of a possible configuration of the locking mechanism 500 are shown in Figs. 11 and 12. Further optional features of the locking mechanism are described below with reference to Figs. 31, 50 and 51.

The locking mechanism 500 may be provided in the front secondary support portion 102. The locking mechanism 500 may comprise a locking member 501. The locking member 501 may be movable between a locking position in which it can engage with the restraining portion 32, 33 of the child seat, and a release position in which a rotation of the child seat 3 about the rotation axis R1 is not blocked. In other words, in the locking position, a positive locking may be established between an inserted restraining portion and the locking member 501 whereas in the release position of the locking member 501, the locking member 501 is disengaged from the restraining portion 32, 33.

The locking member 501 may be biased by an urging member 503 as shown in Fig. 12. The locking member 501 may be biased such that a movement of the locking member 501 towards the release position is possible only against an urging force exerted by the urging member 503. In other words, a biasing force of the urging member 501 may act on the locking member 501 to move towards the locking position. The urging member 503 may be a spring.

### Example of automatic locking of rearward-facing child seat

The locking mechanism 500 may be configured operable by an operating force exerted thereon by the child seat 3 to allow a rotation of the child seat 3 into the rearward-facing orientation without having to manually interact, for example by pushing the actuating member 119/release member 502. For example, the operating force may be generated by transferring a rotational force exerted on the child seat 3 into the operating force. In one configuration as shown in Figs. 5 and 11, the operating force may be generated through sliding contact of a surface portion of the child seat 3 and a surface portion of the locking member 501. In general, the operating force for actuating the locking mechanism 500, in particular for moving the locking member 501 to the release position, may be achieved by a pushing force exerted by the child seat 3 on the locking member 501.

The locking member 501 may comprise a force receiving surface 504 extending such that the operating force can be generated through sliding contact of a force application surface 42, 43 on the child seat 3 and the force receiving surface 504, when the child seat 3 is rotated about the rotation axis R1 and contacts the locking member 501. The force receiving surface 504 may extend inclined with respect to a longitudinal middle plane of the locking member 501. The force receiving surface 504 may be inclined with respect to a movement direction of the locking member 501. Further details of the locking member 501 and of the force receiving surface 504 are described below with reference to Fig. 30.

A possible configuration of force application surfaces 42, 43 on a child seat 3 is shown in Fig 5. The force application surfaces 42, 43 may be provided on lateral sides of the restraining portion 32. The restraining portion 32 may be a restraining portion engaged by the locking mechanism 500 in the front secondary support portion 102 when the child seat is rotated into rearward-facing orientation. The force application surfaces 42, 43 are provided such that their imaginary extensions cross each other at a position located outward of the restraining portion in radial direction. In other words, the restraining portion 32 is tapered towards its free end portion on its lateral sides. In this way, the force application surfaces 42, 43 are configured to push the locking member 501 away when the restraining portion 32 is rotated into the front secondary support portion 102.

On the other hand, the child seat 3 may comprise stop surfaces 39, 40 provided on lateral sides of the restraining portion 33. The restraining portion 33 may be the restraining portion which is received and engaged by the locking mechanism 500 when the child seat is oriented in forward-facing orientation. Such stop surfaces 39, 40 and/or the locking member 501 may be configured such that the above operation of the locking member 501 is not possible by an operating force exerted thereon by the child seat 3. A rotation of the child seat 3 into the forward-facing orientation without having to manually interact is, thus, not possible. Rather, stop surfaces 39, 40 and the locking member 501 are configured such that the locking member 501 acts as stop and the forward-facing orientation of the child seat 3 may only be reached by first manually moving the locking member 501 to the unlocking or unblocking position by operating the actuating member 119 or release member 502.

### Example interior construction of front secondary support portion and locking mechanism

Figure 12 shows further details of a possible interior construction of the front secondary support portion 102 and of the locking mechanism 500. In the shown configuration, the locking member 501 is provided linearly movable in a supporting structure 512. The supporting structure 512 may comprise two holding portions 514 configured as catching portions similar to the catching portions 603, 604 of the holding structure 600 as described in other parts of this specification with reference to Fig. 8. The holding portions 514 can be configured in the shape of a hook having a free end extending in downward direction so as to be able to enclose a portion of the restraining portion from above. The supporting structure 512 may comprise a bottom portion 518 configured to be fixed to the main body of the base 2. Furthermore, the supporting structure 512 may comprise two wall portions 520, 522 extending substantially perpendicular from the bottom portion 518 in upward direction from lateral end portions of the bottom portion 518. The holding portion 514 are provided in upper end portions of the wall portions 520, 522. The locking member 501 is arranged between the wall portions 520, 522. Furthermore, the locking member 500 and one is arranged such that the engaging portions 505, 506 and the holding portions 514 face in the same direction, for example towards the primary support portion 100 of the base 2.

As already mentioned before, the locking mechanism 500 may comprise a release member 502 which is also referred to as actuating member 119. In particular, the locking mechanism 500 may comprise two release members arranged on opposite sides of the locking member 501 although only one of the release members will be described in the following. Accordingly, in some configurations, two release members 502 or actuating members 119 for operating a single locking member 501 may be provided. The release member 502 is operatively coupled to the locking member 501. The release member 502 may comprise a force transmitting portion 540. The force transmitting portion 540 is coupled to the locking member 501 by means of a link 546. The force transmitting portion 540 extends through an opening 521 provided in the wall portion 521. The release member 502 is configured to be linearly movable along an extension direction of the force transmitting portion 540.

The force transmitting portion 540 may be formed straight. The release member 502 may comprise an urging member 542, for example a spring. The urging member 542 may be provided such that one end of the urging member 542 to cooperate with the release member 502 and another end of the urging member 542 is supported against the main body of the base 2. The urging member 542 is arranged to bias the release member 502 towards a locking position. In general, the release member 502 is configured to be moved between the locking position and a release position. The release member 502 is coupled to the locking member 501 such that the locking member 501 is positioned in the release position when the release member 502 is in the release position, and that the locking member 501 is positioned in a standby position as described in other parts of this specification but is movable to a locking position when a release member 502 is in the locking position.

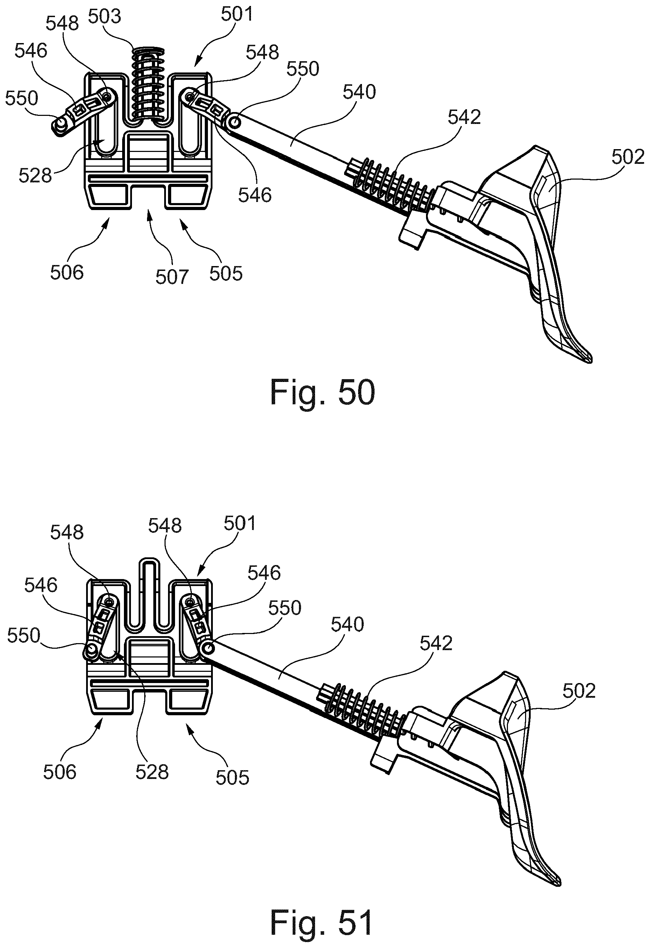

Additional details of the locking mechanism and its operation by means of the release member 502 will be described with reference to Figs. 50 and 51. As already mentioned before, the force transmitting portion 540 is coupled to the locking member 501 by means of a link 546. The link 546 may comprise a first end portion 548 and a second end portion 550. The first end portion 548 is rotatably and slidably held in one of two guiding slots 528 provided in the rear portion of the locking member 501. The guiding slots 528 may extend in parallel to each other and in main extension direction of the locking member 501. The second end portion 550 may be hingedly coupled to free end portion of the force transmitting portion 540. The second end portion 550 may comprise a cylindrical protrusion slidably received in an opening of the force transmitting portion 540.

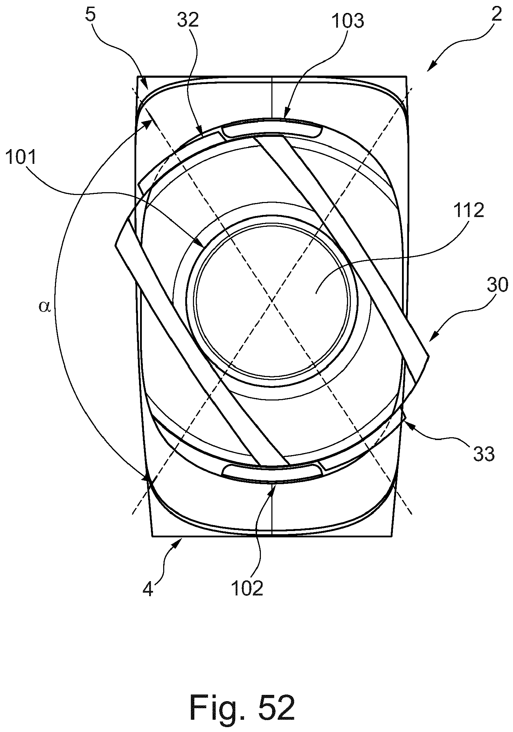

Figure 50 shows a configuration in which the release member 502 is in the locking position and Fig. 51 shows a configuration in which the release member 502 is in a release position. As is obvious from the latter figures, the first end portion 548 of the link 546 is rotated about the second end portion 550 while the second end portion 550 is simultaneously translatory moved towards the locking member 501 when the release member 502 is moved from a locking position as shown in Fig. 52 a release position as shown in Fig. 51. Since the first end portion 548 is slidably held in a slot 528, the locking member 501 is movable with respect to the first end portion 548 when the release member 502 is in a locking position. In this way, it is possible to push the locking member 501 towards the release position through force application on the locking member by a force application surface of a restraining portion as described in other parts of this specification.

As can be gathered from the above, a locking mechanism 500 may be provided which may comprise two separate release members 502 or actuating members 119 linked to a single locking member 501. Such locking mechanism 500 may be configured to allow a rotation of the child seat 3 into forward-facing orientation only upon manual operation of one of the two separate release members 502 and may in addition be configured to lock a rotation of the child seat 3 out of the forward-facing orientation and/or the rearward-facing orientation once the forward-facing orientation or the rearward-facing orientation is reached.

### Example holding structure in secondary support portion

As is illustrated in Figs. 9 and 10, the base may comprise a holding structure 600 for blocking a lifting of a restraining portion 32, 33 from the base 2 for preventing a rotational movement of the child seat 3 in case of a crash. The holding structure 600 may at least partially be provided in a secondary support portion 102, 103. In some embodiments, the secondary support portion 102, 103 may comprise the holding structure 600 or at least portions of the holding structure 600.

The holding structure 600 may comprise one or more holders 601, 602. The holder 601, 602 may comprise a catching portion 603, 604 which may have a hook shape. Each holder may be configured to receive one of the restraining portions 32, 33. In some configurations, the holders 601, 602 may be force transmittingly coupled to a coupling portion 202 configured to be engaged with a fixing structure 96 in the vehicle seat 90.

The coupling portion 202 may be provided on a coupling arrangement 200 or may be a portion of a coupling arrangement, as will be described later. The coupling arrangement 200 may comprise a connector, for example a coupling arm, and the coupling portion 202 may be provided in a free end portion of such a connector. The coupling portion 202 may be held on the base 2 so as to be adjustable or movable on the coupling arrangement to allow a tensioning of the base 2 on the vehicle seat 90.

As is shown in Fig. 10, each holder 601, 602 may be force transmittingly coupled to the coupling portion 202 by means of a force transfer path comprising rigid force transfer links 605, 606, 607. The force transfer links may be made of metal in order to allow a secure force transfer of high forces. At least one force transfer link may comprise a coupling portion support frame 606, 607. The coupling portion support frame 606, 607 may be configured to support a connector, for example a coupling arm, comprising the coupling portion 202, for example an Isofix arm. Accordingly, in some embodiments, the coupling portion support frame may also be considered to be an Isofix arm support frame.

The coupling portion support frame 606, 607 may comprise a U-shaped housing with upwardly extending sidewalls. The coupling portion 202 may be supported on the coupling portion support frame 606, 607. Each holder 601, 602 may be coupled to the coupling portion support frame 606, 607 by means of a coupling member 605, which in the shown configuration is a rod 608. A particular beneficial force transfer may be achieved when the number of force transfer links is low. For example, each holder 601, 602 may be coupled to the coupling portion support frame 606, 607 only by a single coupling member 605. The coupling member 605 may be directly coupled to the coupling portion support frame 606, 607, for example directly to the two upwardly extending walls of the U-shaped housing of the coupling portion support frame 606, 607.

### Example tensioning mechanism for a base

In the following, possible features of a tensioning mechanism 400 for a base 2 will be described. A base 2 for a child restraint system 1 may comprise such tensioning mechanism 400 in addition or alternatively to the herein described mechanisms and features of a base 2 for a child restraint system.

The tensioning mechanism 400 may be configured to generate an urging force for urging the base 2 onto the vehicle seat 90 once the base 2 is operatively coupled to a fixing structure 96 of the vehicle by means of a coupling arrangement 200.

Fig. 1 shows an arrangement in which a tensioning mechanism 400 is provided on the base 2. The base 2 as shown in Fig. 1 may be coupled to the fixing structure 96 of the vehicle by means of a coupling arrangement 200. The tensioning mechanism 400 may be configured to apply a force on the coupling arrangement 200.

The coupling arrangement 200 may comprise features as already described before and/or features as will be described further below. For example, the coupling arrangement 200 may comprise a coupling portion 202 which is configured releasably engageable with the fixing structure 96 on the vehicle. The fixing structure on the vehicle may be a bracket, for example a bracket of an Isofix fixation structure. The coupling arrangement 200 may comprise one or more connectors 204, 206. The connector may be formed as or may comprise a coupling arm. Each of the connectors 204, 206 may comprise the before described coupling portion 202. In some embodiments, the connectors 204, 206 may be configured as Isofix system connectors allowing to fix the base 2 on the seat 90 by means of an Isofix fixing structure. However, it is to be noted that other mechanisms and features may be used for coupling the base 2 to the vehicle seat 90. For example, it is possible to use existing components of a seat belt system of the vehicle for coupling the base to the vehicle seat 90, for example the seat belt and/or a seat belt lock. The connectors 204, 206 may be connected to each other by means of a connecting portion, for example by means of a belt or a rigid member. The tensioning mechanism 400 may be configured to apply a force on the connectors 204, 206 and/or on such a connecting portion, for example a pulling force.

The tensioning mechanism 400 may be configured to generate an urging force for urging the base 2 onto the vehicle seat 90 after the base 2 was operatively coupled to the fixing structure 96. In other words, the base 2 may be configured such that it first has to be coupled to the fixing structure. After that, the tensioning mechanism 400 may be operated to generate the urging force for urging the base 2 onto the vehicle seat 90. Using a tensioning mechanism 400 allows to fixedly tighten the base 2 onto the vehicle seat 90.

In general for this an all other embodiments, unless it is specifically described that a child seat 3 may be detachably or releasably mountable to the base 2, the base 2 may also be an integral portion of the child seat 3. The base does not necessarily have to be a standalone part. By contrast, the base 2 may also be an integral part of the child seat 3, in other words, the child seat 3 and the base 2 may be non-releasably coupled.

The tensioning mechanism 400 may be configured such that for generating the urging force for urging the base 2 onto the vehicle seat 90, a pulling force on the fixing structure 96 or on components of the seat belt system of the vehicle is generated. Accordingly, by operating the tensioning mechanism 400, the urging force may be generated by exerting a pulling force on the fixing structure or components of the seat belt system via the established operative coupling between base 2 and fixing structure 96 or with components of the seat belt system.

The tensioning mechanism 400 may comprise an operating member 402. The operating member 402 may comprise or may be configured as a lever 404. The tensioning mechanism 400 may be configured such that a user can generate the urging force by repetitively moving the operating member 402 of the tensioning mechanism 400 back and forth. In other words, the tensioning mechanism 400 may be configured such that the urging force for urging the base 2 onto the vehicle seat 90 may be generated by performing a pumping like action on the operating member 402.

As already mentioned before, the base 2 may comprise a coupling portion 202 for fixedly coupling the base 2 to the fixing structure 96. Furthermore, in some configurations, the base 2 may comprise an anti-rebound portion 300 configured to be contacted with a backrest 92 of the vehicle seat 90 for at least limiting a rotating movement of the base 2 towards the backrest 92 in a crash situation.

In some configurations, the tensioning mechanism 400 may be configured for reducing a distance between the anti-rebound portion 300 and the coupling portion 202. For example, in some configurations the distance between the anti-rebound portion 300 and the coupling portion 202 may be reduced by moving the coupling portion 202 relative to the anti-rebound portion 300. In some configurations, the distance between the anti-rebound portion 300 and the coupling portion 202 may be reduced by moving the anti-rebound portion 300 relative to the coupling portion 202. Accordingly, the distance may be reduced by moving the anti-rebound portion 300 and the coupling portion 202 relative to each other. It is also possible to provide a configuration in which both the anti-rebound portion 300 and the coupling portion 202 are moved relative to the main body 20 of the base and towards each other, for example the anti-rebound portion 300 away from the main body 20 and the coupling portion 202 towards the main body 20.

### Example tensioning mechanism with back and forth movement

Fig. 1 shows a configuration in which the base 2 may comprise a coupling portion 202, an anti-rebound portion 300 and a tensioning mechanism 400. The tensioning mechanism 400 is configured such that the user can reduce the distance between the anti-rebound portion 300 and the coupling portion 202 by repetitively moving the operating member 402 back and forth. In the following, details of a possible configuration of a tensioning mechanism 400 in which an urging force may be generated by repetitively moving an operating member 402 back and forth will be presented with reference to the figures.

The basic general function of a possible configuration of the tensioning mechanism 400 will be described with reference to Figs. 1, 15 and 16. The operating member 402 is force transmittingly coupled to the coupling portion 202. In the shown configuration, the operating member 402 is a lever 404. The lever 404 may be a curved lever 404, in particular a U-shaped lever. In the shown configuration, the lever 404 is U-shaped and is held pivotably about a pivot axis P1 at its free end. The pivot axis P1 may extend in cross direction C of the base 2. The lever 404 may for example be supported on opposite sides of a primary support portion 101 in some embodiments comprising the primary support portion 101 as described in other parts of this specification. Accordingly, the lever 404 may be rotatable towards a front-end portion 4 of the base 2 and back towards rear-end portion 5 of the base 2.

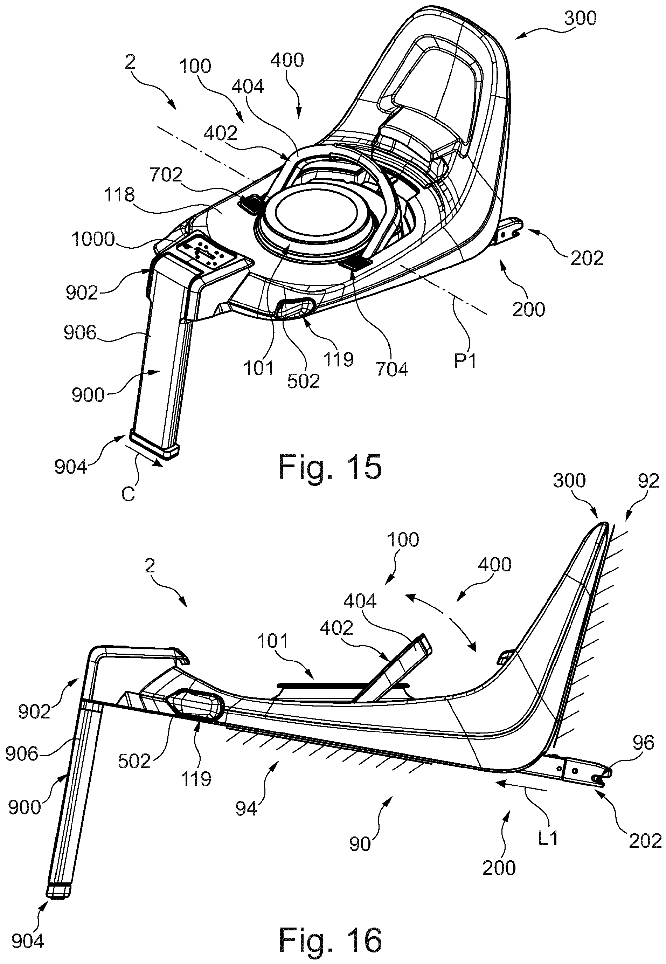

The lever 404 may be movable between a stowage position as shown in Fig. 1 and a deployed position as shown in Fig. 15. In the stowage position, the lever 404 may be in a position in which it is accommodated in the base such that it does not protrude beyond an upper surface portion 118 of the base 2. For that, a recess may be arranged in the upper surface portion 118 of the base 2. The recess may have a shape corresponding to the shape of the lever 404 such that the lever 404 may be received in the recess when the same is in the stowage position. For example, the recess and the lever 404 may be shaped such that in the stowage position, an upper surface of the lever 404 and the upper surface portion 118 are substantially flush so that a transition between a lever surface and an upper surface of the upper surface portion 118 is substantially seamless. In the upper surface portion 118, a recess 22 may be provided allowing to grasp the operating member 402 when the same is in the stowage position. The recess 22 may be integrally formed with the recess for accommodating the lever 404 in the stowage position. In other words, the recess for accommodating the operating member 402 in the stowage position may be widened at a predetermined portion so that at least in such widened portion, the lever is not closely received in the recess but graspable by a user.

As is shown in Fig. 16, the lever 404 may be moved back and forth as indicated by two arrows. This in turn leads to the described distance reduction between the coupling portion 202 and the anti-rebound portion 300. In the configuration of Fig. 16, the coupling portion 202 is configured movable towards and away from the anti-rebound portion 300 through the operation of the lever 404. For example, the coupling portion 202 may be translatory movable in movement direction L1. In other words, the coupling portion 202 may be retracted towards the main body 20 of the base 2.

Accordingly, as can be gathered from Fig. 16, a configuration may be provided in which the tensioning mechanism 400 is configured to move the coupling portion 202 relative to the anti-rebound portion 300. In particular, the tensioning mechanism 400 may be configured to translatory move the coupling portion 202, for example in the longitudinal movement direction L1.

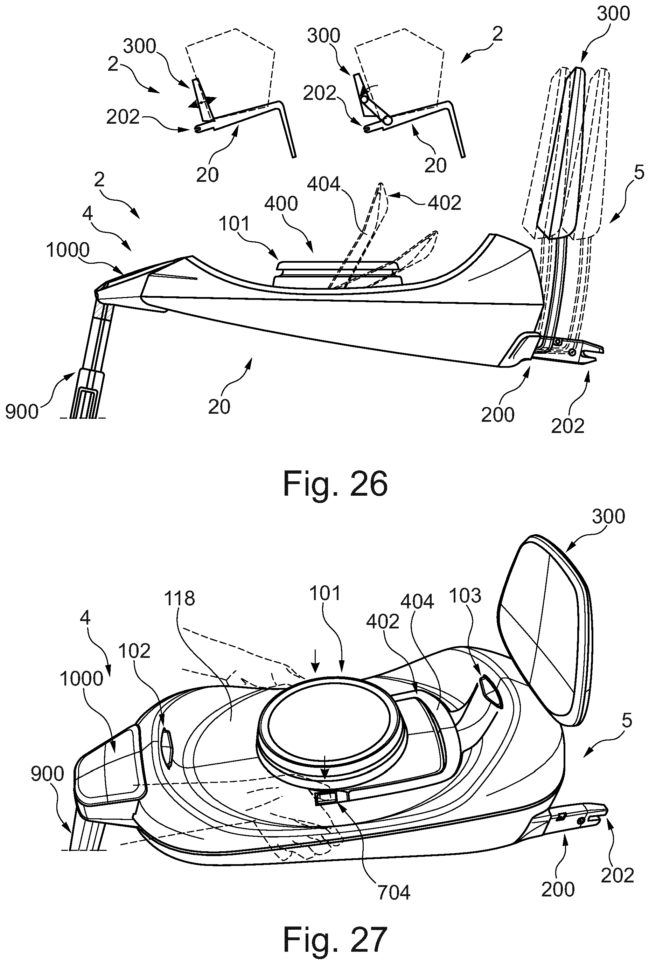

As already mentioned before, it is also possible to provide a tensioning mechanism 400 which is configured to move the anti-rebound portion 300 relative to the coupling portion 202. Such a configuration is shown in Fig. 26. In the shown configuration, the anti-rebound portion 300 may be coupled to the main body 20 of the base 2 such that it is movable towards and away from the main body 20. Accordingly, a distance between the anti-rebound portion 300 and the coupling portion 202 may be reduced by moving the anti-rebound portion 300 closer to the coupling portion 202. In such a configuration, the main body 20 of the base 2 may remain stationary with respect to the coupling portion 202. In other words, the main body 20 and the coupling portion 202 may be arranged at a predetermined fixed distance so that the operation of the tensioning mechanism 400 does not change the position of the main body 20 relative to a fixing structure 96 to which the coupling portion 202 is coupled. By contrast, after the base 2 was coupled to such a fixing structure 96, the anti-rebound portion 300 may be moved towards the backrest of the vehicle seat 90 and away from the main body 20 by operating the tensioning mechanism 400. The tensioning mechanism 400 may be configured to translatory and/or rotationally move the anti-rebound portion 300 with respect to the main body 20. To illustrate that, the upper left smaller depiction in Fig. 26 depicts a translatory movement of the anti-rebound portion 300 and the right upper smaller depiction illustrates a configuration in which the anti-rebound portion 300 is moved by a rotation about the main body 20 using a rotating arm.

### Example tensioning mechanism with ratchet mechanism

In embodiments comprising a tensioning mechanism 400, the operating member 402 may be force transmittingly coupled to a movable portion generating the urging force, for example the coupling portion 202 or the anti-rebound portion 300. A mechanical device that allows to transfer a force on the movable portion in only one direction while preventing a force transfer in the opposite direction may be provided. For example, a ratchet mechanism 410 may be provided, for example in the force transfer path between operating member 402 and coupling portion 202, allowing to transfer a torque applied on the operating member 402 only in tensioning direction. For example, the ratchet mechanism 410 may be provided to force transmittingly couple the operating member 402 to an output member 422, for example an output shaft, which output member 422 is in turn force transmittingly coupled to a coupling arrangement 200 comprising the coupling portion 202 as a movable portion.

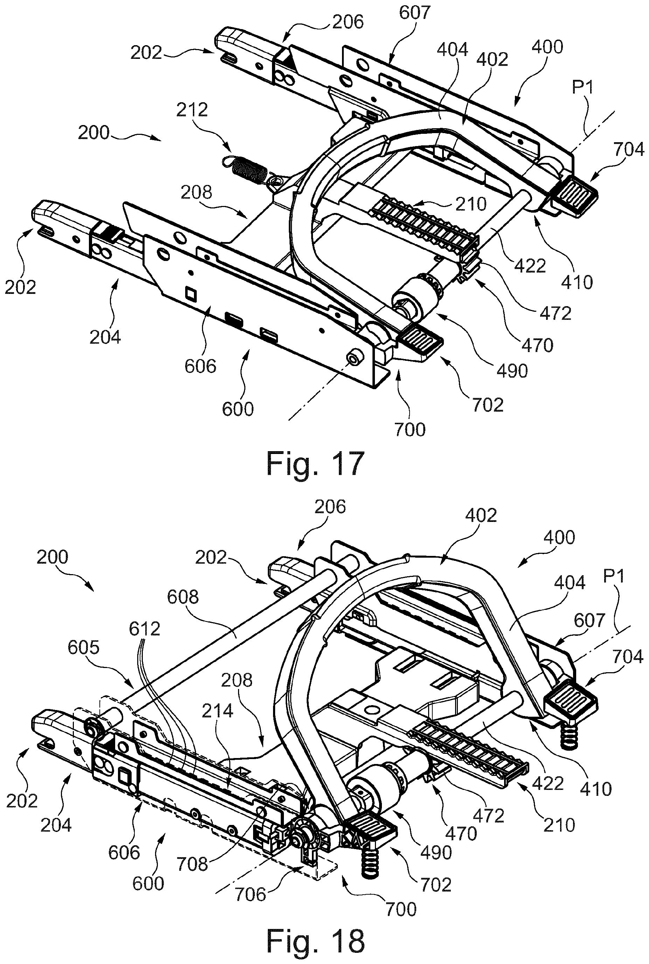

As is shown for example in Figs. 17 and 18, the operating member 402 and the output member 422 may both be provided pivotably movable about the pivot axis P1. The output member 422 may be received in end portions of the operating member 402. More precisely, according to the configuration, the output member 422 may extend through the free end portions of the operating member 402 in the direction of the pivot axis P1. The operating member 402 may be held on the output member 422. In the free end portions of the operating member 402, a ratchet mechanism 410 may be provided which is configured to couple the operating member 402 to the output member 422. The ratchet mechanism 410 may be configured to allow a movement of the operating member 402 relative to the output member 422 in one direction and to lock a movement of the operating member 402 with the output member 422 in the opposite direction.

In the shown configuration, the ratchet mechanism 410 may be configured such that upon moving the operating member 402 from a lowered position as shown in Fig. 17, to a deployed position as shown in Fig. 18, a rotational force input on the operating member 402 is transferred to the output member 422. Accordingly, when moving the operating member 402 in the latter described direction, a rotation of the operating member 402 is transferred into a corresponding rotation of the output member 422. Stated differently, in the latter movement direction, i.e. in tensioning direction, the ratchet mechanism 410 couples the operating member 402 and the output member 422 such that they are integrally moved.

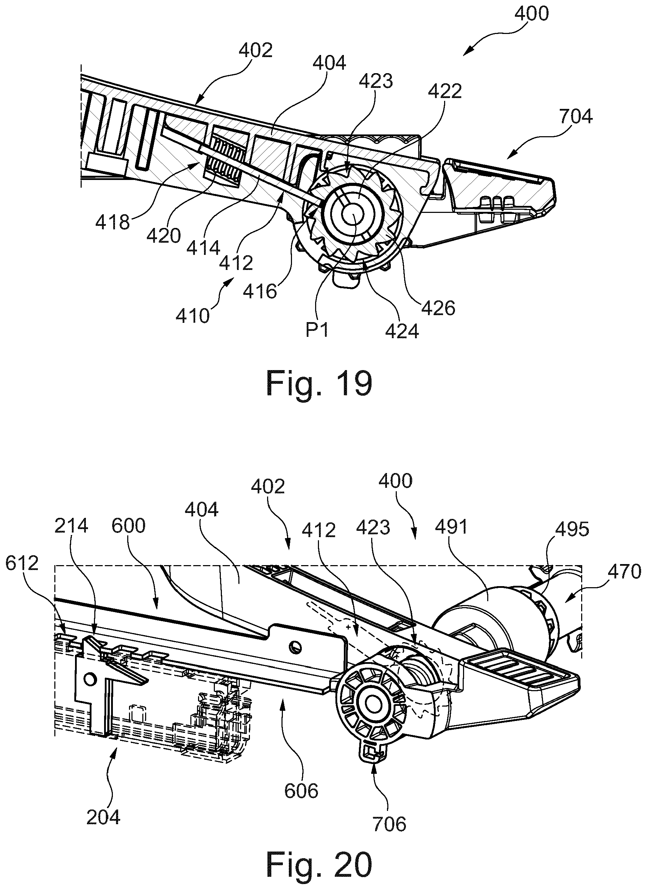

Specific details of a possible configuration of the ratchet mechanism 410 will be described with reference to Figs. 19 and 20. Fig. 19 shows a sectional view through the end portion of the operating member 402 and the ratchet mechanism 410. It is noted that the ratchet mechanism 410 according to some configurations may be fully concealed within the end portions of the operating member 402.

The ratchet mechanism 410 may comprise a locking member 412. The locking member 412 may be movably held in the operating member 402 such that it is movable towards and away from the pivot axis P1. Accordingly, the locking member 412 may be movable in radial direction with respect to the output member 422. The locking member 412 may be spring loaded by means of an urging member 418, for example by means of a spring 420. In particular, according to the shown configuration, the locking member 412 may be biased by the urging member 418 towards the pivot axis P1 and the output member 422, respectively.

The ratchet mechanism 410 may comprise an engaging portion 423 which is provided such that it is integrally movable with the output member 422. For example, the engaging portion 423 may comprise a gear 424. The engaging portion 423 may be an integral portion of the output member 422 or may be rotationally interlocked with the output member 422. In the configuration as illustrated in Fig. 19, the engaging portion 423 is configured as a gear 424 which is rotationally interlocked with the output member 421 by means of a connecting pin (not shown).

The locking member 412 may be configured to be releasably engaged with the engaging portion 423. The locking member 412 may be held in the operating member 402 so as to be only translatory movable. When rotating the operating member 402, the locking member 412 is correspondingly rotated. Therefore, a rotation of the operating member 402 may be transferred to the output member 422 when the locking member 412 is engaged with the engaging portion 423.

The locking member 412 may comprise a forward end portion 416 which is specifically configured to be engaged with the engaging portion 423. For example, the forward end portion 416 may be configured to engage with teeth 426 of the gear 424. The teeth 426 according to the shown configuration are shaped such that a force transfer in tightening direction (clockwise direction in Fig. 19) is possible whereas a movement of the operating member 402 in opposite direction (counter-clockwise direction) is possible relative to the output member 422. Accordingly, the ratchet mechanism 410 is configured to allow a force transfer in only one direction, the clockwise direction in Fig. 19.

As already mentioned before, the output member 422 may be force transmittingly coupled to the coupling portion 202. A rotation of the output member 422 may be transferred into a linear movement of the coupling portion 202. A configuration may be provided in which a distance between the coupling portion 202 and the pivot axis P1 is reduced when the tensioning mechanism 400 is operated. In other words, moving the operating member 402 in clockwise direction in Fig. 19 about the pivot axis P1 may be transferred into a retraction movement of the coupling portion 202 towards the pivot axis P1.

### Example tensioning mechanism with torque limiter

In some configurations, the output member 422 may be directly coupled to a driven portion 210 of the coupling arrangement 200 by means of a force output member 470. The force output member may be a sprocket or gear wheel 472. The output member 422 may be coupled to the force output member 470 by means of a torque limiting mechanism 490. By using such torque limiting mechanism 490, a predetermined maximum torque transferred to the coupling arrangement 200 may be preset. Such a configuration may provide a feedback to a user that a predetermined maximum tensioning force is reached.

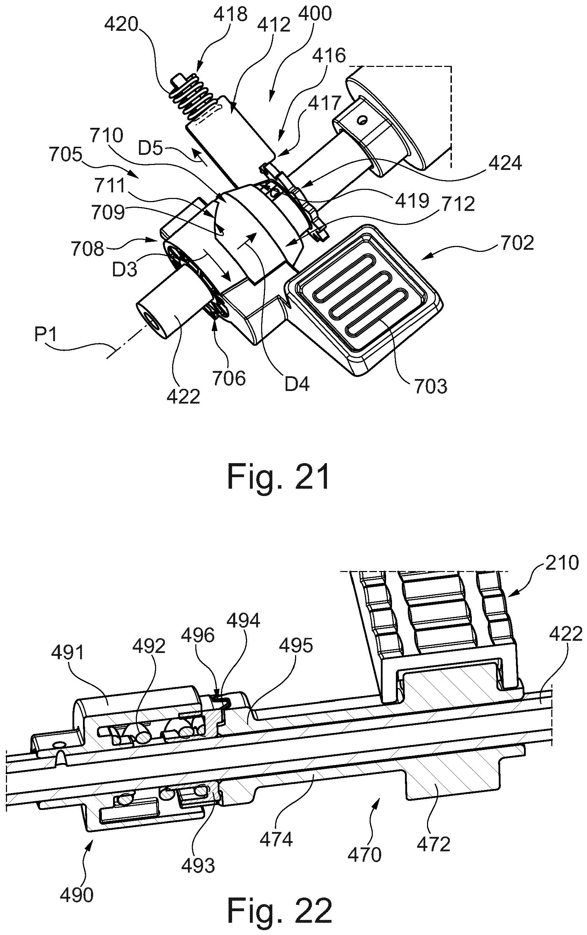

Different configurations of a torque limiting mechanism 490 may be implemented. An example is given in Fig. 22. The exemplary torque limiting mechanism 490 may comprise a housing 491 which is interlocked with the output member 422 so as to be integrally rotatable with the output member 422. Such an interlocking may be provided by means of a pin coupling both members. The housing 491 may be cylindrical and may define a space between the output member 422 and an inner wall of the housing 491. Such space is available for accommodating an urging member 492 and at least partially an engaging member 493 therein. The engaging member 493 is held in the housing 491 so as to be movable along the output member 422. The urging member 492 is provided between the engaging member 493 and a housing portion to bias the engaging member 493 in engaging direction.

The engaging member 493 is configured to be engaged with a receiving member 495 which may be force transmittingly coupled to the force output member 470 or may be an integral part of the force output member 470. The engaging member 493 may comprise protrusions 494 protruding in a direction along the extension direction of the output member 422. The receiving member 495 may comprise recesses 496 which are configured to receive the protrusions 494 in a positive locking manner. Accordingly, when the protrusions 494 are received in the receiving member 495, a positive locking in rotation direction is achieved allowing to transfer a rotation of the output member 422 to the force output member 470. The protrusions 494 and the recesses 496 may be shaped such that the engaging member 493 may be pushed out of engagement with the receiving member 495 when a torque introduced to the torque limiting mechanism 490 by the output member 422 exceeds a predetermined maximum torque. In this case, the engaging member 493 is pushed in release direction against a force of the urging member 492 owing to the geometries of the protrusions 494 and the recesses 496. A torque transfer may thus be interrupted.

As already mentioned before, the tensioning mechanism 400 may be configured to transfer a tensioning force to the coupling portions 202. In some configurations, for example the configurations as shown in Fig. 17 and Fig. 18, the application of a tensioning force by the tensioning mechanism 400 on the coupling portions 202 may lead to a retraction movement of the coupling portions 202, for example towards the main body 20 of the base 2 or the main body 20 of the base. This retraction movement may in turn lead to the generation of a pressing force exerted by the anti-rebound portion 300 on the backrest of the vehicle seat. Accordingly, when operating the tensioning mechanism 400, the anti-rebound portion 300 is clamped on the backrest which in turn leads to the coupling portions 202 being subjected to a pulling force pulling them in opposite direction to the retraction direction, in other words a pulling force in extension direction.

In order to prevent a movement of the coupling portions 202 in the extension direction, configurations may be provided in which a movement of the coupling portions 202 is limited in extension direction. A possible configuration is shown in Fig. 20. In this configuration, the coupling portion 202 is provided on a connector 204, for example a coupling arm. The connector and/or coupling arm may be movable relative to a holding structure 600 in a coupling portion support frame 606 of the holding structure 600. The configuration as shown in Fig. 20 may be such that an operation of the tensioning mechanism 400, in other words a movement of the lever 404 in clockwise direction, leads to a movement of the connector 204 in retraction direction which corresponds to a movement towards the right in Fig. 20.

The connector 204 may comprise a locking portion 214 and the holding structure 600 may comprise receiving portions 612. In the shown configuration, the receiving portions 612 comprise recesses equidistantly provided in movement direction of the connector 204. The locking portion 214 is configured releasably engageable with the recesses. An urging member (not shown) is provided to bias the locking portion 214 towards a locking position in which the locking portion 214 is in engagement with a recess. Accordingly, as soon as the connector 204 is in a position in which the locking portion 214 is aligned with a recess, the locking portion 214 will automatically enter the recess. In this way, an interlocking between the holding structure 600 and the connector 204 is provided which at least prevents a movement of the connector 204 in extension direction, in other words towards the left side in Fig. 20. In this way, once the coupling portion 202 is retracted by an operation of the tensioning mechanism 400 to a specific position, a movement of the coupling portion 202 in extension direction is prevented. In this way, the coupling portion 202 may be retracted stepwise by performing a back-and-forth movement of the operating member 402.

### Example tensioning mechanism with indicating device (pop-up feature)

In some embodiments, the child restraint system 1 may be configured to indicate to a user that an operating member is available for tightening the base 2 onto a vehicle seat 90. In other words, a system may be provided which prompts the user to use a specific operating member for generating a sufficiently high force pushing the child restraint system 1 onto the vehicle seat. For example, by generating a sufficient contact pressure between an anti-rebound portion 300 and the backrest 92 of vehicle seat 90, it is possible to provide a resistance against a rotation of the child restraint system towards the backrest 92 in a crash situation.

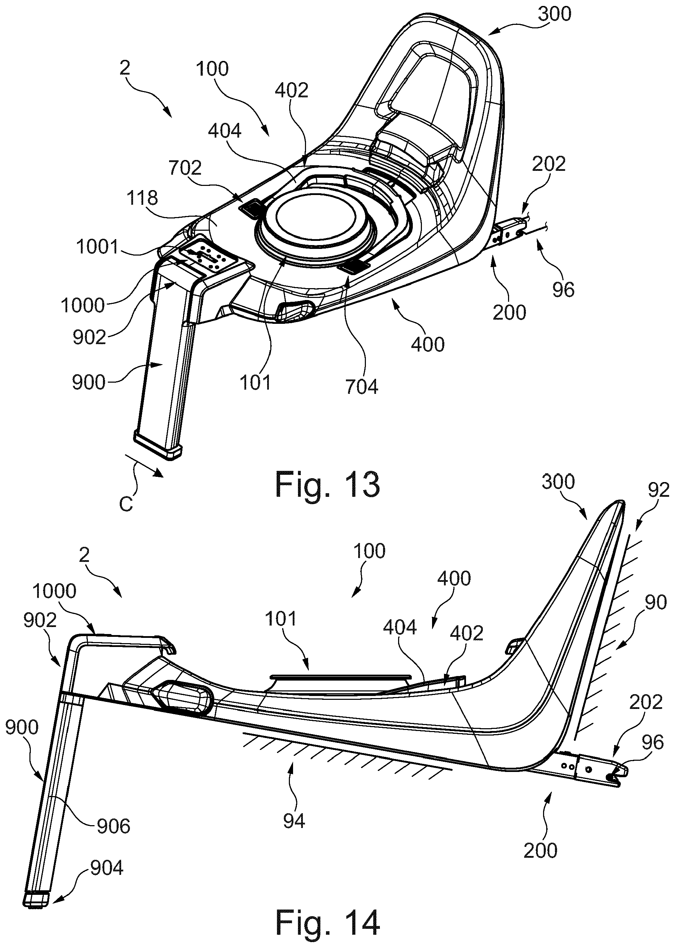

An indicating device configured to indicate to a user when the operating member is ready to be used for tensioning will be described. In this connection, reference is made to Figs. 13, 14 and 23 to 25.

In general, the indicating device 450 may be provided on any suitable portion of the child restraint system 1. In some configurations, the indicating device 450 may be provided on the base 2 for a child restraint system 1. While in the following, a mechanical solution for an indicating device 450 will be described, it is noted that the indicating device may also be electronically realized. In general, the indicating device may be configured to provide a visual and/or acoustic indication to a user. A visual indication may include a visible movement of a specific part or of specific parts, a visual indication on a display device or an indication by a light source. An acoustic indication may comprise a specific sound or voice message prompting the user to perform a specific action such as tightening with the operating member. As a visual indication, the action to be performed by a user may be displayed on a display device 1000 as is shown in Figs. 13 and 14. Such display device 1000 may for example show an animation on how specific portions of the child restraint system 1 are to be operated by the user.

The indicating device 450 may be provided in a base 2 comprising a coupling portion 202, an anti-rebound portion 300 and a tensioning mechanism 400. The coupling portion 202 may be configured for fixedly coupling the base 2 to a fixing structure 96 of the vehicle, for example a fixing structure 96 on a vehicle seat 90. The anti-rebound portion 300 may be configured to be contacted with a backrest 92 of the vehicle seat 90 for at least limiting a rotating movement of the base 2 towards the backrest 62 in a crash situation.

The tensioning mechanism 400 may be configured to reduce a distance between the anti-rebound portion 300 and the coupling portion 202. Other configurations of the tensioning mechanism may be possible, as long as the tensioning mechanism may be readily used to generate a force pushing the base 2 onto the vehicle seat 90. The tensioning mechanism 400 may comprise an operating member 402.

The indicating device 450 may be configured to indicate to a user when the operating member 402 is ready to be used for tensioning. In the configuration as shown in Figs.13, 14 and 23 to 25, the indicating device 450 may be configured to move the operating member 402 to a predetermined indicating position. In the illustrated example, the operating member 402 is a lever 404. An exemplary predetermined indicating position is shown in Figs. 13 and 14 for instance. The indicating position corresponds to a predetermined orientation of the operating member 402. As is shown in Figs. 13 and 14, the operating member 402 was slightly moved upwards out of an accommodating recess provided in a main body of the base 2. The indicating device 450 may be configured such that a movement of the operating member 402 to this position is quickly effected upon fulfilment of a certain condition. Such a condition may include a status change in the coupling portion 202, for example a status change of the coupling portion 202 from an unlocking state into a locking state in which the coupling portion 202 is releasably locked on the fixing structure 96.

The tensioning mechanism may be configured such that for actuating the same, the operating member 402 is moved between a stowage position and a deployed position, for example in a back-and-forth movement. In this connection, reference is made to the above-described possible configuration of a tensioning mechanism 400 as already described in connection with other examples of exemplary configurations.

The indicating device 450 may be configured to automatically move the operating member 402 to the predetermined indicating position, when the coupling portion 202 is engaged with the fixing structure 96. In addition or alternatively, the indicating device may be configured to move the operating member to the predetermined indicating position when a distance between the coupling portion 202 and the anti-rebound portion 300 is reduced to a predetermined intermediate distance. Such a reduction in the distance between the coupling portion 202 and the anti-rebound portion 300 may for example be effected by pushing the base 2 towards the backrest 92 in a pushing direction P1 with the coupling portion 202 being engaged with the fixing structure 96.

Exemplary coupling arrangements 200 comprising the coupling portion 202 and being configured to allow a retraction movement of the coupling portion 202 into the main body of the base 2 when the coupling portion 202 is locked to the fixing structure 96 and the base is pushed towards the backrest 92 will be described later. Such configurations may comprise a retraction blocking portion or second locking portion 216 blocking a movement of the coupling portion 202 in retraction direction as long as the coupling portion 202 is not locked with the fixing structure 96. This retraction blocking portion or second locking portion 216 may be operatively coupled to the coupling portion 202 such that the retraction blocking portion 216 is moved to an unlocking or release position automatically when the coupling portion 202 is locked on the fixing structure 96.

The indicating device 450 may comprise two cooperating portions 452, 454. For example, one of the two cooperating portions may be a toothed portion 452 and the other one of the two cooperating portions may be a recessed portion 454. One of the cooperating portions may thus be a protruding portion and the other one of the two cooperating portions may be a receiving portion. At least one of the cooperating portions 452, 454 may be movable relative to the other one and the cooperating portions 452, 454 may be configured to get in releasable engagement when the predetermined indicating position is reached. One of the two cooperating portions may be operatively coupled to the operating member 402 and the other one of the two cooperating portions may be provided stationary in the base, for example in a structure of a main body 20 of the base. The two cooperating portions 452, 454 may be configured to at least restrain a movement of the operating member 402 out of and/or into the predetermined indicating position.

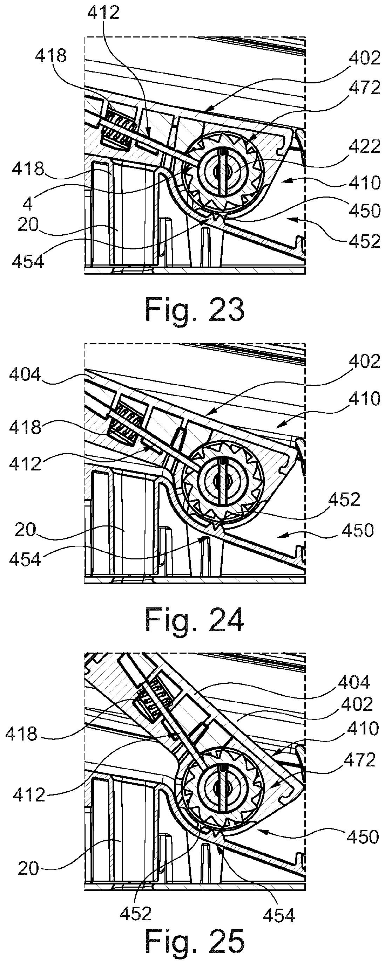

A possible configuration is shown in Figs. 23 to 25. As is illustrated in Fig. 23, a protruding portion 452 is provided on the operating member 402 at a position at which the operating member 402 is coupled to the output member 422. The protruding portion 452 may be formed on an outer surface of a housing for accommodating elements of the before described ratchet mechanism 410. Accordingly, when the operating member 402 is rotated about the pivot axis P1, the protruding portion 452 is moved on a circular path about the pivot axis P1. The receiving portion or recessed portion 454 is provided in the main body 20 of the base 2 at a position in which at least a portion of the same is in the way of the protrusion 452 when moving on the circular path. The receiving portion 454 may be configured as a protrusion having a central recess therein. The cooperating portions 452, 454 may be made of a material and/or configured to be slightly deformable upon contact between the cooperating portions. Accordingly, during its travel along the circular path, the protruding portion 452 may get in contact with the cooperating portion 455. In this position, a further rotation of the operating member 402 and integral further movement of the protruding portion 452 on the circular path is only possible upon application of a slightly increased force on the operating member 402. If a predetermined force is exceeded, the protruding portion 452 may deform and run over an edge portion of the cooperating portion 454 until it reaches the central recess in the cooperating portion 454. This position of the operating member 402 and the cooperating portions 452 corresponds to a predetermined indicating position. In this position, the operating member 402 was only slightly moved to a position and orientation as shown in Figs. 13 and 14. A movement of the cooperating portion 452 into the central recess of the cooperating portion 454 may be accompanied by a clicking sound. With the operating member 402 in the indicating position as is shown in Fig. 24, a user immediately recognizes that the operating member 402 is available for tensioning purposes and may graps the same.

By applying a tensioning force on the operating member 402, the user may move the operating member 402 out of the indicating position by further rotating the operating member 402, for example in clockwise direction as shown in Fig. 25. In this case, the protruding portion 452 gets out of engagement with the cooperating portion 454 and the operating member 402 may be used for performing a back-and-forth movement for operating the tensioning mechanism 400. It is noted that a force which is required for moving the protruding portion 452 from the state as shown in Fig. 23 to the state as shown in Fig. 24 may be introduced into the operating member 402 by means of a force transmission from the coupling portions 202 and via the ratchet mechanism 410. More precisely, the base 2 may be configured such that upon locking the coupling portions 202 and exerting a pushing force P1 as described before, the coupling portions 202 are moved in retraction direction which leads to an application of a rotation force on the output member 422 due to an operative connection between the coupling portions 202 and the output member 422. Since the movement of the coupling portions 202 may correspond to a movement of the coupling portions during tensioning using the operating member 402, a rotational force exerted on the operating member 402 by the output member 422 moves the operating member 402 in tensioning direction, which means in clockwise direction in the configuration as shown in Figs. 23 to 25.

It is further noted that the configuration and position of the cooperating portions 452, 454 may be such that they contact each other on an outer side when the operating member 402 is positioned in the beforementioned stowage position as shown in Fig. 23. Such a configuration requires a slightly higher force for rotating the operating member 402 since the protruding portion 452 has to pass a portion of the cooperating portion 454 by undergoing a slight elastic deformation. Therefore, the operating member 402 is more securely accommodated or held in the stowage position and is less prone to a vibrating movement during vehicle travel. Accordingly, unfavorable rattling noises which may occur due to a vibrating operating member 402 can be avoided.

### Example base with release mechanism

The child restraint system 1 may comprise a release mechanism 700. For example, the base 2 of a child restraint system 1 may comprise the release mechanism 700. The release mechanism 700 may be configured to release the coupling portion 202 from the fixing structure 96. In addition or alternatively, the release mechanism 700 may be configured to release a ratchet tensioning mechanism 400 for reducing a distance between an anti-rebound portion 300 and the coupling portion 202. The tensioning mechanism 400 may be a tensioning mechanism as described in connection with other configurations of a base 2 for a child restraint system 1 described herein. The release mechanism 700 may in addition or alternatively be configured to release a movement of the coupling portion 202 relative to the anti-rebound portion 300. Accordingly, a release mechanism 700 may be provided which provides one or more of the latter described functions.

The release mechanism 700 may comprise at least one operating portion 702, 704. In some configurations, the operating portion 702, 704 may be provided on the base 2 such that it is only accessible with a child seat 3 removed from the base 2. In other words, a child seat 3 arranged on the base 2 renders the operating portion 702, 704 inaccessible. A possible configuration of a base 2 for a child restraint system 1 is illustrated in Figs. 1, 17, 18, and 21. The base 2 of Fig. 1 may comprise a coupling portion 202 for releasably coupling the base 2 to a fixing structure 96 of the vehicle. The base may comprise the release mechanism 700. In the illustrated configuration, the release mechanism 700 may comprise all of the beforementioned features. More precisely, the release mechanism 700 is configured to release the coupling portion 202 from the fixing structure 96, is configured to release a ratchet tensioning mechanism 400 and is configured to release a movement of the coupling portion 202 relative to the anti-rebound portion 300. By operating the operating portion 702, 704 of the release mechanism 700, all of the latter functions are triggered.

In some configurations, the operating portion 702, 704 is provided on an upper surface portion 118 of the base 2 at a position which is covered by an inserted child seat 3. Accordingly, in such configurations, the child seat 3 may form a cover member which covers the operating portion 702, 704.

In addition or alternatively, the base 2 may comprise a cover member movable between a covering position in which the cover member covers the operating portion, and a revealing position in which the operating portion is accessible for operation. The cover member may be configured to be moved to the covering position when a child seat is inserted on the base. With such a configuration, it is possible to provide the operating portion 702, 704 at a position of the base 2 which is not covered by an inserted child seat 3 while still having the function of rendering the operating portion 702, 704 inaccessible as soon as a child seat 3 is inserted on the base 2. A mechanism for moving the cover member may comprise a force receiving portion operatively coupled with the cover member and configured to receive a force from the child seat 3 upon inserting the same on the base 2, wherein an actuation of the force receiving portion by the child seat 3 leads to a movement of the cover member to the covering position.

Independent from the before described function of the release mechanism 700 suggesting to arrange the at least one operating portion on the base 2 such that it is only accessible with a child seat 3 removed from the base 2, the release mechanism 700 may in addition or alternatively comprise two operating portions 702, 704, and the release mechanism 700 may be configured such that releasing the base 2 from the fixing structure 96 is only possible by actuating both operating portions 702, 704. Releasing the base 2 from the fixing structure 96 may only be possible by actuating both operating portions 702, 704 simultaneously or subsequently. Fig. 27 shows an example configuration in which two operating portions 702, 704 are provided laterally spaced from each other and on opposite sides of a primary support portions 101. As is illustrated, a user needs to push both operating portions 702, 704 for actuating the release mechanism. Exemplary locations of two operating portions 702, 704 are also illustrated in Figs. 1, 13, and 15.

If the base 2 comprises a tensioning mechanism 400 as described in combination with other configurations in the present disclosure, the release mechanism 700 may be configured to simultaneously release the coupling portion 202 and the tensioning mechanism 400. In other words, operating the release mechanism 700 may release the coupling portion 202 and the tensioning mechanism 400.

In some configurations, the operating portions 702, 704 can be provided on opposite sides of primary support portion 101. Details of possible configurations of such primary support portion 101 are described in combination with other configurations as mentioned in the present disclosure. As is shown in Figs. 18 and 21, each operating member 702, 704 may comprise a coupling portion 706 for force transmittingly coupling the operating member 702, 704 to the coupling portion 202. In the illustrated configuration, the coupling portion 706 is configured to be coupled to an end portion of a force transmitting member. In this case, the coupling portion 706 is configured to be coupled to a Bowden cable. Accordingly, the coupling portion 706 may comprise a recess for receiving an end portion of a Bowden cable wire. An opposite end portion of the Bowden cable wire may be coupled to the coupling portion 202, in particular to a locking member in the coupling portion 202 which allows or blocks a movement of an engaging member engageable with the fixing structure 96. The force transmitting member may be adjustable to allow an adjustment of the force transfer from the operating member 702, 704 to the coupling portion 702. Accordingly, the operating portions 702, 704 allow a remote operation of the coupling portion 202 for unlocking the same.

The release mechanism 700 according to the illustrated configuration is configured such that, upon operation of the release mechanism 700, the tensioning mechanism 400 is deactivated by transferring the tensioning mechanism 400 into a freewheeling state. The tensioning mechanism 400 may comprise features and configurations as described herein with reference to other configurations and embodiments of the base 2 or the child restraint system 1. The tensioning mechanism 400 may comprise an operating member 402 force transmittingly coupled to the coupling portion 202 by means of a ratchet mechanism 410. The release mechanism 700 may be configured to deactivate the ratchet mechanism 410 by transferring the ratchet mechanism 410 into a freewheeling state. The release mechanism 700 may comprise a force transfer mechanism 705 which is configured to transfer a movement of the operating portion 702, 704 into a movement of the locking member 412 in a release direction D5. By displacing the locking member 412 in this way, a locking between the operating member 402 and the output member 422 may be disengaged.

The force transfer mechanism 705 may comprise a force transfer member 710. The force transfer member 710 may be configured to receive an actuating force from a force application portion 708 of the operating member 702, 704, and may be configured to move towards the locking member 412 upon receiving the actuating force. The force transfer member 710 may comprise a force application surface 712 for contacting a receiving portion 419 of the locking member 412. The force application surface 712 may be formed in the shape of an outer surface of a truncated cone to allow an interaction with the force receiving portion 419 with the operating member 412 positioned at different angular orientations. The force transfer member 710 may be a sleeve extending about a pivot axis P1 of the operating member 402 as is illustrated in Fig. 22. Furthermore, the force transfer member 710 may be slidably provided on the output member 422.

The force transfer member 710 may comprise a force receiving surface 711 and the force application portion 708 may comprise a force application surface 709 contacting the force receiving surface 711. The operating portion 702, 704 may be configured rotatable about the pivot axis P1 in rotation direction D3. The force receiving surface 711 and the force application surface 709 may be configured such that the force transfer member 710 is displaceable in a shifting direction D4 along the pivot axis P1 by a wedge action created by a sliding contact between the force application surface 709 and the force receiving surface 711. Each operating portion 702, 704 may comprise a lever. The coupling portion 706 and the force application portion 708 may be integrally formed on the operating portion 702, 704.

In some configurations, the coupling portion 202 may be configured to automatically move to an extended position when a movement of the coupling portion 202 relative to the anti-rebound portion 300 is released by the release mechanism 400. The coupling portion 202 may be biased in a direction away from the anti-rebound portion 300 by means of an urging member 212, for example a coil spring, as is shown for example in Fig. 17.

The coupling portion 202 may be part of a coupling arrangement 200. The coupling arrangement may be configured in a manner as described herein with respect to other configurations and embodiments. The coupling arrangement may comprise at least one connector 204, 206, for example a coupling arm, supported on a holding structure 600 and movable between a deployed position and a retracted position. The at least one connector 204, 206 and the holding structure 600 are configured releasably interlockable for locking the coupling portion 202 at multiple different locking positions on the holding structure 600.

At least one connector 204, 206 may comprise a locking portion 214 and the holding structure 600 may comprise receiving portions 612 as is illustrated in Fig. 18, for instance. The locking portion 214 may be configured releasably engageable with the receiving portions 612. The locking portion 214 may be arranged such that it is only translatory movable for establishing the releasable engagement. The release mechanism 700 may be configured to release an interlocking between the connector 204, 206 and the holding structure 600 to allow a movement of the coupling portion 202 relative to the anti-rebound portion 300.

As is also illustrated in Figs. 17 and 18, the coupling arrangement 200 may comprise two connectors 204, 206 supported by the holding structure 600 and each having a coupling portion 202. The connectors 204, 206 may be coupled to each other by means of a connecting device 208, for example a rigid connecting member. In this way, the two connectors, for example coupling arms, are integrally movable. The before described urging member 212 may be arranged to apply an urging force on the connecting device 208. Accordingly, the urging member may be coupled to the connecting device 208 at one end.

As already described before, the child restraint system 1 may comprise a sensor arrangement 800. For example, a base 2 for a child restraint system 1 may be provided which comprises a sensor arrangement 800. The sensor arrangement 800 can comprise one or more sensors comprising dedicated sensing functions.

### Example base with magnet sensor in primary support portion

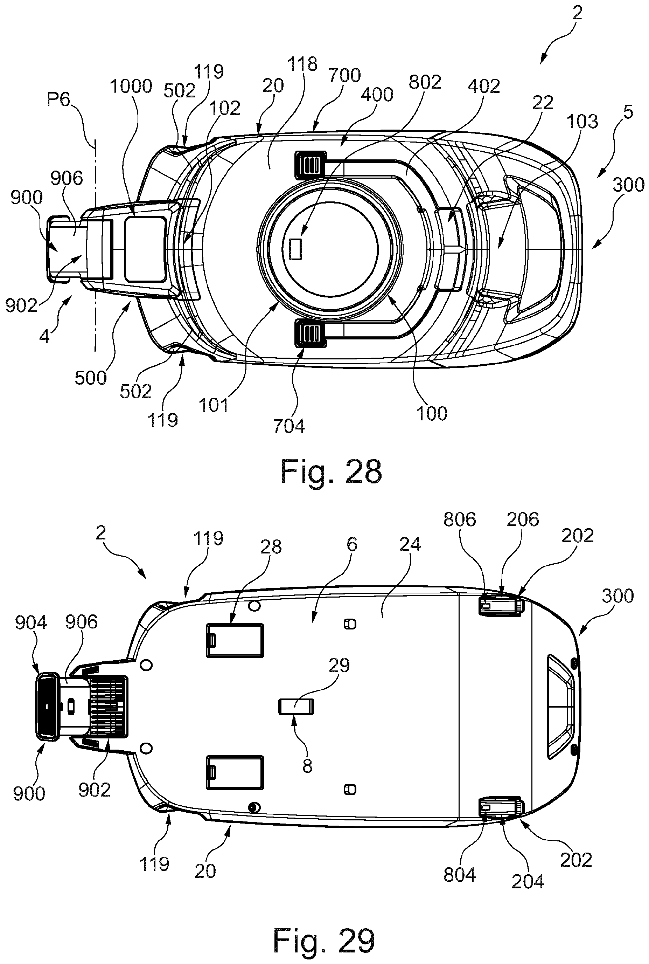

In some embodiments, the sensor arrangement 800 may comprise a seat detection sensor 802. As is illustrated in Fig. 28, the seat detection sensor 802 may be provided on an upper portion of a main body 20 of the base 2, for example on a primary support portion 101. The seat detection sensor 802 is configured to detect the presence of an inserted child seat 3 on the primary support portion 101. The primary support portion 101 may be configured as already described before. For example, the primary support portion 101 may protrude from an upper surface portion 118 of the base 2 in a first direction D1. Furthermore, the primary support portion 101 may be configured to be releasably engaged by an engaging portion of an inserted child seat in a positive locking manner for blocking a movement of the child seat in the first direction.

The primary support portion may furthermore be configured to support the child seat rotatable about a rotation axis R1 extending parallel to the first direction D1. The seat detection sensor 802 may be provided in an accommodating space 115 inside the primary support portion 101 as can be gathered from Figs. 3 and 32. Fig. 32 shows a configuration of a base in which the upper portion 107 of the primary support portion 101 is removed thereby revealing the position of the seat detection sensor 802 in the primary support portion 101. In the exemplary configuration, a recess is provided in a reinforcement structure 124 such that material between the sensor 802 and any sensor detectable feature provided on a child seat 3 is not blocked by a portion of the reinforcement structure 124. The sensor 802 may be a magnetic sensor, for example a Hall-sensor.

### Example child seat with sensor detectable feature

As already mentioned before, a child seat 3 may comprise a sensor detectable feature that may be sensed by the seat detection sensor 802. Accordingly, a child seat 3 may be provided which is mountable on a base 2 and comprises at least one sensor detectable feature 46, 47. The sensor detectable feature may be a magnet and may, thus, be detectable by a magnetic sensor.

The sensor detectable feature is illustrated in Fig. 5. More precisely, Fig. 5 shows a configuration in which two sensor detectable features 46, 47 are provided on a lower portion of the child seat 3. As is further illustrated in Fig. 5, the sensor detectable feature 46, 47 may be visible. For example, the sensor detectable feature 46, 47 may be provided on the lower portion such that it does not protrude from a support surface 34 of the child seat 3. In particular, the sensor detectable feature 46, 47 may be mounted on an inner surface facing in opposite direction of the support surface 34. The sensor detectable feature 46, 47 may be configured to trigger the seat detection sensor 802 as described before. In particular, the sensor detectable feature is provided on the child seat 3 such that the seat detection sensor 802 detects the presence of the sensor detectable feature when the child seat 3 is correctly mounted and/or oriented on the base.

In the configuration shown in Fig. 5, two detectable features 46, 47 are provided. Here, the two detectable features 46, 47 each comprise a magnet. The two detectable features 46, 47 are provided on the lower portion of the child seat 3 on opposite sides of a rotation center of the child seat 3. The sensor detectable features 46, 47 may be positioned on an imaginary straight line crossing the rotation center of the child seat 3, wherein the imaginary straight line may run in parallel with a longitudinal direction of the child seat 3 and perpendicular to a rotational axis defined by the interface 30 of the child seat 3, in particular in a front rear direction.

The sensor detectable features 46, 47 may be arranged at equal distance from the rotation center of the child seat 3. With such a configuration, a single seat detection sensor 802 may detect two seat orientations. In other words, such a configuration may be configured to detect a forward-facing orientation of the child seat 3 and a rearward-facing orientation of the child seat 3.

### Example base with rotation locking detection

In addition or alternatively, the sensor arrangement 800 may be configured to detect the status of a locking mechanism 500. The locking mechanism 500 may be configured as described in connection with other configurations and aspects of the present disclosure. For example, the sensor arrangement 800 may be configured to at least detect the presence of the before described locking member 501 at the release position.

An exemplary configuration in which the sensor arrangement 800 is configured to detect different states of the locking mechanism 500 will be explained with reference to Figs. 12, 30 and 31. The locking mechanism 500 may be configured for blocking a rotation of an inserted child seat 3 about the rotation axis R1. In the configuration, the locking mechanism 500 may comprise a locking member 501 which is movable between a standby position I, a locking position II and a release position III.

A possible configuration of the locking member 501 is shown in Fig. 30. Fig. 12 shows a possible arrangement of the locking member 501 in the locking mechanism 500. Fig. 30 shows a perspective view of the locking member 501 according to an example. The locking member 501 may comprise a plate-like appearance. More precisely, the locking member 501 may comprise a plate-like shape with a step between a forward portion and a rear portion. Accordingly, a forward end portion of the locking member 501 may be offset with respect to a rear portion of the locking member 501.

In the forward end portion of the locking member 501, two engaging portions 505, 506 are provided. Both engaging portions 505, 506 protrude in main extension direction of the locking member 501. A recess 507 is provided between the engaging portions 505, 506. Accordingly, the engaging portions 505, 506 may be considered as teeth protruding in main extension direction on the forward end portion of the locking member 501. The recess 507 is in lateral direction limited by the engaging portions 505, 506, more precisely by wall portions of the engaging portions 505, 506 facing towards each other.

On lateral outer sides of the engaging portions 505, 506, more precisely on a side of the engaging portions 505, 506 opposite to the recess 507, force receiving surfaces 504 as already described before may be provided. The force receiving surfaces 504 may be inclined towards the free ends of the engaging portions 505, 506. Accordingly, the forward end portion of the locking member 501 may be tapered on both lateral sides. The force receiving surfaces 504 may be configured such that their imaginary extensions cross each other in a region between the rotation axis R1 defined by the primary support portion 100 and the locking member 501. The force receiving surfaces may be plane surfaces. However, it is also possible to provide curved force receiving surfaces, for example such as a rounded corner on each engaging portion 505, 506.

The forward end portion of the locking member 501 is configured such that the engaging portions 505, 506 may be engaged with a restraining portion of the child seat 3. In the rear portion of the locking member 501, two guiding slots 528 are provided. The slots 528 extend in parallel to each other and in main extension direction of the locking member 501.

A support portion 529 for supporting an urging member, such as a spring, is provided between the slots 528. The support portion 529 is configured like a finger and is provided cantilevered in a middle portion of the locking member 501 and extends in opposite direction with respect to the direction in which the engaging portions 505, 506 extend.

As is shown in Fig. 12, an urging member 503 may be slidably supported on the support portion 529 such that one end is rested against a body of the locking member 501 and the other end is free to be supported against a stationary portion of the base 2. The urging member 503 may be configured to apply an urging force on the locking member 501 such that the same is biased towards the standby position.

As is further shown in Fig. 30, a magnet holder 524 is provided on a rear portion of the locking member 501. The magnet holder 524 protrudes from an upper side of the locking member 501 and holds a magnet 526. The magnet serves as a sensor detectable feature for determining the position of the locking member 501 in the locking mechanism 500. In the shown configuration, the magnet 826 is held on the locking member 501 so as to be integrally movable with the locking member 501. As is further illustrated in Fig. 31, two sensors 808, 810 may be provided in the locking mechanism 500. The sensors may be arranged in alignment with a movement direction of the magnet 526 on the locking member 501. The locking member 501 is translatory movably provided in the locking mechanism 500. Accordingly, when moving the locking member 501, the magnet 526 is moved on a straight path.

The sensors 808, 810 are arranged on a straight line in parallel with the straight path on which the magnet 526 travels during a movement of the locking member 501. The two sensors 808, 810 are arranged offset with respect to each other and at a distance with respect to each other. The two sensors 808, 810 are configured to detect the magnet when the same is moved together with a locking member 501 between the standby position, the locking position and the release position. The sensor arrangement 800 is configured to detect a trigger sequence of the sensors 808, 810 by the magnet 526. A positive locking signal may be output if a predetermined trigger sequence is detected. One of the two sensors 808, 810 forms a first rotation lock sensor 808 and the other one of the two sensors forms a second rotation lock sensor 810.

In the example configuration, the first rotation lock sensor 808 is provided in front of the second rotation lock sensor 810 and is arranged between the second rotation lock sensor 810 and a position of the magnet 526 when the locking member 501 is in the standby position. As is illustrated in Fig. 31, the magnet 526 passes below the first rotation lock sensor 808 when the locking member 501 is moved from the standby position I to the release position III. In the locking position II, in which the engaging portions 505, 506 are engaged with a restraining portion of the child seat, the magnet 526 is located vertically under the first rotation lock sensor 808. In the shown configuration, the first rotation lock sensor 808 and the second rotation lock sensor 810 are Hall-sensors. Furthermore, the sensors 808, 810 may be configured to allow a make before you break detection of the magnet 526. This means, the configuration may be such that the second rotation lock sensor 810 already senses the presence of the magnet 526 while the first rotation lock sensor 808 still detects the presence of the magnet 526. By using such a sensor arrangement, it is possible to reliably detect whether the locking member 501 correctly travels from the standby position I to the locking position II via the release position III. Accordingly, a positive locking signal of the locking mechanism 500 may in some configurations only be output in case it is detected that the locking member 501 travelled from the standby position I, which may also be considered a fully extended position, to the release position III, which may be considered as fully retracted position of the locking member 501, and then to the locking position II. In this way, the locking member 501 needs to travel fully to the retracted position and then to the locking position in order that a positive locking signal is output. In this way, locking of the child seat may be detected more reliable.

### Example base with detection of correctly inserted child seat (two sensor detection)

The sensor arrangement 800 may be configured to detect a correct support of the child seat 3 on the base 2 and to detect a correct orientation of the child seat 3 on the base 2. Furthermore, the sensor arrangement 800 may be configured to output a confirmation signal if the correct support of the child seat 3 and the correct orientation of the child seat 3 are detected. The confirmation signal may include lighting of a light source without changing colors of the light source. The light source may be part of a display portion 1000.

In an exemplary configuration, a base 2 for a child restraint system 1 may be provided which comprises a primary support portion 101, a locking mechanism 500, a seat detection sensor 802, and a rotation lock sensor 808, 810. Furthermore, the base 2 may comprise a processing unit configured to receive signals from the seat detection sensor 802 and from the rotation lock sensor 808, 810. The processing unit may be configured to output a signal indicating correct or incorrect mounting of the child seat 3 on the base 2 based on the signals received from the seat detection sensor 802 and the rotation lock sensor 808, 810. More precisely, if the seat detection sensor 802 detects a correctly inserted seat and the rotation lock sensor 808, 810 detects a child seat correctly locked against rotation, the processing unit may output a signal indicating correct mounting of the child seat 3 on the base 2.

### Example base with magnetic sensor in bottom portion for detecting position of load leg

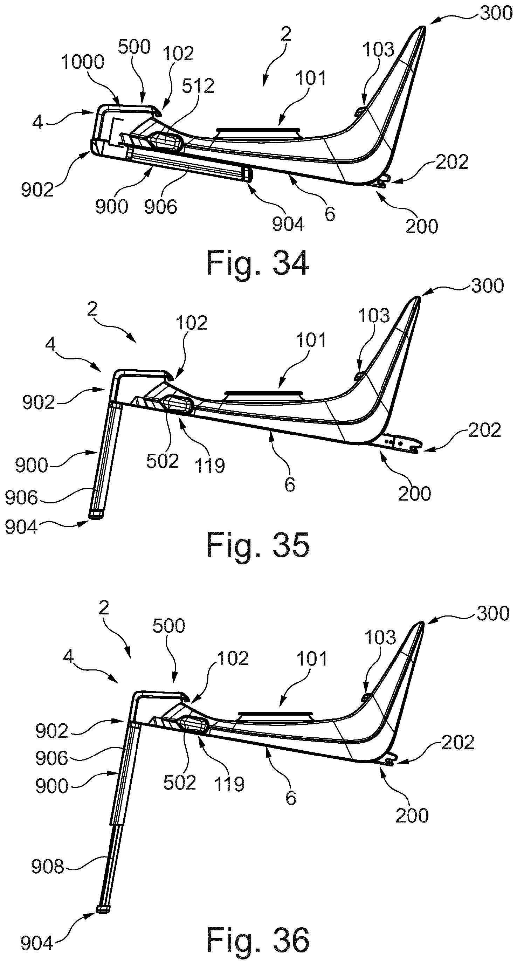

In some configurations, a load leg 900 for supporting the base 2 on a vehicle floor portion is provided. The load leg 900 may be pivotably mounted to the base 2 and movable between a stowage position in which the load leg 900 is folded against the bottom portion 6 and a deployed position in which the load leg 900 is able to support the base 2 on the vehicle floor portion. Figs. 34 to 36 show different states of a load leg 900 provided on the base 2 in some configurations. In the illustrated configuration, the load leg 900 is pivotably coupled to the front portion 4 of the base 2 in a region in which a locking mechanism 500 and a display portion 1000 are provided.

The load leg 900 may comprise a coupling portion 902 pivotably coupled to a main body 20 of the base 2. The coupling portion 902 may also be referred to as upper portion of the load leg. An opposite end portion of the load leg 900, which may also be referred to as lower portion, may comprise a foot 904 which is configured to be contacted with the vehicle floor portion. As can be gathered from Fig. 36, the load leg may be adjustable in length. More precisely, the load leg may be telescopable. Accordingly, the foot 904 may be arranged on the load leg so as to be movable between a retracted position as shown in Figs. 34 and 35, and an extended position as shown in Fig. 36. The load leg 900 may comprise an outer profile 906 and an inner profile 908 which is movably accommodated in the outer profile 906. Fig. 34 shows a state in which the load leg 900 is in a stowage position. Fig. 35 shows a state in which the load leg is in a deployed position with the foot 904 being in a retracted position. Fig. 36 shows a state in which the load leg is in the deployed position and the foot 904 is in an extended position.

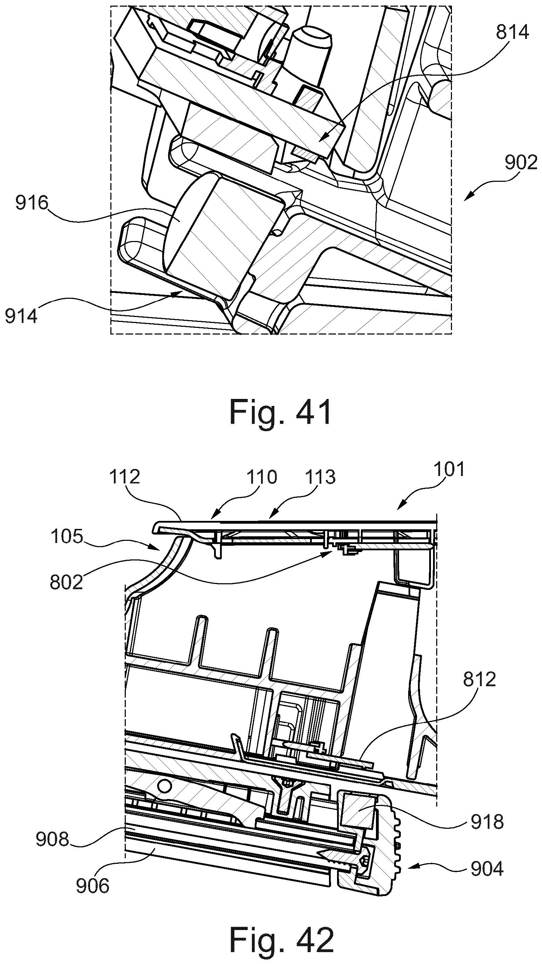

A child restraint system 1 comprising such a load leg 900 may be configured to detect at least one of the stowage position of the load leg 900 and the deployed position of the load leg 900 by a sensor. In some configurations, the child restraint system 1 may comprise a base 2 having magnet sensors for detecting the positions of the load leg. Accordingly, at least one of the stowage position and the deployed position may be detectable by a sensor 812, 814, for example a magnet sensor, provided on the base 2. The sensor 812 for detecting the deployed position of the load leg may also be referred to as load leg deployed state detection sensor. The sensor 814 for detecting the stowage position of the load leg may also be referred to as load leg stowed state detection sensor. Accordingly, in some configurations, the base 2 may comprise a magnet sensor 812 provided on the bottom portion 6 of the base 2, as is for example illustrated in Figs. 33 and 42. The magnet sensor 812 may be a proximity detection type sensor.

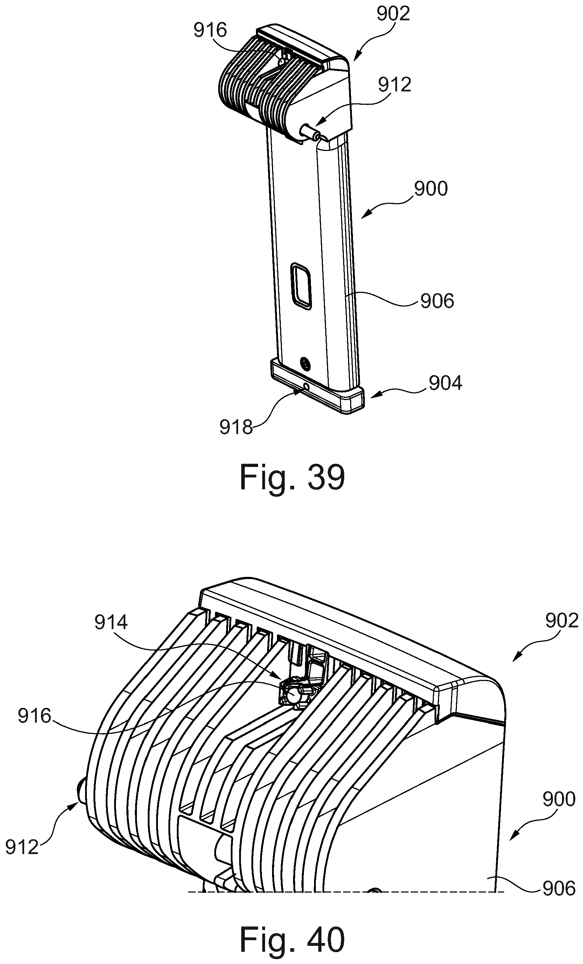

The load leg 900 may comprise a magnet 918 which is provided at a position allowing a detection by the magnet sensor 812 when the load leg 900 is in the stowage position. For example, as is shown in Fig. 39, the magnet 918 may be provided in a free end portion or foot 904 of the load leg 900. The magnet 918 is in this configuration provided on a side of the load leg 900 which is oriented towards the bottom portion 6 when the load leg 900 is in the stowage position. Accordingly, the magnet 918 is detectable by the magnet sensor 812. In some configurations, the magnet sensor 812 is covered by a magnetically attractable portion. Fig. 29 shows an exemplary configuration in which the magnetic sensor 812 is covered by a cover 29. More precisely, cover 29 covers an opening 8 in the bottom portion 6. The cover 29 may comprise a steel plate, for instance. The cover 29 is thus available as a magnetically attractable portion. The magnet 918 and the cover 29 are configured such that a magnetic attraction force between them is strong enough to hold the load leg 900 in the stowage position. Accordingly, in some configurations, the magnet 918 has a double function in that it functions as a sensor detectable feature for the sensor 812 and functions as a member for generating a holding force for holding the load leg 900 in the stowage position.

In some configurations, only one function of the above-described double function may be provided. For example, a magnet 918 may be provided in the load leg and a magnet sensor 812 may be provided on the base. Only a position detection may be provided and the holding function by magnetic attraction may be omitted. On the other hand, it is also possible to only provide the magnetic attraction function as described before and to omit the magnet sensor 812 in some configurations. Again, it is noted that one or more of the magnet sensors described herein may be a Hall-sensor.

### Example base with load leg having magnet in upper leg portion

In some configurations, the child restraint system 1 is configured to detect the deployed position of the load leg 900 by means of a contactless sensing arrangement. The contactless sensing arrangement may comprise a sensor 814, for example a magnet sensor, for example a Hall-sensor.

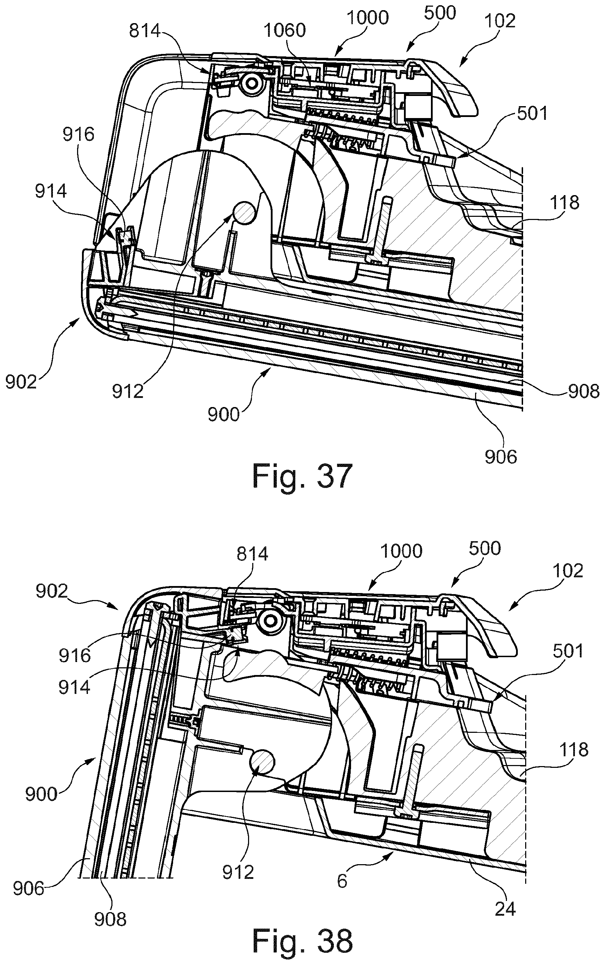

As can be gathered from Figs. 37 to 41, the load leg 900 may be coupled to the main body 20 of the base 2 by means of a pivot pin 912. Accordingly, load leg 900 is pivotable about a pivot axis P6 defined by pivot pin 912 between the stowage position as shown in Fig. 37 and the deployed position as shown in Fig. 38. The coupling portion 902 of the load leg 900 is coupled to the main body 20 of the base 2 by means of the pivot pin 912. The load leg 900 may comprise a magnet 916 supported in the coupling portion 902 to be integrally rotatable with the load leg 900. Therefore, upon rotating the load leg 900 from the stowage position to the deployed position, the magnet 916 is correspondingly rotated about the pivot pin 912. The magnet sensor 814 and the magnet 916 are arranged such that the magnet 916 passes the magnet sensor 814 upon rotating the load leg 900 to the deployed position. The distance between the pivot pin 912 and the magnet sensor 814 is larger than the distance between the pivot pin 912 and the magnet 916. When rotating the load leg 900 to the deployed position, the magnet 916 is moved into a region between the pivot pin 912 and the magnet sensor 814. As is illustrated in Fig. 40, the magnet 916 may be held by a magnet holder 914 in a middle portion of the coupling portion 902 of the load leg 900. Fig. 41 shows an enlarged view showing the position of the magnet 916 relative to the magnet sensor 814, namely at a position at which the magnet 916 already passed the magnet sensor 814 on a lower side of the magnet sensor 814.

### Example base with sensors in connectors

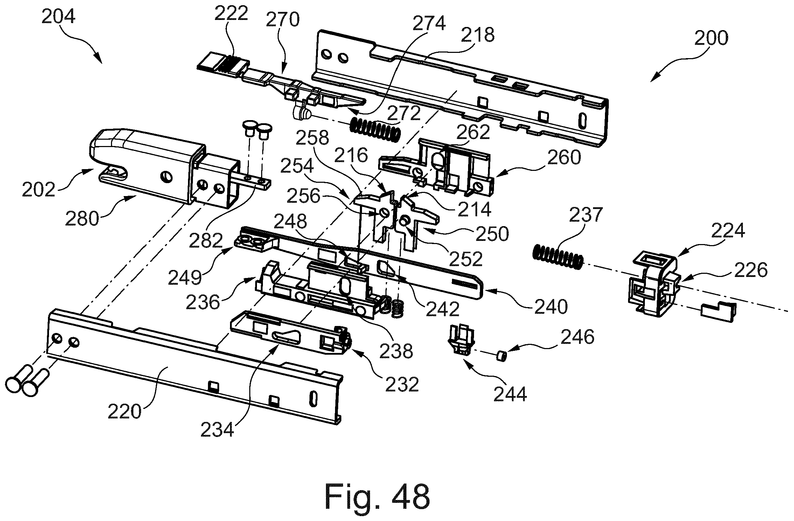

In some configurations, the base and/or child restraint system 1 may comprise sensors 804, 806 for detecting a locking status of connectors 204, 206, for example coupling arms. Each connector may be configured to be releasably lockable with the fixing structure 96 of the vehicle on the vehicle seat. For example, the base may comprise a first connector 204 comprising a first sensor 804 and a second connector 206 comprising a second sensor 806. Each sensor 804, 806 may be configured and arranged to monitor a locking status of the connectors 204, 206 with the fixing structure 96 on the vehicle seat 90. More precisely, each sensor 804, 806 is configured to output a signal reflecting a locked state or an unlocked state of the respective connector 204, 206. Accordingly, using the signals from the sensors 804, 806 allows to determine at least four different states of the sensors 804, 806 when considering them in combination. Thus, a sensor arrangement 800 may be provided in which the locking status of each connector is independently detectable. A configuration in which the sensors 804, 806 are provided on a base 2 is shown in Fig. 29, for instance. The sensors 804, 806 may be magnet sensors. A possible interior configuration of connectors 204, 206 comprising a magnet 246 as sensor detectable feature for the sensors 804, 806 is shown in Fig. 48. The exemplary configuration of Fig. 48 is described in other parts of this specification.

### Example base with display showing spatial information

In some configurations, a child restraint system 1 may comprise a display portion 1000. For example, the display portion 1000 may be provided on a base 2. As is shown in Fig. 1, the display portion 1000 may be provided in a front portion 4 of the base 2. Furthermore, the display portion 1000 may be provided such that it is visible when viewing the base 2 from above. The display portion 1000 may be provided at a position which is not covered by the child seat 3 when the child seat is inserted on the base 2 and oriented in a forward-facing direction or a rearward-facing direction. For example, the display portion 1000 may be provided above a locking mechanism 500 as described before. The display portion 1000 may be provided in a region in which a load leg 900 is pivotably coupled to a main body 20 of the base 2. The display portion 1000 may be provided at substantially equal distance from lateral sides of the base 2. In other words, the display portion 1000 may be provided centrally. Accordingly, the display portion 1000 can be visible to a user from both lateral sides of the base 2.

The display portion 1000 may be configured to provide centralized information on the status of the child restraint system 1. For example, the display portion 1000 may be configured to provide information on the mounting status of the child restraint system 1.

The display portion 1000 may be configured to present the information in a spatial manner allowing a user to directly spatially determine locations of portions on the child restraint system 1 to which the displayed information relates to.

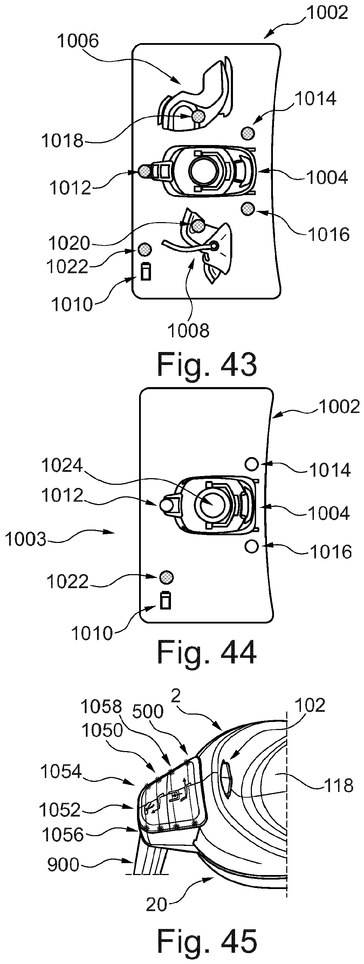

The display portion 1000 may be configured to present the information on a map 1002. Figs. 43 and 44 show possible configurations of a map 1002. The map 1002 may show the child restraint system 1 or components of the child restraint system such as a base 2 or a child seat 3. In the example configurations as shown in Figs. 43 and 44, the map 1002 shows the entire base 2 in plan view. A plan view depiction 1004 may be provided which schematically shows the base 2. The display portion 1000 may comprise a map 1002 in the form of an illustration provided on the display portion 1000.

The display portion 1000 may comprise at least one indicator 1012, 1014, 1016, 1018, 1020, 1022, 1024. The at least one indicator may be provided at a predetermined position on a map 1002. The predetermined position on the map 1002 may directly correspond to a location on the base 2.

In some configurations, the display portion 1000 may comprise two indicators 1014, 1016 each indicating a coupling status of a connector 204, 206 or coupling arm of the base 2. Such indicators may also be referred to as coupling indicators. For that, the map 1002 may comprise a schematic depiction of the connectors 204, 206 in a schematic illustration of the base 2. The indicators are respectively provided next to and/or assigned to schematic depictions of the connectors 204, 206 within the overall presentation of the base 2. Accordingly, a first indicator 1014 may be provided next to the depiction of the first connector 204 and a second indicator 1016 may be provided next to the depiction of a second connector 206.

The first indicator 1014 may be configured to indicate whether the first connector 204 is in a locking state or an unlocking state. For example, if the first connector 204 is in the locking state, the first indicator 1014 may be active, for example lighted, for example lighted with green color. Similarly, the second indicator 1016 may be configured to indicate whether a second connector 206 is in a locking state or in an unlocking state. For example, if the second connector 206 is in the locking state, the second indicator 1016 may be active, for example lighted. Accordingly, a user may simply gather from the display portion 1000 whether a first connector 204 and a second connector 206 are locked with a fixing structure 96 of the vehicle seat 90. Furthermore, in case one of the connectors is not in the locking state and, thus, not correctly locked with the fixing structure, a user may directly see on the display which of the connectors is not in the locking state and where this connector is located on the base 2.

It is noted that each of the first connector 204 and the second connector 206 may comprise a coupling portion 202 which is releasably lockable with the fixing structure 96 of the vehicle seat 90. Accordingly, the first indicator 1014 and the second indicator 1016 may be configured to indicate the respective state of the coupling portions 202 provided on the first connector 204 and the second connector 206. The respective state of the coupling portions 202 on the first connector 204 and the second connector 206 may be detected by means of sensors 804, 806 as described in other parts of this specification.

In some configurations, the display portion 1000 may comprise at least one indicator 1018, 1020, 1024 each indicating a coupling status of a child seat 3 on a coupling interface 100 of the base 2, for example a coupling interface 100 having one or more of the features as described in other parts of this specification. Indicators 1018, 1020 may be assigned to depictions of a child seat 1006, 1008 (see Fig. 43) or a single indicator 1024 may be assigned to the depiction of a coupling interface on the map 1002 in the depiction of the base 2 (see Fig. 44). The indicators 1018, 1020, 1024 are configured to be lighted when a child seat is correctly inserted on the coupling interface 100, for example when the child seat 3 is correctly inserted on a primary support portion 101 as described in other parts of this specification and/or when the child seat 3 is correctly inserted in a secondary support portion 102, 103 as described in other parts of this specification. For example, correct insertion of the child seat 3 on the base 2 may be indicated by the indicators 1018, 1020, 1024 if the child seat is correctly mounted on the primary support portion 101 and correctly oriented in a travel direction, for example into a forward-facing direction or a rearward facing direction.

In some configurations, the display portion 1000 may comprise at least one indicator 1012 indicating a deployed position and or correct mounting state of a load leg 900 on the base 2. The deployed position may be a state in which an unfolded position of the load leg 900 is detected, for example by a sensor arrangement, in particular a contactless sensing arrangement. For example, the sensor arrangement may comprise a sensor 814 as described in other parts of this specification.

The display portion 1000 may further comprise an indicator 1022 next to a depiction of a battery symbol 1010 for indicating a power status to a user.

Load leg indicator 1012 may be provided at a front end portion of map 1002. Coupling indicators 1014, 1016 may be provided at a rear end portion of the map 1002. Seat indicators 1018, 1020, 1024 may be provided in a middle portion between the load leg indicator 1012 and the coupling indicators 1014, 1016.

In some configurations, a further indicator 1058 may be assigned to a depiction indicating a pressure applied on a vehicle seat 90 by the base 2, for example a pressure by which an anti-rebound portion 300 is pushed against a seat backrest 92 of a vehicle seat 90. Such indicator 1058 may also be referred to as pressure indicator. A pressure sensor may be provided in the bottom surface of the base 2 and/or in a surface of an anti-rebound portion facing the backrest. The pressure indicator may be lighted (for example in green color) when a sufficiently high pressure is detected by the pressure sensor.

### Example base with alternative display

In some embodiments, a display portion 1050 may differ from the display portion 1000 in that it shows at least one indicator line arrangement, for example a column 1054, 1056 with multiple indicators, and a depiction line arrangement, for example a column 1052, showing depictions of specific portions and configurations of the base 2. One indicator of the indicator line arrangement, for example of the column 1054, 1056, may be assigned to one depiction in the parallel depiction line arrangement, for example the depiction column 1052, by being arranged at the same level and next to the depiction. The depictions may be arranged according to a mounting sequence of base 2 and/or a child seat 3 mounted thereon, i.e. a mounting sequence of a child restraint system 1. However, is to be noted that the system provided here does not require that a user performs the mounting steps in such sequence. In some embodiments, two lines of indicators 1054, 1056 are provided, one on each lateral side of the depiction column 1052 so that two indicators are assigned to a single depiction.

The idea behind such arrangement may be at least seen in a configuration in which a fully correct installation of the base 2 and/or the child seat 3 is presented by way of a line/column/row of indicators so that it is easy to recognize for a user if there is an issue in one of the mounting steps since it is easily recognizable if one of the indicators does not show correct execution of the related mounting step.

Fig. 45 shows an exemplary configuration of a display device 1050 in which indicators and depictions are arranged in parallel columns extending in longitudinal direction of the base 2. In this configuration, two lines of indicators 1054, 1056 are provided, one on each lateral side of the depiction column 1052, so that two indicators are assigned to each depiction in the depiction column 1052. Both indicators reflect the same information and they are both simultaneously lighted.

### Example display having beam splitter

In some embodiments, the child restraint system 1 may comprise a display portion 1000 configured to provide centralized information on the status of the child restraint system, and the display portion 1000 may comprise at least two indicators 1018, 1020 indicating a predetermined status of the child restraint system. The centralized information may comprise information on the mounting status of the child restraint system, for instance. In some embodiments, the child restraint system 1 may comprise a display portion 1050 as described before. Furthermore, the display portion may comprise features as described herein in connection with other possible configurations of display portions.

In some embodiments, at least two of the indicators 1018, 1020 of the display device 1000 or indicators of two indicator columns 1054, 1056 of the display device 1050 may be configured to be simultaneously lightable by a single light source. In some embodiments, the display device 1000, 1050 may comprise a beam splitter 1001 (see for example Fig. 13 showing an example of an interior configuration of the display device 1000) for splitting and guiding emitted light from the single light source to the lighting portions 1018, 1020 or indicators, for example of the display device 1000, or to two lighting portions in a row of the two indicator columns 1054, 1056. The beam splitter 1001 may be integrally formed.

### Example electronic feedback system

In some configurations, an electronic feedback system may be provided. The electronic feedback system may comprise a microcontroller unit (MCU) 1060. The MCU 1060 may be coupled to one or more sensors of the herein described sensor arrangement 800 by a suitable wiring. The MCU 1060 may be configured to receive one or more signals from the one or more sensors of the sensor arrangement 800 and may output signals reflecting predetermined states in a mounting process of the child restraint system to a display device 1000, 1050. The purpose of the electronic feedback system may be to display status of different inputs (for example from the one or more sensors in the sensor arrangement 800) and/or a battery level. The status may be indicated visually and/or aurally. For example, LEDs may be used for visual indication. One or more of the LEDs may be bi-colored (e.g. red and green). A buzzer or speaker may be provided for aural indication.

The MCU 1060 may be integrated in the display portion 1000 as shown in Fig. 37. The MCU 1060 may be provided at a different location and may be suitably wired with the display portion 1000. The MCU 1060 may further be connected to a speaker for outputting audio information by a suitable wiring. A power supply portion 28 may be provided on the base 2 as is shown in Fig. 29. The power supply portion 28 may be a battery case accessible via a lid provided on the bottom portion 6 of the base 2, for example in a bottom surface 24 of the base 2. The power supply portion 28 is connected with the MCU 1060 by a suitable wiring.

The MCU 1060 may be configured to provide a standby mode in which the display portion 1000 is deactivated or shut down. Such a standby mode may also be referred to as power saving mode. The MCU 1060 may further be configured to provide an active mode in which information is displayed on the display portion 1000. The MCU 1060 may be configured to provide a system check mode. The system check mode may be established during active mode and/or standby mode. In some configurations, system check mode may be established upon operation of the system check button by a user.

The MCU 1060 may be configured to establish the standby mode when it is detected by sensor 814 or load leg stowed state detection sensor that the load leg 900 is in a stowage position. The MCU 1060 may be configured to establish the standby mode when no state change is detected by one or more of the sensors within a predetermined time period from wake up of the system or a previous state change detected by a sensor, for example within two minutes.

The MCU 1060 may be configured to establish the active mode or wake up the system from the standby mode when a state change is detected by one or more of the sensors. In some configurations, any sensor change anywhere in the system wakes up the system. Such a state change may be a change in the respective sensor from a detection of the sensor detectable feature to a non-detection of the sensor detectable feature or vice versa.

For example, the MCU 1060 may be configured to establish the active mode or wake up the system from the standby mode when the load leg 900 is moved out of the stowage position leading to a state change in sensor 812 (load leg deployed state detection sensor). The MCU 1060 may be configured to establish the active mode or wake up the system when the state of a coupling portion 202 changes from locked to unlocked and/or vice versa. The MCU 1060 may be configured to establish the active mode or wake up the system when a child seat 3 is inserted on or removed from the coupling interface 100. The MCU 1060 may be configured to establish the active mode or wake up the system when a child seat 3 is rotated into or out of a forward facing orientation or a rearward facing orientation due to a state change in one of sensors 808, 810 in the locking mechanism 500.

The MCU 1060 may also be configured to establish the active mode or wake up the system upon operation of an operating member by a user. The operating member may be provided as a separate member with the only function of allowing a user to wake up the system. The operating member may be a member which is operatively coupled to a sensor detectable feature such that the sensor detectable feature is moved relative to the sensor with the effect that the MCU 1060 may again establish the active mode based on the detection of a state change in the sensor assigned to this sensor detectable feature. For example, the actuating member 119 or release member 502 may form such operating member when coupled to the locking member 501 carrying a sensor detectable feature, for example the magnet 526. In such a configuration, a user may wake up the system by operating the actuating member 119 or release member 502. Reference is made to the other parts in this specification regarding possible configurations of the actuating member 119 or release member 502 as well as of the locking member 501.

The electronic feedback system may comprise a failsafe configuration. For example, the electronic feedback system may be configured to detect sensor breaks and or issues in signal transmission between the sensors and the MCU. As already mentioned before, the MCU may establish a system check mode. In the system check mode, the MCU 1060 may check one or more of the sensors for correct function repeatedly, for example every two seconds. For example, the sensors may be scanned for disruption in the signal connection. As described in other parts of the specification, the sensors may be Hall-sensors.

As an example, the electronic feedback system may be configured such that the system wakes up and starts to output a sound when the load leg 900 is moved away from the stowage position. In addition, all indicators on the display devices 1000, 1050 except for the battery indicator may start blinking. This may indicate that the load leg is neither in the stowage position nor in the deployed or folded-out position.

The electronic feedback system may be configured to transfer to standby mode or sleep mode if all indicators relating to states of the child restraint system signalize a positive condition, for example coupling portions locked, load leg deployed, seat correctly installed and oriented and/or optionally sufficiently high pressure between base and seat. In this case, the system may be configured such that the standby mode is entered after a predetermined time period after all indicators show positive condition. The predetermined time period may be 30s, for instance. If one condition is negative, the system may be configured to enter the standby mode after a longer period of time, for example after two minutes.

For scanning the sensors for a disruption in the sensor connection, the MCU may perform the following actions. If the signal is high, force it low and wait for the capacitor to discharge. If the signal is low, force it high and wait for the capacitor to charge. Read the input to see if it has changed. If it has, the sensor is functioning normally. Three samples may be taken of each sensor. One mismatch may be allowed per sensor signal, allowing for a change of state for the sensor.

The electronic feedback system may be configured such that no potentially misleading indications are made on the display portion 1000, 1050. For example, if no child seat 3 is mounted on the base 2, no indications regarding the mounting of the child seat 3 are provided on the display portion 1000, 1050. Focus can thus be put on mounting of the base. The system may be configured that only indications relating to the base 2, for example the state of the coupling portions 202 (sensors 804) and/or the state of the base regarding contact pressure on the seat (pressure sensor) are provided until the base 2 is correctly mounted on the vehicle seat and indications relating to the mounting of the seat on the base are provided only when the base 2 is already correctly mounted.

The electronic feedback system may be configured such that the MCU may be in sleep or standby mode for a first predetermined time period, for example 100ms, and then wakes up triggered by a real-time clock. The MCU may then check whether any of the inputs has changed. Every second predetermined time period, for example two seconds, the MCU may also check whether the sensors connected to the input are functioning correctly. In some configurations, there may be five indicators, for example bi-colored LEDs.

Aural indication may be a beep sound created by a buzzer. The aural indication may indicate one of a sensor error, low battery, and/or a load leg positioned neither in stowage position nor in deployed position.

### Example coupling arrangement with two connectors coupled to each other

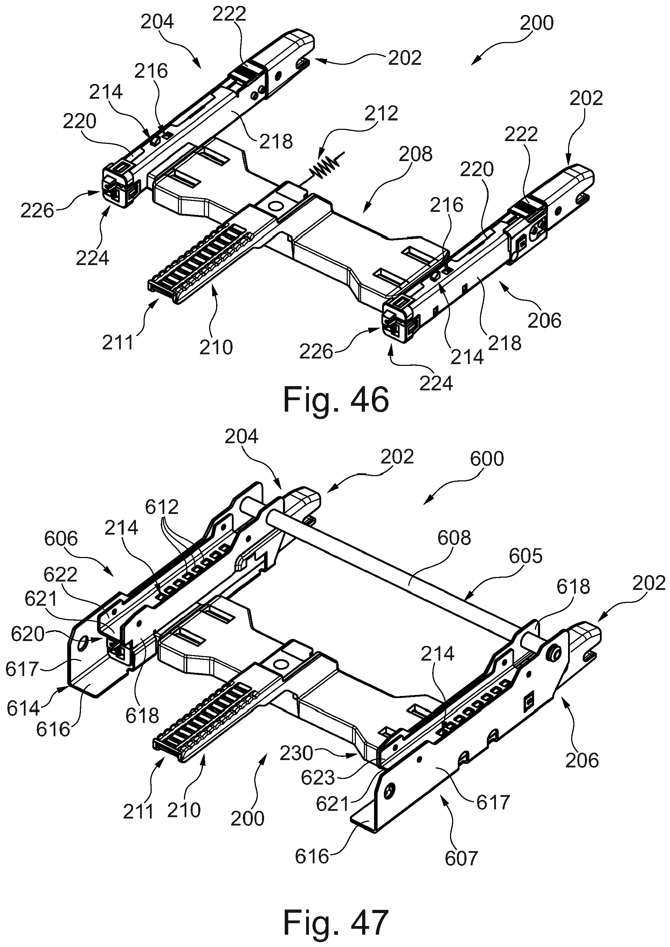

An exemplary configuration of a coupling arrangement 200 for coupling a child restraint system 1 or a base 2 to the fixing structure on the vehicle seat will be described with reference to Figs. 46 to 49. It is noted that some embodiments of a possible coupling arrangement 200 were already described in connection with the configuration shown in Figs. 17 and 18.

The exemplary configuration as shown in Figs. 46 and 47 comprises two connectors 204, 206. Each connector may comprise an elongate structure. Each connector 204, 206 may in some embodiments also be referred to as coupling arm due to its elongate structure.

The connectors 204, 206 may be connected to each other by means of a connecting device 208. The connecting device 208 may provide a rigid support between the connectors 204, 206. Accordingly, the connectors 204, 206 may be formed as an integral unit together with the connecting device 208. Therefore, the connectors 204, 206 may then only be moved together and not individually.

In some embodiments, each of the connectors may be configured to be blocked from movement into a retracted position, for example towards or into the main body 20 of the base 2, if the coupling portion 202 is not correctly coupled to the fixing structure 96. In some embodiments, each of the connectors may be configured to be blocked from movement into a deployed position, for example out of and/or away from the main body 20 of the base 2, for example by locking portions 214. In each of the latter cases, an entire unit comprising the connectors 204, 206 and the connecting device 208 may only be moved if neither of the connectors 204, 206 is blocked from moving. In other words, the movability of a single connector not only depends on whether this single connector is free to move but also depends on whether the other connector is free to move.

Each connector 204, 206 may comprise a coupling portion 202, for example the coupling portion 202 as described in other parts of this specification. The coupling portions 202 may be configured to get in releasable engagement with a fixing structure 96 on the vehicle seat 90. The coupling arrangement 200 may comprise a driven portion 210 which in the shown configuration is provided on the connecting device 208 in the middle between the connectors 204, 206. In other words, the driven portion 210 may be centrally connected to the connecting device 208.

The driven portion 210 may be configured to receive an actuating force for moving the coupling arrangement 200, for example from an operating member 402 of a tensioning mechanism 400 as described in this specification. For that, the driven portion 210 may comprise a toothed bar 211 which is engageable with a gear wheel or sprocket, for example a sprocket or gear wheel 472 of a tensioning mechanism 400 as described before with reference to Figs. 17 and 18, for instance.

In some embodiments, the driven portion 210, for example the toothed bar 211, and/or the force output member 470, for example at least the gear wheel 472, may be at least partially accommodated in the accommodating space 115 of the primary support portion 101 described in other parts of this specification.

The coupling arrangement 200 may be configured to automatically move into an extended position. The coupling arrangement 200 according to Figs. 46 and 47 may comprise an urging member 212 which biases the coupling arrangement 200 towards an extended position. The extended position may be a position in which the coupling portions 202 protrude further from the base 2 or a main body 20 of the base 2 or the child restraint system 1 compared to a retracted position. Accordingly, the coupling arrangement 200 may be movable between the extended position and the retracted position wherein the urging member 212 biases the coupling arrangement 200 towards the extended position.

Each connector 204, 206 may further comprise one of a first locking portion 214 and a second locking portion 216. The first locking portion 214 may be a part of a first engaging member 250. The second locking portion 216 may be a part of a second engaging member 254. The first engaging member 250 and the second engagement member 254 will be described later in greater detail. Each connector 204, 206 may comprise a first locking portion 214 and a second locking portion 216.

Each first locking portion 214 and each second locking portion 216 may be configured and arranged on the respective connector 204, 206 so as to be movable between a locking position and a release position or retracted position. In the locking position, the respective locking portion of the first locking portion and the second locking portion protrudes from an outer side of the connectors 204, 206, for example protrudes from an upper portion or surface of the connectors 204, 206. In the retracted position, the respective locking portion is brought into a position in which it does not protrude from the respective connector 204, 206. In Fig. 46, the second locking portion 216 is shown in a retracted position and the first locking portion 214 is shown in a locking position.

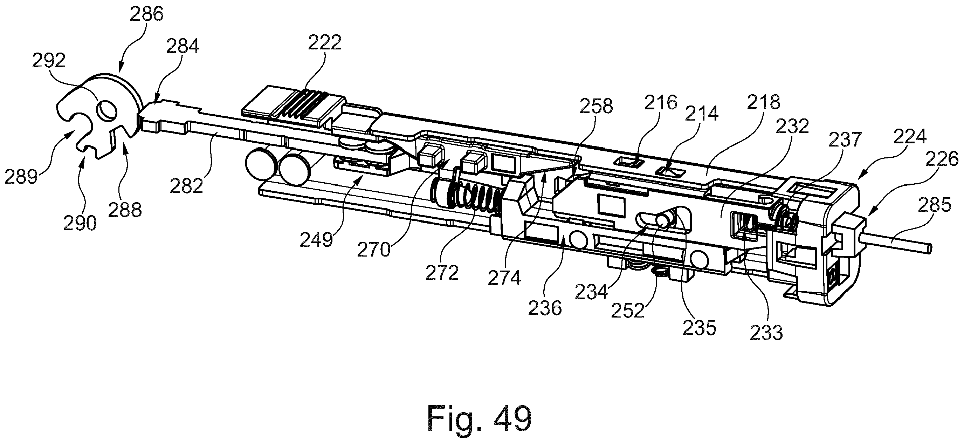

It is noted that in some embodiments, the first locking portion 214 and the second locking portion 216 are configured to translate between the described positions. The locking portions 214, 216 do not rotate according to such a configuration. The first locking portion 214 and the second locking portion 216 may be mounted in the connectors 204, 206 to be translatory movable along a straight path. A possible configuration in which the first locking portion 214 and the second locking portion 216 are linearly guided in the connectors 204, 206 will be described in a different part of this specification with reference to Figs. 48 and 49.

Each connector 204, 206 may comprise a housing which is formed by a first housing portion 218 and a second housing portion 220. Together, the first housing portion 218 and the second housing portion 220 form a hollow profile defining an interior space for accommodating parts of a mechanism for operating the coupling portion 202 and for moving the first locking portion 214 and the second locking portion 216.

The hollow profile formed by the first housing portion 218 and the second housing portion 220 may be closed on the rear side by a rear cap 224. The rear cap 224 and the coupling portion 202 are provided on opposite sides of the connectors 204, 206 in longitudinal direction of the connectors.

The rear cap 224 may comprise a cable guide 226 allowing to pass a cable through the same for a connection with the interior mechanism of the coupling arrangement 200.

### Example connector with manual locking release

As is further shown in Fig. 46, a release portion 222 may be provided adjacent the coupling portions 202 on an upper side of the connectors 204, 206. The release portion 222 may be slidably held on the connectors 204, 206 and operatively coupled with the second locking portion 216. By sliding the release portion 222 away from the coupling portion 202, the second locking portion 216 may be brought into the release position. This allows a user to manually operate the second locking portion 216.

Regarding the functions of the first locking portion 214 and the second locking portion 216, it is referred to the other configurations as described in the present disclosure. For example, the second locking portion 216 may be configured to block a movement of the coupling portion 202 in retraction direction as long as the coupling portion 202 is not locked with the fixing structure 96. In order to manually override this function, the release portion 222 may be used to manually move the second locking portion 216 and to allow a movement of the coupling portion 202 in retraction direction. This allows a user to move the coupling arrangement 200 into a parking position or retracted position in which the coupling portions 202 are positioned closer to the main body of the base 2.

### Example holding structure for coupling arrangement

The coupling arrangement 200 may be movably supported on portions of a holding structure 600. The holding structure 600 may comprise features as already described with respect to other configurations of the present disclosure.

As is illustrated in Fig. 47, the connectors 204, 206 may be linearly movably held, for example in coupling portion support frames 606, 607, respectively. Each coupling portion support frame 606, 607 may define an interior space having a cross-section substantially corresponding to an outer cross-sectional contour of the connectors 204, 206. The connectors 204 and 206 may be slidably received in the coupling portion support frames 606, 607.

Each coupling portion support frame 606, 607 may comprise an outer frame portion 614. Each outer frame portion 614 may be formed as a U-shaped member with a lower portion 616, an outer wall portion 617 protruding from the lower portion 616 on an outer side of the respective coupling portion support frame 606, 607, and an inner wall portion 618 protruding from an inner side of the lower portion 616. Furthermore, each coupling portion support frame 606, 607 may comprise an inner frame portion 620.

The inner frame portion 620 may be received between the outer wall portion 617 and the inner wall portion 618 and at a distance from the lower portion 616. Accordingly, the interior accommodating space for receiving the connectors 204, 206 may be limited by the inner walls of the outer frame portion 614 and a lower outer wall of the inner frame portion 620. The inner frame portion 620 may comprise a lower portion 621, an outer wall portion 622 and an inner wall portion 623. The outer wall portion and the inner wall portion may protrude from the lower portion 621 on opposite lateral inner and outer sides, respectively. The inner frame portion 620 may be a U-shaped member. The inner frame portion 620 may be fixedly attached to the outer frame portion 614 by joining the outer wall portions and the inner wall portions of the inner and outer frame portions.

The lower portion 621 of the inner frame portion 620 may comprise engaging openings 612 which may also be referred to as receiving portions. The openings 612 or recesses may be arranged equidistantly and on an imaginary straight line in longitudinal direction of a coupling portion support frame 606, 607 and may be configured to be engaged by the first locking portion 214. Accordingly, by an engagement of the first locking portion 214 with the engaging opening 612, a movement of the connectors 204, 206 in extension direction may be blocked at different positions.

### Example interior construction of connector

The interior construction of an exemplary connector 204 will be described with reference to Figs. 48 and 49. It is noted that the interior construction of the two connectors 204, 206 shown Fig. 46 may both be identical or at least have identical interior mechanisms.

Fig. 48 shows an exploded view of the exemplary connector 204 and Fig. 49 shows a perspective side view of the connector 204 wherein the housing portion 220 is removed to reveal an interior construction of the connector 204. The coupling portion 202 may be formed by a locking unit 280. The locking unit 280 may form a forward end portion of the connector 204. An exemplary configuration of the locking unit 280 is shown in Fig. 49.

The locking unit 280 may comprise a locking member 286. The locking member 286 may be configured as a locking plate. The locking member 286 may comprise an opening 292 for rotatably holding the locking member in the locking unit 280. In the locking unit 280, the locking member 286 may be rotatably held about a rotation axis which is arranged perpendicular to a longitudinal middle plane of the connector 204.

The locking member 286 may comprise a locking recess 288. The locking recess 288 may be provided in an edge region of the locking member 286. The locking recess 288 may extend radially inward towards the opening 292. The locking recess 288 may be configured to be engaged by a locking portion 284. The locking portion 284 may be arranged translatory movable in longitudinal direction of the connector 204. In particular, the locking portion 284 may be arranged movable towards and away from the locking member 286 between a locking position in which the locking portion 284 engages with the locking recess 288 and a release position in which the locking portion 284 is disengaged from the locking recess 288. An engagement between the locking portion 284 and the locking member 286 blocks a rotation of the locking member 286. The locking portion 284 may be biased towards the locking position, for example by means of a spring 237 as will become obvious further below. The locking portion 284 may run on an edge surface of the locking member 286 and may automatically engage with the locking recess 288 when the locking member 286 is rotated to an orientation in which the locking recess 288 and the locking portion 284 are aligned.

The locking member 286 may comprise a receiving recess 289 configured to receive a portion of the fixing structure 96, for example a portion of an isofix bracket provided in a vehicle seat. For coupling the coupling portion 202 to the fixing structure 96, the coupling portion 202 may be pushed on to the fixing structure 96 such that a portion of the fixing structure 96 is received in the receiving recess 289. Further pushing the coupling portion 202 on the coupling portion 202 may induce a rotation of the locking member 286 towards a locking position. As soon as the locking position is reached, the receiving recess 289 is in a position in which the fixing structure 96 is securely accommodated in the receiving recess 289 such that it may not come off from the coupling portion 202. At the same time, the locking recess 288 and the locking portion 284 are aligned so that the locking portion 284 may engage with the locking recess 288 to block a rotation of the locking member 286. In this configuration, the coupling portion 202 is locked to the fixing structure 96.

For unlocking the fixing structure 96, the locking portion 284 may be brought into the before mentioned release position thereby unlocking the rotation of the locking member 286. With the locking portion 284 positioned in this way, it is possible to pull the coupling portion 202 away from the fixing structure 96 which leads to a rotation of the locking member 286 into an unlocking position. For maintaining the unlocking position of the locking member 286, the locking member 286 may be operatively coupled to an urging member (not shown) biasing the locking member 286 towards the unlocking position. In Fig. 49, a coupling recess 290 is shown. This coupling recess 290 may be provided and may be available for the fixation of and force application by the urging member.

The locking portion 284 may be integrally formed in a forward end portion of a first force transmission member 282. A rear end portion of the first force transmission member 282 may be coupled to a coupling portion 249 provided in a forward end portion of a second force transmission member 240. The first force transmission member 282 and the second force transmission member 240 may together form a force transmission bar extending in longitudinal direction of the connector 204 substantially over the entire length of the connector 204.

### Example connector with arrangement for detecting locking status of coupling portion

In some embodiments, the connector 204, 206 may comprise a locking status detection arrangement for detecting the locking status of the coupling portion 202 and/or a position/orientation of a locking member, for example the locking member 286 as described before.

The locking status detection arrangement may comprise a sensor and a sensor detectable feature. The sensor detectable feature may be a magnet 246. The sensor may be a magnet sensor. The sensor detectable feature may be configured to move between a locking position and a release position depending on the status of the coupling portion 202 and/or position of the locking member. The sensor detectable feature may be operatively coupled to a locking portion 284 for locking a rotation of the locking member 286, for example the locking portion 284 as described before.

As is shown in the configuration of Fig. 48, at a rear end portion of the second force transmission member 240, a magnet holder 244 may be provided so as to protrude from a lower end portion of the second force transmission member 240. A magnet 246 may be secured in the magnet holder 244. The magnet 246 may form the sensor detectable feature. A sensor 804 may be provided in a rear end portion of the connector 204. The sensor 804 may be arranged in the rear cap 224. Accordingly, the sensor 804 may be able to detect whether the force transmission bar is in a locking position in which the locking portion 284 is engaged with the locking recess 288, or in a release position in which the engagement between the locking portion 284 and the locking recess 288 is released. Accordingly, using the sensor 804 allows to detect whether the coupling portion 202 is correctly engaged with the fixing structure 96, and to output a corresponding signal to a display device, for example to a display device 1000, 1050 as described in other parts of this specification. The sensor 804 may be part of a sensor arrangement 800 of a base 2 as described in other parts of this specification.

In some embodiments, the second locking portion 216 may be operatively coupled to the locking unit 280, for example to the locking portion 284 such that the second locking portion 216 is transferred into a release or retracted state and/or moved into a retracted position when the locking unit 280 is in a locking state. The second force transmission member 240 may comprise a force application portion 242. The force application portion 242 may be configured to operatively couple the second force transmission member 240 to the second locking portion 216. More precisely, the force application portion 242 may be configured to couple the second force transmission member 240 to the second locking portion 216 such that the second locking portion 216 is in the release position or retracted position when the force transmission bar is positioned in the locking position. In other words, the locking portion 216 is automatically retracted or moved to the release position when the coupling portion 202 is correctly engaged with the fixing structure 96.

### Example connector with linearly movable engaging member

In some embodiments, the second locking portion 216 is configured translatory and/or linearly movable. The second locking portion 216 may be provided on a second engaging member 254. More precisely, the second locking portion 216 may be formed as a protrusion on an upper portion of the second engaging member 254. The second locking portion 216 may comprise a stop surface oriented away from the coupling portion. The second engaging member 254 may be arranged translatory movable between a locking position and a release position. In the locking position, the second locking portion 216 may be in a position in which it protrudes from an upper portion of the housing portion 218. In the release position, the second locking portion 216 may be retracted into the housing portion 218. The second locking portion 216 may be biased towards the locking position by means of an urging member such as a spring.

As is indicated in Fig. 48, the housing portion 218 may comprise an opening in an upper portion through which the second locking portion 216 may pass for reaching the locking position. In the locking position, the second locking portion 216 may be positioned so as to provide a stop which cooperates with the coupling portion support frame 606, 607. In the locking position, the second locking portion 216 may block a movement of the connector 204 towards the retracted position. In other words, according to the configuration, a movement of the connector 204 and thus of the coupling arrangement 200 towards their retracted position may only be possible if the coupling portion 202 is correctly engaged with the fixing structure 96.

As already mentioned before, the second engaging member 254 may be translatory movable between the locking position and the release position. The second engaging member 254 may be movable in a direction perpendicular to a longitudinal direction of the connector 204, 206. The second engaging member 254 may be movable in vertical direction. The second engaging member 254 may be linearly movable towards and away from an upper wall portion of the housing portion 218.

The connector 204 may comprise a second support portion 260 configured to linearly guide the second engaging member 254. The second support portion 260 may comprise a guiding track 262. The guiding track 262 may be formed as a straight slot extending in vertical direction.

The second engaging member 254 may comprise a force receiving portion 256. The force receiving portion 256 may comprise a cylindrical portion protruding from a lateral side of the second engaging member 254. The force receiving portion 256 may be configured to extend through the force application portion 242 and into the guiding track 262. Accordingly, the second engaging member 254 may be guided through an engagement between the force receiving portion 256 and the guiding track 262.

The force application portion 242 may comprise a recess or an opening limited on the upper side by an inclined force application surface. The force application surface may be inclined such that it crosses a horizontal middle plane of the connector 204 at a position rearward of the second engaging member 254, for example at a position between the second engaging member 254 and the rear cap 224. In this way, a movement of the second force transmission member 240 in longitudinal direction of the connector 204 is transferred into a movement of the second engaging member 254 in a direction perpendicular to the longitudinal direction of the connector 204 along the guiding track 262.

### Example connector with manual locking release

As shown in Fig. 48, the second engaging member 254 may comprise a force receiving surface 258. The force receiving surface 258 may be configured to receive a force from the release portion 222. As already mentioned before, the release portion 222 may be slidably held on the connectors 204, 206 and operatively coupled with the second locking portion 216. In some embodiments, the release portion 222 may be an operating portion of a force transmitting member 270 such as a slider. The release portion 222 may be provided on a first end portion of the force transmitting member 270. On an opposite second end portion of the force transmitting member 270, a force application portion 274 may be provided.

The force application portion 274 may comprise an inclined surface which is configured to cooperate with the force receiving surface 258. The inclined surface and the force receiving surface 258 may be configured such that a movement of the force transmitting member 270 in rearward direction of the connector 204, in other words away from the coupling portion 202, urges the second engaging member 254 towards the release position. The force transmitting member 270 may be movable between a release position in which no or substantially no force is applied on the force receiving surface 258 and an operating position in which the second engaging member 254 is moved to the retracted position owing to a force application of the force application portion 274 on the force receiving surface 258. The force transmitting member 270 may be coupled to an urging member 272 biasing the force transmitting member 270 towards a release position, in other words towards the coupling portion 202.

The release portion 222 and the force transmitting member 270 may be movable in parallel with the first force transmission member 282. The release portion 222 and the force transmitting member 270 may be arranged above the first force transmission member 282. The release portion 222 may be provided on an upper outer surface of the connector 204, 206. The release portion 222 may comprise an operating surface configured to be actuated by a user's finger. The release portion 222 may be configured to slide along an outer surface of the connector 204, 206.

### Example connector with linearly movable engaging member

The first locking portion 214 may be provided on a first engaging member 250. More precisely, the first locking portion 214 may be formed as a protrusion on an upper portion of the first engaging member 250. The first locking portion 214 may comprise a stop surface oriented towards the coupling portion 202. The first engaging member 250 may be arranged translatory movable between a locking position and a release position. In the locking position, the first locking portion 214 is in a position in which it protrudes from an upper portion of the housing portion 218. In the release position, the first locking portion 214 is retracted into the housing portion 218. The first locking portion 214 may be biased towards the locking position by means of an urging member such as a spring.

As is indicated in Fig. 48, the housing portion 218 may comprise an opening in an upper portion through which the first locking portion 214 may pass for reaching the locking position. In the locking position, the first locking portion 214 may be positioned so as to provide a stop which cooperates with the coupling portion support frame 606, 607. In the locking position, the first locking portion 214 may block a movement of the connector 204 in extension direction towards the extended position by an engagement with one of multiple engaging sections 612 in the coupling portion support frame. In other words, according to the configuration, a movement of the connector 204 and thus of the coupling arrangement 200 in extension direction towards the extended position is only possible if the first locking portion 214 is retracted.

As already mentioned before, the first engaging member 250 may be translatory movable between the locking position and a release position or unlocking position. In the configuration as shown in the figures, the first engaging member 250 may be movable in a direction perpendicular to a longitudinal direction of the connector 204, 206. The first engaging member 250 may be movable in vertical direction. The first engaging member 250 may be linearly movable towards and away from an upper wall portion of the housing portion 218.

The connector 204 may comprise a first support portion 236 configured to linearly guide the first engaging member 250. The first support portion 236 may comprise a guiding track 238 which is formed as a straight slot extending in vertical direction according to the exemplary configuration.

The first engaging member 250 may comprise a force receiving portion 252. The force receiving portion 252 may comprise a cylindrical portion protruding from a lateral side of the first engaging member 250. The force receiving portion 252 may be configured to extend through the guiding track 238 and into a force application portion 234 provided in an actuating member 232. Accordingly, the first engaging member 250 may be guided due to an engagement between the force receiving portion 252 and the guiding track 238.

The force application portion 234 may comprise an opening limited on the upper side by an inclined force application surface. The force application surface may be inclined such that it crosses a horizontal middle plane of the connector 204 at a position forward of the first engaging member 250, for example at a position between the first engaging member 250 and the coupling portion 202. In this way, a movement of the actuating member 232 in longitudinal direction of the connector 204 may be transferred into a movement of the first engaging member 250 in a direction perpendicular to the longitudinal direction of the connector 204 along the guiding track 238.

The actuating member 232 may be arranged linearly movable along the longitudinal direction of the connector 204. The actuating member 232 may be configured to transfer an operating force to the first engaging member 250. The actuating member 232 may be configured to transfer an operating force to the second force transmission member 240. The actuating member 232 may comprise a protrusion protruding from a lateral side of the actuating member 232 towards the second force transmission member 240. The protrusion may be configured to bypass the first support portion 236. The second force transmission member 240 may comprise a coupling portion 248 configured to be contacted by the protrusion of the actuating member 232.

The actuating member 232 may comprise a coupling portion 233 configured to be coupled to a force transmission member for applying an operating force on the actuating member 232. In the present configuration, the force transmission member may be a Bowden cable 285. The Bowden cable 285 may extend through the cable guide 226 of the rear cap 224 and may be coupled to the actuating member 232. Accordingly, actuating the Bowden cable 285 leads to a movement of the actuating member 232 in longitudinal direction of the connector 204. A configuration may be provided in which an actuation of the Bowden cable 285 leads to a movement of the actuating member 232 in rearward direction of the connector 204 towards an unlocking position. The actuating member 232 may be operatively coupled to or may form part of the release mechanism 700 as described in other parts of this specification.

Each connector 204, 206 may be operatively coupled to one of operating members 702, 704. Each connector 204, 206 may be remotely operable by one of the operating members 702, 704 for unlocking the coupling portion 202 and/or unblocking a movement of the connector 204, 206. The locking portion 284 of the coupling portion 202 and the locking portion 214 may be operatively coupled to or form part of the release mechanism 700. The actuating member 232 and/or the locking portion 284 and/or the locking portion 214 of a respective connector 204, 206 may be operatively coupled to one respective operating member 702, 704, for example to a coupling portion 706 of the operating member 702, 704 and by means of a Bowden cable. An adjustment portion for adjusting the Bowden cable may be provided at an end portion of the Bowden cable at which the Bowden cable may be coupled to the coupling portion 706. The actuating member 232 and/or the locking portion 284 and/or the locking portion 214 of one of the connectors 204, 206 may be simultaneously operable by one of the operating members 702, 704. A possible configuration of the release mechanism 700 and/or possible configurations of the operating members 702, 704 are described in other parts of this specification.

In the unlocking position, the actuating member 232 may hold the first engaging member 250 in retracted position. The actuating member 232 may be biased towards a locking position in which the actuation member 232 releases the first engaging member 250. The actuating member 232 may be biased by an urging member 237, for example a spring. The first engaging member 250 may be biased towards the locking position by means of an urging member, for example a spring. The actuating member 232 may be operatively coupled to the locking portion 284, for example via the force transmission member 240. The actuating member 232 may be configured to transfer a force to the coupling portion 248 of the force transmission member 240. With such an arrangement, moving the actuating member 232 to the unlocking position may lead to a movement of the locking portion 284 to the unlocking position which in turn unlocks the coupling portion 202. An arrangement may be provided in which moving the actuating member 232 to the unlocking position retracts the first engaging member and the locking portion into unlocking or retracted positions.

It is noted that in some embodiments, besides the locking member 286, all members in the connector 204 are non-rotatably arranged. In other words, the locking member 286 may be the only member that is rotatably mounted in the connector 204. All other members may be non-rotatably arranged.

### Example child seat with improved harness

Figs. 53 and 54 shows an exemplary configuration of a child seat 3. The child seat 3 may be embodied as a toddler seat. It is, however, noted that the features described in the following may also be provided in different kinds of seats, for example in an infant seat.

The child seat 3 may comprise a seat structure 2100. The seat structure 2100 is fixedly coupled to an interface portion 30 for coupling the child seat 3 onto a base. The interface portion 30 may comprise features as described in other parts of this disclosure, in particular in other parts of this disclosure describing other aspects, configurations and embodiments. For example, the interface portion 30 may comprise restraining portions 32, 33. The interface portion 30 may comprise features as disclosed in Figs. 5 to 7. The interface portion 30 may be configured to be able to cooperate with a base 2 as described in connection with Figs. 1 to 3, for instance, but also with other bases 2 described in connection with other figures.

The seat structure 2100 may comprise a bottom portion 2102 and a backrest portion 2104. The child seat 3 may comprise a harness assembly 2200. The harness assembly 2200 may comprise a shoulder belt 2202. Furthermore, a buckle member 2206 may be provided on the shoulder belt 2202. The buckle member may be movable along the shoulder belt 2202. The buckle member 2206 may be configured to be engaged with a buckle receiver 2210 of the harness assembly 2200. The buckle receiver 2210 may be coupled to the bottom portion 2102 of the seat structure 2100 at a forward middle portion of the bottom portion 2102, in particular in a region in which the buckle receiver 2210 may be arranged between the legs of a seated child. The buckle member 2206 may comprise a buckle tongue 2208 which may be made of steel and which may be configured to be engaged with the buckle receiver 2210. In Fig. 54, the buckle member 2206 is shown moved to a position of a shoulder belt portion 2204. In this configuration, the shoulder belt portion 2204 may be located at a position adjacent a shoulder padding of the harness assembly.

The child seat 3 may comprise a headrest assembly 2300. The headrest assembly 2300 may be height adjustable. A textile cover member 2304 may be removably attached to the headrest assembly 2300. As is shown in Fig. 53, the headrest assembly 2300 may be configured to enclose the head of a seated child from behind. The headrest assembly 2300 may comprise lateral head support portions having a free end. In the embodiment shown in Figs. 53 and 54, a magnet is provided on the free end portions of the lateral head support portions, more precisely on a portion of the lateral head support portions facing in travel direction of a seated child. In the shown configuration, the magnet 2306 may be hidden by the mounted cover 2304 and, thus, may be not visible to a user. A marking may be provided on the cover 2304 indicating to a user the position on which the buckle tongue may be placed for temporary fixation purposes.

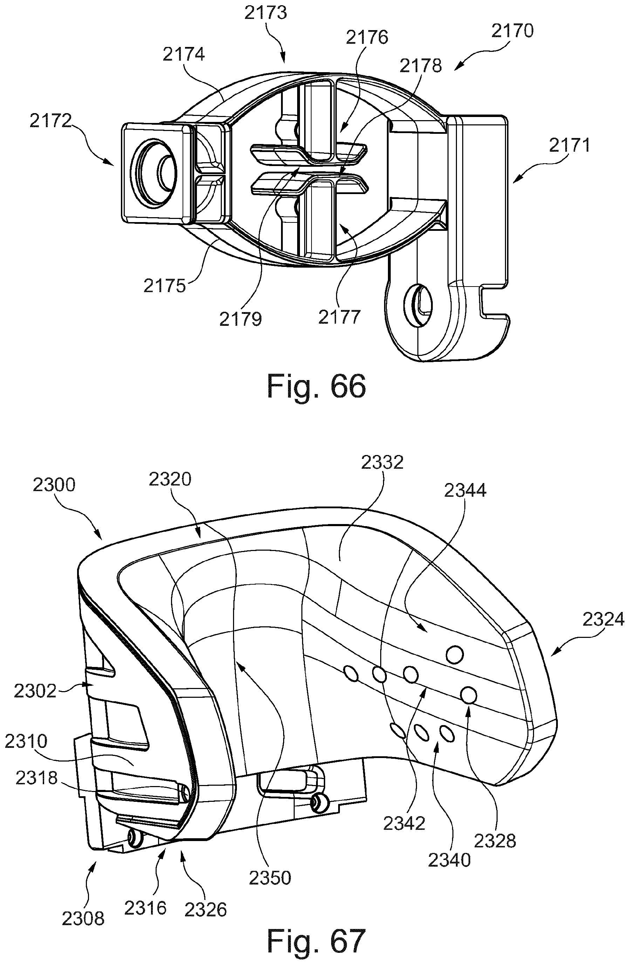

The magnet 2306 may also be provided on a lateral outer surface of the headrest assembly 2300, for example on a lateral outer surface 2310 of a support structure 2302 of the headrest assembly 2300 as shown in Figs. 67 to 69. The magnet may be provided at a forward end portion 2316 of the support structure 2302, in particular in a lateral head support portion 2324, 2326. For that, the support structure 2302 may comprise a holding portion for accommodating the magnet, for example a recess 2318, as indicated in Fig. 67.

### Example child seat with seat textile cover fastener

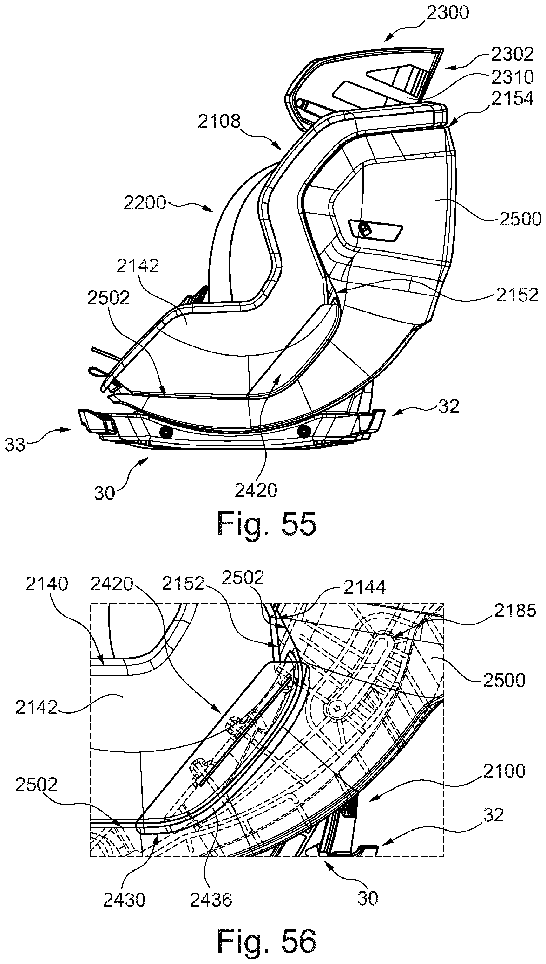

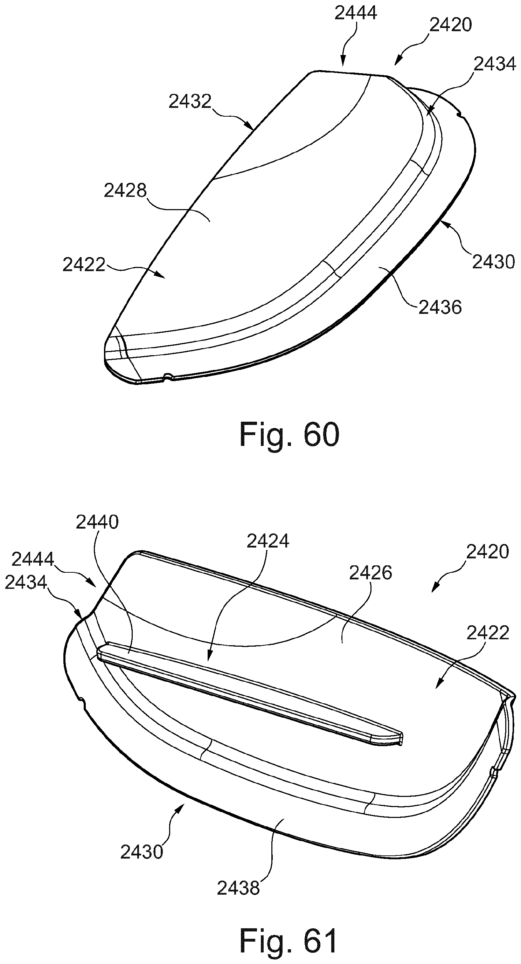

Further embodiments of a child seat will be described with reference to Figs. 55 to 63. Provided is a cover and its specific configuration for mounting the same on the child seat 3.

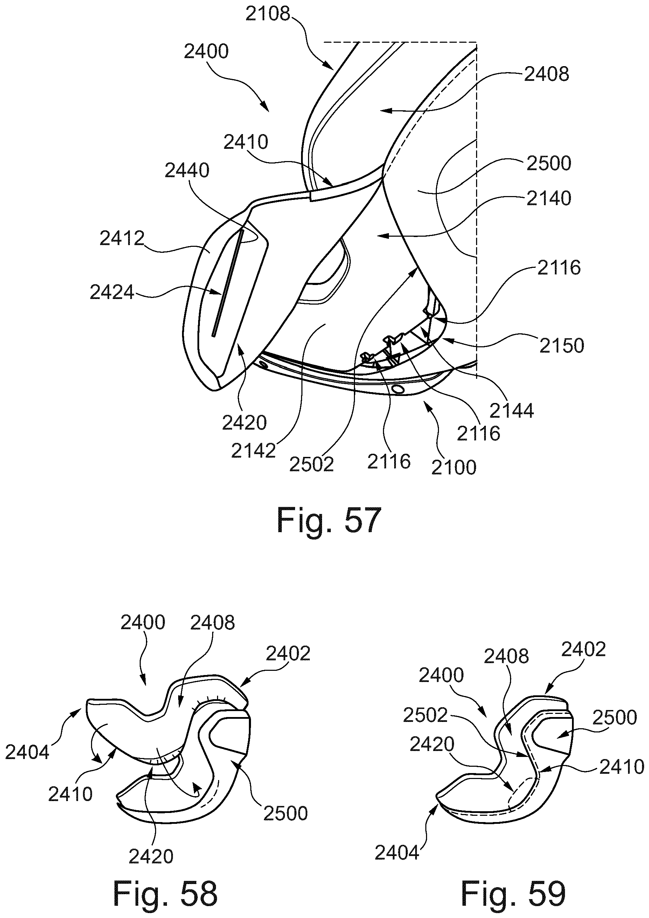

As is best seen in Figs. 57, 58 and 59, the cover 2400 may comprise a flexible cover portion 2408 which may be configured to at least cover an exterior portion 2140 of a seat structure 2100. The flexible cover portion 2408 may comprise a fabric material. The flexible cover portion 2408 may comprise an edge portion 2410.

The child seat 3 and the cover 2400 may be configured such that the edge portion 2410 is concealed when the cover 2400 is mounted on the child seat 3. In particular, the child seat 3 may comprise a back cover 2500 under which the edge portion 2410 is to be hidden by moving the edge portion 2410 under the back cover 2500. The back cover 2500 may be fixedly coupled on the child seat 3. Accordingly, the back cover 2500 remains on the child seat 3 when the cover 2400 is mounted or dismounted.

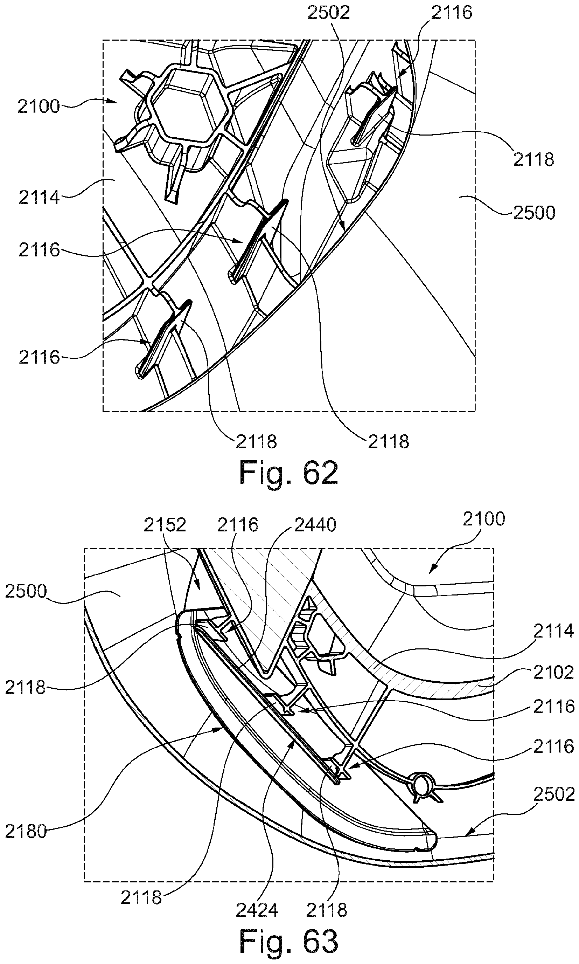

The child seat 3 may comprise an exterior portion 2140 which may also be referred to as outer side support. The exterior portion 2140 may be made from an expanded polystyrene (EPS) material and may be attached to side portions of the seat structure 2100 of the child seat 3. In particular, the exterior portion 2140 may be provided so as to extend from a side portion of the bottom portion of the child seat 3 to an upper portion of the backrest of the child seat 3. A gap 2154 may be provided between the exterior portion 2140 and a back cover edge 2502 of the back cover 2500. An insertion gap 2150 may be formed at a predetermined section of the gap 2154 and may also be referred to as opening created between the back cover edge 2502 and an edge portion 2144 of the exterior portion 2140. Support protrusions 2116 are integrally formed with the seat structure 2100 and protrude from the seat structure laterally outward. Furthermore, the support protrusions 2116 extend along the edge portion 2144 and each define a support surface 2118. The support protrusions 2116 are best seen in Fig. 62 and Fig. 63 and their function will be described later. The support protrusions 2116 may be integrally formed with a seat shell 2114. The seat shell 2114 may comprise a PP material.

The cover 2400 may comprise a fastening portion 2420 for coupling the cover edge portion 2410 to the seat structure 2100. The fastening portion 2420 may be coupled to the cover edge portion 2410. The fastening portion 2420 may be configured to get in surface contact with the flexible cover portion 2408 at a position inward of the cover edge portion 2410 when the fastening portion 2420 is coupled to the child seat 3. The fastening portion 2420 may further comprise a base portion 2422. The base portion 2422 may comprise a cover portion support surface 2428 extending between a front portion 2430 and a rear portion 2432 of the base portion 2422. The cover edge portion 2410 may be fixedly coupled to the front portion 2430 at a fixation section 2412 of the cover edge portion 2410.

The cover edge portion 2410 may be coupled to the front portion such that the flexible cover portion 2408 extends along the cover portion support surface 2428. The cover portion support surface 2428 forms an outer surface of the base portion 2422. The fastening portion 2420 may comprise a support arrangement configured to support the base portion 2422 on the seat structure 2100 in a predetermined orientation.

The support arrangement may be configured to support the base portion 2422 on the seat structure 2100 such that the cover portion support surface 2428 at least partially enlarges an exterior surface area 2142 of the exterior portion 2140 as is shown in Figs. 55 and 56, for instance. In the shown embodiment, the exterior surface area 2142 faces laterally away from the seat structure 2100.

The support arrangement may be configured to support the base portion 2422 on the seat structure 2100 such that the cover portion support surface 2428 at least partially extends beyond an edge portion 2144 limiting the exterior surface area 2142 of the exterior portion 2140.

The support arrangement is configured to support the base portion 2422 on the seat structure 2100 such that the front portion 2430 including the fixation section 2412 of the cover edge portion 2410 is at least partially spaced from the edge portion 2144 limiting the exterior surface area 2142 of the exterior portion 2140.

As already mentioned before, the support arrangement may comprise a support protrusion 2424 protruding from the base portion 2422. The support protrusion 2424 may protrude from an inner surface 2426 of the base portion 2422. The inner surface 2426 and the cover portion support surface 2428 may be arranged on opposite sides of the fastening portion 2420. The support protrusion 2424 may be formed as a continuous rib. The support protrusion 2424 may comprise a support surface 2440 adapted to contact the support protrusions 2116 on the seat structure 2100. The support surface 2440 and the support protrusions 2116 may be configured to get in surface contact with each other. The support surface 2440 may comprise a plan contact surface configured to contact the support surface 2118 on the support protrusions 2116.

The front portion 2430 may comprise an outer surface 2436 and an opposite inner surface 2438. The cover edge portion 2410 may be wrapped around the front portion 2430 to enclose the front portion 2430. The edge of the cover portion 2408 may be arranged on an inner side of the fastening portion 2420.

The fastening portion 2420 may be configured to hold the cover portion 2408 on the seat structure 2100 such that a substantially seamless transition from the cover portion 2408 to the back cover 2500 of the child seat 3 is provided. The back cover 2500 may be formed in a shell-like manner, and may form a hard-shell portion.

As is shown in Figs. 56 and 63, the front portion 2430 may be adapted to the shape of a back cover edge portion 2502 of the back cover 2500, so that upon mounting the fastening portion 2420 on the seat structure 2100, the front portion 2430 may be brought into a position inside the back cover 2500, in which the front portion 2430 overlaps with the back cover 2500 such that the cover portion 2408 extends into the back cover 2500 past the back cover edge portion 2502.

The front portion 2430 may be provided on the base portion 2422 offset with respect to the cover portion support surface 2428. A transition portion 2434, in the present configuration a step, may be provided between the front portion 2430 and the cover portion support surface 2428. The transition portion 2434 may limit the cover portion support surface 2428 and may be adapted to follow a contour of a back cover edge portion 2502. The fastening portion 2420 may be configured such that the cover portion 2408 is supported on the cover portion support surface 2428 with an outer surface of the cover portion 2408 arranged flush with an outer surface of the back cover edge portion 2502. The cover portion 2408 may be supported on the front portion 2430 with an outer surface of the cover portion 2408 held between the front portion 2430 and the back cover edge portion 2502, in the shown configuration clamped between the front portion 2430 and the back cover edge portion 2502.

The fastening portion 2420 may be configured to only partially close a gap 2150 formed on the child seat 3 between the exterior portion 2140 and the back cover 2500 while holding the cover portion 2408 such that an opening 2152 defined between the back cover 2500, the exterior portion 2140 and a fastening portion 2420, in particular an upper portion 2444 of the fastening portion 2420 mounted on the seat 3 may be covered by the cover portion 2408. The opening 2152 may comprise a dimension allowing a user to pass a finger through the opening 2152 while deforming the cover portion 2408 covering the opening.

The fastening portion 2420 may be configured to be coupled to the child seat 3 with an insertion motion including a twist-push motion, and/or may be configured to be decoupled from the child seat 3 by a decoupling motion including a twist-pull motion.

The fastening portion 2420 may be non-destructively detachably mountable on the child seat 3. The fastening portion 2420 may comprise a higher rigidity than the flexible cover portion and/or may be bonded to and/or clamped to the fastening portion 2420.

### Example child seat interior structure

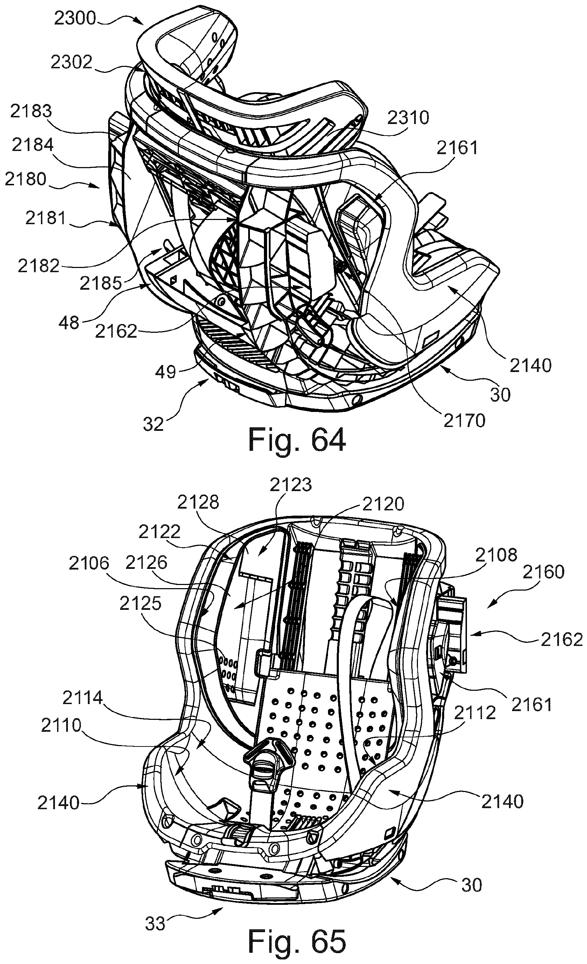

Fig. 64 illustrates possible configuration of a child seat 3. In the shown configuration, the child seat 3 is embodied as a toddler seat.

The child seat 3 may comprise a seat structure 2100. The seat structure 2100 may comprise a seat shell 2114. The seat shell 2114 may have a trough shape. The seat shell 2114 may comprise or may be made of polypropylene material (PP). The seat shell 2114 may be integrally formed. The seat shell 2114 may be defined as a one-piece component.

The seat shell 2114 may comprise or may define a bottom portion 2102, a backrest portion 2104, and lateral supporting portions. The lateral supporting portions may limit a seating space for a child in lateral direction of the child seat 3.

Each lateral supporting portion may comprise a shoulder support portion 2106, 2108. The shoulder support portions 2106, 2108 may be provided on the backrest portion 2104. Each shoulder support portion 2106, 2108 may be configured such that it extends along a lateral side of the torso of a seated child.

Each lateral supporting portion may comprise a thigh support portion 2110, 2112. The thigh support portions 2110, 2112 may be provided on the bottom portion 2102. In particular, the thigh support portions 2110, 2112 may be configured such that they extend along a lateral side of the thigh of a seated child. The lateral supporting portions may be formed integrally and/or from one piece.

The seat structure 2100 may further comprise a bearing structure 2180. The bearing structure 2180 may be configured to support the seat shell 2114 on an interface portion 30 of the child seat 3. In particular, the bearing structure 2180 may be configured to tiltably support the seat structure 2100 on the interface portion 30. The interface portion 30 may form or define a static interface or stationary interface of the child seat 3. The seat structure 2100 may be configured as movable seat structure 2100. The seat structure 2100 may be movable between different seat positions, including an upright seat position and a reclining seat position.

The bearing structure 2180 may comprise two beam-like bearing portions 2181, 2182 extending along a rear outer side of the seat shell 2114 and reinforcing and supporting the seat shell 2114 from outside. Each of the beam like bearing portions 2181, 2182 may be formed by a supporting wall portion 2183 having a supporting surface 2184 facing inwardly towards a center plane of the child seat 3 and extending in a plane parallel to the longitudinal direction of the child seat 3 and in parallel to a seating direction of a seated child. The inwardly facing supporting surfaces 2184 may limit a an accommodating space for receiving supporting portions 48, 49 of the static interface 30.

Exemplary supporting portions 48, 49 are shown in Figs. 5 and 64, for instance. The supporting portions 48, 49 may comprise surface portions for contacting the supporting surfaces 2184. The supporting wall 2183 may be integrally formed with the seat shell 2114. On a laterally outer side of each wall portion 2183, a reinforcing structure comprising reinforcing ribs may be provided. The reinforcing structure may be configured to receive and support a rear side bumper 2162, for example of a side impact protection arrangement 2160 described further below.

In each beam-like bearing portion 2181, 2182, for example in each supporting wall portion 2183 and each supporting surface 2184, at least one track 2185 for receiving a stationary coupling portion, for example a metal rod, of the static interface 30 therein. The track 2185 is curved and defines a rotational center of the seat structure 2100. In other words, the track 2185 may extend along a circular path around the rotation axis of the seat structure 2100. The track may comprise a recess. The recess may be reinforced, for example by a metal insert.

### Example child seat structure with integrated side impact protection arrangement

In some embodiments, the child seat 3 may comprise a side impact protection arrangement 2160. An exemplary side impact protection arrangement 2160 is shown in Figs. 64 and 65, for instance. The side impact protection arrangement 2160 is provided on an outer side of a seat structure 2100 and/or seat shell 2114 and may at least comprise an outer rear side bumper 2162. The side impact protection arrangement 2160 may comprise an outer front side bumper 2161. At least the front side bumper 2161 may be configured as impact absorber.

The front side bumper 2161 may be supported on the seat structure 2100 at the level of a thorax of a seated child and/or of an interior impact absorber 2120, for example an interior impact absorber 2120 as described in other parts of this specification. The rear side bumper 2162 may be supported on the seat structure 2100 at a region behind an interior accommodating space for a seated child defined by the seat structure 2100. The rear side bumper 2162 may be accommodated in a beam-like bearing portion 2181, 2182, for example in a reinforcing structure of the bearing portions 2181, 2182. The rear side bumper 2162 may extend from the bearing portion 2182 in a direction opposite to the direction in which the supporting surface 2184 of the bearing portion 2182 faces.

The rear side bumper 2162 may be spaced from the front side bumper 2161. A gap may be provided between the front side bumper 2161 and the rear side bumper 2162. A spacer 2170 for fixing a back cover 2500 to the seat structure 2100 may be fixed to the seat structure 2100 in the gap formed between the front side bumper 2161 and the rear side bumper 2162. The back cover 2500 may be a shell like cover with low stiffness. The back cover 2500 may be floppy and easily deformable. The rear side bumper 2162 and the front side bumper 2161 may protrude from the seat structure 2100 in parallel with each other. The rear side bumper 2162 may comprise a free end portion and a fixed end portion. The front side bumper 2161 may comprise a free end portion and a fixed end portion. Each free end portion may define a force receiving surface. The force receiving surfaces may be positioned at substantially the same level. In some embodiments, the force receiving surface of the rear side bumper 2162 is arranged more laterally outward than the force receiving surface of the front side bumper 2161.

The side impact protection arrangement 2160 may be configured to initiate a seat movement and/or a head movement of a seated child about the vertical axis in case of a side crash. The side impact protection arrangement 2160 may be configured such that forces resulting from a side impact and acting on the child seat 3 in lateral direction are received by the rear side bumper 2162 first and/or transferred to the seat structure 2100 in a greater extent with less impact absorption compared to the front side bumper 2161. The rear side bumper 2162 may be stiffer than the front side bumper 2161. The rear side bumper 2162 may comprise a density of 50 g/L. The front side bumper 2161 may comprise a density of 27 g/L. The rear side bumper 2162 may protrude further in lateral direction than the front side bumper 2161. The front side bumper 2161 and/or the rear side bumper 2162 may comprise or may be made from EPS material.

### Example child seat with spacer for back cover attachment

In some embodiments, a spacer 2170 for fixing a back cover 2500 to the seat structure 2100 may be provided. Such spacer 2170 may be configured to attach the back cover 2500 to the seat structure 2100 in a gap formed between the front side bumper 2161 and the rear side bumper 2162 as described before. An exemplary spacer 2170 is shown in Fig. 66.

The spacer may be configured to hold the back cover 2500 of the child seat 3 on the seat structure 2100 while allowing a controlled compression of the spacer and movement of the back cover 2500 towards the seat structure 2100 in case of a side impact. The spacer 2700 may comprise a seat structure fixation portion 2171 and a back cover fixation portion 2172. The seat structure fixation portion 2171 and the back cover fixation portion 2172 may be coupled to each other by a deformation structure 2173.

In some configurations, the deformation structure may comprise two deformable members 2174, 2175 extending from the seat structure fixation portion 2171 to the back cover fixation portion 2172 at a distance from and along each other. The deformable members 2174, 2175 may be configured to flex in case of a force application on the back cover fixation portion 2172 in the direction of the seat structure fixation portion 2171. For example, the deformable members 2174, 2175 may be configured such that middle portions of the deformable members 2174, 2175 move away from each other if the back cover fixation portion 2172 is pushed towards the seat structure fixation portion 2171. The deformable members 2174, 2175 may be configured as beams.

The deformable members 2174, 2175 may be curved outwardly such that their middle portions are arranged at a greater distance to each other than their end portions. Stop protrusions 2176, 2177 protruding inwardly towards each other from middle portions of the deformable members 2174, 2175 may be provided. The stop protrusions 2176, 2177 may each comprise abutment surfaces 2178, 2179 on their free ends. The abutment surfaces 2178, 2179 may be arranged in parallel with each other and may face each other. Such abutment surfaces are configured to get in contact in case a pulling force acts on the spacer 2700 to prevent an elongation or extension of the spacer by blocking an inward movement of the middle portions of the deformable members 2174, 2175. On the other hand, such an arrangement allows to compress the spacer 2700 in case of a pushing force applied on the back cover fixation portion 2172 towards the seat structure fixation portion 2171. The spacer 2700 may be integrally formed as one piece, for example from plastics.

### Example child seat with interior side impact protection arrangement

In some embodiments (see for example Fig. 65), a child seat 3 may comprise an interior side impact protection arrangement. The interior side impact protection arrangement may be configured to catch the shoulder and/or a portion of an upper arm of a seated child. In this way, an impact on the shoulder and, thus, on the thorax of a seated child may be reduced.

The interior side impact protection arrangement may comprise an interior impact absorber 2120. The interior impact absorber 2120 may comprise a first impact protection portion 2126. The first impact protection portion 2126 may be configured to provide a suitable damping effect for reducing an impact on the shoulder of a seated child in case of a crash. The first impact protection portion 2126 may be configured to provide a differing dampening effect depending on the shoulder position of a seated child relative to the first impact protection portion 2126. The first impact protection portion 2126 may provide different dampening characteristics depending on the size of a seated child. The first impact protection portion 2126 may comprise regions of differing stiffness and, thus, of differing dampening property.

The first impact protection portion 2126 may comprise an upper end portion and a lower end portion. The lower end portion may be a portion located closer to the hip region of a seated child compared to the upper end portion. The upper end portion may be configured stiffer than the lower end portion. The lower end portion may be configured to catch the shoulder of a child having a first size, for example a child having a minimum allowable size for the child seat 3. The upper end portion may be configured to catch the shoulder of a child having a second size, larger than the first size, for example a maximum allowable size for the child seat. The child seat may, thus, be configured to provide an optimum impact dampening suitable for the body height of a seated child within the allowed child sizes of the child seat 3.

The different dampening properties may be achieved through use of different materials and/or by providing mechanical weakening sections in a material, such as recesses, grooves, holes etc. In some embodiments, the interior impact absorber 2120 is integrally formed from a single material. The interior impact absorber may comprise a plastics material. The interior impact absorber may comprise a foam material, for example a closed-cell foam material. The interior impact absorber 2120 may be made from expanded polypropylene (EPP). The density of the EPP material may be substantially 30 g/L. Recesses and/or openings 2125 may be provided in the lower end portion of the first impact protection portion 2126. These recesses and/or openings 2125 may have different shapes and sizes and lower the stiffness of the impact absorber in the lower end portion of the first impact protection portion 2126 to a more suitable stiffness for smaller children.

The interior impact absorber 2120 may be provided on and extend along the seat shell 2114 of the child seat 3 down from a head region of the seat towards the hip region and/or at least up to a lower end of the thorax of a seated child. The interior impact absorber 2120 may be provided on left and right should support portions 2106, 2108 of the backrest portion 2104 of the seat structure 2100 described in other parts of this specification. The interior impact absorber 2120 may be coupled to the seat shell 2114 at an impact absorber mounting region. The seat shell 2114 may be configured to be flexible at least in the impact absorber mounting region. Therefore, an exterior section of the seat shell 2114 opposite to the impact absorber mounting region may be unreinforced. For example, no ribs are provided on such exterior portion.

### Example child seat with exterior side impact protection arrangement

In some embodiments (see for example Figs. 64 and 65), a child seat 3 may comprise an exterior side impact protection arrangement configured to dampen an impact on the seat structure 2100 in a region of a thorax of a seated child in case of a side crash.

The exterior side impact protection arrangement may comprise a front side bumper 2161. At least the front side bumper 2161 may be configured as impact absorber. The front side bumper 2161 may be supported on the seat structure 2100 at the level of a thorax of a seated child and/or of an interior impact absorber 2120 provided for example on an interior side of the seat shell 2114. The front side bumper 2161 may comprise a free end portion defining a force receiving surface and a fixed end portion mounted or fixedly held on the seat shell 2114.

The front side bumper 2161 may be arranged on an outer side of the seat shell 2114. An interior impact absorber 2120 may be provided on the inner side of the seat shell 2114. The interior impact absorber 2120 may comprise one or more of the features as described in other parts of this specification. The front side bumper 2161 may be provided at a level of the interior impact absorber 2120. The front side bumper 2161 and the interior impact absorber 2120 may be arranged in series so that forces resulting from a side impact are transferred through both the front side bumper 2161 and the interior impact absorber 2120.

The front side bumper 2161 may comprise or may consist of a material having a lower density than the interior impact absorber 2120. For example, the front side bumper 2161 may comprise a density of 27 g/L.

The front side bumper 2161 may be configured such that a lower portion thereof provides less stiffness so that impact forces transferred to the lower portion of the interior impact absorber 2120 are dampened to a greater extent. The front side bumper 2161 may be configured and arranged such that its dimension is reduced towards a lower end portion thereof. Accordingly, the front side bumper 2161 may comprise portions of different stiffness corresponding to the above described configuration of the interior impact absorber 2120 having lower stiffness in the lower portion thereof. The front side bumper 2161 may comprise a wider upper end portion and a narrower lower end portion. The shape of the front side bumper 2161 may be triangular or drop-like. The portions of lower stiffness in the front side bumper 2161 and of the interior impact absorber 2120 may be aligned.

### Example child seat with interior impact protection arrangement for headrest

In some embodiments (see for example Fig. 65), a child seat 3 may comprise a headrest impact protection arrangement configured to catch a headrest assembly 2300 in case of a crash. In this way, an impact on the headrest assembly and, thus, on the head of a seated child may be reduced. The headrest impact protection arrangement may be configured to provide a damping effect on the headrest assembly in side impact direction and/or in rear impact direction.

The headrest impact protection arrangement may comprise a headrest impact protection portion 2128. The headrest impact protection portion 2128 may be configured to provide a suitable damping effect for reducing an impact on the headrest in case of a crash. The headrest impact protection portion 2128 may be shaped corresponding to a rear portion of the headrest assembly 2300. In particular, an inner surface 2123 of the headrest impact protection portion 2128 and an outer surface 2310 of the headrest assembly 2300 may face each other and/or may at least partially extend substantially parallel. The outer surface 2310 may be a curved surface forming a rear corner region of the headrest assembly 2300 and the inner surface 2123 may extend around the corner region from behind the headrest assembly 2300 to a lateral side of the headrest assembly 2300.

The headrest impact protection arrangement may be integrally formed with an interior impact absorber 2120, for example the interior impact absorber 2120 as described in other parts of this specification. The interior impact absorber 2120 may then comprise the headrest impact protection portion 2128. In addition, the interior impact absorber 2120 may comprise the first impact protection portion 2126 as described before. The headrest impact protection portion 2128 may then form a second impact protection portion 2128 in addition to the first impact protection portion 2126. The headrest impact protection portion 2128 may be configured to provide a suitable damping effect for reducing an impact on the headrest in case of a crash while the first impact protection portion 2126 provides dampening for the shoulder portion and/or thorax of a seated child. The headrest impact protection portion 2128 may be shaped corresponding to a rear portion of the headrest assembly 2300. In particular, surfaces of the headrest impact protection portion 2128 and of the headrest assembly 2300 facing each other may extend substantially parallel. The headrest impact protection portion 2128 may comprise a curved surface extending about a rear corner region of the headrest assembly 2300 from behind the headrest assembly 2300 to a lateral side of the headrest assembly 2300. The headrest impact protection portion 2128 may protrude more into the interior of the seat shell 2114 than the first impact protection portion 2126 to provide more room in lateral direction of the seat in the shoulder region of a seated child and to provide less room between the headrest impact protection portion 2128 and the headrest assembly 2300.

### Example headrest with integral headrest portion having sections of different stiffness

In some embodiments, a headrest assembly 2300 for a child carrier 3 may comprise a support structure 2302 and a headrest portion 2320. The support structure 2302 may comprise a coupling portion 2308 for supporting the headrest assembly 2300 on a backrest of a child seat. An exemplary embodiment of a headrest assembly 2300 is shown in figures 67 to 69.

The support structure 2302 may be configured to support the headrest portion 2320. The headrest portion 2320 is configured to provide a suitable support of the head of a seated child. The headrest portion 2320 may comprise a rear portion 2322 as well as lateral support portions, for example a left lateral support portion 2324 and a right lateral support portion 2326. The lateral support portions 2324, 2326 extend from opposite ends of the rear portion 2322 in forward direction of the headrest assembly 2300. The rear portion 2322 and the lateral support portions 2324, 2326 limit an accommodating space for the head of a seated child.

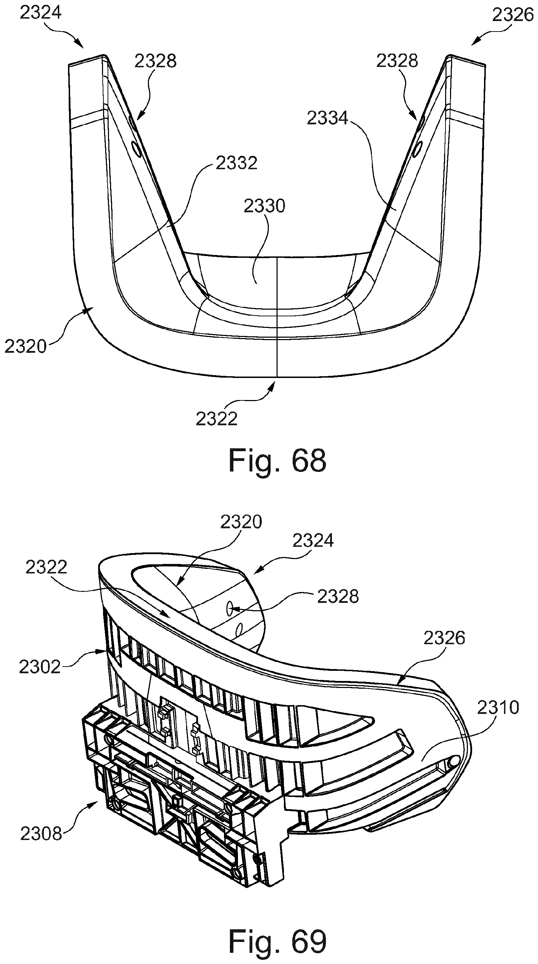

Figure 68 shows a plan view on the headrest assembly 2300. As is shown in figure 68, the headrest assembly 2300 may comprise an exterior contour having a U-shape. The rear portion 2322 may define the base portion of the U-shape. The lateral support portions 2324, 2326 may form leg portions of the U-shape. The outer contours of the lateral support portions 2324, 2326 may extend substantially parallel. A transition portion between the base portion and the respective leg portion is rounded. For example, the transition portion between the base portion and the respective leg portion may at least partially follow a substantially circular path. The transition portion may also be referred to as corner portion of the outer contour of the headrest assembly 2300. The transition portion may be configured to provide a supporting surface for contacting an impact absorber provided on the backrest of the child seat.

The headrest assembly 2300 may comprise an interior contour having a V-shape. As is shown in figure 68, an interior portion of the rear portion 2322 may form a rounded connecting section between two angled and substantially straight lateral support portion contour sections.

The headrest portion 2320 may be integrally formed. The headrest portion 2320 may comprise EPP material, for example with a density of 30 g/L. The headrest portion 2320 may comprise a mechanically weakened portion in the right and left inner support surfaces 2332, 2334 for locally reducing the stiffness of the headrest portion 2320. For example, recesses and/or openings 2328 may be provided in the right and left inner support surfaces 2332, 2334 in order to locally reduce the stiffness of the material of the headrest portion 2320. For example, mechanical weakening may be provided such that the stiffness and/or density of the material is reduced by one third.

### Example child seat with impact protection headrest assembly inducing rolling motion

In some embodiments, a headrest assembly 2300 may be configured to reduce the acceleration of the head of a seated child in case of a side crash. The headrest assembly 2300 may comprise a head movement inducing structure. The head movement inducing structure may be configured such that when the head of a seated child contacts the headrest assembly 2300 as a result of a side impact, a rolling motion of the head of the child is induced. This rolling motion reduces the acceleration of the head. The head movement inducing structure is configured to induce a predetermined rolling motion. The rolling motion is sufficient for reducing the acceleration of the head while at the same time preventing an excess increase of forces acting on the neck.

The headrest assembly 2300 may comprise one or more of the features described in other parts of this specification. The headrest assembly 2300 may comprise a headrest portion 2320. The headrest portion 2320 may comprise a rear inner support surface 2330, a left inner support surface 2332 and a right inner support surface 2334. Each of the inner support surfaces 2332 and 2334 may be formed in a convex shape in a cross-section taken along a vertical plane extending in lateral direction of the headrest assembly 2300. In other words, the inner support surfaces 2332, 2334 may be configured to bulge towards the interior accommodating space. Each inner support surface 2332, 2334 may comprise a lower surface portion 2340 and an upper surface portion 2344 connected to each other by an apex portion 2342. The apex portion 2342 is provided at a position of the inner support surfaces 2332, 2334 which, when the headrest portion 2300 is correctly adjusted to the size of a seated child, is located between an upper end portion and a center of the head of a seated child.

### Example child seat with carrying grip on carrying handle

Fig. 70 shows a possible configuration of a child seat 3 in perspective view from above. The child seat 3 is configured as an infant seat.

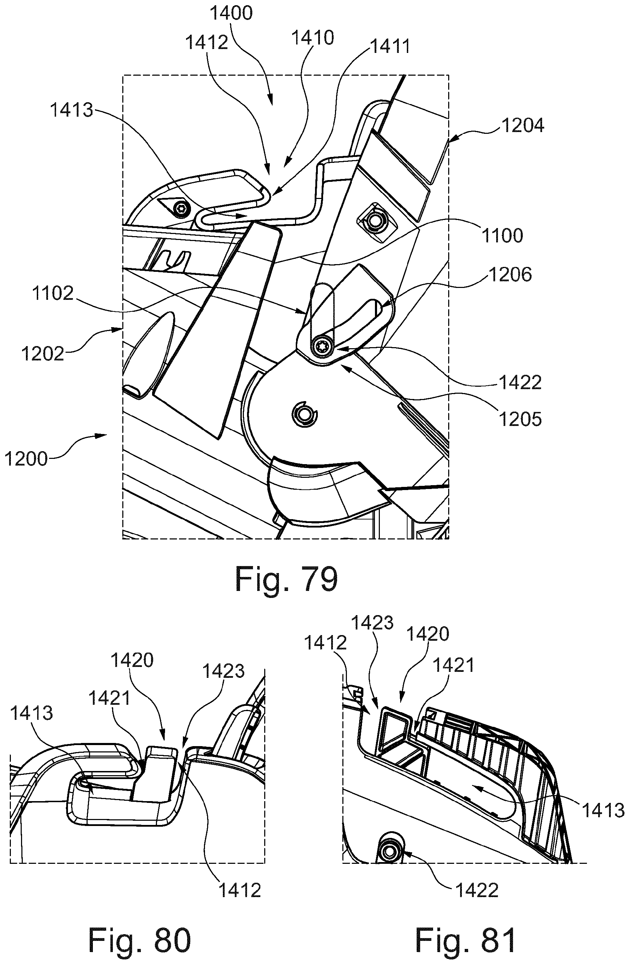

The child seat 3 may comprise the features relating to a specific configuration of a carrying handle as will be described below and may additionally comprise at least one of the features as described in other parts of this specification, for example regarding the belt fixation arrangement 1400 as described in connection with Figs. 79 to 81, regarding the interface portion 30 as described in connection with Figs. 5, 6 and 52.

The child seat 3 may comprise a seat structure 1200 and a support structure 1100 for supporting the seat structure 1200. The support structure 1100 may comprise an interface portion 30 for locking the child seat 3 to the base 2 as described in other parts of this specification. The child seat 3 may further comprise a carrying handle 1300 configured to carry the child seat 3. Furthermore, the child seat 3 may comprise a belt fixation arrangement 1400. The child seat 3 may further comprise a side impact protection portion 1280.

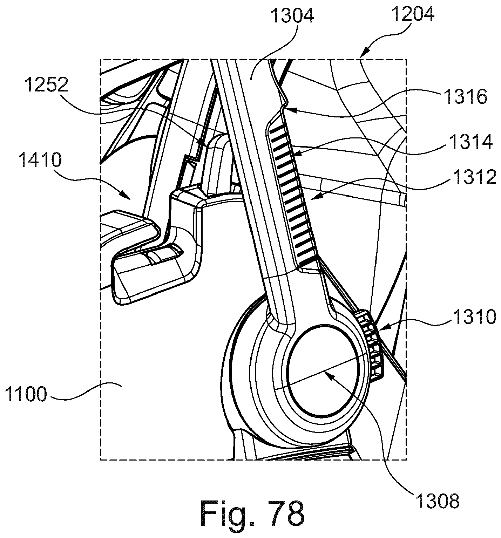

In the configuration as shown in Fig. 70, the carrying handle 1300 may be pivotably coupled to the support structure 1100 about a pivot axis P7. The carrying handle 1300 may be arranged rotatable between a carrying position and a non-carrying position. In Fig. 70, the carrying handle 1300 is positioned in a non-carrying position. A carrying position of the carrying handle 1300 is shown in Fig. 78 which will be described later.

The carrying handle 1300 may be configured to extend from one lateral side of the support structure 1100 to the other lateral side of the support structure 1100. The carrying handle 1300 may comprise a U-shape with a base portion and two leg portions 1304, 1306 extending from the base portion. Free end portions 1308 of the leg portions 1304, 1306 are coupled to the support structure 1100. On each free end portion 1308, an operating portion 1310 may be provided and configured to unlock a rotation of the carrying handle 1300 about the pivot axis P7. More precisely, the carrying handle 1300 may be lockable in a carrying position and may be moved out of the carrying position only upon operation of the operating portion 1310. The operating portion may comprise a push button.

The carrying handle may comprise a primary gripping portion 1302 configured for carrying the child seat 3 with a single hand. The primary gripping portion 1302 extends in a first direction. In the shown configuration, the first direction is a horizontal direction.

The primary gripping portion 1302 may thus extend in a horizontal direction over the seat structure 1200.

The carrying handle 1300 may comprise two dedicated secondary gripping portions 1312. The dedicated secondary gripping portions may be visually detectable by a user. The secondary gripping portions 1312 are configured for carrying the child seat 3 with both hands. Furthermore, the secondary gripping portions 1312 extend in a second direction which in the present configuration is a direction cross to the first direction. It is noted that in some configurations, the primary gripping portion 1302 extends substantially perpendicular to the secondary gripping portions 1312.

Details of the secondary gripping portions 1312 will be described with reference to Figs. 70 and 78 in the following. The secondary gripping portions 1312 may be provided on the leg portions 1304, 1306. In other words, each leg portion 1304, 1306 may comprise one of the secondary gripping portions 1312. Each secondary gripping portion 1312 may define a gripping enhancing portion that facilitate secure gripping for a user. Such a gripping enhancing portion may comprise or may be formed as a slipping prevention portion.

In the configuration as shown in Figs. 70 and 78, the secondary gripping portions 1312 comprise a shape deviation portion in a surface of the carrying handle 1300. The shape deviation portion may comprise a local shape deviation preventing slipping of the carrying handle 1300 through a user's hand when the user carries the child seat 3 using the secondary gripping portions 1312. The shape deviation portion may comprise a protrusion 1316 limiting an upper portion of a gripping area 1314. The protrusion 1316 and the coupling portion 1308 may be provided on opposite sides of the gripping area 1314.

When the carrying handle 1300 is brought into a carrying position, for example a substantially upright position as is shown in Fig. 78, the protrusion 1316 forms an uppermost portion of the secondary gripping portions 1312. The protrusion 1316 extends in a direction towards the rear side of the child seat 3 when the carrying handle is positioned in the carrying position. Accordingly, the protrusion may extend in a direction opposite to a viewing direction of a seated child. The protrusion 1316 may be configured to provide an abutment for an upper portion of an index finger of a user when the user grips the secondary gripping portion. Accordingly, if a user grips the secondary gripping portion not firmly enough and the secondary gripping portion 1312 tends to slip through the user's hand, the protrusion 1316 may come to rest on a portion of the users index finger thereby preventing any further slipping.

The shape deviation portion may comprise an uneven surface, for example created by corrugations, grooves and/or scores.

Instead of a shape deviation portion or in addition to a shape deviation portion, the secondary gripping portions 1312 may comprise a material deviation portion inner surface of the carrying handle 1300. The material deviation portion may be configured to increase friction between a user's hand and the carrying handle 1300. For example, the material deviation portion may comprise a rubber material.

The child seat 3 may comprise a locking mechanism 50 for releasably locking the child seat 3 with a coupling interface of a support unit, for example with a coupling interface 100 of a support unit 2 as described in other parts of this specification. The coupling interface may be a base for coupling the child seat on a vehicle seat or a chassis of the carrier, for example a stroller. The locking mechanism may comprise an operating member of 1252 for temporarily unlocking the locking mechanism 50. The secondary gripping portions 1312 may be positioned on the carrying handle 1300 such that a user may operate the operating member 1252 with a hand gripping the secondary gripping portion 1312. Such a configuration allows a user to operate the operating member by hand while the user is gripping the carrying handle 1300 with both hands.

The secondary gripping portions 1312 may be arranged on the carrying handle 1300 such that a user may operate the operating members 1252 with the thumb of a hand while gripping the secondary gripping portions 1312 with the fingers of the hand when the carrying handle 1300 is in the carrying position. For that, in the configuration as shown in Fig. 78, the secondary gripping portions 1312 are arranged on the carrying handle 1300 such that adjacent operating members 1252 are positioned on the same level as the secondary gripping portions when the carrying handle 1300 is in the carrying position.

### Example child seat with seat recline mechanism

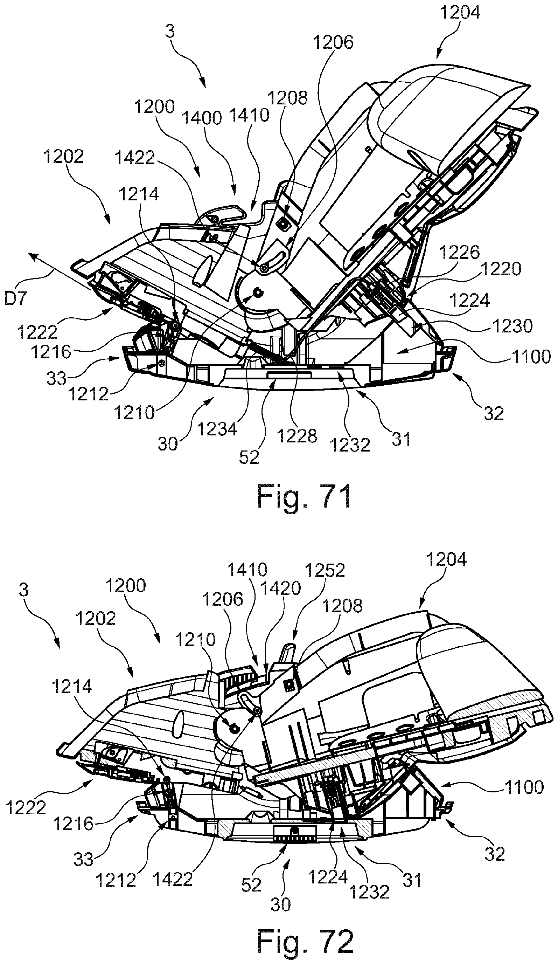

The child seat 3 may comprise a lie flat function. The seat structure 1200 may comprise a seat bottom 1202 and seatback 1204. The seat structure 1200 is supported on the support structure 1100 and configured transferable between a seating configuration and a lying configuration. This transferability as well as the mechanism providing such transferability will be described in the following with reference to Figs. 71 and 72. Both Figs. show sectional views of the child seat shown in Fig. 70 taken along a middle longitudinal plane of the child seat 3. Fig. 71 shows an exemplary seating configuration and Fig. 72 shows an exemplary lying configuration. As is directly obvious from the latter Figs., an angle between the seat bottom 1202 and the seatback 1204 is larger in the lying configuration compared to the seating configuration.

In the shown configuration, the seatback 1204 is configured pivotable about a stationary pivot axis. In the present configuration, the stationary pivot axis is defined by a first pivot connector 1208. The pivot connector 1208 pivotably couples the seatback 1204 to the support structure 1100. It is however noted, that the seatback 1204 may in addition or alternatively be supported in the supporting tracks provided in the support structure 1100 and configured to guide and support the seatback 1204 on a circular path defining a rotational center corresponding to the stationary pivot axis.

The seat bottom 1202 is configured pivotable about a movable pivot axis. In the shown configuration, the movable pivot axis is defined by a second pivot connector 1214 which is guided along a predetermined path. The arrangement is such that upon transferring the seat structure 1200 between the seating configuration and the lying configuration, the movable pivot axis is moved relative to the support structure 1100. In the present configuration, the movable pivot axis is moved in forward direction of the child seat when the child seat is transferred from the seating configuration to the lying configuration and is moved in backward direction when the child seat is transferred from the lying configuration to the seating configuration. Furthermore, the movable pivot axis is configured such that it is at least temporarily moved in an upward direction relative to the support structure when transferring the seat structure 1200 between the seating configuration and the lying configuration.

In the shown configuration, the movable pivot axis or second pivot connector is moved along a circular path. The second pivot connector 1214 is supported on the support structure 1100 by means of a lever 1216. The lever is coupled to the support structure 1100 by means of the pivot connector 1212. The third pivot connector 1212 couples the lever 1216 to the support structure 1100 at a position below the second pivot connector 1214. The pivot axis defined by the third pivot connector 1212 and the pivot axis defined by the second pivot connector 1214 extend in parallel with each other.

The seat bottom 1202 is hingedly coupled to the seatback 1204 by means of 1/4 pivot connector 1210. The fourth pivot connector 1210 may couple the seat bottom 1202 and the seatback 1204 at a distance from the lower seating surface on the seat bottom 1202 and at a distance from a back resting surface of the seatback 1204. The distance may be configured such that the fourth pivot connector 1210 is provided substantially at a natural hip joint level of a seated child. The coupling between the seat bottom 1202 and the seatback 1204 may be such that a pivot axis defined by the fourth pivot connector extends through the natural hip joint position of a seated child.

In the configuration as shown in Figs. 71 and 72, the second pivot connector 1214 is exemplary coupled to the seat bottom 1202 at a middle portion of the seat bottom 1202, more precisely substantially halfway between the forward end of the seat bottom 1202 and a rear end of the seat bottom 1202. The seat bottom 1202 is hingedly coupled to the seatback 1204 at a rear end portion thereof.

An operating portion 1222 may be provided on a lower portion of the seat bottom 1202. The operating portion 1222 may be configured and arranged such that, when the seat structure 1200 is in the seating configuration, a pulling force exerted thereon acts in a pulling direction D7 extending substantially perpendicular to the movable pivot axis and substantially tangential to the predetermined path along which the movable pivot axis is movable. It is noted that the operating member 1222 may be an operating member of a recline locking mechanism 1220 as will be described below.

### Example child seat with locking mechanism for seat recline mechanism

The child seat 3 may comprise a locking mechanism 1220 for locking the seat structure 1200 in the seating configuration and/or the lying configuration. The locking mechanism 1220 may also be referred to as recline locking mechanism. The locking mechanism 1220 is configured to establish an engagement between the seat structure 1200 and the support structure 1100. The engagement between the seat structure 1200 and the support structure 1100 may be an engagement in a direction cross to the stationary pivot axis as defined by the first pivot connector 1208. Accordingly, the locking mechanism 1220 may be configured to establish an engagement in radial direction with respect to the stationary pivot axis.

The locking mechanism 1220 may comprise an engaging portion 1224 which is configured to move between a locking position and an unlocking position. Fig. 71 shows a configuration in which the engaging portion 1224 is in a locking position and Fig. 72 shows the configuration in which the engaging portion 1224 is in an unlocking position. In the exemplary configuration, the engaging portion 1224 is provided on the seatback 1204 and is arranged linearly movable between a retracted position and a protruding position. In the protruding position, the engaging portion 1224 protrude from the seatback 1204 whereas in the retracted position, the engaging portion 1224 is retracted into the seatback 1204 such that it does not protrude from the seatback 1204. The engaging portion 1224 is linearly movable in a direction substantially perpendicular to the stationary pivot axis and offset with respect to the stationary pivot axis.

The engaging portion 1224 is configured to get in engagement with a receiving portion on the support structure 1100 to interlock the seatback 1204 with the support structure 1100. More precisely, the engaging portion 1224 is configured to establish a positive locking between the seatback 1204 and the support structure 1100 when the same is positioned in the protruding position and engaged with the receiving portion on the support structure 1100. In the shown configuration, two recesses 1230, 1232 for receiving the engaging portion 1224 are shown. In the seating configuration, the engaging portion 1224 is aligned with the upper recess 1230 and in the lying configuration, the engaging portion 1224 is aligned with the lower recess 1230. It is noted that more than two recesses may be provided on the support structure 1100 in order to provide one or more recline configurations between the shown seating configuration and the lying configuration.

The engaging portion 1224 may be biased by an urging member 1226 towards the protruding position. Accordingly, unless a release force is applied on the engaging portion 1224, the engaging portion 1224 remains in the protruding position. The urging member may be a spring. Furthermore, the urging member may be supported on the engaging portion 1224 at a first end portion and may be supported against the seatback 1204 at a second end portion.

In order to move the engaging portion 1224 at least from the protruding position to the retracted position, the locking mechanism may comprise an operating member 1222. The operating member 1222 is operatively coupled to the engaging portion 1224, for example by means of a force transmitting member 1228 such as a Bowden cable.

The operating member 1222 may be provided on the seat bottom 1202, for example at a lower forward end portion of the seat bottom 1202. In this way, a user may easily grasp the operating member 1222 and may at the same time apply a pulling force on the seat bottom 1202 so that the locking mechanism is unlocked and the seat structure 1200 can be transferred between the seating configuration to the lying configuration. The operating member 1222 may be arranged such that an operation of the same is possible by applying a force in the same direction as required for moving the seat bottom 1202 for transferring the seat structure 1200. Accordingly, the operating member 1222 can be arranged movable on the seat bottom 1202 in a direction which substantially corresponds to the above direction D7 when the seat structure 1200 is in the seating configuration.

### Example child seat with hidden release lever for seat recline mechanism

The child seat 3 may be configured such that the transferability between the seating configuration and the lying configuration is suspended or not accessible when the interface portion 30 is supported on the base 2 and the child seat 3 is oriented in a predetermined direction, for example in a forward-facing direction or rearward-facing direction. For that, the child seat 3 may be configured such that unlocking of the locking mechanism 1220 is blocked when the interface portion 30 is supported on the base and the child seat 3 is oriented in a predetermined direction, for example in forward-facing direction or rearward-facing direction. In other words, the child seat 3 and the base 2 may be configured to cooperate such that the locking mechanism 1220 is blocked as soon as the child seat 3 is coupled to the base 2 in a ready to travel orientation, such as when it is brought into a forward-facing orientation or rearward-facing orientation.

A blocking of the function of the locking mechanism 1220 may be achieved by rendering the operating member 1222 inaccessible. In other words, the operating member 1222 may be provided on the child seat 3 such that it is not accessible to a user when the interface portion 30 is supported on the base 2 and/or the child seat 3 is oriented in ready to travel orientation, for example in a predetermined direction such as in forward-facing direction or rearward-facing direction.

As already mentioned before, the operating member 1222 may be provided on a lower forward end portion of the seat bottom 1202. The base 2 may comprise a portion which covers the operating member 1222 when the child seat 3 is mounted on the base 2. In this way, access to the operating member 1222 may be blocked. For example, the base 2 may comprise a protruding portion having an end surface facing the lower portion of the seat bottom 1202 and configured to leave only a small gap between the lower portion of the seat bottom 1202 and the end surface at a position where the operating member 1222 is provided on the seat bottom 1202. For example, the operating member 1222 may be arranged in a recess of the seat bottom 1202.

The portion which covers the operating member 1222 when the child seat 3 is mounted on the base 2 may be a portion of the secondary support portion 102 of the base 2 as described in a different part of this specification. The interface portion 30 may comprise a restraining section 33 to be received in the secondary support portion 102. The operating member 1222 may be provided on the child seat 3 adjacent the restraining section 33. In the configuration as shown in Figs. 71 and 72, the operating member 1222 is provided at a predetermined position above the restraining section 33.

In as already mentioned before, the base 2 may comprise at least one secondary support portion 102, 103 configured to receive the restraining portion of the child seat 3. As is shown in Fig. 2, an upper portion of the secondary support portion 102 protrudes from the base 2 in an upward direction and such that it is received between an upper portion of the restraining portion 33 and a lower forward end portion of the seat bottom 1202 where the operating member 1222 is located. In this way, access to the operating member 1222 can be blocked by the upper portion of the secondary support portion 102 when the restraining portion 33 is received in the secondary support portion 102.

### Example child seat with seat recline mechanism and belt insertion blocking mechanism

Fig. 79 shows a partial view of a child seat 3. In the present configuration, the child seat 3 is an infant seat. The child seat 3 may comprise a seat structure 1200 and a support structure 1100 for supporting the seat structure 1200. The seat structure 1200 may comprise a seat bottom 1202 and a seat back 1204. The seat structure 1200 is configured transferable between a seating configuration and a lying configuration. For that, the seat bottom 1202 and the seatback 1204 are pivotably mounted on the support structure 1100. For example, the seatback 1204 may be pivotably coupled to the support structure 1100.

In the configuration as shown in Figs. 79 to 81, a belt fixation arrangement 1400 is provided on the child seat. The belt fixation arrangement 1400 may be provided in the support structure 1100. The belt fixation arrangement 1400 may comprise a belt receiving portion 1410 configured to receive a seat belt portion of the vehicle seat for mounting the child seat to a vehicle seat. The belt fixation arrangement 1400 may further comprise a blocking portion 1420 which is configured to be moved between a blocking position and a release position. The release position as shown in Fig. 79 and the blocking position is shown in Figs. 80 and 81. In the blocking position, an insertion of the belt portion into the belt receiving portion 1410 is blocked. In the release position, an insertion of the belt portion into the belt receiving portion 1410 is allowed.

As is shown in Figs. 80 and 81, the blocking portion is configured to at least partially surround a wall portion 1411 of the belt receiving portion 1410 when the blocking portion 1420 is positioned in the blocking position. The blocking portion that may be configured so as to partially surround a portion of the belt receiving portion 1410. In this way, a contact between the blocking portion and a wall portion 1411 takes place along a predetermined path which deviates from a straight path. For example, the predetermined path may be curved or may comprise a kink. Therefore, if a user tries to forcibly pass the belt portion between the blocking portion and the wall portion 1411, such passing of the belt portion is made more difficult since the belt portion would have to be passed along a path which deviates from a straight path.

In the exemplary configurations illustrated in Figs. 80 and 81, the blocking portion 1420 may comprise an accommodating recess 1421 for receiving the wall portion 1411. The accommodating recess 1421 may be provided in a free end portion 1423 of the blocking portion 1420. Accordingly, the illustrated configurations show a blocking portion 1420 which is capable of a covering differently oriented wall portions. Fig. 81 shows a configuration in which the blocking portion is configured L-shaped. In this configuration, the recess 1421 is formed by two substantially flat wall portions extending at an angle with respect to each other. In the present configuration, the angle may be slightly greater than 90 degrees.

The belt receiving portion 1410 may comprise an insertion section 1412 and an accommodating section 1413. The accommodating section 1413 may be configured to support an inserted belt portion over its entire width. The accommodating section 1413 may be configured and arranged such that it extends in substantially horizontal direction in the support structure 1100. In particular, the accommodating section 1430 may be configured to support a hip portion of the seat belt.

The dimension of the insertion section 1412 smaller than the dimension of the accommodating section 1413. Accordingly, when inserting a belt portion into the belt receiving portion 1410, a user needs to pass the belt portion through the narrower insertion section 1412 into the accommodating section 1413. The blocking portion 1420 may be configured and arranged such that when it is positioned in the blocking position, it partially extends through the accommodating section 1413 into the insertion section 1412. Accordingly, when the blocking portion is in the blocking position, it not only occupies a space in the insertion section 1412 but also in the accommodating section 1413.

As is further illustrated in Figs. 80 and 81, the blocking portion 1420 may be configured to at least partially protrude into the belt receiving portion 1410 from below when positioned in the blocking position. For example, an accommodating recess for the blocking portion 1420 may be provided in a lower wall portion of the accommodating section 1413 in the support structure 1100. The blocking portion 1420 may be slidably held in the accommodating recess to be movable between the above-described positions. In the release position, the blocking portion 1420 may be fully retracted into such a recess.

As is illustrated in Fig. 79, the blocking portion 1420 may be operatively coupled to the seat structure 1200. For example, the blocking portion 1420 may be coupled to the seat structure 1200 such that the blocking portion 1420 is moved to the blocking position when the seat structure 1200 is transferred to the lying configuration, and moved to the release position when the seat structure 1200 is transferred to the seating configuration. For that, the seatback 1204 may comprise a force application portion 1205 configured to exert an actuating force on a force receiving portion 1422 provided on the blocking portion 1420. In the shown configuration, the force application portion 1205 may comprise a slot 1206. The force receiving portion 1422 is configured as a protrusion protruding from a lower end portion of the blocking portion 1420. The protrusion is slidably held in the slot 1206. The slot 1206 may comprise a curved shape which is configured such that upon rotating the seat back 1204 towards the lying position, the force application portion 1205 is moved relative to the force receiving portion 1422 thereby applying a force on the force receiving portion in a blocking position direction of the blocking portion 1420. For that, the protrusion is not only slidably held in the slot 1206 but also in a guiding slot 1102 provided in the support structure 1100. The guiding slot 1102 may extend in parallel to a movement direction of the blocking portion 1420. The guiding slot 1102 may be straight and may extend in substantially vertical direction. Accordingly, the force receiving portion 1422 may be slidably held in the slot 1206 of the force application portion 1205 and in the guiding slot 1102 of the support structure 1100 and a mechanism is created which allows to transfer a rotation of the seatback 1204 into a translatory movement of the blocking portion 1420.

It is noted that possible features and the configuration of the belt fixation arrangement 1400 on the child seat are shown in Figs. 70 to 73 and Fig. 78.

### Example child seat with dual release mechanism for two different child seat interface portions

The child seat 3 may comprise an interface portion 10. The interface portion 10 is configured to be engaged with a first type of coupling interface. Therefore, the interface portion 10 may also be refered to as first interface portion 10. The first type of coupling interface may be a coupling interface provided on a child carrier and allowing to hold the child seat 3 between two laterally spaced apart coupling portions provided on the child carrier. The spaced apart coupling portions may comprise protrusions protruding in upward direction from a chassis of the child carrier. Such protrusions may be configured to be received in the interface portion 10. For example, the interface portion 10 may be configured to receive one coupling portion of the two laterally spaced apart coupling portions provided on the child carrier and to establish a releasable engagement with the received coupling portion.

The interface portion 10 may comprise a recess for receiving a coupling portion. The interface portion 10 may comprise a rotating locking mechanism. The rotating locking mechanism may comprise a rotatably movable locking member 1264. The rotatably movable locking member 1264 may be provided in a lateral side portion of the support structure 1100 of the child seat.

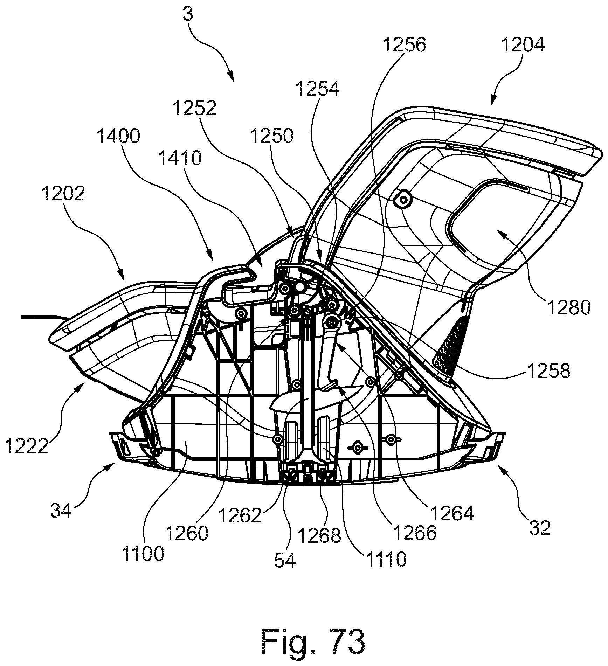

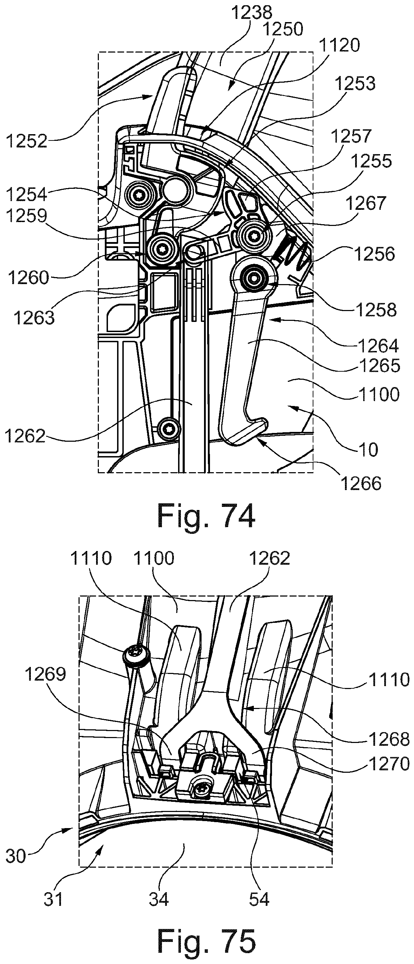

Figure 73 shows a side view of the child seat 3 with a side cover removed from the support structure 1100 and revealing an interior configuration of the left side portion of the support structure 1100 and components of the interface portion 10. Figure 74 shows an enlarged partial view on a region of the left side portion of the support structure 1100 in which the interface portion 10 is provided. Therefore, details regarding the construction of the interface portion 10 may best be seen in figure 74.

The rotatably movable locking member 1264 may comprise or may be configured as a lever. The rotatably movable locking member 1264 is pivotably mounted on the support structure 1100 of the child seat 3 by means of a pivot connector 1258. In this way, the rotatably movable locking member 1264 is rotatable about a pivot axis defined by the pivot connector. The rotatably movable locking member 1264 may comprise an engaging portion 1266. The engaging portion 1266 is configured to get in engagement with a coupling portion received in the interface portion 10 for fixedly locking the child seat 3 to the coupling portion. The rotatably movable locking member 1264 is movable between a locking position in which the engaging portion 1266 is in a position in which it is in engagement with an inserted coupling portion and a release position in which the engaging portion 1266 is positioned in a in which the engaging portion 1266 is in a position in which it is not in engagement with an inserted coupling portion. The engaging portion 1266 may be configured as a hook as can be gathered from figure 74.

The rotatably movable locking member 1264 may further comprise a force receiving portion 1267 for receiving an actuating force. The engaging portion 1266 and the force receiving portion 1267 may be arranged on opposite sides of the pivot connector 1258. The engaging portion 1266 may be provided on an end portion of a first arm portion 1265 of the rotatably movable locking member 1264. The force receiving portion 1267 may define a portion of a second arm portion extending on the opposite side of the pivot connector 1258. The length of the second arm portion may be one third of the length of the first arm portion. The force receiving portion 1267 may be configured for a sliding contact with a force application portion 1257 of an intermediate force transfer member 1254 on one side and may be configured to receive a return force from a return spring 1256 on an opposite side. In other words, the second arm portion may be clamped between the force application portion 1257 and an end portion of the return spring 1256. The return spring 1256 forms an urging member configured to bias the rotatably movable locking member 1264 towards the locking position. The second arm portion may be configured at least partially curved in a manner such that the second arm portion partially extends about a portion of the intermediate force transfer member 1254. For example, the second arm portion may be curved such that a surface contact between a curved surface of the second arm portion with a curved surface on the intermediate force transfer member 1254 is established when the rotatably movable locking member 1264 is in the locking position. The surfaces may be curved so as to extend partially along a circular path. The surfaces may be curved such that they at least partially extend about a pivot axis of the intermediate force transfer member 1254.

The intermediate force transfer member 1254 may be configured to receive a force from an operating member 1252. The intermediate force transfer member 1254 may be configured as a lever. The lever may comprise a first arm portion 1257 and a second arm portion 1259. The first arm portion 1257 and the second arm portion 1259 may be arranged at an angle with respect to each other, and may for example extend substantially perpendicular with respect to each other. The first arm portion 1257 and the second arm portion 1259 extend from different sides of a pivot portion of the intermediate force transfer member 1254. The pivot portion is rotatably held on the support structure 1100 by means of a pivot connector 1255. The pivot connector defines the pivot axis of the intermediate force transfer member 1254. The pivot axis defined by the pivot connector 1255 and/or the pivot axis defined by the pivot connector 1258 may extend in parallel with a pivot axis defined by a pivot connector 1260 pivotably coupling the operating member 1252 to the support structure 1100. The intermediate force transfer member 1254 may comprise a force receiving portion for receiving a force from the operating member 1252. The force receiving portion may form an upper portion of the intermediate force transfer member 1254. In the configuration, the force receiving portion extends upward from the pivot connector 1255. The force receiving portion may comprise a first contact surface and a second contact surface. The first contact surface and the second contact surface may be provided on opposite sides of the intermediate force transfer member 1254. The first contact surface may be configured for a sliding contact with a force application portion 1253 of the operating member 1252. The second contact surface may be configured for a sliding contact with the force receiving portion 1267 of the rotatably movable locking member 1264. Due to the urging force applied by the return spring 1256, the operating member 1252, the intermediate force transfer member 1254 and the rotatably movable locking member 1264 always remain in contact with each other. Furthermore, the return spring 1256 biases all of the latter mentioned members towards a locking position. The first contact surface and the second contact surface are defined on the first arm portion 1257 of the intermediate force transfer member 1254. The intermediate force transfer member 1254 is pivotably coupled to a force transmitting member 1262. More precisely, a free end portion of the second arm portion 1259 is connected to an end portion of the force transmitting member 1262. The force transmitting member 1262 is force transmittingly coupled to a second interface portion 30 as will be described later. More precisely, the force transmitting member 1262 may transmit a force to or may be an integral part of a locking mechanism 50 for releasably locking the child seat 3 on a base 2 by means of the interface portion 30.

The child seat 3 may in addition or alternatively comprise an interface portion 30. The interface portion 30 is configured to be engaged with a second type of coupling interface. The second type of coupling interface may be a coupling interface which is configured to support and couple the child seat 3 from below. The second type of coupling interface may for example be part of a base which is configured to act as an interface between the child seat and the vehicle seat. In other words, the base may be configured to couple the child seat 3 to a vehicle seat. The base may be the base 2 as described in other parts of this specification. The interface portion 30 may comprise features that are similar or identical with features of the interface portion 30 as shown for example in figure 5. Therefore, it is referred to the description of the interface portion 30 in connection with figure 5 regarding the basic function and features of the interface portion.

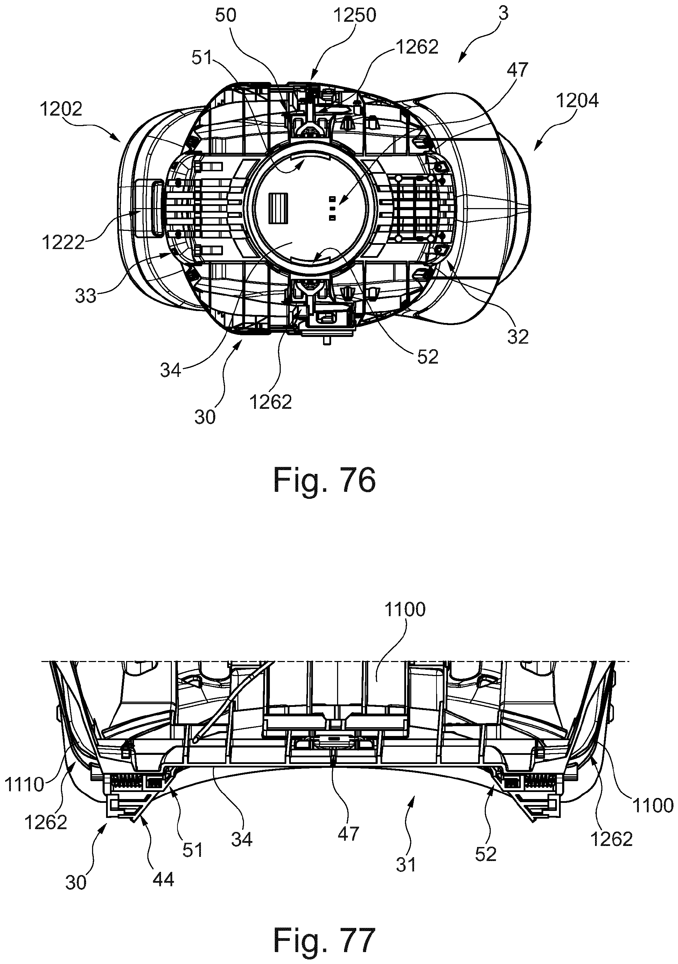

The main difference between the interface portion 30 as shown in figure 5 and the interface portion 30 of the child seat 3 as shown in figures 74 to 77 lies in the function of the respective locking mechanism, more precisely in the manner how the locking mechanism is operated.

While the interface portion as shown in figure 5 is operable by a distinct operating member which is only configured to unlock the interface portion 30, the operating mechanism 1250 as shown in figures 74 to 77 is configured to simultaneously operate two different types of interface portions as described before.

The locking mechanism may comprise an engaging portion 51, 52 engageable with the support unit 2.

The operating member 1252 may be force transmittingly coupled to the engaging portion 51, 52 by means of the force transmitting member 1262. The force transmitting member 1262 may be a flat member. For example, the flat member may comprise a substantially rectangular cross-section. The flat member may be configured in a strap like manner. The force transmitting member 1262 may be coupled to the engaging portion 51, 52 at at least two positions such that a total force applied on the force transmitting member 1262 is distributed to at least two of the at least two positions. Each engaging portion 51, 52 may form a blocking member configured to engage the primary support portion 100. The force transmitting member 1262 may comprise a branching end portion 1268. The branching end portion 1268 may comprise a first branch portion 1269 coupled to the engaging portion at a first portion, and a second branch portion 1270 coupled to the engaging portion at a second position. The branching end portion 1268 may be formed as an integral part, for example from plastics.

The force transmitting member 1262 may be slidably supported on the support structure 1100 of the child seat 3. In particular, the force transmitting member 1262 may be slidably supported on the support structure 1100 by a surface contact with a support portion 1110. For example, the force transmitting member 1262 may be supported on only one side, in particular on its inwardly facing side. The support portion 1110 may be provided on the support structure 1100. The support portion 1110 may be curved. Each of the first branch portion 1269 and the second branch portion 1270 may be slidably supported on distinct support portions 1110. The force transmitting member 1262 may be configured such that it is only supported on the support portions 1110 via branch portions between a force receiving portion and coupling portions of the branch portions 1269, 1270.

### Example installation method of child restraint system on vehicle seat

In some embodiments, the child restraint system 1 may be installed as follows. First, the load leg 900 may be moved into its deployed position. After that, the release mechanism 700 may be operated by pushing the operating portions 702, 704. Operating the release mechanism 700 allows the connectors 204, 206 to move towards the deployed position or extended position. This movement may be assisted or effected by the urging member 212 shown in Fig. 17. As soon as the deployed position or extended position of the connectors 204, 206 is reached, the second locking portion 216 automatically moves into the locking position thereby blocking a movement of the connectors 204, 206 towards the retracted position. After that, the coupling portions 202 may be locked to the fixing structure 96 by pushing the base 2 towards the fixing structure 96. As soon as the coupling portions 202 are locked on the fixing structure 96, the second locking portion 216 is automatically retracted into a release position allowing the connectors 204, 206 to move towards the retracted position. If one of the coupling portions 202 is not locked with the fixing structure 96, the entire coupling arrangement 200 may be blocked from moving towards the retracted position if the connectors 204, 206 are coupled to each other by a rigid member. The display portion 1000, 1050 may indicate the correct locking of the coupling portions 202. Furthermore, the movement of the connectors 204, 206 towards their retracted position may trigger the indicating function of the tensioning mechanism 400. The operating member 402 may be moved into the predetermined indicating position thereby indicating to a user that the operating member 402 is available for operation. The user may then grab the operating member 402 and perform a back and forth movement, in other words a pumping like movement, of the operating member 402 thereby pushing the base 2 onto the vehicle seat 90. A sufficient force pushing the base 2 onto the vehicle seat 90 may be signalized to a user by a torque limiting mechanism 490 which is configured to limit a transferable torque from the operating member 402 to a predetermined maximum torque. After that, the load leg 900 may be extended such that it's lower portion of foot portion is contacted with the vehicle floor. A sensor may detect the correct position of the load leg 900. Now, the base 2 is correctly installed on the vehicle seat 90. The display portion 1000, 1050 may now indicate the correctly installed load leg 900 and the correctly coupled connectors 204, 206 and optionally a correct pressing force exerted by the anti-rebound portion 300 on the backrest of the vehicle seat by green lights.

After that, the child seat 3 may be mounted to the base 2. In case the display portion 1000, 1050 was rendered in active, the system may be activated by pushing the actuating member 119 on the lateral side of the base 2. The child seat 3 may then be installed on the coupling interface 100 by inserting the child seat 3 on the primary support portion 101 with an orientation or angle lying in the dropping zone and rotating the child seat 3 into the desired travel orientation, for example the forward facing orientation or the rearward facing orientation. As soon as it is detected that the child seat 3 is correctly positioned on the primary support portion 101 and correctly locked in the secondary support portion 102, the display portion 1000, 1050 indicates the correctly mounted child seat 3. The child restraint system 1 is now in a configuration allowing a safe travel.

In conclusion, it is pointed out that the terms like "comprising" or the like are not intended to rule out the provision of additional elements or steps. Let it further be noted that "a" or "an" do not preclude a plurality. In addition, features described in conjunction with the different embodiments can be combined with each other however desired. It is also noted that the reference numbers in the claims are not to be construed as limiting the scope of the claims. Moreover, while at least one exemplary embodiment has been presented in the foregoing summary and detailed description, it should be appreciated that a vast number of variations exist.

It should also be appreciated that the exemplary embodiment or exemplary embodiments are only examples, and are not intended to limit the scope, applicability, or configuration in any way. Rather, the foregoing summary and detailed description will provide those skilled in the art with a convenient roadmap for implementing an exemplary embodiment, it being understood that various changes may be made in the function and arrangement of elements described in an exemplary embodiment without departing from the scope as set forth in the appended claims and their legal equivalents.

### ASPECTS

In the following, different configurations and/or different aspects are represented in itemized structure in addition to the subject matter of claim 1 and the dependent claims and in addition to the explanations and configurations given in the introductory portion of this specification. It is to be noted that the below specific feature combinations are not intended to limit the disclosure to such specific feature combinations. By contrast, the below feature combinations merely provide different examples having improved capabilities. Features and embodiments as defined in the itemized configurations may be combined with other features and embodiments of other itemized configurations, as well as with one or more of the features of configurations described in the summary section and the detailed description section.

### Base with primary and secondary support portion

1. Base (2) for a child restraint system (1), comprising
   a primary support portion (101) configured to support a child seat (3) rotatable about a rotation axis (R1),
   at least one secondary support portion (102, 103) radially spaced from said primary support portion (101) and configured to receive a restraining portion (32, 33) of said child seat (3) by rotating said child seat (3) about said rotation axis (R1) after said child seat (3) was inserted on said primary support portion (101) and configured to block a movement of an inserted restraining portion (32, 33) in a first direction (D1),
   said at least one secondary support portion (102, 103) being configured to limit a tilting movement of said child seat (3) about a rotation axis (R2) extending perpendicular to said rotation axis (R1).
2. Base (2) according to aspect 1, wherein
   at least one secondary support portion (102, 103) comprises an urging member (609), for example a leaf spring (610), said urging member (609) being provided to exert on said restraining portion (32, 33) an urging force in a second direction (D2) opposite to said first direction (D1), for example a downward direction, for example towards a base main body (20) and/or towards an upper surface (118) of said base (2), when said restraining portion (32, 33) is received in said secondary support portion (102, 103).
3. Base (2) according to one of aspects 1 and 2,
   wherein an insertion geometry of at least one secondary support portion (103) is mechanically coded to block said child seat (3) from being positioned in a predetermined orientation, in particular a forward-facing orientation of said child seat (3), and/or
   wherein said secondary support portion (103) comprises an abutment portion (120) configured to limit a rotation of said child seat (3) about said rotation axis (R1) towards a forward-facing orientation,
   said abutment portion (120) being optionally configured to contact a stop portion (35) provided on said child seat (3) and optionally comprises abutment surfaces (121, 122) configured to contact stop portion surfaces (36, 37),
   wherein said abutment surfaces (121, 122) may be formed, in particular may be inclined, such that said stop portion (35) is urged in a second direction (D2) opposite to said first direction (D1) when said stop portion (35) is pushed against said abutment portion (120) upon rotating said child seat (3).
4. Base (2) according to one of aspects 1 to 3,
   wherein at least one secondary support portion (102) is configured such that a rotation of said child seat (3) about said rotation axis (R1) is automatically blocked when reaching a rearward-facing orientation upon rotating the same about said primary support portion (101),
   and/or such that said child seat (3) is normally blocked from reaching said forward-facing orientation and only rotatable to said forward-facing orientation upon actuation of an actuating member (119) by a user,
   wherein said actuating member (119) may be a release member (502) of a locking mechanism (500) for locking a rotation of said child seat (3) about said rotation axis (R1),
   wherein said locking mechanism (500) is configured operable by an operating force exerted thereon by said child seat (3), wherein said operating force may be generated by transferring a rotational force exerted on said child seat (3) into said operating force, in particular a pushing force,
   wherein said locking mechanism (500) may comprise a locking member (501) which is movable between a locking position in which it can engage with said restraining portion (32, 33) and a release position in which a rotation of said child seat (3) about said rotation axis (R1) is not blocked,
   wherein said locking member (501) may be biased by an urging member (503) such that a movement of said locking member (501) towards said release position is possible against an urging force exerted by said urging member (503), and
   wherein said locking member (501) may comprise a force receiving surface (504) extending such that said operating force can be generated through sliding contact of a force application surface (42, 43) on said child seat (3) and said force receiving surface (504) when said child seat (3) is rotated about said rotation axis (R1).
5. Base (2) according to one of aspects 1 to 4,
   said secondary support portion (102, 103) comprising a holding structure (600) for blocking a lifting of said inserted restraining portion (32, 33) from said base (2) for preventing a rotational movement of said child seat (3) in case of a crash,
   said holding structure (600) may comprise a holder (601),
   said holder (601, 602) may comprise a catching portion (603, 604), for example having a hook shape and configured to receive said restraining portion (32, 33) and
   said holder (601, 602) being force transmittingly coupled to a coupling portion (202) configured to be engaged with a fixing structure (96) in said vehicle seat (90),
   wherein said coupling portion (202) may be provided on a coupling arrangement (200), for example a connector (204, 206) such as an isofix arm, and/or held on said base (2) adjustably on said coupling portion (202) to allow a tensioning of said base (2) on said vehicle seat,
   wherein said holder (601, 602) may be force transmittingly coupled to said coupling portion (202) by means of a force transfer path comprising rigid force transfer links (605, 606, 607), for example by means of metal force transfer links or only by metal force transfer links, and/or
   wherein said force transfer links may comprise a coupling portion support frame (606, 607), for example a connector support frame or an isofix arm support frame, in particular a U-shaped housing, on which said coupling portion (202) is supported, and a coupling member (605), for example a rod (608), for coupling said holder (601, 602) to said coupling portion support frame (606, 607),
   wherein said holder (601, 602) may be coupled to said coupling portion support frame (606, 607) only by a single coupling member (605).

### Child seat with interface portion

1. Child seat (3) couplable to a base (2), said child seat (3) comprising
   an interface portion (30) releasably engageable with a primary support portion (101), said interface (30) comprising a recess (31) configured to receive said primary support portion (101) in a first direction (D1) and having a support surface (34) configured to get in contact with a longitudinal end portion of said primary support portion (101), and
   a locking mechanism (50) for releasably locking said child seat (3) on said primary locking portion (101), said locking mechanism (50) comprising
      an engaging portion (51, 52) arranged radially movable into and out of said recess (31) to be able to engage with said primary support portion (101), for example with a continuous circumferential recess (105) of said primary support portion (101), and
      an operating member (53) for retracting said engaging portion (51, 52).
2. Child seat (3) according to aspect 1, wherein an opening end portion of said recess (31) is defined by an inclined circumferential wall portion (44) in which an outer diameter of said recess (31) is reduced from an opening towards said support surface (34).
3. Child seat (3) according to one of aspects 1 and 2, wherein
   said operating member (53) is positioned on said child seat (3) such that it is only accessible when said child seat (3) is rotated to an unlocking orientation different from a forward-facing or rearward-facing orientation of said child seat (3).
4. Child seat (3) according to aspect 3,
   wherein said operating member (53) is provided on a bottom surface of said child seat (3) and at a position such that it is covered by said base (2) when said child seat (3) is in a forward-facing or rearward-facing orientation and is exposed only in said unlocking orientation,
   wherein said operating member (53) may be provided at a foot end of said child seat (3).

### Base with tensioning mechanism

1. Base for a child restraint system (1), said base (2) being configured to be coupled to a vehicle seat (90) and comprising
   a tensioning mechanism (400) configured to generate an urging force for urging said base (2) onto said vehicle seat (90) once said base (2) is operatively coupled to a fixing structure (96) of said vehicle,
   wherein said tensioning mechanism (400) is configured such that a user can generate said urging force by repetitively moving an operating member (402) of said tensioning mechanism (400) back and forth.
2. Base (2) according to claim 1, further comprising
   a coupling portion (202) for fixedly coupling said base (2) to a fixing structure (96) of said vehicle,
   an anti-rebound portion (300) configured to be contacted with a backrest (92) of said vehicle seat (90) for at least limiting a rotating movement of said base (2) towards said backrest (92) in a crash situation,
   wherein said tensioning mechanism (400) is configured for reducing a distance between said anti-rebound portion (300) and said coupling portion (202) for generating said urging force for urging said base (2) onto said vehicle seat (90),
   wherein said tensioning mechanism (400) is configured such that a user can reduce said distance by repetitively moving said operating member (402) back and forth.
3. Base for a child restraint system (1), wherein said base may be a base according to one of aspects 1 and 2, said base (2) being configured to be coupled to a vehicle seat (90) and comprising
   a tensioning mechanism (400) configured to generate an urging force for urging said base (2) onto said vehicle seat (90) once said base (2) is operatively coupled to a fixing structure (96) of said vehicle,
   wherein said tensioning mechanism (400) comprises an operating member (402) and an indicating device (450) configured to indicate to a user when said operating member (402) is ready to be used for tensioning.
4. Base (2) according to aspect 3, said base (2) comprising
   a coupling portion (202) for fixedly coupling said base (2) to a fixing structure (96) of said vehicle,
   an anti-rebound portion (300) configured to be contacted with a backrest (92) of said vehicle seat (90) for at least limiting a rotating movement of said base (2) towards said backrest (92) in a crash situation,
   wherein said tensioning mechanism (400) is configured for reducing a distance between said anti-rebound portion (300) and said coupling portion (202) for generating said urging force for urging said base (2) onto said vehicle seat (90),
   wherein said tensioning mechanism (400) comprises said operating member (402) and an indicating device (450) configured to indicate to a user when said operating member (402) is ready to be used for tensioning.
5. Base (2) according to one of aspects 3 and 4,
   wherein said indicating device (450) is configured to provide a visual and/or acoustic indication to a user.
6. Base (2) according to one of aspects 3 to 5,
   wherein said indicating device (450) is configured to move said operating member (402) to a predetermined indicating position,
   wherein for actuating said tensioning mechanism (400) said operating member (402) may be movable between a stowage position, for example a position in which said operating member (402) is accommodated in said base (2) such that it does not protrude beyond an upper surface portion (118) of said base (2), and a deployed position, wherein said predetermined indicating position is an intermediate position between said stowage position and said deployed position, wherein said base (2) may comprise a recess (22) in said upper surface portion (118) allowing to grasp said operating member (402), for example even in said stowage position,
      and/or
   wherein said indicating device (450) is configured to automatically move said operating member (402) to said predetermined indicating position when said coupling portion (202) is engaged with said fixing structure (96) and/or when a distance between said coupling portion (202) and said anti-rebound portion (300) is reduced to a predetermined intermediate distance, for example by pushing said base (2) towards said backrest (92) in a pushing direction (P1) with an engaged coupling portion (202).
7. Base (2) according to aspect 6,
   wherein said indicating device (450) may comprise two cooperating portions (452, 454), for example a toothed portion (452) and a recessed portion (454), at least one of said two cooperating portions (452, 454) being movable relative to the other one and said cooperating portions (452, 454) being configured to get in releasable engagement when said predetermined indicating position is reached, wherein said two cooperating portions (452, 454) may be configured to at least restrain a movement of said operating member (402) out of and/or into said predetermined indicating position,
   wherein one cooperating portion (452) of said two cooperating portions (452, 454) is provided on said operating member (402) and the other cooperating portion (454) of said two cooperating portions (452, 454) is provided on a main body (4) of said base.
8. Base (2) according to one of the preceding aspects,
   wherein said operating member (402) is force transmittingly coupled to said coupling portion (202) by means of a ratchet mechanism (410) allowing to transfer a torque applied on said operating member (402) only in a tensioning direction, wherein said ratchet mechanism (410) may comprise a locking member (412), for example a spring loaded locking member, configured to releasably lock said operating member (402) to an output member (422), for example an output shaft, of said ratchet mechanism (400) such that said operating member (402) is integrally movable with said output member (422), wherein said output member (422) may comprise a gear (424) fixed on said output member (422) so as to be integrally rotatable with said output member (422).
9. Base (2) according to one of the preceding aspects,
   wherein said operating member (402) is a lever (404) rotatable about a pivot axis (P1), for example a curved lever (404) being pivotably supported at both of its ends, for example a U-shaped lever, and/or for example extending about a primary support portion (101) and supported on opposite sides of said primary support portion (101), wherein said pivot axis (P1) of said lever (404) may extend in cross direction (C) of said base (2).
10. Base (2) according to one of the preceding aspects,
   wherein said tensioning mechanism (400) is configured to move said coupling portion (202) relative to said anti-rebound portion (300), for example to translatory move said coupling portion (202), for example in a longitudinal movement direction (L1).
11. Base (2) according to one of the preceding aspects,
   wherein said tensioning mechanism (400) is configured to move said anti-rebound portion (300) relative to said coupling portion (202), wherein said tensioning mechanism (400) may be configured to translatory and/or rotationally move said anti-rebound portion (300).
12. Base (2) according to one of the preceding aspects,
   wherein said coupling portion (202) is part of a coupling arrangement (200), wherein said coupling arrangement (200) may comprise two connectors (204, 206), for example coupling arms, optionally supported by a holding structure (600) and movable between a deployed position and a retracted position, wherein said two connectors (204, 206) may be coupled to each other by means of a connecting device (208), for example a rigid connecting member, such that they are integrally or at least commonly movable,
   wherein said coupling arrangement (200) may be centrally driven and/or may comprise a driven portion (210) force transmittingly coupled to said connecting device (208), wherein said driven portion (210) may be force transmittingly coupled to a force output member (470) of said tensioning mechanism (400), wherein said driven portion (210) may comprise a toothed portion, for example a gear rack, and wherein said force output member (470) may comprise a gear wheel (472) engaged with said driven portion (210).
13. Base (2) according to one of the preceding aspects,
   wherein said operating member (402) is force transmittingly coupled to said coupling portion (202) by means of a torque limiting mechanism (490) configured to limit a transferable torque to a predetermined maximum torque.

### Base with release mechanism

1. Base (2) for a child restraint system (1), said base (2) being configured to be coupled to a vehicle seat (90) and comprising
   a coupling portion (202) for releasably coupling said base (2) to a fixing structure (96) of said vehicle,
   a release mechanism (700) configured to release said coupling portion (202) from said fixing structure (96) and/or configured to release a ratchet tensioning mechanism (400) for reducing a distance between an anti-rebound portion (300) and said coupling portion (202) and/or configured to release a movement of said coupling portion (202) relative to said anti-rebound portion (300),
   said release mechanism (700) comprising at least one operating portion (702, 704), said operating portion (702, 704) being provided on said base (2) such that it is only accessible with a child seat (3) removed from said base (2).
2. Base (2) according to aspect 1,
   wherein said operating portion (702, 704) is provided on an upper surface portion (118) of said base (2) at a position which is covered by an inserted child seat (3), and/or
   wherein said base (2) comprises a cover member movable between a covering position in which said cover member covers said operating portion and a revealing position in which said operating portion is accessible for operation, wherein said cover member is configured to be moved to said covering position when a child seat is inserted on said base (2).
3. Base (2) for a child restraint system (1), said base (2) being configured to be coupled to a vehicle seat (90) and comprising
   a coupling portion (202) for releasably coupling said base (2) to a fixing structure (96) of said vehicle,
   a release mechanism (700) for releasing said coupling portion (202) from said fixing structure (96) and/or for releasing a ratchet tensioning mechanism (400) for reducing a distance between an anti-rebound portion (300) and said coupling portion (202), and/or configured to release a movement of said coupling portion (202) relative to said anti-rebound portion (300),
   said release mechanism (700) comprising two operating portions (702, 704),
   wherein said release mechanism (700) is configured such that releasing said base (2) from said fixing structure (96) is only possible by actuating both operating portions (702, 704), in particular by actuating both operating portions (702, 704) simultaneously or subsequently.
4. Base (2) according to one of the preceding aspects,
   wherein said release mechanism (700) is configured to simultaneously release said coupling portion (202) and said tensioning mechanism (400), and/or
   wherein said two operating portions (702, 704) can be provided on opposite sides of a primary support portion (101), wherein each operating portion (702, 704) may comprise a lever.
5. Base (2) according to one of the preceding aspects,
   wherein said operating member (702, 704) comprises a coupling portion (706) for force transmittingly coupling said operating member (702, 704) to said coupling portion (202),
   wherein said coupling portion (706) may be coupled to an end portion of a force transmitting member, for example of a Bowden cable, wherein said force transmitting member may be adjustable to allow an adjustment of a force transfer from said operating member (702, 704) to said coupling portion (202).
6. Base (2) according to one of the preceding aspects,
   wherein said release mechanism (700) is configured such that, upon operation of said release mechanism (700), said tensioning mechanism (400) is deactivated by transferring said tensioning mechanism (400) into a freewheeling state, and/or
   wherein said tensioning mechanism (400) may comprise an operating member (402) force transmittingly coupled to said coupling portion (202) by means of a ratchet mechanism (410) allowing to transfer a torque applied on said operating member (402) only in a tensioning direction, and wherein said release mechanism (700) is configured to deactivate said ratchet mechanism (410) by transferring said ratchet mechanism (410) into a freewheeling state.
7. Base (2) according to aspect 6,
   wherein said ratchet mechanism (410) may comprise a locking member (412), for example a spring loaded locking member, configured to releasably lock said operating member (402) to an output member (422), for example an output shaft, of said ratchet mechanism (400) such that said output member (422) is integrally movable with said operating member (402), wherein said output member (422) may comprise a gear (424) fixed on said output member (422) so as to be integrally rotatable with said output member (422), and/or
   wherein said release mechanism (700) may comprise a force transfer mechanism (705) configured to transfer a movement of said operating portion (702, 704), for example a rotating movement of said operating portion (702, 704) in a rotation direction (D3), into a movement of said locking member (412) in a release direction (D5) thereby disengaging a locking between said operating member (402) and said output member (422).
8. Base (2) according to aspect 7,
   wherein said force transfer mechanism (705) may comprise a force transfer member (710) configured to receive an actuating force from a force application portion (708) of said operating member (702, 704) and to move towards said locking member (412) upon receiving said actuating force,
   wherein said force transfer member (710) may comprise a force application surface (712) for contacting a force receiving portion (419) of said locking member (412), wherein said force application surface (712) may be formed in the shape of an outer surface of a truncated cone to allow an interaction with said force receiving portion (419) with said operating member (402) positioned at different angular orientations.
9. Base (2) according to aspect 8,
   wherein said force transfer member (710) may be a sleeve extending about a pivot axis (P1) of said operating member (402), and may be slidably provided on said output member (422), and/or
   wherein said force transfer member (710) comprises a force receiving surface (711) and said force application portion (708) comprises a force application surface (709) contacting said force receiving surface (711), wherein said operating portion (702, 704) is configured rotatable about said pivot axis (P1) in rotation direction (D3), and said force receiving surface (711) and said force application surface (709) are configured such that said force transfer member (710) is displaceable in a shifting direction (D4) along said pivot axis (P1) by a wedge action created by a sliding contact between said force application surface (709) and said force receiving surface (711).
10. Base (2) comprising the features according to aspects 5 and 9, wherein each operating portion (702, 704) comprises a lever, and said coupling portion (706) and said force application portion (708) are integrally formed on said lever.
11. Base (2) according to one of the preceding aspects,
   wherein said coupling portion (202) is configured to automatically move to an extended position when a movement of said coupling portion (202) relative to said anti-rebound portion (300) is released by said release mechanism (400), and/or
   wherein said coupling portion (202) is biased in a direction away from said anti-rebound portion (300) by means of an urging member (212), for example a coil spring, and/or
   wherein said coupling portion (202) may be part of a coupling arrangement (200), said coupling arrangement comprising at least one connector (204, 206), for example a coupling arm (204, 206), supported on a holding structure (600) and movable between a deployed position and a retracted position, wherein said at least one connector (204, 206) and said holding structure (600) are configured releasably interlockable for locking said coupling portion (202) at multiple different locking positions on said holding structure (600), wherein at least one connector (204, 206) may comprise a locking portion (214) and said holding structure (600) comprises receiving portions (612), for example recesses, and said locking portion (214) may be configured releasably engageable with said receiving portions (612), wherein said release mechanism (700) is configured to release an interlocking between said connector (204, 206) and said holding structure (600) to allow a movement of said coupling portion (202) relative to said anti-rebound portion (300),
   wherein said coupling arrangement (200) may comprise two connectors (204, 206) supported by said holding structure (600) and each having a coupling portion (202), wherein said two connectors (204, 206) may be coupled to each other by means of a connecting device (208), for example a rigid connecting member, such that they are integrally movable, wherein said urging member (212) is configured and arranged to apply an urging force on said connecting device (208).

### Display showing spatial information

1. Child restraint system (1) comprising:
   a display portion (1000) configured to provide centralized information on the status, for example information on the mounting status, of said child restraint system (1),
   wherein said display portion (1000) is configured to present said information in a spatial manner allowing a user to directly spatially determine locations of portions on said child restraint system (1) to which said displayed information relates to.
2. Child restraint system (1) according to aspect 1,
   wherein said display portion (1000) is configured to present said information on a map (1002) showing said child restraint system (1), for example on a map (1002) showing a base (2) of said child restraint system (1), for example showing the entire base (2) in plan view or in an outline view (1004).
3. Child restraint system (1) according to aspect 2,
   wherein said display portion (1000) comprises said map (1002), for example in the form of an illustration provided on said display portion (1000), and
   wherein said display portion (1000) comprises at least one indicator (1012, 1014, 1016, 1018, 1020, 1022) provided at a predetermined position on said map (1002), wherein said predetermined position on said map (1002) directly corresponds to a location on said base (2).
4. Child restraint system (1) according to aspect 2, comprising two indicators (1014, 1016) each indicating a coupling status of a connector (204, 206) of said base (2).
5. Child restraint system (1) according to aspect 4, comprising one indicator (1012) indicating a status of a load leg (900) of said base (2).
6. Child restraint system (1) according to aspect 4, comprising at least one indicator (1018, 1020; 1024) indicating an insertion status of a child seat (3) on said base (2).

### Display showing status of connector locking

1. Child restraint system (1) comprising:
   two connectors (204, 206) each configured to be releasably lockable with a fixing structure (96) of a vehicle,
   a display portion (1000) configured to provide information on the mounting status of said connectors (204, 206),
   wherein said display portion (1000) is configured to present at least four different locking states of said two connectors (204, 206).
2. Child restraint system (1) according to aspect 1, further comprising a first sensor (804) provided in said first connector (204) and a second sensor (806) provided in said second connector (206), wherein each sensor (804, 806) is configured and arranged to monitor a locking status of said connectors (204, 206) with a fixing structure (96) on a vehicle seat (90), wherein said display portion (1000) is configured to present said at least four different states based on an output of said first sensor (804) and said second sensor (806).

### Display having beam splitter

1. Child restraint system (1) comprising:
   a display portion (1000) configured to provide centralized information on the status of said child restraint system (1), for example information on the mounting status of said child restraint system (1),
   wherein said display portion (1000) comprises at least two lighting portions (1018, 1020) indicating a predetermined status of said child restraint system (1), wherein at least two of said lighting portions (1018, 1020) are configured to be simultaneously lightable by a single light source.
2. Child restraint system (1) according to aspect 1, comprising a beam splitter (1001) for splitting and guiding emitted light from said light source to said lighting portions (1018, 1020).

### Base with seat detection sensor in primary support portion

1. Base (2) for a child restraint system (1), comprising
   a primary support portion (101) protruding form an upper surface portion (118) of said base (2) in a first direction (D1),
   wherein said primary support portion (101) is configured to be releasably engaged by an engaging portion (51, 52) of an inserted child seat (3) in a positive locking manner for blocking a movement of said child seat (3) in said first direction (D1), and is configured to support said child seat (3) rotatable about a rotation axis (R1) extending parallel to said first direction (D1),
   a seat detection sensor (802) for detecting the presence of an inserted child seat (3) on said primary support portion (101).
2. Base (2) according to aspect 1, wherein said seat detection sensor (802) is provided in said primary support portion (101), for example in an accommodating space (115) inside said primary support portion (101) or in an upper portion (107) of said primary support portion (101).
3. Base (2) according to one of aspects 1 and 2, wherein said sensor (802) is a magnetic sensor, for example a Hall sensor.

### Child seat with sensor detectable feature on lower portion of child seat

1. Child seat (3) mountable on a base (2),
   at least one sensor detectable feature (46, 47), for example a magnet, wherein said sensor detectable feature (46, 47) may for example be provided on a lower portion of said child seat (3), for example a support portion defining a support surface (34) of said child seat (3), said sensor detectable feature (46, 47) being configured to trigger a seat detection sensor (802) for detecting the presence of said child seat (3) on said base (2) when said child seat (3) is correctly mounted and/or oriented on said base (2).
2. Child seat (3) according to aspect 1, wherein two detectable features (46, 47), in particular magnets, are provided on said lower portion of said child seat (3), for example on opposite sides of a rotation center of said child seat (3), wherein said detectable features (46, 47) may be arranged at equal distance from said rotation center of said child seat (3).

### Base with rotation locking detection

1. Base (2) for a child restraint system (1), comprising
   a locking mechanism (500) for blocking a rotation of an inserted child seat (3) about a rotation axis (R1), wherein said locking mechanism (500) comprises a locking member (501) which is movable between a locking position (II) in which it is positioned to engage with a restraining portion (32, 33) of said child seat (3), and a release position (III) in which said locking member (501) is at a position at which it cannot engage with a restraining portion (32, 33) of said child seat (3), so that a rotation about said rotation axis (R1) cannot be blocked by said locking member (501), and
   a sensor arrangement (800) which is configured to at least detect the presence of said locking member (501) at said release position (III).
2. Base (2) according to aspect 1, wherein said sensor arrangement (800) is configured to additionally detect the presence of said locking member (501) at said locking position (II).
3. Base (2) according to aspect to one of the preceding aspects, further comprising a sensor detectable feature (526) operatively coupled to said locking member (501) so as to be movable depending on a movement of said locking member (501), for example between a first position corresponding to a locking position of said locking member (501), and a second position corresponding to a release position of said locking member (501), wherein said sensor detectable feature (526) may be arranged on said locking member (501) so as to be integrally movable with said locking member (501), wherein said locking member (501) may comprise a holder (524) for holding said sensor detectable feature (526).
4. Base (2) according to aspect 3, wherein said sensor arrangement (800) comprises two sensors (808, 810) configured to detect a single sensor detectable feature (526), wherein said sensor arrangement (800) is configured to detect a trigger sequence of said sensors (808, 810) by said single detectable feature (526), wherein a positive locking signal is output if a predetermined trigger sequence is detected.
5. Base (2) according to aspect 4, wherein said predetermined trigger sequence at least includes the detection of said sensor detectable feature (526) by a second sensor (810), for example while said sensor detectable feature (526) is still sensed by said first sensor (808) and/or vice versa.
6. Base (2) according to one of the preceding aspects, wherein said sensor detectable feature (526) may comprise a magnet and wherein said sensors (808, 810) may be magnetic sensors, in particular hall sensors.
7. Base (2) according to aspect 6, wherein said sensors (808, 810) are arranged to allow a make before you break detection of said magnet (526).
8. Base (2) according to one of aspects 1 to 7, wherein said locking member (501) is movable to a standby position (I) at which said locking member (501) is positioned at a fully extended position, wherein said sensors (808, 810) are positioned such that only one sensor (808) detects said sensor detectable feature (526) in said standby position, and wherein said locking position is a position between said fully extended position and said retracted position, wherein said fully extended position and said retracted position may be fixed end positions limiting a movement range of said locking member (501).

### Base with detection of correctly inserted child seat

1. Base (2) for a child restraint system (1), said base (2) being configured to releasably support a child seat (3), said base (2) comprising
   a sensor arrangement (800) configured to detect a correct support of said child seat (3) on said base (2) and to detect a correct orientation of said child seat (3) on said base (2), and configured to output a confirmation signal if said correct support of said child seat (3) and said correct orientation of said child seat (3) are detected.
2. Base (2) according to aspect 1, wherein said confirmation signal includes lighting of a light source without changing colors of said light source.
3. Base (2) for a child restraint system (1), comprising
   a primary support portion (101) configured to rotatably support a child seat (3) about a rotation axis (R1),
   a locking mechanism (500) for locking a rotation of said child seat (3) about said rotation axis (R1),
   a seat detection sensor (802) configured to at least detect the presence of said child seat (3), optionally configured to detect the presence and a predetermined admissible orientation of said child seat (3) on said primary support portion (101),
   a rotation lock sensor (808, 810) configured to detect whether a rotatability of said child seat (3) is blocked, and
   a processing unit configured to receive signals from said seat detection sensor (802) and from said rotation lock sensor (808, 810), and to output a signal indicating correct or incorrect mounting of said child seat (3) on said base (2) based on said signals received from said seat detection sensor (802) and said rotation lock sensor (808, 810).

### Child restraint system with contactless sensing arrangement in bottom portion of base for detecting parking position of load leg

1. Child restraint system (1) comprising a base (2) mountable on a seat (90) of a vehicle, said base (2) comprising
   a bottom portion (6) configured to contact a seat bottom (94) of said seat (90);
   a load leg (900) for supporting said base (2) on a vehicle floor portion, said load leg (900) being pivotably mounted on said base (2) and movable between a stowage position in which said load leg (900) is folded against said bottom portion, and a deployed position in which said load leg (900) is able to support said base (2) on said vehicle floor portion,
   wherein at least one of said stowage position and said deployed position is detectable by a contactless sensing arrangement provided on said base (2), for example by a magnet sensor (812, 814) provided on said base (2).
2. Child restraint system (1) according to aspect 1, wherein said magnet sensor (812) is a proximity detection type sensor.
3. Child restraint system (1) according to aspect 1, wherein said magnet sensor (812, 814) is a hall sensor.
4. Child restraint system (1) according to one of aspects 1 to 3, wherein said magnet sensor (812) is provided on said bottom portion (6).
5. Child restraint system (1) according to one of the preceding aspects, wherein said load leg (900) comprises a free end portion (904) configured to be contacted with a vehicle floor portion, wherein a magnet (918) is provided in said free end portion on a side of said load leg (900) which is oriented towards said bottom portion (6) when said load leg (900) is in said stowage position.
6. Child restraint system (1) according to claim 5, wherein said magnet sensor (812) is covered by a magnetically attractable portion, wherein in said stowage position of said load leg, a magnetic attraction force between said magnet (918) and said magnetically attractable portion is strong enough to hold said load leg (900) in said stowage position.

### Child restraint system with magnet in lower portion of load leg

1. Child restraint system (1) comprising a base (2) mountable on the seat of a vehicle, said base (2) comprising
   a bottom portion (6) configured to contact a seat bottom (94) of said seat (90);
   a load leg (900) for supporting said base (2) on a vehicle floor portion, said load leg (900) being pivotably mounted on said base (2) and movable between a stowage position and a deployed position in which said load leg is able to support said base against said vehicle floor portion,
   wherein said child restraint system (1) is configured such that said load leg (900) is releasably lockable in said stowage position by magnetic attraction.
2. Child restraint system (1) according to aspect 1, wherein said load leg (900) comprises a magnet (918), wherein said magnet (918) may be provided in a free end portion (904) of said load leg (900), and wherein said base (2) comprises a magnetically attractable member, for example a steel plate (29).
3. Child restraint system (1) according to aspect 1 or 2, further comprising a proximity magnetic sensor (812) covered by said steel plate (29), so that said magnet (918) comprises a double function of creating an attraction force in cooperation with said steel plate (29) and being detectable by said magnetic sensor (812).

### Child restraint system with contactless detection of load leg position

1. Child restraint system comprising a base (2) mountable on a seat of a vehicle, said base (2) comprising
   a load leg (900) for supporting said base (2) on a vehicle floor portion, said load leg (900) being pivotably mounted on said base (2) at a coupling portion (902), and being movable between a stowage position and a deployed position in which said load leg (900) is able to support said base (2) against said vehicle floor portion,
   wherein said child restraint system (1) is configured to detect said deployed position of said load leg (900) by means of a contactless sensing arrangement.
2. Child restraint system (1) according to aspect 1, wherein said contactless sensing arrangement comprises a magnet sensor (814), for example a hall sensor.
3. Child restraint system (1) according to aspect 2, wherein said load leg (900) comprises a magnet (916) supported in said coupling portion (902) to be integrally rotatable with said load leg (900), and wherein said magnet sensor (814) and said magnet (916) are arranged such that said magnet (916) passes said magnet sensor (814) upon rotating said load leg (900) to said deployed position.

### Child seat with improved harness access

1. Child seat (3), said child seat (3) comprising
   a seating structure (2100) comprising a bottom portion (2102) and a backrest portion (2104),
   a harness assembly (2200) comprising a shoulder belt (2202) for restraining a seated child,
   a headrest assembly (2300) for supporting the head of a seated child,
   wherein said child seat (3) is configured such that a shoulder belt portion (2204) of said harness assembly (2200) is temporarily attachable on said headrest assembly (2300).
2. Child seat (3) according to aspect 1, wherein said child seat (3) is configured such that said shoulder belt portion (2204) is attachable on said headrest assembly (2300) by means of magnetic attraction.
3. Child seat (3) according to one of aspects 1 and 2, wherein said headrest assembly (2300) comprises a support structure (2302) and a cover member (2304), for example a cover member made of fabrics, wherein said support structure (2302) and/or said cover member (2304) comprises a magnet (2306), wherein said magnet (2306) may be provided on a front portion of said headrest assembly (2300), for example on a lateral head support portion (2324, 2326) of said headrest assembly (2300), in particular on an inner side of said headrest assembly (2300), for example on or in inner support surfaces (2332, 2334), on an outer side of said front portion of said headrest assembly (2300), or on the underside of said front portion of said headrest assembly (2300), wherein each lateral head support portion (2324, 2326) may comprise a magnet (2306) on an outer side, wherein said magnet (2306) may be arranged in a support structure (2302) of said headrest assembly (2300) at a forward end portion (2316) of said support structure (2302) provided in said lateral head support portions (2324, 2326), wherein said support structure (2302) may comprise a holding portion for accommodating said magnet, for example a recess (2318).
4. Child seat (3) according to one of aspects 1 to 3, wherein said shoulder belt portion (2204) comprises a magnetically attractable portion.
5. Child seat (3) according to aspect 4, wherein said shoulder belt portion (2204) comprises a buckle member (2206) comprising said magnetically attractable portion.
6. Child seat (3) according to aspect 5, wherein said buckle member (2206) comprises a buckle tongue (2208) forming said magnetically attractable portion.
7. Child seat (3) according to aspect 6, wherein said buckle tongue (2208) is made from steel.

### Child seat with seat textile cover fastener

1. Cover (2400) for a child seat (3), for example a toddler seat, said cover (2400) comprising
   a flexible cover portion (2408) configured to at least cover an exterior portion (2140) of a seat structure (2100), said flexible cover portion (2408) comprising a cover edge portion (2410), and
   a fastening portion (2420) for coupling said cover edge portion (2410) to said seat structure (2100),
   wherein said fastening portion (2420) is coupled to said cover edge portion (2410) and is configured to get in surface contact with said flexible cover portion (2408) at a position inward of said cover edge portion (2410) when said fastening portion (2420) is coupled to said child seat (3).
2. Cover (2400) according to aspect 1, wherein said fastening portion (2420) comprises a base portion (2422) comprising a cover portion support surface (2428) extending between a front portion (2430) and a rear portion (2432) of said base portion (2422), wherein said cover edge portion (2410) is fixedly coupled to said front portion (2430) at a fixation section (2412) of said cover edge portion (2410), in particular such that said flexible cover portion (2408) extends along said cover portion support surface (2428), wherein said cover portion support surface (2428) may form an outer surface of said base portion (2422).
3. Cover (2400) according to aspect 2, wherein said fastening portion (2420) comprises a support arrangement configured to support said base portion (2422) on said seat structure (2100) in a predetermined orientation.
4. Cover (2400) according to aspect 3, wherein said support arrangement is configured to support said base portion (2422) on said seat structure (2100) such that said cover portion support surface (2428) at least partially enlarges an exterior surface area (2142) of said exterior portion (2140), said exterior surface area (2142) facing laterally away from said seat structure (2100).
5. Cover (2400) according to aspect 4, wherein said support arrangement is configured to support said base portion (2422) on said seat structure (2100) such that said cover portion support surface (2428) at least partially extends beyond an edge portion (2144) limiting said exterior surface area (2142) of said exterior portion (2140).
6. Cover (2400) according to aspect 4 or 5, wherein said support arrangement is configured to support said base portion (2422) on said seat structure (2100) such that said front portion (2430) including said fixation section (2412) of said cover edge portion (2410) is at least partially spaced from said edge portion (2144) limiting said exterior surface area (2142) of said exterior portion (2140).
7. Cover (2400) according to one of aspects 2 to 6, wherein said support arrangement comprises a support protrusion (2424) protruding from said base portion (2422), wherein said support protrusion (2424) may protrude from an inner surface (2426) of said base portion (2422), wherein said inner surface (2426) and said cover portion support surface (2428) may be arranged on opposite sides of said fastening portion (2420), wherein said support protrusion (2424) may be formed as a continuous rib, wherein said support protrusion (2424) may comprise a support surface (2440) adapted to contact support protrusions (2116) on said seat structure (2100), wherein said support surface (2440) and said support protrusions (2116) may be configured to get in surface contact with each other, wherein said support surface (2440) may comprise a plane contact surface configured to contact a support surface (2118) on said support protrusions (2116).
8. Cover (2400) according to one of aspects 2 to 7, wherein said front portion (2430) comprises an outer surface (2436) and an opposite inner surface (2438), wherein said cover edge portion (2410) may be arranged on said outer surface (2436), for example may be wrapped around said front portion (2430) to enclose said front portion (2430), in particular such that the edge of said cover portion (2408) is arranged on an inner side of said fastening portion (2420).
9. Cover (2400) according to one of aspects 2 to 8, wherein said fastening portion (2420) is configured to hold said cover portion (2408) on said seat structure (2100) such that a substantially seamless transition from said cover portion (2408) to a back cover (2500) of said child seat (3) is provided, wherein said back cover (2500) may be formed in a shell-like manner, and may form a hardshell portion.
10.Cover (2400) according to aspect 9, wherein said front portion (2430) may be adapted to the shape of said back cover (2500), in particular to the shape of a back cover edge portion (2502) of said back cover (2500), so that upon mounting said fastening portion (2420) on said seat structure (2100), said front portion (2430) may be brought into a position inside said back cover (2500), in which said front portion (2430) overlaps with said back cover (2500) such that said cover portion (2408) extends into said back cover (2500) past said back cover edge portion (2502).
11. Cover (2400) according to aspect 10, wherein said front portion (2430) is provided on said base portion (2422) offset with respect to said cover portion support surface (2428), wherein a transition portion (2434), such as a step, may be provided between said front portion (2430) and said cover portion support surface (2428), wherein said transition portion (2434) may limit said cover portion support surface (2428) and may be adapted to follow a contour of a back cover edge portion (2502), wherein said fastening portion (2420) is configured such that said cover portion (2408) is supported on said cover portion support surface (2428) with an outer surface of said cover portion (2408) arranged flush with an outer surface of said back cover edge portion (2502) and/or such that said cover portion (2408) is supported on said front portion (2430) with an outer surface of said cover portion (2408) held between said front portion (2430) and said back cover edge portion (2502), for example clamped between said front portion (2430) and said back cover edge portion (2502).
12. Cover (2400) according to one of aspects 9 to 11, wherein said fastening portion (2420) is configured to only partially close a gap (2150) formed on said child seat (3) between said exterior portion (2140) and said back cover (2500) while holding said cover portion (2408) such that an opening (2152) defined between said back cover (2500), said exterior portion (2140) and a fastening portion (2420), in particular an upper portion (2444) of said fastening portion (2420) mounted on said seat (3) is covered by said cover portion (2408), wherein said opening (2152) comprises a dimension allowing a user to pass a finger through said opening (2152) while deforming said cover portion (2408) covering said opening.
13. Cover (2400) according to one of aspects 1 to 11, said fastening portion (2420) is configured to be coupled to said child seat (3) with an insertion motion including a twist-push motion, and/or may be configured to be decoupled from said child seat (3) by a decoupling motion including a twist-pull motion.
14. Cover (2400) according to one of aspects 1 to 12, wherein said fastening portion (2420) is non-destructively detachably mountable on said child seat (3).
15. Cover (2400) according to one of aspects 1 to 14, wherein said fastening portion (2420) comprises a higher rigidity than said flexible cover portion (2408).
16. Cover (2400) according to one of aspects 1 to 15, wherein said cover edge portion (2410) is sewn to and/or bonded to and/or clamped to said fastening portion (2420).

### Child seat with recline function

1. Child seat (3), said child seat (3) comprising
   a support structure (1100),
   a seat structure (1200) comprising a seat bottom (1202) and a seat back (1204),
   said seat structure (1200) being supported on said support structure (1100) and configured transferable between a seating configuration and a lying configuration,
   wherein said seat back (1204) is configured pivotable about a stationary pivot axis relative to said support structure (1100), for example about a first pivot connector (1208) pivotably coupling said seat back (1204) to said support structure (1100),
   wherein said seat bottom (1202) may be configured pivotable about a movable pivot axis, for example about a second pivot connector (1214) which is guided along a predetermined path, wherein said movable pivot axis, upon transferring said seat structure (1200) between said seating configuration and said lying configuration, is moved relative said support structure (1100),
   wherein said predetermined path is configured such that, upon transferring said seat structure (1200) between said seating configuration and said lying configuration, said movable pivot axis is at least temporarily moved in an upward direction relative to said support structure (1100).
2. Child seat according to aspect 1, wherein said predetermined path is a curved path, for example a circular path.
3. Child seat (3) according to aspect 1 or 2, wherein said second pivot connector (1214) is supported on said support structure (1100) by means of a lever (1216), wherein said lever may be coupled to said support structure (1100) by means of a third pivot connector (1212), wherein said third pivot connector (1212) may couple said lever (1216) to said support structure (1100) at a position below said second pivot connector (1214), or wherein said lever may be fixed to said support structure (1100) in a pendulum-like manner, for example such that an end portion of said lever is fixed to said support structure (1100) at a position above said second pivot connector (1214).
4. Child seat (3) according to one of aspects 1 to 3, wherein said pivot axes extend in parallel with each other.
5. Child seat (3) according to one of aspects 1 to 4, wherein said seat bottom (1202) is hingedly coupled to said seat back (1204) by means of a fourth pivot connector (1210), said fourth pivot connector (1210) coupling said seat bottom (1202) and said seat back (1204) at a distance from a lower seating surface on said seat bottom (1202) and at a distance from a back resting surface of said seat back (1204), wherein said distance may be configured such that said fourth pivot connector (1210) is provided substantially at a natural hip joint level of a seated child.
6. Child seat (3) according to one of aspects 1 to 5, wherein said second pivot connector (1214) is coupled to said seat bottom (1202) at a middle portion of said seat bottom (1202), for example substantially half way between a forward end of said seat bottom (1202) and a rear end of said seat bottom (1202), wherein said seat bottom (1202) may be hingedly coupled to said seat back (1204) at a rear end portion thereof, and/or wherein an operating portion (1222) is provided on a lower portion of said seat bottom (1202) and configured to receive a pulling force exerted thereon by a user, wherein said operating portion (1222) may be configured and arranged such that, when said seat structure (1200) is in said seating configuration, a pulling force exerted thereon acts in a pulling direction (D7) extending substantially perpendicular to said movable pivot axis and substantially tangential to said predetermined path.

### Connector with linearly movable locking portion

1. Connector (204, 206) for coupling a child restraint system to a vehicle seat, said connector (204, 206) comprising
   a coupling portion (202) provided on said first end portion and configured to be releasably locked with a fixing structure (96) of a vehicle seat,
   a locking portion (214, 216) spaced from said coupling portion (202) in longitudinal direction of said connector,
   wherein said locking portion (214, 216) is arranged movable between a locking position in which said locking portion (214, 216) protrudes from an outer side of said connector (204, 206) and a release position in which said locking portion (214, 216) does not protrude from said lateral outer side, and
   wherein said locking portion (214, 216) is arranged translatory movable in a direction cross to said longitudinal direction.
2. Connector (204, 206) according to aspect 1, wherein said locking portion (214, 216) is linearly movable between said release position and said locking position.
3. Connector (204, 206) according to aspect 2, wherein said locking portion (214, 216) is linearly movable in a direction which is perpendicular to the longitudinal direction of said connector.
4. Connector (204, 206) according to one of aspects 1 to 3, comprising two of said locking portions, a first locking portion (214) and a second locking portion (216), wherein said first locking portion (214) comprises a stop surface oriented in forward direction of said connector towards said coupling portion (202), and wherein said second locking portion (216) comprises a stop surface oriented in rearward direction of said connector away from said coupling portion (202).
5. Connector (204, 206) according to aspect 4, wherein said second locking portion (216) is operatively coupled to said coupling portion (202) such that said second locking portion (216) is moved to said release position when said coupling portion (202) is engaged with said fixing structure (96).
6. Connector (204, 206) according to one of aspects 4 and 5, further comprising a release portion (222) for manually moving said second locking portion (216) into said release position independent from a coupling status of said coupling portion (202).
7. Connector (204, 206) according to aspect 6, wherein said release portion (222) is an operating portion of a force transmitting member (270), wherein said force transmitting member (270) is linearly movable along the longitudinal direction of said connector (204, 206) between a release position and an operating position, and comprises a force application portion (274) configured to cooperate with said second locking portion (216) such that said second locking portion (216) is moved towards said release position when said force transmitting member (270) is moved towards said operating position.
8. Connector (204, 206) according to aspect 7, wherein said force transmitting member (270) is arranged between said coupling portion (202) and said second locking portion (216).
9. Connector (204, 206) according to one of aspects 1 to 8, wherein each locking portion (214) is biased towards said locking position by means of an urging member, for example a spring.
10. Coupling arrangement (200) for a child restraint system (1), said coupling arrangement (200) comprising
   two connectors (204, 206) according to one of aspects 1 to 9, and
   a connecting device (208) rigidly coupling said two connectors (204, 206) to each other such that said two connectors (204, 206) are integrally movable.
11. Base (2) for a child restraint system, said base (2) comprising
   a holding structure (600), and
   a coupling arrangement (200) according to aspect 10,
   wherein said coupling arrangement (200) is supported on said holding structure (600) to be movable between an extended position and a retracted position and is releasably lockable in at least one of said extended position and said retracted position by releasably interlocking said holding structure (600) and said coupling arrangement (200) in a positive locking manner by means of said locking portion (214, 216).

### Child seat with recline function blocking in specific seat orientations

1. Child seat (3), said child seat (3) comprising
   a support structure (1100),
   a seat structure (1200) supported on said support structure (1100) and configured transferable between a seating configuration and a lying configuration,
   an interface portion (30) for locking said child seat (3) to a base (2) fixedly mountable on a vehicle seat (90), said interface portion (30) being provided on said support structure (1100),
   wherein said child seat (3) is configured such that said transferability between said seating configuration and said lying configuration is suspended when said interface portion (30) is supported on said base (2) and said child seat (3) is oriented in a predetermined direction, for example in forward-facing direction or rearward-facing direction.
2. Child seat (3) according to aspect 1, further comprising a locking mechanism (1220) for locking said seat structure (1200) in said seating configuration and/or said lying configuration, said locking mechanism (1220) comprising an operating member (1222) for temporarily unlocking said locking mechanism (1220), wherein said child seat (3) is configured such that unlocking of said locking mechanism (1220) is blocked when said interface portion (30) is supported on said base (2) and said child seat (3) is oriented in a predetermined direction, for example in forward-facing direction or rearward-facing direction.
3. Child seat (3) according to aspect 2, wherein said operating member (1222) is provided on said child seat (3) such that it is not accessible to a user when said interface portion (30) is supported on said base (2) and said child seat (3) is oriented in a predetermined direction, for example in forward-facing direction or rearward-facing direction.
4. Child seat (3) according to aspect 3, wherein said interface portion (30) comprises a restraining section (33) to be received in a secondary support portion (102) of said base (2) when said child seat (3) is supported on said base (2) and oriented in said predetermined direction, wherein said operating member (1222) is provided on said child seat (3) adjacent said restraining section (33), for example at a predetermined position above said restraining section (33), such that it is covered by a portion of said base (2), for example a portion of said secondary support portion (102), when said child seat (3) is supported on said base (2) and oriented in said predetermined direction.
5. Child seat (3) according to one of aspects 2 to 4, further comprising a seat bottom (1202) and a seat back (1204), wherein said operating member (1222) is provided on a lower forward end portion of said seat bottom (1202).
6. Child restraint system (1) comprising
   a child seat (3) according to one of aspects 1 to 5, and
   a base (2) mountable on said vehicle seat (90) and configured to support said child seat (3), wherein said interface portion (30) is releasably couplable to said base (2),
   said child seat (3) comprising a locking mechanism (1220) for locking said seat structure (1200) in said seating configuration and/or said lying configuration, said locking mechanism (1220) comprising an operating member (1222) for temporarily unlocking said locking mechanism (1220), wherein said child seat (3) and said base (2) are configured such that unlocking of said locking mechanism (1220) is blocked when said interface portion (30) is supported on said base (2) and said child seat (3) is oriented in a predetermined direction, for example in forward-facing direction or rearward-facing direction.
7. Child restraint system (1) according to aspect 6,
   wherein said child seat (3) comprises at least one restraining portion (32, 33),
   wherein said base (2) comprises at least one secondary support portion (102, 103) configured to receive said restraining portion (32, 33) of said child seat (3), for example by rotating said child seat (3) about a rotation axis (R1), wherein said secondary support portion (102, 103) is configured such that said operating member (1222) on said child seat (3) is covered by a portion of said secondary support portion (102, 103), for example a portion of said secondary support portion (102, 103) protruding in a space limited by an upper portion of said restraining portion (33) and a lower forward end portion of said seat bottom (1202).

### Child seat with release lever on forward end

1. Child seat (3), said child seat (3) comprising
   a support structure (1100),
   a seat structure (1200) comprising a seat bottom (1202) and a seat back (1204), said seat structure (1200) being supported on said support structure (1100) and configured transferable between a seating configuration and a lying configuration,
   a locking mechanism (1220) for locking said seat structure (1200) in said seating configuration and/or said lying configuration,
   said locking mechanism (1220) comprising an operating member (1222) for temporarily unlocking said locking mechanism (1220),
   said operating member (1222) being provided at a lower forward end portion of said seat bottom (1202).

### Child seat with locking mechanism for seat recline mechanism

1. Child seat (3), said child seat (3) comprising
   a support structure (1100),
   a seat structure (1200) comprising a seat bottom (1202) and a seat back (1204),
   said seat structure (1200) being supported on said support structure (1100) and configured transferable between a seating configuration and a lying configuration,
   wherein said seat back (1204) is configured pivotable about a stationary pivot axis defined by a first pivot connector (1208), and further comprising
   a locking mechanism (1220) for locking said seat structure (1200) in said seating configuration and/or said lying configuration,
   wherein said locking mechanism (1220) is configured to establish an engagement between said seat structure (1200) and said support structure (1100) in a direction cross to said stationary pivot axis.
2. Child seat (3) according to aspect 1, wherein said locking mechanism (1220) is configured to establish an engagement in radial direction with respect to said stationary pivot axis.
3. Child seat (3) according to one of aspects 1 or 2, wherein said locking mechanism (1220) comprises an engaging portion (1224) configured to move between a locking position and an unlocking position, wherein said engaging portion (1224) may be provided on said seat back (1204) and/or may be arranged linearly movable, for example linearly movable in radial direction with respect to said stationary pivot axis or in parallel to said radial direction, for example perpendicular to said stationary pivot axis and optionally offset from said stationary pivot axis, and/or may be arranged movable substantially perpendicular to a resting surface portion of said seat back (1204), and/or wherein said engaging portion (1224) is configured to move in a direction having a backward directional component and a downward directional component.
4. Child seat (3) according to aspect 3, wherein said support structure (1100) comprises at least two recesses (1230, 1232) for receiving said engaging portion (1224), and/or wherein said locking mechanism (1220) comprises an operating member (1222) operatively coupled to said engaging portion (1224), wherein said operating member (1222) may be provided on said seat bottom (1202).

### Child seat with recline mechanism and belt insertion blocking

1. Child seat (3), said child seat (3) comprising
   a belt receiving portion (1410) configured to receive a seat belt portion of a vehicle seat for mounting said child seat (3) to a vehicle seat,
   a blocking portion (1420) configured to be moved between a blocking position in which an insertion of said belt portion into said belt receiving portion (1410) is blocked, and a release position in which an insertion of said belt portion into said belt receiving portion (1410) is allowed,
   wherein said blocking portion (1420) is configured to at least partially surround a wall portion (1411) of said belt receiving portion (1410) when said blocking portion (1420) is positioned in said blocking position.
2. Child seat (3) according to aspect 1, wherein said blocking portion (1420) comprises an accommodating recess (1421) for receiving said wall portion (1411).
3. Child seat (3) according to aspect 2, wherein said recess (1421) is provided in a free end portion (1423) of said blocking member (1420).
4. Child seat (3) according to aspect 3, wherein said free end portion (1423) comprises a stepped configuration, and/or wherein said free end portion (1423) may comprise an L-shape.
5. Child seat (3) according to one of aspects 1 to 4, wherein said belt receiving portion (1410) comprises an insertion section (1412) and an accommodating section (1413), wherein said accommodating section (1413) may be configured to support an inserted belt portion over its entire width,
   wherein a dimension of said insertion section (1412) is smaller than the dimension of said accommodating section (1413), and
   wherein said blocking portion (1420) is configured and arranged such that when it is positioned in said blocking position, it partially extends through said accommodating section (1413) into said insertion section (1412).
6. Child seat (3) according to aspect 5, wherein said blocking portion (1420) is configured to at least partially protrude into said belt receiving portion (1410) from below when positioned in said blocking position.
7. Child seat (3) according to one of aspects 1 to 6, further comprising
   a seat structure (1200) comprising a seat bottom (1202) and a seat back (1204),
   said seat structure (1200) being configured transferable between a seating configuration and a lying configuration,
   wherein said blocking portion (1420) is operatively coupled to said seat structure (1200) such that said blocking portion (1420) is moved to said blocking position when said seat structure (1200) is transferred to said lying configuration, and moved to said release position when said seat structure (1200) is transferred to said seating configuration.
8. Child seat (3) according to aspect 7, wherein said seat back (1204) comprises a force application portion (1205) and said blocking portion (1420) comprises a force receiving portion (1422) coupled to said force application portion (1205), for example slidably held on said force application portion (1205), wherein said blocking portion (1420) is guided along a predetermined path, for example along a straight path or a curved path, wherein said predetermined path may extend in upward direction and/or may be provided in a support structure (1100) of said child seat (3) and may be defined by a slot (1102) provided in said support structure (1100), and wherein said support structure (1100) may comprise said belt receiving portion (1410) and/or may rotatably support at least said seat back (1204), and/or wherein said force application portion (1205) may comprise a slot (1206) and said force receiving portion (1422) may be slidably received in said slot (1206).

### Child seat with carry grip on carry handle

1. Child seat (3), said child seat (3) comprising
   a carrying handle (1300) configured to carry said child seat (3), said carrying handle (1300) comprising
   a primary gripping portion (1302) configured for carrying said child seat (3) with a single hand and extending in a first direction, for example in a horizontal direction of said child seat (3), and
   two dedicated secondary gripping portions (1312) configured for carrying said child seat (3) with both hands and extending in a second direction, for example cross to said first direction.
2. Child seat (3) according to aspect 1,
   wherein said secondary gripping portions (1312) are provided on said carrying handle such that they are located on the same level, and/or
   wherein said carrying handle (1300) comprises a U-shape with a base portion and two leg portions (1304, 1306) extending from said base portion,
   wherein free end portions (1308) of said leg portions (1304, 1306) are coupled to a support structure (1100),
   wherein each leg portion (1304, 1306) comprises one of said secondary gripping portions (1312).
3. Child seat (3) according to one of aspects 1 and 2,
   wherein said secondary gripping portions (1312) comprise a shape deviation portion in a surface of said carrying handle (1300),
   wherein said shape deviation portion may comprise a local shape deviation preventing slipping of said carrying handle (1300) through a user's hand when said user carries said child seat (3) using said secondary gripping portions (1312).
4. Child seat (3) according to aspect 3,
   wherein said shape deviation portion may comprise a protrusion (1316) limiting an upper portion of a gripping area (1314), and/or
   wherein said shape deviation portion comprises an uneven surface, for example created by corrugations, grooves and/or scores.
5. Child seat (3) according to one of aspects 1 to 4,
   wherein said secondary gripping portions (1312) comprise a material deviation portion in a surface of said carrying handle (1300),
   wherein said material deviation portion is configured to increase friction between a user's hand and said carrying handle (1300) and may comprise a rubber material.
6. Child seat (3) according to one of aspects 1 to 5, further comprising
   a locking mechanism (50) for releasably locking said child seat (3) with a coupling interface (100) of a support unit (2), for example a base (2) for supporting said child seat (3) on a vehicle seat (90) or a chassis of a carrier, for example a stroller,
   said locking mechanism (50) comprising an operating member (1252) for temporarily unlocking said locking mechanism (50),
   wherein said secondary gripping portions (1312) are positioned on said carrying handle (1300) such that a user may operate said operating member (1252) with a hand gripping said secondary gripping portion (1312), and/or
   wherein said operating member (1252) and said carrying handle (1300) are configured such that said operating member (1252) is operable by a user by hand while said user is gripping said carrying handle (1300) with both hands.
7. Child seat (3) according to aspect 6,
   wherein said carrying handle (1300) is arranged rotatable between a carrying position and a non-carrying position,
   wherein said secondary gripping portions (1312) are arranged on said carrying handle (1300) such that a user may operate said operating members (1252) with the thumb of a hand while gripping said secondary gripping portion (1312) with the fingers of said hand when said carrying handle (1300) is in said carrying position, and/or
   wherein said secondary gripping portions (1312) are arranged on said carrying handle (1300) such that adjacent operating members (1252) are positioned on the same level as said secondary gripping portions (1312) when said carrying handle (1300) is in said carrying position.

### Child seat with dual release

1. Child seat (3), said child seat (3) comprising
   a first interface portion (10) releasably engageable with a first type of coupling interface, for example a coupling interface provided on a stroller chassis,
   a second interface portion (30) releasably engageable with a second type of coupling interface (100), for example a coupling interface (100) of a base (2) configured to be fixed on a vehicle seat,
   an operating mechanism (1250) configured to simultaneously operate said first interface portion (10) and said second interface portion (30) for transferring said interface portions (10, 30) into a release state.
2. Child seat (3) according to aspect 1,
   wherein said first interface portion (10) comprises a rotating locking mechanism and said second interface portion (30) comprises a translating locking mechanism, and
   wherein said operating mechanism (1250) is configured to transfer a rotational input force into a rotatory movement in said rotating locking mechanism and into a translatory movement in said translating locking mechanism.
3. Child seat (3) according to aspect 2,
   wherein said rotating locking mechanism comprises a rotatory movable locking member (1264), and/or
   wherein said rotatory movable locking member (1264) comprises an engaging portion (1266), for example comprising a hook, and a force receiving portion (1267) for receiving an actuating force, and/or
   wherein said rotatory movable locking member (1264) is configured as a lever pivotably mounted on said child seat (3) by means of a pivot connector (1258), said pivot connector defining a lever pivot axis, wherein said engaging portion (1266) and said force receiving portion (1267) are arranged on opposite sides of said pivot connector (1258),
      and/or
   wherein said force receiving portion (1267) is configured for a sliding contact with a force application portion (1257) on one side and/or configured to receive a return force from a return spring (1256) on an opposite side.
4. Child seat (3) according to one of aspects 1 to 3,
   wherein said translating locking mechanism comprises a translatory movable engaging portion (51, 52), for example a locking member (54),
   wherein said engaging portion (51, 52) may be arranged radially movable into and out of a recess (31) of said second interface portion (30), wherein said recess (31) may be provided in a bottom portion of said second interface portion (30), and/or wherein said recess (31) may extend in a first direction (D1) extending in opposite direction to an insertion direction of said child seat (3) on said second type of coupling interface (100), and/or wherein said recess (31) may be configured to receive a primary support portion (101) protruding from a base (2) in said first direction (D1).
5. Child seat (3) according to one of aspects 1 to 4,
   wherein said operating mechanism (1250) comprises an operating member (1252) force transmittingly coupled to said first interface portion (10), for example to said rotatory movable locking member (1264), and/or to said second interface portion (30), for example to an engaging portion (51, 52) of said second interface portion (30), in particular to a locking member (54) of said second interface portion (30),
   wherein said operating member (1252) may be force transmittingly coupled to said second interface portion (30) by means of a force transmitting member (1262), and/or
   wherein said force transmitting member (1262) may be configured to transmit a pulling force to said second interface portion (30), and/or
   wherein said force transmitting member (1262) may be a flat member, and/or
   wherein said flat member may comprise a strap-like configuration, and/or
   wherein said flat member may comprise a substantially rectangular cross-section.
6. Child seat (3) according to aspect 5,
   wherein said force transmitting member (1262) is coupled to said engaging portion (51, 52) at at least two positions, for example on laterally opposite sides of said engaging portion (51, 52) such that a total force applied onto said force transmitting member (1262) is distributed to at least two of said at least two positions.
7. Child seat (3) according to aspect 6,
   wherein said force transmitting member (1262), for example each force transmitting member (1262), comprises a branching end portion (1268), said branching end portion (1268) comprising a first branch portion (1269) coupled to said engaging portion (51, 52) at a first position and a second branch portion (1270) coupled to said engaging portion (51, 52) at a second position, and/or
   wherein said branching end portion (1268) may be formed as an integral part, for example from plastics or metal, and/or
   wherein said branching end portion (1268) is coupled to a single engaging portion (51, 52), and/or
   wherein said first position and said second position may be offset from each other in a direction perpendicular to a movement direction of said engaging portion (51, 52), and/or
   wherein said first position and said second position may be laterally offset from each other in a direction perpendicular to a movement direction of said engaging portion (51, 52), and/or
   wherein said branching end portion (1268) forms a Y-shaped branching.
8. Child seat (3) according to one of aspects 5 to 7,
   wherein said force transmitting member (1262) is supported, for example one-sidedly supported, on a support structure (1100) of said child seat (3), for example slidably supported on said support structure (1100), in particular by a surface contact with one or more support portions (1110) provided on said support structure (1100),
   wherein said one or more support portions (1110) may be curved, and
   wherein each of said first branch portion (1269) and said second branch portion (1270) may be slidably supported on distinct support portions (1110),
   wherein said force transmitting member (1262) may be configured such that it is only supported on said support structure (1100) via said branch portions (1269, 1270), and/or
   wherein said support structure (1100) comprises two support portions (1110), wherein each support portion (1110) is assigned to a single branch portion (1269, 1270) and is configured to support said single branch portion (1269, 1270).
9. Child seat (3) according to one of aspects 1 to 8,
   wherein said operating mechanism (1250) comprises an operating member (1252) configured to rotate upon receiving a pushing force applied by a user,
   wherein said operating member (1252) may be configured for thumb operation by a user, and/or
   wherein said operating member (1252) is hingedly coupled to a support structure (1100) of said child seat (3), and/or
   wherein said operating member (1252) comprises a lever,
   wherein said lever may be hingedly coupled to a support structure (1100) of said child seat (3) at a first end portion, for example by means of a pivot connector (1260), and may comprise an operating portion at a second end portion, said operating portion protruding from said support structure (1100) through an opening (1120), and/or
   wherein said pivot connector (1260) may define a pivot axis, wherein said pivot axis may be configured to extend substantially parallel to a linear movement direction of an engaging portion (51, 52) and/or wherein said pivot axis may be configured to extend skew to a linear movement direction of an engaging portion (51, 52),
   wherein said operating member comprises an operating surface for receiving an operating force from a user, wherein said operating surface may extend perpendicular to an upper edge of said support structure (2100) and/or wherein said operating surface may be configured for receiving an operating force in a direction tangential to said upper edge of support structure (2100), and/or
   wherein said operating member (1252) is movable between a locking position, in which an operating portion thereof may extend in substantially vertical direction, and a release position, in which said operating member (1252) is rotated about a predetermined angle from said locking position,
   wherein said locking position may be a forward position of said operating member (1252) on said child seat (3) and said release position may be a rearward position of said operating member (1252) on said child seat (3), and/or
   wherein said operating member (1252) comprises a force application portion (1253), and/or
   wherein said force application portion (1253) is configured to contact an intermediate force transfer member (1254), and/or
   wherein said force application portion (1253) is provided between said first end portion and said second end portion of said operating member (1252), and/or
   wherein said force application portion (1253) comprises a protruding portion, and/or
   wherein said protruding portion extends in a direction cross to an imaginary line extending through said first end portion and said second end portion, and/or
   wherein said protruding portion extends in rearward direction of said child seat, and/or
   wherein said protruding portion is defined by a curved portion in said operating member (1252), wherein said curved portion may be formed such that it extends about a rotation center of a backrest portion of said child seat when said operating member is in said locking position, and/or
   wherein said force application portion (1253) comprises a rearward-facing contact surface configured to be or get in sliding contact with a force transfer member (1254).
10. Child seat (3) according to one of aspects 1 to 9, further comprising an intermediate force transfer member (1254),
   wherein said intermediate force transfer member (1254) is configured to receive a force from an operating member (1252) and to distribute said received force to said force transmitting member (1262) and said rotatory movable locking member (1264), and/or
   wherein said intermediate force transfer member (1254) may be configured as a lever, wherein said lever may comprise a first arm portion (1257) and a second arm portion (1259), wherein said first arm portion (1257) and said second arm portion (1259) may extend at an angle with respect to each other, and/or wherein said first arm portion (1257) and said second arm portion (1259) may extend from different sides of a pivot portion of said intermediate force transfer member (1254), wherein said pivot portion may be rotatably coupled to a support structure (1100) of said child seat (3) by means of a pivot connector (1255), and/or
   wherein said intermediate force transfer member (1254) comprises a force receiving portion for receiving a force from said operating member (1252),
   wherein said force receiving portion may form an upper portion of said intermediate force transfer member (1254), and/or
   wherein said force receiving portion is provided on said first arm portion (1257), and/or
   wherein said force receiving portion may extend upwards from said pivot connector (1255), and/or
   wherein said force receiving portion may comprise a first contact surface,
   wherein said force receiving portion may comprise a second contact surface,
   wherein said first contact surface and said second contact surface may be provided on opposite sides of said intermediate force transfer member (1254),
   wherein said first contact surface may be configured for a sliding contact with a force application portion (1253) of said operating member (1252),
   wherein said second contact surface may be configured for a sliding contact with a force receiving portion (1267) of said rotatably movable locking member (1264),
   wherein said intermediate force transfer member (1254) is pivotably coupled to said force transmitting member (1262).
11. Child seat (3) according to one of aspects 1 to 11, said operating member (1252), said intermediate force transfer member (1254) and said rotatably movable locking member (1264) are pivotable about respective pivot axes, wherein said pivot axes may extend in parallel with each other, and/or wherein a connection point at which said second arm portion (1259) is connected to said force transmitting member (1262) is positioned within an imaginary triangle formed by connecting said pivot axes in a plane perpendicular to said pivot axes when said operating member (1252) is in said locking position.

### Child seat with interior side impact protection arrangement

1. Child seat (3) comprising
   a seat shell (2114) providing an accommodating space for a child,
   an interior impact absorber (2120) comprising a first impact protection portion (2126) configured to reduce an impact on the shoulder of a seated child in case of a side crash,
   wherein said first impact protection portion (2126) comprises regions of differing dampening properties.
2. Child seat (3) according to aspect 1, wherein said regions of differing dampening properties are provided by regions of different material stiffness in said interior impact absorber (2120).
3. Child seat (3) according to one of aspects 1 and 2, wherein said first impact protection portion (2126) comprises an upper end portion and a lower end portion, wherein said lower end portion is arranged on said seat shell (2114) closer to the hip region of a seated child compared to said upper end portion, wherein said upper end portion is configured stiffer than said lower end portion.
4. Child seat (3) according to aspect 3, wherein said lower end portion is configured to catch the shoulder of a child having a first size, for example a child having a minimum allowable size for said child seat (3), and said upper end portion is configured to catch the shoulder of the child having a second size larger than said first size, for example a maximum allowable size for said child seat.
5. Child seat (3) according to one of aspects 1 to 4, wherein said differing dampening properties are provided by mechanical weakening sections in a material, for example recesses, grooves, holes.
6. Child seat (3) according to one of aspects 1 to 5, wherein said first impact protection portion (2126) is integrally formed.
7. Child seat (3) according to one of aspects 1 to 6, wherein said interior impact absorber (2120) comprises a foam material, for example a closed-cell foam material, in particular expanded polypropylene, for example having a density of substantially 30 g/L.

### Child seat structure with integrated side impact protection arrangement

1. Child seat (3) comprising
   a seat structure (2100) defining an interior accommodating space for a child, and
   a side impact protection arrangement (2160) configured to initiate a seat movement and/or a head movement of a seated child about the vertical axis in case of a side crash.
2. Child seat (3) according to aspect 1, wherein said side impact protection arrangement (2160) comprises an outer rear side bumper (2162) supported on an outer side of said seat structure (2100) at a region behind said interior accommodating space.
3. Child seat (3) according to aspect 2, wherein said seat structure (2100) comprises a seat shell (2114) defining said accommodating space and a bearing portion (2181, 2182) supporting said seat shell (2114) and defining a supporting surface (2184) facing towards a center longitudinal plane of said seat structure (2100), wherein said rear side bumper (2162) is accommodated in said bearing portion (2181, 2182), for example in a reinforcing structure of said bearing portion (2181, 2182), such that it laterally protrudes from said bearing portion (2181, 2182).
4. Child seat (3) according to one of aspects 2 or 3,
   wherein said side impact protection arrangement (2160) further comprises an outer front side bumper (2161) supported on said seat structure (2100) at a level of a thorax of a seated child and/or of an interior impact absorber (2120), and/or
   wherein said interior impact absorber (2120) may be provided on and extend along said seat shell (2114) of said child seat (3) down from a head region of said child seat (3) towards the hip region and/or at least up to a lower end of the thorax of a seated child, and/or
   wherein said interior impact absorber (2120) may be integrally formed from a single material, and/or wherein said interior impact absorber may comprise a plastics material, and/or
   wherein said interior impact absorber may comprise a foam material, for example a closed-cell foam material, and/or
   wherein said interior impact absorber (2120) may be made from expanded polypropylene, and/or
   wherein a density of said interior impact absorber (2120) may be substantially 30 g/L, and/or
   wherein recesses and/or openings (2125) may be provided in a lower end portion of said interior impact absorber (2120), and/or
   wherein said recesses and/or openings (2125) may have different shapes and sizes and lower the stiffness of said impact absorber in said lower end portion to a more suitable stiffness for smaller children.
5. Child seat (3) according to aspect 4, wherein said rear side bumper (2162) and said front side bumper (2161) are spaced from each other.
6. Child seat (3) according to aspect 4 or 5,
   wherein said rear side bumper (2162) and said front side bumper (2161) protrude from said seat structure (2100) in parallel with each other, wherein said rear side bumper (2162) may comprise a free end portion and a fixed end portion,
   wherein said front side bumper (2161) may comprise a free end portion and a fixed end portion,
   wherein each free end portion may define a force receiving surface,
   wherein said force receiving surfaces may be positioned at substantially the same level, or wherein said force receiving surface of said rear side bumper (2162) is arranged more laterally outward than said force receiving surface of said front side bumper (2161).
7. Child seat (3) according to one of aspects 4 to 6, wherein said side impact protection arrangement (2160) is configured such that forces resulting from a side impact and acting on said child seat (3) in lateral direction are received by said rear side bumper (2162) first and/or transferred to said seat structure (2100) in a greater extent by said rear side bumper (2162) with less impact absorption compared to said front side bumper (2161).
8. Child seat (3) according to one of aspects 4 to 7, wherein said rear side bumper (2162) is stiffer than said front side bumper (2161), and/or wherein said rear side bumper (2162) may comprise a density of 50 g/L, and/or wherein said front side bumper (2161) may comprise a density of 27 g/L, and/or wherein said rear side bumper (2162) may protrude further in lateral direction than said front side bumper (2161), and/or wherein said front side bumper (2161) and/or said rear side bumper (2162) may comprise or may be made from EPS material.

### Child seat with exterior side impact protection arrangement

1. Child seat (3) comprising
   a seat shell (2114) providing an interior accommodating space for a child,
   an exterior side impact protection arrangement provided on an outer side of said seat shell (2114) and configured to dampen an impact on said seat shell (2114) in a region of a thorax of a seated child in case of a side crash,
   wherein said exterior side impact protection arrangement comprises a front side bumper (2161) configured as impact absorber and supported on said seat shell (2114) at the level of a thorax of a seated child,
   wherein said front side bumper (2161) is configured such that a lower end portion thereof provides less stiffness compared to an upper portion thereof.
2. Child seat (3) according to aspect 1, wherein said front side bumper (2161) is configured and arranged such that its dimension is reduced towards a lower end portion thereof.
3. Child seat (3) according to aspect 1, wherein said front side bumper (2161) comprises a wider upper end portion and a narrower lower end portion, wherein the shape of said front side bumper (2161) may be triangular or drop-like.
4. Child seat (3) according to one of aspects 1 to 3, further comprising an interior impact absorber (2120) configured to reduce an impact on the shoulder of a seated child in case of a side crash, wherein said front side bumper (2161) and said interior impact absorber (2120) are arranged in series so that forces resulting from a side impact are transferred through both said front side bumper (2161) and said interior impact absorber (2120).
5. Child seat (3) according to aspect 4, wherein said interior impact absorber (2120) comprises a first impact protection portion (2126) configured to reduce an impact on the shoulder of a seated child in case of a side crash and comprising regions of differing dampening properties.
6. Child seat (3) according to aspect 5, wherein said first impact protection portion (2126) comprises an upper end portion and a lower end portion, wherein said lower end portion is arranged on said seat shell (2114) closer to the hip region of a seated child compared to said upper end portion, wherein said upper end portion is configured stiffer than said lower end portion.
7. Child seat (3) according to one of aspects 4 to 6, wherein said front side bumper (2161) comprises or consists of a material having a lower density than said interior impact absorber (2120).

### Child seat with impact protection headrest assembly inducing rolling motion

1. Child seat (3) comprising,
   a headrest assembly (2300) configured to reduce an acceleration of the head of a seated child in case of a side crash,
   wherein said headrest assembly (2300) comprise a head movement inducing structure.
2. Child seat (3) according to aspect 1, wherein said head movement inducing structure is configured such that when the head of a seated child contacts said headrest assembly (2300) as a result of a side impact, a rolling motion of said head of said child is induced to at least partially reduce the acceleration of said head, wherein said head movement inducing structure may be configured to induce a predetermined rolling motion sufficient for reducing said acceleration of said head while at the same time preventing an excess increase of forces acting on the neck of the seated child.
3. Child seat (3) according to aspect 2, wherein said headrest assembly (2300) comprises a headrest portion (2320) comprising a rear inner support surface (2330) and inner lateral support surfaces, for example a left inner support surface (2332) and a right inner support surface (2334), wherein each of said inner lateral support surfaces (2332, 2334) may be formed in a convex shape in a cross-section taken along a vertical plane extending in lateral direction of said headrest assembly (2300), and/or wherein said inner lateral support surfaces (2332, 2334) may be configured to bulge towards said interior accommodating space, and/or wherein each of said inner lateral support surfaces (2332, 2334) may comprise a lower surface portion (2340) and an upper surface portion (2344) connected to each other by a rounded apex portion (2342), wherein each apex portion (2342) is provided at a position of said inner lateral support surfaces (2332, 2334) which, when said headrest portion (2300) is correctly adjusted to the size of a seated child, is located between an upper end portion and a center of the head of a seated child.

### Child seat with interior impact protection arrangement for headrest

1. Child seat (3) comprising
   a headrest assembly (2300), and
   a headrest impact protection arrangement configured to catch said headrest assembly (2300) in case of a crash,
   wherein said headrest impact protection arrangement is configured to provide a damping effect on said headrest assembly in side impact direction and/or in rear impact direction.
2. Child seat (3) according to aspect 1,
   wherein said headrest impact protection arrangement comprises a headrest impact protection portion (2128) shaped corresponding to a rear portion of said headrest assembly (2300).
3. Child seat (3) according to aspect 2,
   wherein said headrest impact protection portion (2128) comprises an inner surface (2123) facing towards said headrest assembly (2300) and said headrest assembly (2300) comprises an outer surface (2310) facing towards said inner surface (2123), wherein said inner surface (2123) and said outer surface (2310) at least partially extend substantially parallel such that they may get in surface contact in case of a crash.
4. Child seat (3) according to aspect 3, wherein said inner surface (2123) and said outer surface (2310) may be curved, wherein said outer surface may form a rear corner region of said headrest assembly 2300 and wherein said inner surface (2123) may extend around said rear corner region from behind said headrest assembly (2300) to a lateral side of said headrest assembly (2300).
5. Child seat (3) according to one of aspects 1 to 4, wherein said headrest impact protection arrangement is integrally formed with an interior impact absorber (2120), wherein said interior impact absorber (2120) defines said headrest impact protection portion (2128) as a second impact protection portion and comprises a first impact protection portion (2126) providing dampening for the shoulder portion and/or thorax of a seated child.
6. Child seat (3) according to aspect 5, wherein said interior impact absorber (2120) is attached on a seat shell (2114) of said child seat (3) and said headrest impact protection portion (2128) protrudes more into the interior of said seat shell (2114) than said first impact protection portion (2126) to reduce the space between said headrest impact protection portion (2128) and said headrest assembly (2300).

## Claims

1. Base (2) for a child restraint system (1), comprising
a primary support portion (101) protruding from an upper surface portion (118) of said base (2) in a first direction (D1),
wherein said primary support portion (101) is configured to be releasably engaged by an engaging portion (51, 52) of an inserted child seat (3) in a positive locking manner for blocking a movement of said child seat (3) in said first direction (D1), and is configured to support said child seat (3) rotatable about a rotation axis (R1) extending parallel to said first direction (D1),
wherein a lateral outer surface (104) of said primary support portion (101) comprises a circumferential recess (105) configured for receiving said engaging portion (51) of said child seat (3) for establishing said positive locking, thereby allowing to couple said child seat (3) to said primary support portion (101) in multiple arbitrary angular orientations about said rotation axis (R1).

2. Base (2) according to claim 1,
wherein said primary support portion (101) is configured to bear the main weight of a mounted child seat (3), and/or
wherein said primary support portion (101) is configured to support said child seat (3) at a predetermined distance from said upper surface portion (118), and/or
wherein said primary support portion (101) is configured as a stationary support portion.

3. Base (2) according to one of the preceding claims,
wherein said primary support portion (101) comprises an upper portion (107) supported by a pillar portion (106) in an overhanging manner so that an overhang portion (108) of said upper portion (107) is available for establishing said positive locking,
wherein said circumferential recess (105) may be limited by a lower surface (109) of said upper portion (107) and an outer surface (114) of said pillar portion (106),
wherein said pillar portion (106) may be at least partially tapered towards said upper portion (107).

4. Base (2) according to one of the preceding claims, wherein said upper portion (107) comprises
a layer construction with an upper layer (110) and a lower layer (111) supporting said upper layer (110),
wherein said upper layer (110) is configured to get in sliding contact with a lower support surface (34) of said child seat (3) to be supported.

5. Base (2) according to claim 4,
wherein said lower layer (111) comprises a higher rigidity than said upper layer (110), and/or
wherein said upper layer (110) comprises a low friction material, in particular a synthetic material, for example polyoxymethylene, configured to get in sliding contact with said child seat (3), and/or
wherein said lower layer (111) comprises a metal material, and/or
wherein said upper layer (110) at least partially surrounds an outer edge region of said lower layer (111),
wherein an underside of said lower layer (111) may be exposed or uncovered such that said engaging member (51, 52) of a mounted child seat (3) may directly get in contact with said lower layer (111).

6. Base (2) according to one of claims 4 and 5,
wherein said upper layer (110) comprises a sliding surface (112) extending around a recess (113),
wherein said sliding surface (112) may comprise an annular shape, and/or
wherein said primary support portion (101) may be configured as a hollow body closed at the top and defining an accommodating space (115) in its interior, wherein said accommodating space (115) is configured to receive a portion of a tensioning mechanism (400) and/or a sensor of a sensor arrangement.

7. Base (2) according to one of the preceding claims, further comprising
at least one secondary support portion (102, 103) radially spaced from said primary support portion (101) and configured to receive a restraining portion (32, 33) of said child seat (3) by rotating said child seat (3) about said rotation axis (R1) after said child seat (3) was inserted on said primary support portion (101),
said at least one secondary support portion (102, 103) being configured to limit a tilting movement of said child seat (3) about a rotation axis (R2) extending perpendicular to said rotation axis (R1), wherein
at least one secondary support portion (102, 103) may comprise an urging member (609), for example a leaf spring (610), said urging member (609) being provided to exert on said restraining portion (32, 33) an urging force in a second direction (D2) opposite to said first direction (D1) when said restraining portion (32, 33) received in said secondary support portion (102, 103).

8. Base (2) according to claim 7,
wherein an insertion geometry of at least one secondary support portion (103) is mechanically coded to block said child seat (3) from being positioned in a predetermined orientation, in particular a forward-facing orientation of said child seat (3), and/or
wherein said secondary support portion (103) comprises an abutment portion (120) configured to limit a rotation of said child seat (3) about said rotation axis (R1) towards a forward-facing orientation,
wherein said abutment portion (120) may be configured to contact a stop portion (35) provided on said child seat (3) and may comprise abutment surfaces (121, 122) configured to contact stop portion surfaces (36, 37),
wherein said abutment surfaces (121, 122) may be formed, in particular may be inclined, such that said stop portion (35) is urged in a second direction (D2) opposite to said first direction (D1) when said stop portion (35) is pushed against said abutment portion (120) upon rotating said child seat (3).

9. Base (2) according to claim 7,
wherein at least one secondary support portion (102) is configured such that a rotation of said child seat (3) about said rotation axis (R1) is automatically blocked when reaching a rearward-facing orientation upon rotating the same about said primary support portion (101), and/or such that said child seat (3) is normally blocked from reaching said forward-facing orientation and only rotatable to said forward-facing orientation upon actuation of an actuating member (119) by a user,
wherein said actuating member (119) may be a release member (502) of a locking mechanism (500) for locking a rotation of said child seat (3) about said rotation axis (R1),
wherein said locking mechanism (500) is configured operable by an operating force exerted thereon by said child seat (3), wherein said operating force may be generated by transferring a rotational force exerted on said child seat (3) into said operating force, in particular a pushing force,
wherein said locking mechanism (500) may comprise a locking member (501) which is movable between a locking position in which it can engage with said restraining portion (32, 33) and a release position in which a rotation of said child seat (3) about said rotation axis (R1) is not blocked,
wherein said locking member (501) may be biased by an urging member (503) such that a movement of said locking member (501) towards said release position is possible against an urging force exerted by said urging member (503), and
wherein said locking member (501) may comprise a force receiving surface (504) extending such that said operating force can be generated through sliding contact of a force application surface (42, 43) on said child seat (3) and said force receiving surface (504) when said child seat (3) is rotated about said rotation axis (R1).

10. Base (2) according to one of claims 7 to 9,
said secondary support portion (102, 103) comprising a holding structure (600) for blocking a lifting of said inserted restraining portion (32, 33) from said base (2) for preventing a rotational movement of said child seat (3) in case of a crash,
wherein said holding structure (600) may comprise a holder (601),
wherein said holder (601, 602) may comprise a catching portion (603, 604), for example having a hook shape and configured to receive said restraining portion (32, 33) and
said holder (601, 602) being force transmittingly coupled to a coupling portion (202) configured to be engaged with a fixing structure (96) in said vehicle seat (90),
wherein said coupling portion (202) may be provided on a coupling arrangement (200), for example an isofix arm, and/or held on said base (2) adjustably on said coupling portion (202) to allow a tensioning of said base (2) on said vehicle seat,
wherein said holder (601, 602) may be force transmittingly coupled to said coupling portion (202) by means of a force transfer path comprising rigid force transfer links (605, 606, 607), for example by means of metal force transfer links or only by metal force transfer links, and/or
wherein said force transfer links may comprise a coupling portion support frame (606, 607), for example an isofix arm support frame, in particular a U-shaped housing, on which said coupling portion (202) is supported, and a coupling member (605), for example a rod (608), for coupling said holder (601, 602) to said coupling portion support frame (606, 607),
wherein said holder (601, 602) may be coupled to said coupling portion support frame (606, 607) only by a single coupling member (605).

11. Child seat (3) couplable to a base (2) according to one of the preceding claims, said child seat (3) comprising
an interface portion (30) releasably engageable with said primary support portion (101), said interface (30) comprising a recess (31) configured to receive said primary support portion (101) in said first direction (D) and having a support surface (34) configured to get in contact with a longitudinal end portion of said primary support portion (101), and
a locking mechanism (50) for releasably locking said child seat (3) on said primary locking portion (101), said locking mechanism (50) comprising
an engaging portion (51, 52) arranged radially movable into and out of said recess (31) to be able to engage with said continuous circumferential recess (105) of said primary support portion (101), and
an operating member (53) for retracting said engaging portion (51, 52),
wherein an opening end portion of said recess (31) may be defined by an inclined circumferential wall portion (44) in which an outer diameter of said recess (31) is reduced from an opening towards said support surface (34).

12. Child seat (3) according to claim 11, wherein
said operating member (53) is positioned on said child seat (3) such that it is only accessible when said child seat (3) is rotated to an unlocking orientation different from a forward-facing or rearward-facing orientation of said child seat (3),
wherein said operating member (53) may be provided on a bottom surface of said child seat (3) and at a position such that it is covered by said base (2) when said child seat (3) is in a forward-facing or rearward-facing orientation and is exposed only in said unlocking orientation,
wherein said operating member (53) may be provided at a foot end of said child seat (3).

13. Child restraining system (1) comprising a base (2) according to one of claims 1 to 10 and a child seat (3) according to one of claims 11 and 12 releasably mountable on said base (2).
